# EUROPÄISCHE PATENTSCHRIFT

(11) **EP 3 152 792 B1**
(45) Veröffentlichungstag und Bekanntmachung des Hinweises auf die Patenterteilung: **21.10.2020**
(21) Anmeldenummer: 15726628.9
(22) Anmeldetag: 05.06.2015
(51) Int. Cl.: H01M 4/136, H01M 4/36, H01M 4/58, H01M 4/60, H01M 4/62, H01M 10/052, H01M 10/0565, H01M 4/137, H01M 4/02

(54) **POLYMERELEKTROLYT FÜR LITHIUM-SCHWEFEL-ZELLE**
POLYMER ELECTRLYTE FOR A LITHIUM SULFUR CELL
ÉLECTROLYTE POLYMÈRE POUR ÉLÉMENT DE BATTERIE LITHIUM-SOUFRE

(30) Priorität: 06.06.2014 DE 102014210917; 24.10.2014 DE 102014221736; 24.10.2014 DE 102014221731
(43) Veröffentlichungstag der Anmeldung: 12.04.2017
(73) Patentinhaber: Robert Bosch GmbH, 70442 Stuttgart (DE)
(72) Erfinder: FANOUS, Jean, 70374 Stuttgart (DE); THIELEN, Joerg, 70195 Stuttgart (DE); SCHUMANN, Bernd, 71277 Rutesheim (DE)
(86) Internationale Anmeldenummer: PCT/EP2015/062595
(87) Internationale Veröffentlichungsnummer: WO 2015/185731

(56) Entgegenhaltungen:
- WO-A1-99/28292
- WO-A1-2015/160381
- DE-A1- 19 527 362
- US-A- 6 110 619
- US-A1- 2004 029 014
- US-A1- 2014 072 879

## Beschreibung

Die vorliegende Erfindung betrifft Kathodenmaterialien und Polymerelektrolyte, insbesondere für Lithium-Schwefel-Zellen, und deren Verwendung sowie eine damit ausgestattete Zelle, Kathode und Schutzschicht sowie einen damit ausgestatteten Separator.

### Stand der Technik

Lithium-Ionen-Batterien, welche auch als Lithium-Ionen-Akkumulatoren bezeichnet werden, werden heutzutage in einer Vielzahl von Produkten als Energiespeicher eingesetzt.

Um Batterien mit einer höheren Energiedichte herzustellen, wird an der Lithium-Schwefel-Batterietechnologie geforscht.

Konventionelle Lithium-Schwefel-Zellen enthalten elementaren Schwefel und enthalten zur Gewährleistung der Löslichkeit des Schwefels insbesondere etherbasierte Elektrolytlösungsmittel.

Die Druckschrift WO 2011/147924 A1 beschreibt einen festen Komposit für eine Lithium-Schwefel-Zelle.

Diesbezüglich ist aus der US 2004/029014 A1 ein Kathodenmaterial, umfassend mindestens ein Polymer und mindestens ein Kathodenaktivmaterial bekannt, wobei das mindestens eine Kathodenaktivmaterial schwefelhaltig ist.

Weiterhin ist aus der DE 195 27 362 A1 ein makromolekulares Material bekannt, das als Elektrolyt und/oder als Bindemittel in einer positiven Verbundelektrode verwendet werden kann.

Weiterhin ist aus der WO 99/28292 A1 eine Polymerstruktur mit einer Wiederholungseinheit bekannt, wobei die Wiederholungseinheit einen Polymerrücken, einen Spacer und eine Endgruppe umfasst.

Diesbezüglich ist auch aus der US 2014/072879 A1 ein Kathodenmaterial für eine Lithium-Zelle bekannt, die ein Kathodenmaterial, beschichtet mit einem Lithium leitenden Polymer umfasst.

Weiterhin offenbart die US 6110619 A ein Kathodenmaterial, umfassend ein schwefelhaltiges Aktivmaterial und ein kationisches Polymer, umfassend z.B. eine Polymethylacrylateinheit.

Darüber hinaus offenbart die WO 2015/160381 A1 ein Kathodenmaterial mit mindestens einem Kathodenaktivmaterial in Form von SPAN.

### Offenbarung der Erfindung

Gegenstand der vorliegenden Erfindung ist ein, insbesondere ionenleitfähiges beziehungsweise ionenleitendes, beispielsweise lithiumionenleitfähiges beziehungsweise lithiumionenleitendes, Polymer beziehungsweise ein Polymerelektrolyt, insbesondere für eine elektrochemische Zelle, zum Beispiel für eine Alkalimetall-Zelle, beispielsweise für eine Lithium-Zelle und/oder Natrium-Zelle, insbesondere für einer Lithium-Zelle, zum Beispiel für eine Alkalimetall-Schwefel-Zelle, beispielsweise für eine Lithium-Schwefel-Zelle und/oder Natrium-Schwefel-Zelle, insbesondere für eine Lithium-Schwefel-Zelle, umfassend mindestens eine Wiederholungseinheit der allgemeinen chemischen Formel:

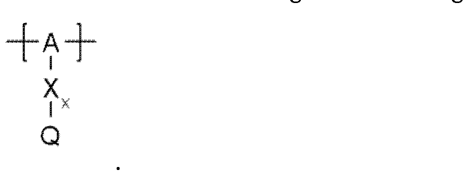

Unter einem Polymerelektrolyten kann insbesondere ein ionenleitfähiger oder ionenleitender, polymerer Elektrolyt verstanden werden. Beispielsweise kann der Polymerelektrolyt lithiumionenleitfähig oder lithiumionenleitend und/oder natriumionenleitfähig oder natriumionenleitend, insbesondere lithiumionenleitfähig oder lithiumionenleitend, sein. Dabei kann unter einem ionenleitfähigen, beispielsweise lithiumionenleitfähigen, Elektrolyten insbesondere ein Elektrolyt verstanden werden, welcher selbst frei von den zu leitenden Ionen, beispielsweise Lithiumionen, sein kann, jedoch dazu ausgelegt ist, Gegenionen der zu leitenden Ionen, beispielsweise Lithium-Leitsalz-Anionen, zu koordinieren beziehungsweise die zu leitenden Ionen selbst, beispielsweise Lithiumionen, zu koordinieren und/oder solvatisieren, und beispielsweise unter Zugabe der zu leitenden Ionen, beispielsweise Lithiumionen, ionenleitend, beispielsweise lithiumionenleitend, wird.

Unter einer Alkalimetall-Zelle kann insbesondere eine elektrochemische Zelle, beispielsweise eine Batteriezelle beziehungsweise Akkumulatorzelle, verstanden werden, an deren elektrochemischer Reaktion Alkaliionen, beispielsweise Lithiumionen, beispielsweise im Fall einer Lithium-Zelle, oder Natriumionen, beispielsweise im Fall einer Natrium-Zelle, beteiligt sind. Beispielsweise kann eine Alkalimetall-Zelle eine Lithium-Zelle und/oder eine Natrium-Zelle sein. Beispielsweise kann der Polymerelektrolyt lithiumionenleitend, insbesondere im Fall einer Lithium-Zelle, und/oder natriumionenleitend, insbesondere im Fall einer Natrium-Zelle, sein. Eine Lithium-Zelle kann beispielsweise eine Lithium-Schwefel-Zelle, insbesondere mit einem schwefelhaltigen Kathodenaktivmaterial, und/oder eine Lithium-Luft-Zelle, insbesondere mit Luft beziehungsweise Sauerstoff als Kathodenaktivmaterial, und/oder eine Lithium-Ionen-Zelle, beispielsweise mit einem, mit Lithiumionen interkalierbaren Kathodenaktivmaterial, sein. Insbesondere kann der Polymerelektrolyt dabei lithiumionenleitend sein.

Unter einer Alkalimetall-Schwefel-Zelle kann insbesondere eine Alkalimetall-Zelle verstanden werden, an deren elektrochemischer Reaktion Schwefel beteiligt ist. Beispielsweise kann eine Alkalimetall-Schwefel-Zelle eine Lithium-Schwefel-Zelle und/oder Natrium-Schwefel-Zelle sein. Eine Alkalimetall-Schwefel-Zelle, beispielsweise ein Lithium-Schwefel-Zelle, kann insbesondere ein schwefelhaltiges Kathodenmaterial beziehungsweise eine schwefelhaltige Kathode aufweisen.

Im Rahmen der allgemeinen chemischen Formel; 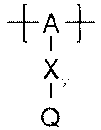 steht -[A]- für eine Polymerrücken bildende Einheit. X steht dabei für einen Spacer, insbesondere einen, beispielsweise kovalent, an die Polymerrücken bildende Einheit -[A]- beziehungsweise den Polymerrücken gebundenen Spacer. x steht dabei für die Anzahl, insbesondere das Vorhandensein beziehungsweise die Abwesenheit, des Spacers X. x kann insbesondere 1 oder 0, beispielsweise 1, sein. Dabei kann im Fall x = 1 insbesondere ein Spacer X vorhanden sein. Im Fall x = 0 kann insbesondere kein Spacer vorhanden sein. Q steht dabei für eine Gruppe, welche, insbesondere kovalent, an den Spacer X (im Fall x = 1) oder an den Polymerrücken -[A]- (im Fall x = 0) angebunden ist. Insbesondere kann die Gruppe Q über den Spacer X an die Polymerrücken bildende Einheit -[A]-angebunden sein.

Im Falle x = 1 (Vorhandensein des Spacers) kann dabei die Gruppe Q, beispielsweise die im Folgenden erläuterte ungeladene Gruppe Q beziehungsweise positiv geladene Gruppen Q⁺ beziehungsweise negativ geladene Gruppe Q⁻, insbesondere an den Spacer X angebunden sein. Im Falle x = 0 (Abwesenheit des Spacers) kann die Gruppe Q, beispielsweise die im Folgenden erläuterte ungeladene Gruppe Q beziehungsweise positiv geladene Gruppen Q⁺, zum Beispiel eine Pyridiniumgruppe (Pyridiniumkation), beziehungsweise negativ geladene Gruppe Q⁻, insbesondere direkt an den Polymerrücken -[A]- angebunden sein.

Q kann - im Rahmen einer Ausführungsform - für eine ungeladene Gruppe Q, beispielsweise eine ungeladene, funktionelle Seitengruppe, welche fähig ist Alkaliionen, insbesondere Lithiumionen (Li⁺), zu koordinieren beziehungsweise zu solvatisieren, stehen. Insbesondere kann die ungeladene Gruppe Q dabei über den Spacer X an die Polymerrücken bildende Einheit -[A]- angebunden sein. Dabei kann die ungeladene Gruppe Q beispielsweise für eine von einem Elektrolytlösungsmittel ableitbare Gruppe stehen. Durch eine ungeladene Gruppe Q können vorteilhafterweise von Leitsalzen, beispielsweise Alkalisalzen, insbesondere Lithium-Leitsalzen, die Alkaliionen, insbesondere Lithiumionen, koordiniert beziehungsweise solvatisiert werden. So kann vorteilhafterweise die Mobilität der Alkaliionen, beispielsweise Lithiumionen, insbesondere durch das Einbringen der von einem Elektrolytlösungsmittel ableitbaren Gruppe, und damit die lonenleitfähigkeit, insbesondere Lithiumionenleitfähigkeit, des Polymers beziehungsweise Polymerelektrolyten erhöht werden. Die Polymerrücken bildende Einheit -[A]- und/oder der Spacer X kann dabei gegebenenfalls hinsichtlich anderer Eigenschaften optimiert werden. Polymere, welche lediglich ungeladene Gruppen Q, können zunächst lediglich ionenleitfähig, beispielsweise lithiumionenleitfähig, sein und beispielsweise durch Zugabe eines Alkalimetallsalzes, beispielsweise Alkalimetall-Leitsalzes, insbesondere Lithiumsalzes, beispielsweise durch eine Mischung mit einem Alkalimetallsalz, beispielsweise Alkalimetall-Leitsalz, insbesondere Lithiumsalz, und insbesondere Solvatation des Salzes ionenleitend, beispielsweise lithiumionenleitend, werden. Insbesondere können daher Polymere, welche eine ungeladene Gruppe Q aufweisen in Kombination, beispielsweise in Mischung, mit mindestens einem Alkalimetallsalz, beispielsweise Alkalimetall-Leitsalz, insbesondere Lithiumsalz, beispielsweise Lithium-Leitsalz, verwendet werden.

Q kann - im Rahmen einer weiteren, insbesondere alternativen oder zusätzlichen, Ausführungsform - jedoch auch für eine positiv geladene Gruppe Q⁺, beispielsweise eine positiv geladene Seitengruppe Q⁺, und ein Gegenion Z⁻ stehen. Insbesondere kann die positiv geladene Gruppe Q⁺ dabei über den Spacer X an die Polymerrücken bildende Einheit -[A]- angebunden sein. Dabei kann die positiv geladene Gruppe Q⁺ beispielsweise für eine Gruppe auf der Basis eines Kations einer ionischen Flüssigkeit (Englisch: lonic Liquid) stehen. Als Gegenion zur positiven Ladung von Q⁺ kann dabei insbesondere ein Gegenion beziehungsweise Anion Z⁻ enthalten sein. Als Gegenion Z⁻ können zum Beispiel, beispielsweise alle gängigen, Gegenionen bekannter Leitsalze, zum Beispiel für Lithium-Zellen, eingesetzt werden. Insbesondere kann daher Z⁻ für ein Anion, insbesondere ein Leitsalzanion, stehen. Durch eine positiv geladene Gruppe Q⁺ können insbesondere Anionen von Alkalisalzen, beispielsweise Anionen von Alkalimetall-Leitsalzen, insbesondere Lithium-Leitsalzanionen, koordiniert beziehungsweise solvatisiert und insbesondere die Dissoziation des Alkalisalzes, beispielsweise Alkalimetall-Leitsalzes, insbesondere Lithium-Leitsalzes, erhöht werden. Dadurch kann wiederum vorteilhafterweise ebenfalls die Mobilität der Alkaliionen, insbesondere Lithiumionen, des Alkalimetallsalzes, beispielsweise Alkalimetall-Leitsalzes, insbesondere Lithium-Leitsalzes, und damit die lonenleitfähigkeit, insbesondere die Lithiumionenleitfähigkeit, des Polymers beziehungsweise Polymerelektrolyten erhöht werden. Durch die positiv geladene Gruppe Q⁺ kann vorteilhafterweise auch die Dielektrizitätskonstante erhöht werden, was einen positiven Einfluss auf die Polysulfidlöslichkeit - und zwar derart, dass die Polysulfidlöslichkeit reduziert wird - haben kann, welcher sich wie später näher erläutert insbesondere bei Schwefel-Kohlenstoff-Kompositen, beispielsweise Schwefel-Polymer- und/oder - Kohlenstoffmodifikation-Kompositen, insbesondere Schwefel-Polymer-Kompositen mit, beispielsweise kovalent und/oder ionisch, insbesondere kovalent, an das Polymer des Komposits gebundenem Schwefel, zum Beispiel Schwefel-Polyacrylnitril-Kompositen, insbesondere SPAN, besonders vorteilhaft auswirken kann. Die Polymerrücken bildende Einheit -[A]- und/oder der Spacer X kann auch dabei gegebenenfalls hinsichtlich anderer Eigenschaften optimiert werden. Insbesondere können Polymere, welche eine positiv geladene Gruppe Q⁺ aufweisen in Kombination, beispielsweise in Mischung, mit mindestens einem Alkalimetallsalz, beispielsweise Alkalimetall-Leitsalz, insbesondere Lithiumsalz, beispielsweise Lithium-Leitsalz, verwendet werden.

Q kann ferner auch - im Rahmen einer weiteren, insbesondere alternativen oder zusätzlichen, Ausführungsform - für eine negativ geladene Gruppe Q⁻, beispielsweise eine negativ geladene Seitengruppe Q⁻, und ein Gegenion Z⁺, stehen. Insbesondere kann die negativ geladene Gruppe Q⁻ dabei über den Spacer X an die Polymerrücken bildende Einheit -[A]- angebunden sein. Dabei kann die negativ geladene Gruppe Q⁻ beispielsweise für eine Gruppe auf der Basis eines Leitsalzanions, insbesondere Lithium-Leitsalzanions, beispielsweise für eine Sulfonylimidgruppe, beispielsweise für eine Trifluormethansulfonylimid-Gruppe (TFSI⁻: F₃C-SO₂-(N⁻)-SO₂-) und/oder Perfluorethansulfonylimid-Gruppe (PFSI⁻: F₅C₂-SO₂-(N⁻)-SO₂-) und/oder Fluorsulfonylimid-Gruppe (FSI: F-SO₂-(N⁻)-SO₂-), und/oder für eine Gruppe auf der Basis eines Anions einer ionischen Flüssigkeit (Englisch: lonic Liquid), beispielsweise für eine Pyrazolid-Gruppe oder für eine Imidazolid-Gruppe, und/oder für eine Sulfonatgruppe, beispielsweise für eine für eine (einfache) Sulfonatgruppe oder für eine Trifluormethansulfonat-Gruppe (Triflat, -SO₃CF₂⁻), und/oder für eine Sulfatgruppe und/oder für eine Carboxylatgruppe und/oder für eine Gruppe auf der Basis eines phosphorsäurebasierten Anions, insbesondere für eine Phosphatgruppe, und/oder für eine Gruppe auf der Basis eines Anions eines Imids, insbesondere für eine Sulfonylimidgruppe, beispielsweise für eine Trifluormethansulfonylimid-Gruppe (TFSI⁻: F₃C-SO₂-(N⁻)-SO₂-) und/oder Perfluorethansulfonylimid-Gruppe (PFSI⁻: F₅C₂-SO₂-(N⁻)-SO₂-) und/oder Fluorsulfonylimid-Gruppe (FSI: F-SO₂-(N⁻)-SO₂-), und/oder für eine Gruppe auf der Basis eines Anions eines Amids, insbesondere für eine Gruppe auf der Basis eines Anions eines sekundären Amids (-R-NHR), und/oder für eine Gruppe auf der Basis eines Anions eines Carbonsäureamids, insbesondere für eine Gruppe auf der Basis eines Anions eines sekundären Carbonsäureamids (-CO-NHR), stehen. Als Gegenion von Q⁻ kann dabei beispielsweise ein Kation, insbesondere Metallkation, beispielsweise Lithiumion und/oder Natriumion, Z⁺ enthalten sein. Durch eine negativ geladene Gruppe Q⁻ können insbesondere Alkalimetallionen, insbesondere Lithiumionen, koordiniert beziehungsweise solvatisiert werden. Dabei kann sich - insbesondere durch die kovalente Anbindung der negativ geladenen Gruppe Q⁻ an die Polymerrücken bildende Einheit -[A]- - eine hohe Transferzahl nahe 1 ergeben. Zudem kann auch so vorteilhafterweise die Dielektrizitätskonstante erhöht werden, was einen positiven Einfluss auf die Polysulfidlöslichkeit - und zwar derart, dass die Polysulfidlöslichkeit reduziert wird - haben kann, welcher sich wie später näher erläutert insbesondere bei Schwefel-Kohlenstoff-Kompositen, beispielsweise Schwefel-Polymer- und/oder -Kohlenstoffmodifikation-Kompositen, insbesondere Schwefel-Polymer-Kompositen mit, beispielsweise kovalent und/oder ionisch, insbesondere kovalent, an das Polymer des Komposits gebundenem Schwefel, zum Beispiel Schwefel-Polyacrylnitril-Kompositen, insbesondere SPAN, besonders vorteilhaft auswirken kann. Zudem können Polymere beziehungsweise Polymerelektrolyten, welche eine negativ geladene Gruppe Q⁻ und ein Gegenion Z⁺, beispielsweise ein Lithiumion Li⁺ und/oder ein Natriumion Na⁺, insbesondere ein Lithiumion Li⁺, aufweisen, bereits durch das Gegenion Z⁺ eine ausreichende lonenleitfähigkeit, insbesondere Lithiumionenleitfähigkeit, aufweisen. Daher können Polymere beziehungsweise Polymerelektrolyte, welche eine negativ geladene Gruppe Q⁻ und ein Gegenion Z⁺, beispielsweise ein Lithiumion Li⁺ und/oder ein Natriumion Na⁺, insbesondere ein Lithiumion Li⁺, aufweisen ohne den Zusatz eines Alkalimetall-Leitsalzes, beispielsweise Lithium-Leitsalzes, verwendet werden beziehungsweise ionenleitend, insbesondere lithiumionenleitend, sein. Zur Verringerung der Glasübergangstemperatur und/oder zur Erhöhung der lonenmobilität der lonenmobilität und der lonenleitfähigkeit, insbesondere Lithiumionenleitfähigkeit, können Polymere beziehungsweise Polymerelektrolyte, welche eine negativ geladene Gruppe Q⁻ und ein Gegenion Z⁺, beispielsweise ein Lithiumion Li⁺, aufweisen, gegebenenfalls auch in Kombination, beispielsweise in Mischung, mit mindestens einem Alkalimetallsalz, insbesondere Lithiumsalz, beispielsweise Lithium-Leitsalz, verwendet werden. Die Polymerrücken bildende Einheit -[A]- und/oder der Spacer X kann auch dabei gegebenenfalls hinsichtlich anderer Eigenschaften optimiert werden.

Insgesamt kann durch die Gruppe Q, beispielsweise Q beziehungsweise Q⁺ beziehungsweise Q⁻, dabei vorteilhafterweise die Dissoziation von Alkalimetallsalzen, beispielsweise Alkalimetall-Leitsalzen, insbesondere Lithium-Leitsalzen, gefördert beziehungsweise die Koordination zwischen Alkaliion, insbesondere Lithiumion, und (Leitsalz-)Anion, insbesondere Lithium-Leitsalzanion, geschwächt werden. Dadurch kann vorteilhafterweise die Transferzahl und/oder die Mobilität der Ionen, beispielsweise von Lithiumionen, und damit die lonenleitfähigkeit, insbesondere die Lithiumionenleitfähigkeit, beeinflusst und/oder erhöht werden. Im Fall von Q⁻ können sich vorteilhafterweise sehr hohe Transferzahlen erzielt werden, wodurch - insbesondere im Fall hoher Flächenstromdichten beim Laden/Entladen - geringe Polarisationsspannungen und damit eine hohe Leistungsfähigkeit einer damit ausgestatten Zelle erzielt werden kann. Dadurch, dass die Gruppe Q direkt oder indirekt an den Polymerrücken -[A]- angebunden ist, kann vorteilhafterweise - verglichen mit Mischungen aus analogen Polymeren und analogen, jedoch freien beziehungsweise ungebundenen Gruppen Q - eine Lokalisierung der Gruppe Q beispielsweise Q beziehungsweise Q⁺ beziehungsweise Q⁻, erzielt werden. Durch eine Lokalisierung der Gruppe Q, beispielsweise Q beziehungsweise Q⁺ beziehungsweise Q⁻, kann vorteilhafterweise ein Abdiffundieren der Gruppe Q und zum Beispiel damit ansonsten gegebenenfalls einhergehende Nebenreaktionen, beispielsweise ein Aufquellen des Separators und/oder einer Anodenschutzschicht und/oder eine Degradation der Anode, welche zum Beispiel im Fall von niedermolekulare Ether-Verbindungen auftreten könnten, verhindert sowie die mechanische Stabilität und beispielsweise Binderfunktion verbessert werden. Darüber hinaus können derartige Polymere einen - verglichen mit Flüssigelektrolyten - sehr geringen Dampfdruck aufweisen, was es ermöglicht, eine damit ausgestattete Zelle bei höheren Betriebstemperaturen sicher zu betreiben. Vorteilhafterweise können zudem durch den Spacer X - beispielsweise durch die Art des Spacers und/oder die Länge des Spacers - und/oder die Polymerrücken bildende Einheit -[A]- - beispielsweise durch die Art der Polymerrücken bildende Einheit/en -[A]- und deren Aufbau - weitere Eigenschaften, wie die Glasübergangstemperatur und/oder andere Eigenschaften des Polymers beziehungsweise Polymerelektrolyten eingestellt werden. Durch den Spacer X kann dabei vorteilhafterweise insbesondere die Glasübergangstemperatur und/oder die mechanischen Eigenschaften des Polymers beziehungsweise Polymerelektrolyten eingestellt werden. Die Polymerrücken bildende Einheit -[A]- kann dabei gegebenenfalls hinsichtlich anderer Eigenschaften, beispielsweise mechanischer Eigenschaften, optimiert werden.

Insgesamt kann so vorteilhafterweise die Herstellung und der Aufbau von mit dem Polymer beziehungsweise Polymerelektrolyten versehenen Zellen, beispielsweise Alkalimetall-Zellen, zum Beispiel Lithium- und/oder Natrium-Zellen, insbesondere Lithium-Zellen, zum Beispiel Alkalimetall-Schwefel-Zellen, beispielsweise Lithium-Schwefel-Zellen und/oder Natrium-Schwefel-Zellen, im Speziellen Lithium-Schwefel-Zellen, insbesondere Lithium-SPAN-Zellen, vereinfacht beziehungsweise deren Kapazitätserhalt beziehungsweise Zyklenstabilität, Lebensdauer und Sicherheit erhöht werden.

Polymere beziehungsweise Polymerelektrolyte, insbesondere der vorstehenden allgemeinen chemischen Formel, können vorteilhafterweise eine lonenleitfähigkeit, beispielsweise Lithiumionenleitfähigkeit, insbesondere abhängig von der Temperatur, von ≥ 10⁻⁵ S/cm, gegebenenfalls sogar von ≥ 10⁻⁴ S/cm, aufweisen und als lonenleiter, beispielsweise Lithiumionenleiter, verwendet werden. Dabei können derartige Polymere beziehungsweise Polymerelektrolyte vorteilhafterweise insbesondere auch als Binder, beispielsweise für ein Kathodenaktivmaterial beziehungsweise eine Kathode, einer elektrochemischen Zelle, zum Beispiel einer Alkalimetall-Zelle, beispielsweise einer Lithium-Zelle und/oder Natrium-Zelle, insbesondere einer Lithium-Zelle, verwendet werden. Dabei kann das Polymer beziehungsweise der Polymerelektrolyt insbesondere auch als Kathodenelektrolyt beziehungsweise Katholyt bezeichnet werden. Insbesondere können derartige Polymere beziehungsweise Polymerelektrolyte vorteilhafterweise in Alkalimetall-Schwefel-Zellen, zum Beispiel Lithium-Schwefel-Zellen und/oder Natrium-Schwefel-Zellen, verwendet werden. Durch die Bindereigenschaften kann vorteilhafterweise eine erhöhte mechanische Stabilität erzielt werden. Besonders vorteilhaft können derartige Polymere beziehungsweise Polymerelektrolyte - wie später näher erläutert - in Alkalimetall-Schwefel-Zellen, beispielsweise Lithium-Schwefel-Zellen und/oder Natrium-Schwefel-Zellen, insbesondere Lithium-Schwefel-Zellen, zum Beispiel mit einem Schwefel-Kohlenstoff-Komposit, zum Beispiel einem Schwefel-Polymer-Komposit, beispielsweise einem Schwefel-Polyacrylnitril-Komposit, insbesondere SPAN, als Kathodenaktivmaterial, eingesetzt beziehungsweise verwendet werden. Alternativ oder zusätzlich können Polymere beziehungsweise Polymerelektrolyte der vorstehenden allgemeinen chemischen Formel vorteilhafterweise eine Separator- und/oder Schutzschichtfunktion bereitstellen beziehungsweise als Separator und/oder als Schutzschicht für eine elektrochemische Zelle, zum Beispiel für eine Alkalimetall-Zelle, beispielsweise für eine Lithium-Zelle und/oder Natrium-Zelle, insbesondere für eine Lithium-Zelle, zum Beispiel für eine Alkalimetall-Schwefel-Zelle, beispielsweise für eine Lithium-Schwefel-Zelle und/oder Natrium-Schwefel-Zelle, insbesondere für eine Lithium-Schwefel-Zelle, verwendet werden.

Ein weiterer Gegenstand der Erfindung ist daher ein Kathodenmaterial, insbesondere für eine elektrochemische Zelle, zum Beispiel für eine Alkalimetall-Zelle, beispielsweise für eine Lithium-Zelle und/oder Natrium-Zelle, insbesondere für eine Lithium-Zelle, zum Beispiel für eine Alkalimetall-Schwefel-Zelle, beispielsweise für eine Lithium-Schwefel-Zellen und/oder Natrium-Schwefel-Zellen, insbesondere für eine Lithium-Schwefel-Zelle, welches mindestens ein Kathodenaktivmaterial und/oder mindestens ein Polymer beziehungsweise mindestens einen Polymerelektrolyten umfasst, insbesondere welches beziehungsweise welcher mindestens eine Wiederholungseinheit der allgemeinen chemischen Formel: 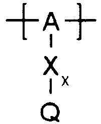 aufweist beziehungsweise umfasst. Insbesondere kann dabei das Kathodenmaterial mindestens ein Kathodenaktivmaterial umfassen. Das mindestens eine Polymer beziehungsweise der mindestens eine Polymerelektrolyt, insbesondere der vorstehenden allgemeinen chemischen Formel, kann dabei vorteilhafterweise als Matrix(material) für das mindestens eine Kathodenaktivmaterial verwendet werden.

Weitere Gegenstände der Erfindung sind daher auch eine Kathode, für eine elektrochemische Zelle, zum Beispiel für eine Alkalimetall-Zelle, beispielsweise für eine Lithium-Schwefel-Zelle und/oder Natrium-Schwefel-Zelle, insbesondere für eine Lithium-Zelle, zum Beispiel für eine Alkalimetall-Schwefel-Zelle, beispielsweise für eine Lithium-Schwefel-Zellen und/oder Natrium-Schwefel-Zellen, insbesondere für eine Lithium-Schwefel-Zelle, welche beziehungsweise welcher mindestens einen Polymerelektrolyten, insbesondere mindestens ein derartiges Polymer beziehungsweise mindestens einen derartigen Polymerelektrolyten und/oder ein derartiges Kathodenmaterial, umfasst.

Darüber hinaus betrifft die Erfindung eine elektrochemische Zelle, zum Beispiel eine Alkalimetall-Zelle, beispielsweise eine Lithium-Zelle und/oder Natrium-Zelle, insbesondere eine Lithium-Zelle, zum Beispiel eine Alkalimetall-Schwefel-Zelle, beispielsweise eine Lithium-Schwefel-Zelle und/oder Natrium-Schwefel-Zelle, insbesondere eine Lithium-Schwefel-Zelle, welche mindestens einen, insbesondere lithiumionenleitenden oder lithiumionenleitfähigen, Polymerelektrolyten, insbesondere mindestens ein derartiges Polymer beziehungsweise einen derartigen Polymerelektrolyten, und/oder ein derartiges Kathodenmaterial und/oder eine derartige Kathode.

Das Polymer beziehungsweise der Polymerelektrolyt beziehungsweise das Kathodenmaterial kann zum Beispiel für eine Alkalimetall-Zelle, insbesondere für eine Kathode und/oder eine Schutzschicht und/oder einen Separator einer Alkalimetall-Zelle, verwendet werden beziehungsweise ausgelegt sein. Beispielsweise kann das Polymer beziehungsweise der Polymerelektrolyt beziehungsweise das Kathodenmaterial für eine Lithium-Zelle, insbesondere für eine Kathode, verwendet werden beziehungsweise ausgelegt sein.

Im Rahmen einer weiteren Ausführungsform ist das Polymer beziehungsweise der Polymerelektrolyt beziehungsweise das Kathodenmaterial für eine Alkalimetall-Schwefel-Zelle, beispielsweise eine Lithium-Schwefel-Zelle und/oder eine Natrium-Schwefel-Zelle, insbesondere für eine Kathode und/oder eine Schutzschicht, ausgelegt beziehungsweise wird dazu verwendet. Insbesondere kann das Polymer beziehungsweise der Polymerelektrolyt beziehungsweise das Kathodenmaterial für eine Lithium-Schwefel-Zelle, insbesondere für eine Kathode , ausgelegt sein beziehungsweise verwendet werden.

Insbesondere kann im Fall einer Alkalimetall-Schwefel-Zelle, beispielsweise Lithium-Schwefel-Zelle, kann das Kathodenmaterial beziehungsweise die Kathode eine schwefelhaltige Verbindung und/oder elementaren Schwefel als Kathodenaktivmaterial umfassen.

Das mindestens eine Kathodenaktivmaterial beziehungsweise die Kathode kann daher insbesondere schwefelhaltig sein. Beispielsweise kann das mindestens eine Kathodenaktivmaterial eine schwefelhaltige Verbindung und/oder elementaren Schwefel umfassen.

Als besonders vorteilhaft hat sich die Verwendung des mindestens einen Polymers beziehungsweise des mindestens einen Polymerelektrolyten, insbesondere der vorstehenden allgemeinen chemischen Formel, in Kathodenmaterialien mit Schwefel-Kohlenstoff-Komposit/en und insbesondere in Schwefel-Polyacrylnitril-Komposit/en (Schwefel-PAN-Komposit/en), insbesondere SPAN, als Aktivmaterial beziehungsweise für Alkalimetall-Schwefel-Zellen, insbesondere Lithium-Schwefel-Zellen, herausgestellt.

Beispielsweise kann daher das mindestens eine Kathodenaktivmaterial (mindestens) einen Schwefel-Kohlenstoff-Komposit umfassen beziehungsweise sein. Unter einem Schwefel-Kohlenstoff-Komposit kann insbesondere ein Komposit verstanden werden, welcher Schwefel und Kohlenstoff umfasst. Insbesondere kann bei dem Schwefel-Kohlenstoff-Komposit Schwefel, beispielsweise kovalent und/oder ionisch, insbesondere kovalent, an Kohlenstoff gebunden und/oder darin eingebettet sein. Zum Beispiel kann das Kathodenmaterial beziehungsweise die Kathode einen Schwefel-Kohlenstoff-Komposit, beispielsweise Schwefel-Polyacrylnitril-Komposit, als Kathodenaktivmaterial umfassen. Durch die Anbindung beziehungsweise Einbettung des als solchen weder ionisch noch elektrisch leitfähigen Schwefels an beziehungsweise in den Kohlenstoff des Komposits kann vorteilhafterweise - beispielsweise verglichen mit einfachen Mischungen - eine verbesserte elektrische und/oder ionische Kontaktierung des Schwefels erzielt werden.

Zudem können so vorteilhafterweise bei einer Entladung (Reduktion) einer Zelle entstehende (Poly-)Sulfide Sₓ²⁻, welche gegebenenfalls ansonsten zur Anode, beispielsweise Lithiumanode, wandern und dort reduziert und damit der elektrochemischen Reaktion entzogen werden könnten, was auch als Shuttle-Mechanismus bezeichnet wird, besser in der Kathode zurück gehalten und auf diese Weise die Schwefelausnutzung und Zyklenstabilität verbessert werden. Dabei kann das Polymer beziehungsweise der Polymerelektrolyt in Kombination mit einem Schwefel-Kohlenstoff-Komposit als Kathodenaktivmaterial besonders vorteilhaft verwendet werden, da durch die Anbindung der Gruppe Q, beispielsweise Q beziehungsweise Q⁺ beziehungsweise Q⁻, - und gegebenenfalls des Spacers an die Polymer bildende Einheit -[A]- eine Lokalisierung der Gruppe Q und gegebenenfalls des Spacers X erzielt werden kann und - insbesondere durch die verglichen mit flüssigen Elektrolyten erhöhte Viskosität und/oder gegebenenfalls auch durch eine, insbesondere verglichen mit Polyethylenoxid (PEO), reduzierte Polysulfidlöslichkeit des Polymers beziehungsweise Polymerelektrolyten - (Poly-)Sulfide in der Nähe des Kohlenstoffs des Komposits gehalten werden können und beispielsweise auf diese Weise einem in Lösung gehen und insbesondere Wegdiffundieren von Polysulfiden von dem Kohlenstoff des Komposits, welches gegebenenfalls im Fall von niedermolekularen Ether-Verbindungen und/oder herkömmlichen kurzkettigen Polyethern, wie reinem Polyethylenoxid, auftreten könnte, entgegengewirkt werden. So kann wiederum vorteilhafterweise eine verbesserte kalendarische Stabilität erzielt und/oder der Energiedichteerhalt verbessert werden.

Insbesondere kann das mindestens eine Kathodenaktivmaterial einen Schwefel-Polymer- und/oder -Kohlenstoffmodifikation-Komposit umfassen beziehungsweise sein. Unter einem Schwefel-Polymer-Komposit kann insbesondere ein Komposit verstanden werden, welcher Schwefel und mindestens ein Polymer umfasst beziehungsweise daraus ausgebildet ist. Unter einem Schwefel-Kohlenstoffmodifikation-Komposit kann insbesondere ein Komposit verstanden werden, welcher Schwefel und eine Kohlenstoffmodifikation, also elementaren Kohlenstoff beziehungsweise Kohlenstoff der Oxidationszahl null, beispielsweise Kohlenstoffnanoröhrchen, und/oder Kohlenstoffhohlkugeln und/oder Graphen und/oder Graphit und/oder Ruß, umfasst.

Im Rahmen einer Ausführungsform umfasst das mindestens eine Kathodenaktivmaterial einen Schwefel-Polymer-Komposit. Beispielsweise kann der Schwefel-Polymer-Komposit - insbesondere neben Schwefel - (mindestens) ein, insbesondere elektrisch leitfähiges, Polymer, beispielsweise Polyacrylnitril, insbesondere cyclisiertes Polyacrylnitril (cPAN), und/oder Polypyrrol und/oder Polythiophen und/oder Polyphenylen, beispielsweise, insbesondere cyclisiertes, Polyacrylnitril und/oder Polyparaphenylen, umfassen beziehungsweise daraus ausgebildet sein. Insbesondere kann dabei Schwefel, beispielsweise kovalent und/oder ionisch, insbesondere kovalent, an das, insbesondere elektrisch leitfähige, Polymer gebunden und/oder in dessen Matrix eingebettet sein. Zum Beispiel kann das Kathodenmaterial beziehungsweise die Kathode einen Schwefel-Polymer-Komposit, beispielsweise Schwefel-Polyacrylnitril-Komposit, als Kathodenaktivmaterial umfassen. Durch Schwefel-Polymer-Komposite können - verglichen mit Schwefel-Kohlenstoffmodifikation-Kompositen - vorteilhafterweise eine verbesserte Anbindung und/oder eine, insbesondere feiner verteilte, Einbettung des Schwefels sowie auch verbesserte mechanische Eigenschaften erzielt werden, wodurch die elektrische und/oder ionische Kontaktierung sowie Schwefelausnutzung und damit die Energiedichte weiter verbessert werden kann.

Insbesondere kann das Kathodenmaterial beziehungsweise die Kathode ein Polymer mit, beispielsweise kovalent und/oder ionisch, insbesondere kovalent, gebundenem Schwefel, beispielsweise Polyacrylnitril, insbesondere mit kovalent gebundenem Schwefel, zum Beispiel SPAN, umfassen.

Im Rahmen einer Ausgestaltung dieser Ausführungsform umfasst das mindestens eine Kathodenaktivmaterial beziehungsweise ist der Schwefel-Polymer-Komposit ein Polymer mit, zum Beispiel teilweise oder vollständig, beispielsweise kovalent und/oder ionisch, insbesondere kovalent, gebundenem Schwefel. Beispielsweise kann das mindestens eine Kathodenaktivmaterial beziehungsweise der Schwefel-Polymer-Komposit ein Polymer mit, beispielsweise teilweise oder vollständig, insbesondere vollständig, kovalent gebundenem Schwefel umfassen beziehungsweise sein. Durch die, insbesondere kovalente, Anbindung des als solchen weder ionisch noch elektrisch leitfähigen Schwefels an das Polymer des Komposits kann vorteilhafterweise - beispielsweise verglichen mit einfachen Mischungen - eine verbesserte elektrische und/oder ionische Kontaktierung des Schwefels erzielt werden. Zudem können so vorteilhafterweise bei einer Entladung (Reduktion) einer Zelle entstehende (Poly-)Sulfide Sₓ²⁻, welche gegebenenfalls ansonsten zur Anode, beispielsweise Lithiumanode, wandern und dort reduziert und damit der elektrochemischen Reaktion entzogen werden könnten, was auch als Shuttle-Mechanismus bezeichnet wird, besser in der Kathode zurück gehalten und auf diese Weise die Schwefelausnutzung und Zyklenstabilität verbessert werden. Das Polymer beziehungsweise der Polymerelektrolyt kann in Kombination mit einem Polymer mit, beispielsweise kovalent und/oder ionisch, insbesondere kovalent, gebundenem Schwefel als Kathodenaktivmaterial besonders vorteilhaft verwendet werden, da durch die Anbindung der Gruppe Q, beispielsweise Q beziehungsweise Q⁺ beziehungsweise Q⁻, - und gegebenenfalls des Spacers an die Polymer bildende Einheit -[A]- und insbesondere durch eine, beispielsweise verglichen mit Polyethylenoxid (PEO), reduzierte Polysulfidlöslichkeit des Polymers beziehungsweise Polymerelektrolyten sowie beispielsweise auch eine verglichen mit flüssigen Elektrolyten erhöhte Viskosität des Polymers beziehungsweise Polymerelektrolyten - der angebundene Schwefel beziehungsweise die entstehenden (Poly-)Sulfide in der Nähe des Polymers des Komposits gehalten werden können und insbesondere auf diese Weise einem in Lösung gehen und Wegdiffundieren von Polysulfiden von dem Polymer des Komposits, welches gegebenenfalls im Fall von niedermolekularen Ether-Verbindungen und/oder herkömmlichen kurzkettigen Polyethern, wie reinem Polyethylenoxid, auftreten könnte, entgegengewirkt werden. So kann wiederum vorteilhafterweise die Zyklenlebensdauer und/oder der Energiedichteerhalt weiter verbessert werden.

Im Rahmen einer speziellen Ausführungsform umfasst das mindestens eine Kathodenaktivmaterial einen beziehungsweise ist der Schwefel-Polymer-Komposit ein Schwefel-Polyacrylnitril-Komposit, beispielsweise SPAN. Zum Beispiel kann das Kathodenmaterial beziehungsweise die Kathode einen Schwefel-Polyacrylnitril-Komposit, zum Beispiel SPAN, als Kathodenaktivmaterial umfassen. Gegebenenfalls kann das mindestens eine Kathodenaktivmaterial beziehungsweise der Schwefel-Polymer-Komposit ein Schwefel-Polyacrylnitril-Komposit, beispielsweise SPAN, sein. Schwefel-Polyacrylnitril-Komposite können vorteilhafterweise Schwefelgehalte von über 40 Gew.-% und damit vergleichsweise hohe materialspezifische Kapazitäten und Energiedichten aufweisen.

Im Rahmen einer speziellen Ausgestaltung dieser Ausführungsform umfasst das mindestens eine Kathodenaktivmaterial beziehungsweise ist der Schwefel-Polymer-Komposit ein Schwefel-Polyacrylnitril-Komposit beziehungsweise ein Polyacrylnitril mit, zum Beispiel teilweise oder vollständig, insbesondere vollständig, beispielsweise kovalent und/oder ionisch, insbesondere kovalent, gebundenem Schwefel, beispielsweise SPAN. Insbesondere kann das mindestens eine Kathodenaktivmaterial beziehungsweise der Schwefel-Polymer-Komposit SPAN umfassen beziehungsweise sein. Das Polymer beziehungsweise der Polymerelektrolyt kann in Kombination mit Polyacrylnitril mit, beispielsweise kovalent und/oder ionisch, insbesondere kovalent, gebundenem Schwefel, insbesondere SPAN, mit hohem kovalent gebundenem Schwefelgehalt von über 40wt%, als Kathodenaktivmaterial, besonders vorteilhaft verwendet werden, da, aufgrund der reduzierten Polysulfidlöslichkeit, der angebundene Schwefel beziehungsweise die angebundenen Schwefeleinheiten beziehungsweise -ketten in der Nähe des Polyacrylnitrils des Komposits gehalten werden können und beispielsweise auf diese Weise einem in Lösung gehen und Wegdiffundieren von, sich während des Ladebeziehungsweise Entladevorgangs durch die stattfindende Oxidation beziehungsweise Reduktion der Schwefeleinheiten bildende beziehungsweise zurückbildende (Poly-)Sulfide von dem Polyacrylnitril des Komposits, welches gegebenenfalls im Fall von niedermolekularen Ether-Verbindungen und/oder herkömmlichen kurzkettigen Polyethern, wie reinem Polyethylenoxid, auftreten könnte, entgegengewirkt werden. Dies kann zu einer weiteren Verbesserung des Kapazitätserhalts und damit auch des Energiedichteerhalts der Zelle führen.

Unter SPAN kann insbesondere ein auf Polyacrylnitril (PAN), insbesondere cyclisiertem Polyacrylnitril (cPAN), basierendes Komposit beziehungsweise Polymer mit, insbesondere kovalent, gebundenem Schwefel verstanden werden, insbesondere welches durch eine thermische Umsetzung und/oder chemische Reaktion von Polyacrylnitril in der Gegenwart von Schwefel erhältlich ist.

Insbesondere können dabei Nitrilgruppen zu einem Polymer, insbesondere mit konjugiertem π-System, reagieren, bei dem die Nitrilgruppen zu aneinander anhängenden, stickstoffhaltigen Ringen, insbesondere Sechsringen, insbesondere mit kovalent gebundenem Schwefel, umgesetzt werden. Zum Beispiel kann SPAN durch Erhitzen von Polyacrylnitril (PAN) mit einem Überschuss an elementarem Schwefel, insbesondere auf eine Temperatur von ≥ 300 °C, beispielsweise etwa ≥ 300 °C bis ≤ 600 °C, hergestellt werden. Dabei kann der Schwefel insbesondere zum einen das Polyacrylnitril (PAN) unter Ausbildung von Schwefelwasserstoff (H₂S) cyclisieren und zum anderen-beispielsweise unter Ausbildung einer kovalenten S-C-Bindung - fein verteilt in der cyclisierten Matrix gebunden werden, beispielweise wobei eine cyclisierte Polyacrylnitril-Struktur mit kovalenten Schwefel-Ketten, ausgebildet wird. SPAN wird in Chem. Mater., 2011, 23, 5024 und J. Mater. Chem., 2012, 22, 23240, J. Elektrochem. Soc., 2013, 160 (8), A1169-A1170, und in der Druckschrift WO 2013/182360 A1 beschrieben.

Alternativ oder zusätzlich dazu kann das mindestens eine Kathodenaktivmaterial einen Schwefel-Kohlenstoffmodifikation-Komposit umfassen, welcher-insbesondere neben Schwefel - (mindestens) eine Kohlenstoffmodifikation, beispielsweise Kohlenstoffröhrchen, zum Beispiel Kohlenstoffnanoröhrchen, und/oder Kohlenstoffhohlkugeln und/oder Graphen und/oder Graphit und/oder Ruß, umfasst beziehungsweise daraus ausgebildet sein. Dabei kann insbesondere Schwefel, in die Matrix der Kohlenstoffmodifikation, beispielsweise in die Kohlenstoffröhrchen und/oder Kohlenstoffhohlkugeln, beispielsweise kovalent und/oder ionisch, insbesondere kovalent, gebunden oder ungebunden, eingebettet sein. So kann vorteilhafterweise eine - beispielsweise verglichen mit einfachen Mischungen - verbesserte, elektrische und/oder ionische Kontaktierung sowie Schwefelausnutzung erzielt werden. Gegebenenfalls kann die Kohlenstoffmodifikation oberflächenmodifiziert, insbesondere mit einer Polysulfid-affinen Verbindung, zum Beispiel mit dem Polymer beziehungsweise Polymerelektrolyten, insbesondere der vorstehenden allgemeinen chemischen Formel, und/oder Polyethylenglykol, sein. So können vorteilhafterweise auch einem Wegdiffundieren von Polysulfiden entgegen gewirkt und Polysulfide besser in der Kathodenmatrix gehalten werden.

Die positiv geladene Gruppe Q⁺ kann beispielsweise für eine Gruppe auf der Basis eines Kations einer ionischen Flüssigkeit (Englisch: lonic Liquid), insbesondere für eine Pyridiniumgruppe oder eine, insbesondere quartäre, Ammoniumgruppe oder eine Imidazoliumgruppe oder eine Piperidiniumgruppe oder eine Pyrrolidiniumgruppe oder eine, insbesondere quartäre, Phosphoniumgruppe oder eine Guanidiniumgruppe oder eine Morpholiniumgruppe oder eine Uroniumgruppe oder eine Thiouroniumgruppe, stehen. Als Gegenion Z⁻ können zum Beispiel, beispielsweise alle gängigen, Gegenionen bekannter Lithiumsalze, insbesondere Lithium-Leitsalze, zum Beispiel für Lithium-Zellen, eingesetzt werden. Insbesondere kann daher Z⁻ für ein Anion, insbesondere ein Lithium-Leitsalzanion, stehen.

Unter einer Pyridiniumgruppe kann insbesondere eine von Pyridinium ableitbare, insbesondere substituierte oder unsubstituierte, Gruppe verstanden werden. Unter einer Ammoniumgruppe kann insbesondere eine von Ammonium ableitbare Gruppe, insbesondere eine quartäre Ammoniumgruppe, verstanden werden. Unter einer Imidazoliumgruppe kann insbesondere eine von Imidazolium ableitbare, insbesondere substituierte oder unsubstituierte, Gruppe verstanden werden. Unter einer Piperidiniumgruppe kann insbesondere eine von Piperidinium ableitbare, insbesondere substituierte oder unsubstituierte, Gruppe verstanden werden. Unter einer Pyrrolidiniumgruppe kann insbesondere eine von Pyrrolidinium ableitbare, insbesondere substituierte oder unsubstituierte, Gruppe verstanden werden. Unter einer Phosphoniumgruppe kann insbesondere eine von Phosphonium ableitbare Gruppe, insbesondere eine quartäre Phosphoniumgruppe, verstanden werden. Unter einer Guanidiniumgruppe kann insbesondere eine von Guanidinium ableitbare, insbesondere substituierte oder unsubstituierte, Gruppe verstanden werden. Unter einer Morpholiniumgruppe kann insbesondere eine von Morpholinium ableitbare, insbesondere substituierte oder unsubstituierte, Gruppe verstanden werden. Unter einer Uroniumgruppe kann insbesondere eine von Uronium ableitbare, insbesondere substituierte oder unsubstituierte, Gruppe verstanden werden. Unter einer Thiouroniumgruppe kann insbesondere eine von Thiouronium ableitbare, insbesondere substituierte oder unsubstituierte, Gruppe verstanden werden.

Beispielsweise kann die positiv geladene Gruppe Q⁺ für eine Pyridiniumgruppe oder eine, insbesondere quartäre, Ammoniumgruppe oder eine Imidazoliumgruppe oder eine Piperidiniumgruppe oder eine Pyrrolidiniumgruppe oder eine, insbesondere quartäre, Phosphoniumgruppe oder eine Guanidiniumgruppe oder eine Morpholiniumgruppe oder eine Uroniumgruppe oder eine Thiouroniumgruppe stehen, deren Proton/en durch einen Substituenten substituiert sind.

Insofern Q eine positiv geladene Gruppe Q⁺ umfasst, kann das Polymer beziehungsweise der Polymerelektrolyt beispielsweise eine Wiederholungseinheit der allgemeinen chemischen Formel: 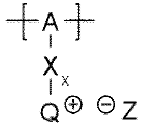 aufweisen.

Gruppen Q⁺, welche auf einem Kation einer ionischen Flüssigkeit basieren, insbesondere Pyridiniumgruppen, Ammoniumgruppen, Imidazoliumgruppen, Piperidiniumgruppe, Pyrrolidiniumgruppen, Phosphoniumgruppen, Guanidiniumgruppen, Morpholiniumgruppen, Uroniumgruppen und/oder Thiouroniumgruppen, können vorteilhaft sein, da durch eine Pyridiniumgruppe beziehungsweise Ammoniumgruppe beziehungsweise Imidazoliumgruppe beziehungsweise Piperidiniumgruppe beziehungsweise Pyrrolidiniumgruppe beziehungsweise Phosphoniumgruppe beziehungsweise Guanidiniumgruppe beziehungsweise Morpholiniumgruppe beziehungsweise Uroniumgruppe beziehungsweise Thiouroniumgruppe vorteilhafterweise die Dissoziation von Alkalisalzen, beispielsweise Alkalimetall-Leitsalzen, insbesondere Lithium-Leitsalzen, durch die Koordination an die positiv geladene Gruppe Q⁺ erhöht und so gegebenenfalls die Mobilität der Alkaliionen, insbesondere Lithiumionen, und damit die lonenleitfähigkeit, insbesondere die Lithiumionenleitfähigkeit, des Polymers beziehungsweise Polymerelektrolyten sowie die Dielektrizitätskonstante erhöht werden kann. Dies kann einen positiven Einfluss auf die Polysulfidlöslichkeit - und zwar derart, dass die Polysulfidlöslichkeit reduziert wird - haben, was sich wie erläutert insbesondere bei Schwefel-Kohlenstoff-Kompositen, beispielsweise Schwefel-Polymer- und/oder - Kohlenstoffmodifikation-Kompositen, insbesondere Schwefel-Polymer-Kompositen mit, beispielsweise kovalent und/oder ionisch, insbesondere kovalent, an das Polymer des Komposits gebundenem Schwefel, zum Beispiel Schwefel-Polyacrylnitril-Kompositen, insbesondere SPAN, besonders vorteilhaft auswirken kann.

Im Rahmen einer speziellen Ausführungsform steht daher die positiv geladene Gruppe Q⁺ für eine Gruppe auf der Basis eines Kations einer ionischen Flüssigkeit, insbesondere für eine Pyridiniumgruppe oder eine, insbesondere quartäre, Ammoniumgruppe oder eine Imidazoliumgruppe oder eine Piperidiniumgruppe oder eine Pyrrolidiniumgruppe oder eine Phosphoniumgruppe oder eine Guanidiniumgruppe oder eine Morpholiniumgruppe oder eine Uroniumgruppe oder eine Thiouroniumgruppe. Z⁻ kann dabei insbesondere für ein Anion, insbesondere ein Lithium-Leitsalzanion, stehen. Insbesondere kann die positiv geladene Gruppe Q⁺ für eine Pyridiniumgruppe oder eine, insbesondere quartäre, Ammoniumgruppe oder eine Imidazoliumgruppe oder eine Piperidiniumgruppe oder eine Pyrrolidiniumgruppe oder eine, insbesondere quartäre, Phosphoniumgruppe stehen. Pyridiniumgruppen, Ammoniumgruppen, Imidazoliumgruppen, Piperidiniumgruppe, Pyrrolidiniumgruppen und/oder Phosphoniumgruppen, können besonders vorteilhaft sein, da durch eine Pyridiniumgruppe beziehungsweise Ammoniumgruppe beziehungsweise Imidazoliumgruppe beziehungsweise Piperidiniumgruppe beziehungsweise Pyrrolidiniumgruppe beziehungsweise Phosphoniumgruppe vorteilhafterweise die lonenleitfähigkeit und die Dielektrizitätskonstante des Polymers beziehungsweise Polymerelektrolyten auf vergleichsweise einfache Weise erhöht werden kann.

Im Rahmen einer Ausgestaltung dieser Ausführungsform steht Q⁺ für eine, insbesondere quartäre, Ammoniumgruppe oder eine Imidazoliumgruppe oder eine Pyridiniumgruppe stehen. Im Rahmen einer speziellen Ausgestaltung dieser Ausführungsform steht Q⁺ für eine Pyridiniumgruppe. Im Rahmen einer weiteren speziellen Ausgestaltung dieser Ausführungsform steht Q⁺ für eine, insbesondere quartäre, Ammoniumgruppe. Im Rahmen einer weiteren speziellen Ausgestaltung dieser Ausführungsform steht Q⁺ für eine Imidazoliumgruppe. Im Rahmen einer weiteren speziellen Ausgestaltung dieser Ausführungsform steht Q⁺ für eine Piperidiniumgruppe. Im Rahmen einer weiteren speziellen Ausgestaltung dieser Ausführungsform steht Q⁺ für eine Pyrrolidiniumgruppe. Im Rahmen einer weiteren speziellen Ausgestaltung dieser Ausführungsform steht Q⁺ für eine, insbesondere quartäre, Phosphoniumgruppe. Im Rahmen einer weiteren speziellen Ausgestaltung dieser Ausführungsform steht Q⁺ für eine Guanidiniumgruppe. Im Rahmen einer weiteren speziellen Ausgestaltung dieser Ausführungsform steht Q⁺ für eine Morpholiniumgruppe. Im Rahmen einer weiteren speziellen Ausgestaltung dieser Ausführungsform steht Q⁺ für eine Uroniumgruppen. Im Rahmen einer weiteren speziellen Ausgestaltung dieser Ausführungsform steht Q⁺ für eine Thiouroniumgruppe.

Im Rahmen einer weiteren Ausführungsform steht Z⁻ für ein Lithium-Leitsalzanion. So kann vorteilhafterweise eine Dissoziation eines Lithium-Leitsalzes erhöht und auf diese Weise auch die Mobilität der Lithiumionen des Lithium-Leitsalzes und damit die Lithiumionenleitfähigkeit des Polymers beziehungsweise Polymerelektrolyten erhöht werden.

Beispielsweise kann Z⁻ für Perchlorat (ClO₄⁻), Tetrafluoroborat (BF4⁻), Trifluormethansulfonat (Triflat⁻, F₃CSO₃⁻), Bisoxalatoborate (BOB⁻, 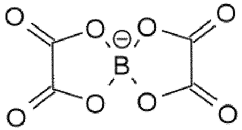 ), Hexafluorophosphat (PF₆⁻), Bromid (Br⁻) oder lodid (I⁻) oder Chlorid (Cl⁻), (Bis-)Trifluormethansulfonylimid (TFSI⁻: F₃C-SO₂-(N⁻)-SO₂-CF₃) oder Difluorooxalatoborat (DFOB⁻: 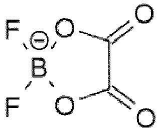 ) stehen. Diese Anionen werden häufig als Lithium-Leitsalzanion eingesetzt. Daher können diese Anionen zur Solvatisierung von Lithium-Leitsalzen besonders vorteilhaft eingesetzt werden.

Im Rahmen einer Ausgestaltung dieser Ausführungsform steht daher Z⁻ für Perchlorat und/oder Trifluormethansulfonat und/oder Tetrafluoroborat und/oder Bisoxalatoborat und/oder Hexafluorophosphat, und/oder Bis(trifluormethansulfonyl)imid und/oder Bis(perfluorethansulfonyl)imid und/oder Bis(fluorsulfonyl)imid, insbesondere Bis(trifluormethansulfonyl)imid, und/oder Difluorooxalatoborat (⁻DFOB) und/oder Bromid und/oder lodid und/oder Chlorid. Insbesondere kann Z⁻ für Bis(trifluormethansulfonyl)imid und/oder Bis(perfluorethansulfonyl)imid und/oder Bis(fluorsulfonyl)imid, insbesondere Bis(trifluormethansulfonyl)imid, Trifluormethansulfonat und/oder Tetrafluoroborat und/oder Bisoxalatoborat und/oder Difluorooxalatoborat (⁻DFOB) und/oder Bromid und/oder lodid und/oder Chlorid stehen. So kann vorteilhafterweise eine höhere thermische Stabilität erzielt werden.

Im Rahmen einer speziellen Ausgestaltung steht Z⁻ für Bis(trifluormethansulfonyl)imid (TFSI⁻: F₃C-SO₂-(N⁻)-SO₂-CF₃) und/oder Bis(perfluorethansulfonyl)imid (BETI⁻: F₅C₂-SO₂-(N⁻)-SO₂-C₂F₅) und/oder Bis(fluorsulfonyl)imid (FSI: F-SO₂-(N⁻)-SO₂-F), insbesondere Bis(trifluormethansulfonyl)imid, und/oder Trifluormethansulfonat (Triflat, SO₃-CF₃). Durch große, weiche Anionen Bis(trifluormethansulfonyl)imid und/oder Bis(perfluorethansulfonyl)imid und/oder Bis(fluorsulfonyl)imid und/oder Trifluormethansulfonat, insbesondere Bis(trifluormethansulfonyl)imid (TFSI⁻), kann vorteilhafterweise eine, vergleichsweise schwache und damit die Ionenmobilität, insbesondere Lithiumionenmobilität, und lonenleitfähigkeit, insbesondere Lithiumionenleitfähigkeit, erhöhende Koordination von Kationen, insbesondere Lithiumionen, erzielt und beispielsweise die Löslichkeit von Leitsalzen in dem Polymer beziehungsweise Polymerelektrolyten sowie gegebenenfalls die thermische Stabilität verbessert werden.

Derartige Polymere beziehungsweise Polymerelektrolyte können besonders vorteilhaft, insbesondere als lithiumionenleitfähiger Elektrolyt, beispielsweise Festelektrolyt, in einem Kathodenmaterial, beispielsweise mit einem Schwefel-Kohlenstoff-Komposit, zum Beispiel mit einem Komposit aus einem, insbesondere elektrisch leitfähigen, Polymer und Schwefel, insbesondere mit einem Schwefel-Polyacrylnitril(PAN)-Komposit, zum Beispiel SPAN, als Kathodenaktivmaterial, zum Beispiel in einer Lithium-Schwefel-Zelle, eingesetzt beziehungsweise verwendet werden.

Insofern Q eine negativ geladene Gruppe Q⁻ umfasst, kann das Polymer beziehungsweise der Polymerelektrolyt beispielsweise eine Wiederholungseinheit der allgemeinen chemischen Formel: 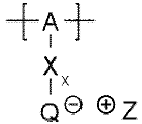 aufweisen.

Das Gegenion Z⁺ kann insbesondere für ein Alkaliion, beispielsweise für ein Lithiumion und/oder Natriumion, insbesondere für ein Lithiumion (Li⁺), stehen. Aufgrund der negativen Ladung der Gruppe Q⁻, beispielsweise Sulfonatgruppe, kann hierbei vorteilhafterweise direkt beispielsweise Lithium (Li⁺) das Gegenion zur negativen Ladung der Gruppe Q⁻ beispielsweise Sulfonatgruppe, sein und insbesondere eine lonenleitfähigkeit bereitstellen. So kann vorteilhafterweise auf ein Beimischen von Leitsalz verzichtet werden.

Im Rahmen einer Ausgestaltung dieser Ausführungsform steht daher Z⁺ für ein Lithiumion.

Die negativ geladene Gruppe Q⁻ kann beispielsweise für eine Gruppe auf der Basis eines Leitsalzanions, insbesondere Lithium-Leitsalzanions, beispielsweise für eine Sulfonylimidgruppe, beispielsweise für eine Trifluormethansulfonylimid-Gruppe (TFSI⁻: F₃C-SO₂-(N⁻)-SO₂-) und/oder Perfluorethansulfonylimid-Gruppe (PFSI⁻: F₅C₂-SO₂-(N⁻)-SO₂-) und/oder Fluorsulfonylimid-Gruppe (FSI: F-SO₂-(N⁻)-SO₂-), und/oder für eine Gruppe auf der Basis eines Anions einer ionischen Flüssigkeit (Englisch: lonic Liquid), beispielsweise für eine Pyrazolid-Gruppe oder für eine Imidazolid-Gruppe, und/oder für eine Sulfonatgruppe, beispielsweise für eine für eine (einfache) Sulfonatgruppe oder für eine Trifluormethansulfonat-Gruppe (Triflat, -SO₃CF₂-), und/oder für eine Sulfatgruppe und/oder für eine Carboxylatgruppe und/oder für eine Gruppe auf der Basis eines phosphorsäurebasierten Anions, insbesondere für eine Phosphatgruppe, und/oder für eine Gruppe auf der Basis eines Anions eines Imids, insbesondere für eine Sulfonylimidgruppe, beispielsweise für eine Trifluormethansulfonylimid-Gruppe (TFSI⁻: F₃C-SO₂-(N⁻)-SO₂-) und/oder Perfluorethansulfonylimid-Gruppe (PFSI⁻: F₅C₂-SO₂-(N⁻)-SO₂-) und/oder Fluorsulfonylimid-Gruppe (FSI: F-SO₂-(N⁻)-SO₂-), und/oder für eine Gruppe auf der Basis eines Anions eines Amids, insbesondere für eine Gruppe auf der Basis eines Anions eines sekundären Amids (-R-NHR), und/oder für eine Gruppe auf der Basis eines Anions eines Carbonsäureamids, insbesondere für eine Gruppe auf der Basis eines Anions eines sekundären Carbonsäureamids (-CO-NHR), stehen. Durch eine negativ geladene Gruppe Q⁻ können insbesondere Alkalimetallionen, insbesondere Lithiumionen, koordiniert beziehungsweise solvatisiert werden. Dabei kann sich - insbesondere durch die kovalente Anbindung der negativ geladenen Gruppe Q⁻ an die Polymerrücken bildende Einheit -[A]- - eine hohe Transferzahl nahe 1 ergeben. Zudem kann so vorteilhafterweise die Dielektrizitätskonstante erhöht werden, was einen positiven Einfluss auf die Polysulfidlöslichkeit - und zwar derart, dass die Polysulfidlöslichkeit reduziert wird - haben kann, was sich wie erläutert insbesondere bei Schwefel-Kohlenstoff-Kompositen, beispielsweise Schwefel-Polymer- und/oder -Kohlenstoffmodifikation-Kompositen, insbesondere Schwefel-Polymer-Kompositen mit, beispielsweise kovalent und/oder ionisch, insbesondere kovalent, an das Polymer des Komposits gebundenem Schwefel, zum Beispiel Schwefel-Polyacrylnitril-Kompositen, insbesondere SPAN, besonders vorteilhaft auswirken kann.

Im Rahmen einer speziellen Ausführungsform steht daher die negativ geladene Gruppe Q⁻ für eine Gruppe auf der Basis eines Lithium-Leitsalzanions, insbesondere Lithium-Leitsalzanions, und/oder für eine Gruppe auf der Basis eines Anions einer ionischen Flüssigkeit und/oder für eine Sulfonatgruppe und/oder für eine Sulfatgruppe und/oder für eine Carboxylatgruppe und/oder für eine Gruppe auf der Basis eines phosphorsäurebasierten Anions und/oder für eine Gruppe auf der Basis eines Anions eines Imids und/oder für eine Gruppe auf der Basis eines Anions eines Amids und/oder für eine Gruppe auf der Basis eines Anions eines Carbonsäureamids.

Im Rahmen einer Ausgestaltung dieser Ausführungsform steht die negativ geladene Gruppe Q⁻ für eine Sulfonylimidgruppe, insbesondere für eine Trifluormethansulfonylimid-Gruppe (F₃C-SO₂-(N⁻)-SO₂-) und/oder Perfluorethansulfonylimid-Gruppe (F₅C₂-SO₂-(N⁻)-SO₂-) und/oder Fluorsulfonylimid-Gruppe (F-SO₂-(N⁻)-SO₂-), insbesondere Trifluormethansulfonylimid-Gruppe, und/oder für eine Sulfonatgruppe, insbesondere für eine (einfache) Sulfonatgruppe und/oder für eine Trifluormethansulfonat-Gruppe, steht. Beispielsweise kann die negativ geladene Gruppe Q⁻ für eine Trifluormethansulfonylimid-Gruppe oder Perfluorethansulfonylimid-Gruppe oder Fluorsulfonylimid-Gruppe oder eine Sulfonatgruppe oder eine Trifluormethansulfonat-Gruppe stehen. Im Rahmen einer speziellen Ausgestaltung kann die negativ geladene Gruppe Q für eine Sulfonatgruppe oder eine Sulfonylimidgruppe, insbesondere für eine Sulfonatgruppe, stehen. Durch eine Sulfonylimidgruppe oder eine Sulfonatgruppe, insbesondere Sulfonylimidgruppe, kann vorteilhafterweise eine, vergleichsweise schwache und damit die Ionenmobilität, insbesondere Lithiumionenmobilität, und lonenleitfähigkeit, insbesondere Lithiumionenleitfähigkeit, erhöhende Koordination von Kationen, insbesondere Lithiumionen, erzielt werden. Z⁺ kann dabei insbesondere für ein Lithiumion stehen.

Insbesondere kann die negativ geladene Gruppe Q⁻ für eine Benzolgruppe stehen, welche mit mindestens einer Gruppe auf der Basis eines Leitsalzanions, insbesondere Lithium-Leitsalzanions, insbesondere mit mindestens einer Sulfonylimidgruppe (Benzolsulfonylimidgruppe, beispielsweise Lithium-Benzolsulfonylimidgruppe), und/oder mit mindestens einer Gruppe auf der Basis eines Anions einer ionischen Flüssigkeit und/oder mit mindestens einer Sulfonatgruppe (Benzolsulfonatgruppe, beispielsweise LithiumBenzolsulfonatgruppe) und/oder mit mindestens einer Sulfatgruppe und/oder mit mindestens einer Carboxylatgruppe und/oder mit mindestens einer Gruppe auf der Basis eines phosphorsäurebasierten Anions, insbesondere mit mindestens einer Phosphatgruppe, und/oder mit mindestens einer Gruppe auf der Basis eines Anions eines Imids und/oder mit mindestens einer Gruppe auf der Basis eines Anions eines Amids und/oder mit mindestens einer Gruppe auf der Basis eines Anions eines Carbonsäureamids substituiert ist. Zum Beispiel kann die negativ geladene Gruppe Q⁻ für eine Benzolgruppe stehen, welche mit mindestens einer Trifluormethansulfonylimid-Gruppe und/oder mit mindestens einer Perfluorethansulfonylimid-Gruppe und/oder mit mindestens einer Fluorsulfonylimid-Gruppe, insbesondere mit mindestens einer Trifluormethansulfonylimid-Gruppe, substituiert ist. Im Rahmen einer Ausgestaltung steht Q⁻ für eine Benzolsulfonatgruppe oder eine Benzolsulfonylimidgruppe, insbesondere eine Benzolsulfonatgruppe. Eine Benzolgruppe ermöglicht es vorteilhafterweise eine Gruppe, beispielsweise ein Sulfonat, auf einfache Weise an unterschiedlichste Polymerrücken anzubinden. Zudem bietet eine Benzolgruppe die Möglichkeit auf einfache Weise weitere, die lonenleitfähigkeit erhöhende Substituenten, wie mehrere Gruppen, beispielsweise Sulfonatgruppen, und/oder eine oder mehrere Alkylenoxidgruppe/n, anzubinden. Ein Polymer mit einer, insbesondere derartig funktionalisierten, Benzolgruppe kann vorteilhafterweise durch Polymerisation der Doppelbindung eines, insbesondere derartig funktionalisierten Styrols, zum Beispiel von 4-(Styrolsulfonyl)(trifluoromethansulfonyl)imid, oder eines mit vorstehend genannten anionischen Gruppen, funktionalisierten Styrols, auf einfache Weise ausgebildet werden. Die Anknüpfung der anionischen Funktion an einen Polymerrücken kann beispielsweise auch über eine funktionelle Gruppe in para-Stellung zur anionischen Gruppe im aromatischen Kohlenstoffsechsring erfolgen. Zudem bietet ein aromatischer Kohlenstoffsechsring die Möglichkeit auf einfache Weise weitere, die lonenleitfähigkeit erhöhende Substituenten anzubinden.

Im Rahmen einer speziellen Ausgestaltung dieser Ausführungsform steht daher die negativ geladene Gruppe Q⁻ für eine Benzolsulfonylimidgruppe, zum Beispiel eine *para-* und/oder ortho- und/oder meta-Benzolsulfonylimidgruppe, beispielsweise eine para-Benzolsulfonylimidgruppe, und/oder eine Benzolsulfonatgruppe, beispielsweise für eine Benzolsulfonatgruppe, zum Beispiel eine *para-* und/oder ortho- und/oder meta-Benzolsulfonatgruppe, beispielsweise eine para-Benzolsulfonatgruppe. Benzolsulfonylimidgruppen und/oder Benzolsulfonatgruppen, beispielsweise eine *para-, ortho-* und/oder meta-Benzolsulfonylimidgruppe und/oder *para-, ortho-* und/oder *meta-*Benzolsulfonatgruppe, insbesondere eine para-Benzolsulfonylimidgruppe und/oder eine para-Benzolsulfonatgruppe, können dabei wie vorstehend erläutert besonders vorteilhaft sein.

Im Rahmen einer speziellen Ausgestaltung dieser Ausführungsform steht Q⁻ für eine Sulfonylimidgruppe, beispielsweise eine Benzolsulfonylimidgruppe. So kann vorteilhafterweise durch das weiche Anion eine, vergleichsweise schwache und damit die Ionenmobilität, insbesondere Lithiumionenmobilität, und lonenleitfähigkeit, insbesondere Lithiumionenleitfähigkeit, erhöhende Koordination von Kationen, insbesondere von Lithiumionen, erzielt werden.

Im Rahmen einer weiteren speziellen Ausgestaltung dieser Ausführungsform steht Q⁻ für eine Sulfonatgruppe, beispielsweise eine Benzolsulfonatgruppe.

Derartige Polymere beziehungsweise Polymerelektrolyte können besonders vorteilhaft, insbesondere als lithiumionenleitfähiger Elektrolyt, beispielsweise Festelektrolyt, in einem Kathodenmaterial, beispielsweise mit einem Schwefel-Kohlenstoff-Komposit, zum Beispiel mit einem Komposit aus einem, insbesondere elektrisch leitfähigen, Polymer und Schwefel, insbesondere mit einem Schwefel-Polyacrylnitril(PAN)-Komposit, zum Beispiel SPAN, als Kathodenaktivmaterial, zum Beispiel in einer Lithium-Schwefel-Zelle, eingesetzt beziehungsweise verwendet werden.

Insofern Q eine neutrale Gruppe ist, kann das Polymer beziehungsweise der Polymerelektrolyt beispielsweise eine Wiederholungseinheit der allgemeinen chemischen Formel: 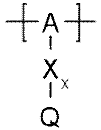 aufweisen.

Durch eine ungeladene Gruppe Q können vorteilhafterweise von Leitsalzen, beispielsweise Alkalisalzen, insbesondere Lithium-Leitsalzen, die Alkaliionen, insbesondere Lithiumionen, koordiniert beziehungsweise solvatisiert und auf diese Weise die Mobilität der Alkaliionen, beispielsweise Lithiumionen, und damit die lonenleitfähigkeit, insbesondere Lithiumionenleitfähigkeit, des Polymers beziehungsweise Polymerelektrolyten erhöht werden. Dies kann beispielsweise durch Wahl des Spacers X begünstigt werden.

Im Rahmen einer speziellen Ausführungsform steht daher die ungeladene Gruppe Q für eine von einem Elektrolytlösungsmittel ableitbare Gruppe, insbesondere für eine cyclische Carbonatgruppe oder eine, insbesondere cyclische, Lactongruppe oder eine cyclische Carbamatgruppe oder eine acyclische Carbonatgruppe oder eine acyclische Carbonsäureestergruppe oder eine acyclische Carbamatgruppe oder eine Alkylenoxidgruppe, insbesondere Oligo-Alkylenoxidgruppe. Eine cyclische Carbonatgruppe oder Lactongruppe oder cyclische Carbamatgruppe oder acyclische Carbonatgruppe oder acyclische Carbonsäureestergruppe oder acyclische Carbamatgruppe oder Alkylenoxidgruppe, beispielsweise Oligo-Alkylenoxidgruppe, kann dabei vorteilhaft sein, da hierdurch vorteilhafterweise die Mobilität von Alkaliionen, beispielsweise Lithiumionen, und damit die lonenleitfähigkeit, insbesondere Lithiumionenleitfähigkeit, des Polymers beziehungsweise Polymerelektrolyten erhöht werden kann.

Im Rahmen einer Ausgestaltung dieser Ausführungsform steht die ungeladene Gruppe Q für eine cyclische Carbonatgruppe oder eine Lactongruppe oder eine cyclische Carbamatgruppe oder eine acyclische Carbonatgruppe oder eine acyclische Carbonsäureestergruppe oder eine acyclische Carbamatgruppe. Durch die hohe Polarität dieser Gruppen können diese Gruppen vorteilhafterweise die lonendissoziation und die Dielektrizitätskonstante des Polymers beziehungsweise Polymerelektrolyten erhöhen und damit vorteilhafterweise die Polysulfidlöslichkeit reduzieren, was insbesondere bei Schwefel-Polyacrylnitril-Kompositen, wie SPAN, besonders vorteilhaft sein kann.

Im Rahmen einer weiteren Ausgestaltung dieser Ausführungsform steht die ungeladene Gruppe Q für eine, insbesondere cyclische oder acyclische, Carbonsäureestergruppe, beispielsweise Lactongruppe, oder eine, insbesondere cyclische oder acyclische, Carbonsäureestergruppe. Durch die hohe Polarität dieser Gruppen können diese Gruppen vorteilhafterweise die Dielektrizitätskonstante des Polymers beziehungsweise Polymerelektrolyten erhöhen und damit vorteilhafterweise die Polysulfidlöslichkeit reduzieren, was insbesondere bei Schwefel-Polyacrylnitril-Kompositen, wie SPAN, besonders vorteilhaft sein kann.

Im Rahmen einer anderen Ausgestaltung dieser Ausführungsform steht die, insbesondere ungeladene, Gruppe Q für eine cyclische Carbonatgruppe oder eine Lactongruppe oder eine Carbamatgruppe, insbesondere eine cyclische Carbamatgruppe oder eine acyclische Carbamatgruppe. Insbesondere kann Q dabei für eine cyclische Carbonatgruppe oder eine, insbesondere cyclische, Lactongruppe oder eine cyclische Carbamatgruppe stehen. Cyclische Carbonatgruppen, Lactongruppen und/oder cyclische Carbamatgruppe können zur Erhöhung der lonenleitfähigkeit des Polymers insgesamt besonders vorteilhaft sein.

Im Rahmen einer speziellen Ausgestaltung dieser Ausführungsform steht Q für eine cyclische Carbonatgruppe, beispielsweise welche einen Fünfring oder einen Sechsring oder einen Siebenring, insbesondere einen Fünfring, bildet. Im Rahmen einer weiteren speziellen Ausgestaltung dieser Ausführungsform steht Q für eine Lactongruppe, beispielsweise welche einen Fünfring oder einen Sechsring oder einen Siebenring, insbesondere einen Fünfring, bildet. Im Rahmen einer weiteren speziellen Ausgestaltung dieser Ausführungsform steht Q für eine cyclische Carbamatgruppe, beispielsweise welche einen Fünfring oder einen Sechsring oder einen Siebenring, insbesondere einen Fünfring, bildet. Im Rahmen einer weiteren speziellen Ausgestaltung dieser Ausführungsform steht Q für eine Alkylenoxidgruppe, insbesondere eine Oligo-Alkylenoxidgruppe. So kann vorteilhafterweise die Glastemperatur verringert und/oder gegebenenfalls die Lithiumionenleitfähigkeit erhöht werden. Im Rahmen einer weiteren speziellen Ausgestaltung dieser Ausführungsform steht Q für eine acyclische Carbonatgruppe. Im Rahmen einer weiteren speziellen Ausgestaltung dieser Ausführungsform steht Q für eine acyclische Carbonsäureestergruppe. Im Rahmen einer weiteren speziellen Ausgestaltung dieser Ausführungsform steht Q für eine acyclische Carbamatgruppe. Im Rahmen einer weiteren speziellen Ausführungsform steht Q für Wasserstoff oder eine Alkylgruppe, insbesondere eine Methylgruppe oder eine Ethylgruppe. So kann gegebenenfalls die Glastemperatur verringert werden

Derartige Polymere beziehungsweise Polymerelektrolyte können besonders vorteilhaft, insbesondere als lithiumionenleitfähiger Elektrolyt, beispielsweise Festelektrolyt, in einem Kathodenmaterial, beispielsweise mit einem Schwefel-Kohlenstoff-Komposit, zum Beispiel mit einem Komposit aus einem, insbesondere elektrisch leitfähigen, Polymer und Schwefel, insbesondere mit einem Schwefel-Polyacrylnitril(PAN)-Komposit, zum Beispiel SPAN, als Kathodenaktivmaterial, zum Beispiel in einer Lithium-Schwefel-Zelle, eingesetzt beziehungsweise verwendet werden.

Im Rahmen einer weiteren Ausführungsform steht Q für eine positiv geladene Gruppe Q⁺ und ein Gegenion Z⁻ und/oder für eine negativ geladene Gruppe Q⁻ und ein Gegenion Z⁺. Dies hat sich als besonders vorteilhaft herausgestellt, da hierdurch die lonendissoziation erhöht und die Polysulfidlöslichkeit verringert werden kann. Besonders vorteilhaft können Wiederholungseinheiten mit einer positiv geladenen Gruppe Q⁺ und einem Gegenion Z⁻ und/oder mit einer negativ geladenen Gruppe Q⁻ und einem Gegenion Z⁺, in Kombination mit ungeladenen, ionenleitfähigen beziehungsweise -leitenden, Gruppen, beispielsweise Alkylenoxidgruppen und/oder cyclischen und/oder acyclischen Carbonatgruppen und/oder cyclischen und/oder acyclischen Carbonsäureestergruppen, beispielsweise Lactongruppen und/oder cyclischen und/oder acyclischen Carbamatgruppen, insbesondere Alkylenoxidgruppen, wie Oligo-AlkylenoxidGruppen und/oder Polyethern, herausgestellt, da durch die positiv beziehungsweise negativ geladene Gruppe Q⁺ beziehungsweise Q⁻ die lonendissoziation erhöht und durch die ungeladene Gruppe Q die lonenmobilität erhöht werden kann, was insgesamt zu einer deutlichen Steigerung der lonenleitfähigkeit, beispielsweise Lithiumionenleitfähigkeit, führen kann.

Im Rahmen einer weiteren Ausführungsform umfasst der Spacer X mindestens eine, insbesondere substituierte oder unsubstituierte, gesättigte oder ungesättigte, lineare oder verzweigte, Alkylengruppe und/oder mindestens eine, insbesondere substituierte oder unsubstituierte, gesättigte oder ungesättigte, lineare oder verzweigte, Alkylenoxidgruppe und/oder mindestens eine, insbesondere substituierte oder unsubstituierte, Phenylenoxidgruppe, beispielsweise Oligo-Phenylenoxidgruppe, insbesondere mit ≥ 1 oder ≥ 2 bis ≤ 10 Wiederholungseinheiten, und/oder mindestens eine, insbesondere substituierte oder unsubstituierte, Phenylengruppe, beispielsweise Oligo-Phenylengruppe, insbesondere mit ≥ 1 oder ≥ 2 bis ≤ 10 Wiederholungseinheiten, und/oder mindestens eine, insbesondere substituierte oder unsubstituierte, Benzylengruppe, beispielsweise Oligo-Benzylengruppe, insbesondere mit ≥ 1 oder ≥ 2 bis ≤ 10 Wiederholungseinheiten, und/oder mindestens eine Carbonylgruppe, insbesondere Ketongruppe, zum Beispiel Alkylcarbonylgruppe, und/oder mindestens eine cyclische Carbonatgruppe und/oder mindestens eine Lactongruppe und/oder mindestens eine cyclische Carbamatgruppe und/oder mindestens eine acyclische Carbonatgruppe und/oder mindestens eine acyclische Carbonsäureestergruppe und/oder mindestens eine acyclische Carbamatgruppe und/oder mindestens einen Ethersauerstoff und/oder mindestens eine positiv geladene Gruppe, beispielsweise mindestens eine, insbesondere quartäre, Ammoniumiongruppe und/oder mindestens eine Pyridiniumgruppe und/oder mindestens eine Imidazoliumgruppe und/oder mindestens eine Piperidiniumgruppe und/oder mindestens eine Pyrrolidiniumgruppe und/oder mindestens eine, insbesondere quartäre, Phosphoniumgruppe und/oder mindestens eine Guanidiniumgruppe und/oder mindestens eine Morpholiniumgruppe und/oder mindestens eine Uroniumgruppe und/oder mindestens eine Thiouroniumgruppe, und/oder mindestens eine negativ geladene Gruppe, beispielsweise mindestens eine Sulfonatgruppe und/oder Trifluormethansulfonylimid-Gruppe, zum Beispiel mindestens eine Lithiumsulfonatgruppe und/oder Lithium-Trifluormethansulfonylimid-Gruppe, insbesondere Lithiumbenzolsulfonatgruppe und/oder Lithium-Trifluormethansulfonylimid-Benzol-Gruppe. Dabei kann der Spacer X auch eine Kombination dieser Gruppen aufweisen. Durch einen derartigen Spacer X kann vorteilhafterweise die lonenleitfähigkeit des Polymers beziehungsweise Polymerelektrolyten insgesamt erhöht werden, beispielsweise wobei durch den Polymerrücken hinsichtlich anderer Eigenschaften optimiert werden kann. Durch die Einführung mindestens einer - gegebenenfalls zusätzlichen - cyclischen Carbonatgruppe und/oder Lactongruppe und/oder cyclischen Carbamatgruppe und/oder acyclischen Carbonatgruppe und/oder acyclischen Carbonsäureestergruppe und/oder acyclischen Carbamatgruppe und/oder positiv geladenen Gruppe, insbesondere auf der Basis eines Kations einer ionischen Flüssigkeit, beispielsweise einer, insbesondere quartären, Ammoniumiongruppe und/oder einer Pyridiniumgruppe und/oder einer Imidazoliumgruppe und/oder einer Piperidiniumgruppe und/oder einer Pyrrolidiniumgruppe und/oder einer, insbesondere quartäre, Phosphoniumgruppe und/oder einer Guanidiniumgruppe und/oder einer Morpholiniumgruppe und/oder einer Uroniumgruppe und/oder einer Thiouroniumgruppe, und/oder einer negativ geladenen Gruppe, beispielsweise einer Sulfonylimidgruppe und/oder Sulfonatgruppe, in den Spacer X kann vorteilhafterweise die lonenleitfähigkeit - insbesondere wie im Zusammenhang mit den korrespondierenden Gruppen Q, Q⁺ und Q⁻ erläutert - weiter erhöht werden.

Im Rahmen einer Ausgestaltung dieser Ausführungsform umfasst der Spacer X mindestens eine, insbesondere substituierte oder unsubstituierte, gesättigte oder ungesättigte, lineare oder verzweigte, Alkylenoxidgruppe, insbesondere Oligo-Alkylenoxid-Gruppe. Dabei kann der Spacer X beispielsweise mindestens eine, beispielsweise substituierte oder unsubstituierte, gesättigte oder ungesättigte, lineare oder verzweigte, Ethylenoxid-Gruppe und/oder Propylenoxid-Gruppe, insbesondere Oligo-Ethylenoxid-Gruppe und/oder Oligo-Propylenoxid-Gruppe, umfassen. Insbesondere kann der Spacer X dabei mindestens eine, beispielsweise substituierte oder unsubstituierte, gesättigte oder ungesättigte, lineare oder verzweigte, Ethylenoxid-Gruppe, insbesondere Oligo-Ethylenoxid-Gruppe, umfassen. So kann vorteilhafterweise die lonenmobilität erhöht werden. Dies kann im Fall einer positiv geladenen Gruppe Q⁺ und/oder im Fall einer negativ geladenen Gruppe Q⁻ besonders vorteilhaft sein, insbesondere um dissoziierte Ionen zu mobilisieren und auf diese Weise die lonenleitfähigkeit zu erhöhen.

Die mindestens eine Alkylenoxidgruppe des Spacers X kann insbesondere teilweise oder vollständig halogeniert, insbesondere fluoriert, beispielsweise perfluoriert, sein. Durch eine Halogenierung, insbesondere Fluorierung, beispielsweise Perfluorierung, kann vorteilhafterweise die Löslichkeit von Polysulfiden durch das Polymer beziehungsweise den Polymerelektrolyten, insbesondere durch Alkylenoxidgruppen, verringert werden, was bei einer Verwendung in Kombination mit einem Schwefel-Kohlenstoff-Komposit, beispielsweise Schwefel-Polymer- und/oder -Kohlenstoffmodifikation-Komposit, insbesondere Schwefel-Polymer-Komposit mit, beispielsweise kovalent und/oder ionisch, insbesondere kovalent, an das Polymer des Komposits gebundenem Schwefel, beispielsweise einem Schwefel-Polyacrylnitril-Komposit, zum Beispiel einem SPAN-Komposit, als Kathodenmaterial besonders vorteilhaft sein kann.

Im Rahmen einer weiteren, alternativen oder zusätzlichen Ausgestaltung dieser Ausführungsform umfasst der Spacer X mindestens eine Carbonylgruppe, insbesondere mindestens eine cyclische Carbonatgruppe und/oder mindestens eine Lactongruppe und/oder mindestens eine cyclische Carbamatgruppe und/oder mindestens eine acyclische Carbonatgruppe und/oder mindestens eine acyclische Carbonsäureestergruppe und/oder mindestens eine acyclische Carbamatgruppe. Insbesondere kann der Spacer X dabei mindestens eine acyclische Carbonatgruppe umfassen. So kann vorteilhafterweise ebenfalls die lonenmobilität erhöht werden. Dies kann im Fall einer positiv geladenen Gruppe Q⁺ und/oder im Fall einer negativ geladenen Gruppe Q⁻ besonders vorteilhaft sein, insbesondere um dissoziierte Ionen zu mobilisieren und auf diese Weise die lonenleitfähigkeit zu erhöhen.

Im Rahmen einer weiteren, alternativen oder zusätzlichen Ausgestaltung dieser Ausführungsform umfasst der Spacer X mindestens eine, gegebenenfalls weitere, positiv geladene Gruppe Q⁺, insbesondere auf der Basis eines Kations einer ionischen Flüssigkeit, beispielsweise mindestens eine Ammoniumiongruppe und/oder mindestens eine Pyridiniumgruppe und/oder mindestens eine Imidazoliumgruppe und/oder mindestens eine Piperidiniumgruppe und/oder mindestens eine Pyrrolidiniumgruppe und/oder mindestens eine Phosphoniumgruppe und/oder mindestens eine Guanidiniumgruppe und/oder mindestens eine Morpholiniumgruppe und/oder mindestens eine Uroniumgruppe und/oder mindestens eine Thiouroniumgruppe. Dabei kann der Spacer X beispielsweise mindestens eine Ammoniumgruppe und/oder mindestens eine Pyridiniumgruppe und/oder mindestens eine Imidazoliumgruppe, zum Beispiel mindestens eine Ammoniumgruppe und/oder mindestens eine Pyridiniumgruppe, und ein Gegenion Z⁻, beispielsweise Leitsalzanion, insbesondere Lithium-Leitsalzanion, umfassen. Die mindestens eine, gegebenenfalls weitere, positiv geladene Gruppe Q⁺ des Spacers kann insbesondere wie vorstehend, insbesondere im Rahmen der über den Spacer X angebundenen positiv geladenen Gruppen Q⁺, erläutert ausgestaltet sein. So kann vorteilhafterweise die lonendissoziation erhöht werden. Dies kann im Fall einer positiv geladenen Gruppe Q^{+ -} und/oder im Fall einer ungeladenen Gruppe Q besonders vorteilhaft sein, insbesondere um die lonenleitfähigkeit weiter zu erhöhen und die Polysulfidlöslichkeit weiter zu reduzieren.

Im Rahmen einer weiteren, alternativen oder zusätzlichen Ausgestaltung dieser Ausführungsform umfasst der Spacer X mindestens eine, gegebenenfalls weitere, negativ geladene Gruppe Q⁻ und ein Gegenion Z⁺, beispielsweise ein Alkaliion, beispielsweise Lithiumion und/oder Natriumion, insbesondere ein Lithiumion. Die mindestens eine, gegebenenfalls weitere, negativ geladene Gruppe Q⁻ des Spacers kann insbesondere wie vorstehend, insbesondere im Rahmen der über den Spacer X angebundenen negativ geladenen Gruppen Q⁻, erläutert ausgestaltet sein. Zum Beispiel kann die mindestens eine, gegebenenfalls weitere, negativ geladene Gruppe Q⁻ des Spacers X eine Gruppe auf der Basis eines Leitsalzanions, insbesondere eines Lithium-Leitsalzanions, und/oder eines Anions einer ionischen Flüssigkeit und/oder eine Sulfonatgruppe sein. Beispielsweise kann dabei der Spacer X mindestens eine Sulfonylimidgruppe, zu Beispiel mindestens eine Trifluormethansulfonylimid-Gruppe und/oder Perfluorethansulfonylimid-Gruppe und/oder Fluorsulfonylimid-Gruppe, insbesondere mindestens eine Trifluormethansulfonylimid-Gruppe, und/oder mindestens eine Sulfonatgruppe, umfassen. So kann vorteilhafterweise die lonendissoziation erhöht werden. Dies kann im Fall einer negativ geladenen Gruppe Q^{- -} und/oder im Fall einer ungeladenen Gruppe Q besonders vorteilhaft sein, insbesondere um die lonenleitfähigkeit weiter zu erhöhen und die Polysulfidlöslichkeit weiter zu reduzieren.

Die mindestens eine Alkylengruppe des Spacers X kann beispielsweise eine Kettenlänge von ≥ 1 bis ≤ 16 Kohlenstoffatomen, insbesondere von ≥ 1 bis ≤ 13 Kohlenstoffatomen, zum Beispiel von ≥ 1 bis ≤ 4 Kohlenstoffatomen oder von ≥ 4 bis ≤ 8 Kohlenstoffatomen und/oder von ≥ 9 bis ≤ 13 Kohlenstoffatomen, aufweisen. Zum Beispiel kann dabei die Alkylengruppe des Spacers X eine gesättigte Alkylengruppe, beispielsweise der allgemeinen chemischen Formel:-(CH₂)ₐ₁- mit 1 ≤ a1 ≤ 15, beispielsweise 1 ≤ a1 ≤ 12, zum Beispiel 1 ≤ a1 ≤ 3, stehen.

Die mindestens eine Alkylenoxidgruppe des Spacers X kann zum Beispiel eine Ethylenoxidgruppe und/oder eine Propylenoxidgruppe sein. Insbesondere kann die mindestens eine Alkylenoxidgruppe eine Oligo-Alkylenoxidgruppe, zum Beispiel eine Oligo-Ethylenoxidgruppe und/oder Oligo-Propylenoxidgruppe, sein. Insbesondere kann die Alkylenoxidgruppe beziehungsweise Oligo-Alkylenoxidgruppe ≥ 1 beziehungsweise ≥ 2 bis ≤ 10 Wiederholungseinheiten, beispielsweise ≥ 1 beziehungsweise ≥ 2 bis ≤ 4 Wiederholungseinheiten, aufweisen. Zum Beispiel kann dabei die mindestens eine Alkylenoxideinheit die allgemeine chemische Formel: -[CH₂-CH₂-O-]_{b} mit 1 ≤ b ≤ 10, beispielsweise 1 ≤ oder 2 ≤ b ≤ 4, aufweisen.

Die Anbindung der mindestens eine Alkylenoxidgruppe des Spacers X an den Polymerrücken -[A]- und die Gruppe Q, zum Beispiel die Pyridiniumgruppe, Ammoniumgruppe, Imidazoliumgruppe, Piperidiniumgruppe, Pyrrolidiniumgruppe, Phosphoniumgruppe, Guanidiniumgruppe, Morpholiniumgruppe, Uroniumgruppe, Thiouroniumgruppe, cyclische Carbonatgruppe, Lactongruppe, cyclische Carbamatgruppe, acyclische Carbonatgruppe, acyclische Carbonsäureestergruppe, acyclische Carbamatgruppe, Sulfonylimidgruppe oder Sulfonatgruppe, kann dabei jeweils über eine, insbesondere gesättigte und/oder ungesättigte, lineare oder verzweigte, Alkylengruppe, zum Beispiel Methylengruppen, und/oder Alkoxygruppe erfolgen. Dabei kann der Spacer X beispielsweise eine Alkyl-Alkylenoxid-Alkyl-Gruppe, zum Beispiel eine Alkyl-Oligo-Alkylenoxid-Alkyl-Gruppe, beispielsweise der allgemeinen chemischen Formel: -(CH₂)ₐ₁-[CH₂-CH₂-O-]_{b1}-(CH₂)_{a1'}- mit 1 ≤ a1 ≤ 12, insbesondere 1 ≤ a1 ≤ 3, 1 ≤ b1 ≤ 10, insbesondere 1 ≤ oder 2 ≤ b1 ≤ 4, und 1 ≤ a1' ≤ 12, insbesondere 1 ≤ a1' ≤ 3, oder eine Alkoxy-Alkylenoxid-Alkyl-Gruppe, zum Beispiel Alkoxy-Oligo-Alkylenoxid-Alkylgruppe, beispielsweise der allgemeinen chemischen Formel:-(CH₂)ₐ₂-O-[CH₂-CH₂-O-]_{b2}-(CH₂)_{a2'}- mit 1 ≤ a2 ≤ 12, insbesondere 1 ≤ a2 ≤ 3, 1 ≤ b2 ≤ 10, insbesondere 1 ≤ oder 2 ≤ b2 ≤ 4, und 1 ≤ a2' ≤ 12, insbesondere 1 ≤ a2' ≤ 3, sein.

Die mindestens eine Phenylenoxidgruppe und/oder die mindestens eine Phenylengruppe und/oder die mindestens eine Benzylengruppe des Spacers X kann insbesondere mit einer oder mehreren Alkylseitenkette/n und/oder einer oder mehreren Alkylenoxidseitenkette/n, beispielsweise Oligo-Alkylenoxidseitenkette/n, zum Beispiel Oligo-Ethylenoxid-Seitenkette/n und/oder Oligo-Propylenoxid-Seitenkette/n, und/oder einer oder mehreren cyclischen Carbonatgruppe/n und/oder Lactongruppe/n und/oder cyclischen Carbamatgruppe/n und/oder acyclischen Carbonatgruppe/n und/oder acyclischen Carbonsäureestergruppe/n und/oder acyclischen Carbamatgruppe/n und/oder einer oder mehreren geladenen Gruppen, beispielsweise quartären Ammoniumiongruppe/n und/oder Pyridiniumgruppe/n und/oder Imidazoliumgruppe/n und/oder Piperidiniumgruppe/n und/oder Pyrrolidiniumgruppe/n und/oder, insbesondere quartären, Phosphoniumgruppe/n und/oder Guanidiniumgruppe/n und/oder Morpholiniumgruppe/n und/oder Uroniumgruppe/n und/oder Thiouroniumgruppe/n und/oder Sulfonylimidgruppe/n und/oder Sulfonatgruppe/n, beispielsweise Lithiumsulfonatfgruppen, substituiert sein. So kann die lonenleitfähigkeit vorteilhafterweise - insbesondere wie im Zusammenhang mit den korrespondierenden Gruppen Q, Q⁺ und Q⁻ erläutert-weiter erhöht werden. Beispielsweise kann der Spacer X eine oder mehrere Phenylenoxidgruppe/n und/oder Phenylengruppe/n und/oder Benzylengruppe/n umfassen. Zwischen Phenylenoxidgruppen und/oder Phenylengruppen und/oder Benzylengruppen des Spacers X kann dabei (jeweils) eine, insbesondere gesättigte und/oder ungesättigte, lineare oder verzweigte, beispielsweise teilweise oder vollständig halogenierte oder unhalogenierte, zum Beispiel teilweise fluorierte oder perfluorierte oder unfluorierte, Alkylengruppe und/oder Alkylenoxidgruppe, beispielsweise Oligo-Alkylenoxidgruppe, zum Beispiel Oligo-Ethylenoxidgruppe und/oder Oligo-Propylenoxidgruppe, eingefügt sein.

Die Anbindung der mindestens einen Carbonylgruppe des Spacers X an den Polymerrücken -[A]- und die Gruppe Q, zum Beispiel die cyclische Carbonatgruppe, Lactongruppe, cyclische Carbamatgruppe, acyclische Carbonatgruppe, acyclische Carbonsäureestergruppe, acyclische Carbamatgruppe, Pyridiniumgruppe, Ammoniumgruppe, Imidazoliumgruppe, Piperidiniumgruppe, Pyrrolidiniumgruppe, Phosphoniumgruppe, Guanidiniumgruppe, Morpholiniumgruppe, Uroniumgruppe, Thiouroniumgruppe, Sulfonylimidgruppe oder Sulfonatgruppe, kann dabei jeweils über eine, insbesondere gesättigte und/oder ungesättigte, lineare oder verzweigte, beispielsweise teilweise oder vollständig halogenierte oder unhalogenierte, zum Beispiel teilweise fluorierte oder perfluorierte oder unfluorierte, Alkylengruppe und/oder Alkylenoxidgruppe, beispielsweise Oligo-Alkylenoxidgruppe, zum Beispiel Oligo-Ethylenoxidgruppe und/oder Oligo-Propylenoxidgruppe, erfolgen.

Beispielsweise kann der Spacer X eine oder mehrere - beispielsweise zu Q analoge - cyclische Carbonatgruppe/n und/oder Lactongruppe/n und/oder cyclische Carbamatgruppe/n und/oder acyclische Carbonatgruppe/n und/oder acyclische Carbonsäureestergruppe/n und/oder acyclische Carbamatgruppe/n und/oder - beispielsweise zu Q⁺ analoge - Ammoniumiongruppe/n und/oder Pyridiniumgruppe/n und/oder Imidazoliumgruppe/n und/oder Piperidiniumgruppe/n und/oder Pyrrolidiniumgruppe/n und/oder Phosphoniumgruppe/n und/oder Guanidiniumgruppe/n und/oder Morpholiniumgruppe/n und/oder Uroniumgruppe/n und/oder Thiouroniumgruppe/n und/oder - beispielsweise zu Q⁻ analoge-Sulfonylimidgruppe/n und/oder Sulfonatgruppe/n, zum Beispiel Benzolsulfonylimidgruppe/n und/oder Benzolsulfonatgruppe/n, umfassen. Die Anbindung der cyclischen Carbonatgruppe, Lactongruppe, cyclischen Carbamatgruppe, acyclischen Carbonatgruppe, acyclischen Carbonsäureestergruppe, acyclischen Carbamatgruppe, Ammoniumiongruppe, Pyridiniumgruppe, Imidazoliumgruppe, Piperidiniumgruppe, Pyrrolidiniumgruppe, Phosphoniumgruppe, Guanidiniumgruppe, Morpholiniumgruppe, Uroniumgruppe, Thiouroniumgruppe, Sulfonylimidgruppe beziehungsweise Sulfonatgruppe, beispielsweise Benzolsulfonylimidgruppe und/oder Benzolsulfonatgruppe, des Spacers X an den Polymerrücken -[A]- und/oder an eine weitere cyclische Carbonatgruppe, Lactongruppe, cyclische Carbamatgruppe, acyclische Carbonatgruppe, acyclische Carbonsäureestergruppe, acyclische Carbamatgruppe, Ammoniumiongruppe, Pyridiniumgruppe, Imidazoliumgruppe, Piperidiniumgruppe, Pyrrolidiniumgruppe, Phosphoniumgruppe, Guanidiniumgruppe, Morpholiniumgruppe, Uroniumgruppe, Thiouroniumgruppe, Sulfonylimidgruppe beziehungsweise Sulfonatgruppe des Spacers X und/oder zwischen einer cyclischen Carbonatgruppe, Lactongruppe, cyclischen Carbamatgruppe, acyclischen Carbonatgruppe, acyclischen Carbonsäureestergruppe, acyclischen Carbamatgruppe, Ammoniumiongruppe, Pyridiniumgruppe, Imidazoliumgruppe, Piperidiniumgruppe, Pyrrolidiniumgruppe, Phosphoniumgruppe, Guanidiniumgruppe, Morpholiniumgruppe, Uroniumgruppe, Thiouroniumgruppe, Sulfonylimidgruppe beziehungsweise Sulfonatgruppe, beispielsweise Benzolsulfonylimidgruppe udn/oder Benzolsulfonatgruppe, des Spacers X und/oder an die, beispielsweise endständige, Gruppe Q, zum Beispiel die cyclische Carbonatgruppe, Lactongruppe, cyclische Carbamatgruppe, acyclische Carbonatgruppe, acyclische Carbonsäureestergruppe, acyclische Carbamatgruppe, Pyridiniumgruppe, Ammoniumgruppe, Imidazoliumgruppe, Piperidiniumgruppe, Pyrrolidiniumgruppe, Phosphoniumgruppe, Guanidiniumgruppe, Morpholiniumgruppe, Uroniumgruppe, Thiouroniumgruppe, Sulfonylimidgruppe oder Sulfonatgruppe kann dabei insbesondere (jeweils) über eine, insbesondere gesättigte und/oder ungesättigte, lineare oder verzweigte, beispielsweise teilweise oder vollständig halogenierte oder unhalogenierte, zum Beispiel teilweise fluorierte oder perfluorierte oder unfluorierte, Alkylengruppe und/oder Alkylenoxidgruppe, beispielsweise Oligo-Alkylenoxidgruppe, zum Beispiel Oligo-Ethylenoxidgruppe und/oder Oligo-Propylenoxidgruppe, erfolgen.

Zum Beispiel kann der Spacer X ein, insbesondere gesättigter und/oder ungesättigter, linearer oder verzweigter, Alkylenspacer sein. Im Falle eines Alkylenspacers X, insbesondere im gesättigten Falle, kann die Anzahl der Kohlenstoffatome im Spacer insbesondere ≥ 1 bis ≤ 12, zum Beispiel von ≥ 1 bis ≤ 4, betragen. Beispielsweise kann der Alkylenspacer auf der allgemeinen chemischen Formel: -(CH₂)ₐ₁- mit 1 ≤ a1 ≤ 12, insbesondere 1 ≤ a1 ≤ 3, basieren.

Oder der Spacer X kann zum Beispiel ein Alkylenoxidspacer, beispielsweise Oligo-Alkylenoxidspacer, zum Beispiel ein Oligo-Ethylenoxidspacer oder Oligo-Propylenoxidspacer, sein. Im Falle einer Ausführung als Oligo-Alkylenoxidspacer kann die Anzahl der Wiederholungseinheiten beispielsweise ≥ 2 bis ≤ 10 Wiederholungseinheiten, insbesondere ≥ 2 bis ≤ 4, betragen. Dabei kann die Anbindung der Alkylenoxideinheit, beispielsweise Oligo-Alkylenoxideinheit, zum Beispiel der Oligo-Ethylenoxideinheit oder Oligo-Propylenoxideinheit, an den Polymerrücken -[A]- beziehungsweise die Gruppe Q, zum Beispiel die cyclische Carbonatgruppe, Lactongruppe, cyclische Carbamatgruppe, acyclische Carbonatgruppe, acyclische Carbonsäureestergruppe, acyclische Carbamatgruppe, Pyridiniumgruppe, Ammoniumgruppe, Imidazoliumgruppe, Piperidiniumgruppe, Pyrrolidiniumgruppe, Phosphoniumgruppe, Guanidiniumgruppe, Morpholiniumgruppe, Uroniumgruppe, Thiouroniumgruppe, Sulfonylimidgruppe oder Sulfonatgruppe, insbesondere jeweils über eine, insbesondere gesättigte und/oder ungesättigte, lineare oder verzweigte, Alkylengruppe, zum Beispiel Methylengruppen, erfolgen. Beispielsweise kann der Alkylenoxidspacer auf der allgemeinen chemischen Formel: -(CH₂)ₐ₃-[CH₂-CH₂-O]_{b3}-(CH₂)ₐ₃- mit 1 ≤ b3 ≤ 10, insbesondere 1 ≤ b3 ≤ 4, und 1 oder 0 ≤ a3 ≤ 3, beispielsweise a3 = 1, basieren.

Oder der Spacer X kann zum Beispiel ein Spacer auf Basis von, insbesondere substituiertem oder unsubstituiertem, Phenylenoxid und/oder Phenylen und/oder Benzylen sein. Insbesondere kann dabei der Spacer mehrere Phenylenoxideinheiten und/oder Phenyleneinheiten und/oder Benzyleneinheiten umfassen. Zwischen Phenylenoxideinheiten und/oder Oligo-Phenylenoxideinheiten und/oder Phenyleneinheiten und/oder Oligo-Phenyleneinheiten und/oder Benzyleneinheiten und/oder Oligo-Benzyleneinheiten des Spacers X kann dabei (jeweils) eine, insbesondere gesättigte und/oder ungesättigte, lineare oder verzweigte, beispielsweise teilweise oder vollständig halogenierte oder unhalogenierte, zum Beispiel teilweise fluorierte oder perfluorierte oder unfluorierte, Alkylengruppe und/oder Alkylenoxidgruppe, beispielsweise Oligo-Alkylenoxidgruppe, zum Beispiel Oligo-Ethylenoxidgruppe und/oder Oligo-Propylenoxidgruppe, eingefügt sein. Eine Substitution kann dabei insbesondere mit einer oder mehreren Alkylseitenkette/n und/oder einer oder mehreren Alkylenoxidseitenkette/n, beispielsweise Oligo-Alkylenoxidseitenkette/n, zum Beispiel Oligo-Ethylenoxid-Seitenkette/n und/oder Oligo-Propylenoxid-Seitenkette/n, und/oder einer oder mehreren cyclischen Carbonatgruppe/n und/oder Lactongruppe/n und/oder cyclischen Carbamatgruppe/n und/oder acyclischen Carbonatgruppe/n und/oder acyclischen Carbonsäureestergruppe/n und/oder acyclischen Carbamatgruppe/n und/oder einer oder mehreren geladenen Gruppen, beispielsweise quartären Ammoniumgruppe/n und/oder Pyridiniumgruppe/n und/oder Imidazoliumgruppe/n und/oder Piperidiniumgruppe/n und/oder Pyrrolidiniumgruppe/n und/oder, beispielsweise quartären, Phosphoniumgruppe/n und/oder Guanidiniumgruppe/n und/oder Morpholiniumgruppe/n und/oder Uroniumgruppe/n und/oder Thiouroniumgruppe/n und/oder Sulfonylimidgruppe/n und/oder Sulfonatgruppe/n, beispielsweise Lithiumsulfonylimidgruppe/n und/oder Lithiumsulfonatgruppe/n, erfolgen.

Oder der Spacer X kann zum Beispiel ein Carbonylspacer, beispielsweise ein Alkylen/Alkylenoxid-Carbonyl-Alkylen/Alkylenoxid-Spacer sein.

Oder der Spacer X kann beispielsweise ein Ethersauerstoff (-O-) sein.

Im Rahmen einer speziellen Ausgestaltung ist der Spacer X ein Alkylen- und/oder Alkylenoxid-Spacer, beispielsweise ein Alkylen- und/oder Oligo-Alkylenoxid-Spacer, zum Beispiel ein Etyhlenoxid- und/oder Oligo-Ethylenoxid-Spacer.

Im Rahmen einer weiteren Ausführungsform steht -[A]- für eine Polymerrücken bildende Einheit, welche (zumindest) eine Alkylenoxid-Einheit, insbesondere Ethylenoxid-Einheit (PEO) und/oder Propylenoxid-Einheit, beispielsweise Oligo-Alkylenoxid-Einheit, zum Beispiel Oligo-Ethylenoxid-Einheit und/oder Oligo-Propylenoxid-Einheit, und/oder eine, eine Carbonatgruppe, insbesondere eine organische Carbonatgruppe, umfassende Einheit und/oder eine Siloxan-Einheit und/oder eine Phosphazen-Einheit und/oder eine Methylmethacrylat-Einheit und/oder eine Methacrylat-Einheit und/oder eine Phenylen-Einheit und/oder eine Phenylenoxid-Einheit und/oder eine Benzylen-Einheit und/oder eine Alkylen-Einheit umfasst.

Beispielsweise kann -[A]- für eine Polymerrücken bildende Einheit stehen, welche einen Polyether, insbesondere Polyethylenoxid (PEO) und/oder Polypropylenoxid, und/oder polymerisierte, insbesondere organische, Carbonatgruppe/n umfassende Wiederholungseinheiten, beispielsweise ein Polycarbonat und/oder ein Polymer aus Polymerrücken bildenden Struktureinheiten mit Carbonatgruppen enthaltenden Seitengruppen, und/oder ein Polysiloxan und/oder ein Polyphosphazen und/oder ein Poly(methyl)methacrylat und/oder ein Polymethacrylat und/oder ein Polyphenylen, beispielsweise ein para-Polyphenylen, und/oder ein Polyphenylenoxid und/oder ein Polybenzylen und/oder ein Polyolefin, beispielsweise Polypropylen und/oder Polyethylen, umfasst und/oder bildet. Zum Beispiel kann -[A]- für eine Polymerrücken bildende Einheit stehen, welche auf einem Polyether, insbesondere Polyethylenoxid (PEO) und/oder Polypropylenoxid, und/oder einer polymerisierten, insbesondere organische, Carbonatgruppe/n, umfassenden Wiederholungseinheiten und/oder einem Polysiloxan und/oder einem Polyphosphazen und/oder einem Poly(methyl)methacrylat und/oder einem Polymethacrylat und/oder einem Polyphenylen, beispielsweise eine para-Polyphenylen, und/oder einem Polyphenylenoxid und/oder einem Polybenzylen und/oder einem Polyolefin, beispielsweise Polypropylen und/oder Polyethylen, basiert.

Im Rahmen einer speziellen Ausführungsform umfasst die Polymerrücken bildende Einheit -[A]- (zumindest) eine Siloxan. So kann vorteilhafterweise eine geringe Glasübergangstemperatur des Polymers und damit eine hohe lonenleitfähigkeit erzielt werden.

Im Rahmen einer weiteren, insbesondere alternativen oder zusätzlichen, speziellen Ausführungsform umfasst die Polymerrücken bildende Einheit -[A]-(zumindest) eine Phosphazen-Einheit. So kann vorteilhafterweise ebenfalls eine geringe Glasübergangstemperatur des Polymers und damit eine hohe lonenleitfähigkeit erzielt werden.

Im Rahmen einer weiteren, insbesondere alternativen oder zusätzlichen, speziellen Ausführungsform umfasst die Polymerrücken bildende Einheit -[A]-(zumindest) eine Methylmethacrylat-Einheit und/oder eine Methacrylat-Einheit. Diese können vorteilhafterweise synthetisch einfacher zugänglich als Phosphazene sein.

Im Rahmen einer weiteren, insbesondere alternativen oder zusätzlichen, speziellen Ausführungsform umfasst die Polymerrücken bildende Einheit -[A]-(zumindest) eine Phenylen-Einheit. Insbesondere kann die Polymerrücken bildende Einheit -[A]- (zumindest) eine para-Phenylen-Einheit umfassen. So kann vorteilhafterweise zusätzlich eine elektrische Leitfähigkeit erzielt werden. Zudem können Phenylen-Einheiten beziehungsweise Polyphenylene auf einfache Weise einfach oder mehrfach substituiert, beispielsweise sulfoniert, werden. Insbesondere sind auch Mehrfachsulfonierungen der Phenyleneinheit und/oder des daraus ausgebildeten Polyphenyl-Polymerrückens möglich. Beispielsweise kann die Polymerrücken bildende Einheit -[A]- (zumindest) eine Phenylenoxid-Einheit umfassen. Über den Sauerstoff können vorteilhafterweise auf einfache Weise - gegebenenfalls über einen Spacer X - Gruppen Q, Q⁺ und/oder Q⁻ angebunden werden. Beispielsweise kann die Polymerrücken bildende Einheit - [A]- eine mindestens einfach sulfonierte, beispielsweise mehrfach sulfonierte, Phenylen-Einheit umfassen oder sein. Zum Beispiel kann das Polymer beziehungsweise der Polyelektrolyt ein Sulfonatgruppen, insbesondere Lithiumsulfonatgruppen, substituiertes Polyphenylen, beispielsweise *para-*Polyphenylen, beispielsweise welches mindestens eine Phenylen-Wiederholungseinheit umfasst, die mindestens einfach mit einer Sulfonatgruppe, insbesondere Lithiumsulfonatgruppe, beispielsweise mit mehreren Sulfonatgruppen, insbesondere Lithiumsulfonatgruppen, substituiert ist, umfassen oder sein. Dies hat sich als vorteilhaft erwiesen, da so die Anzahl der anionischen Einheiten und damit Lithiumionen-Ladungsträger pro Phenyleneinheit erhöht werden kann. Neben der Sulfonatgruppen substituierten Phenylen-Einheit kann die Polymerrücken bildende Einheit -[A]-, beispielsweise in Form eines Polyphenylens, noch eine oder mehrere andere Phenylen-Einheiten, beispielsweise eine unsubstituierte Phenylen-Einheit und/oder eine einfach oder mehrfach mit jeweils einer Gruppe Q, beispielsweise Q⁺ beziehungsweise Q⁻ beziehungsweise Q, und einem Spacer X, insbesondere Xₓ, substituierte Phenylen-Einheit, umfassen.

Im Rahmen einer weiteren, insbesondere alternativen oder zusätzlichen, speziellen Ausführungsform umfasst die Polymerrücken bildende Einheit -[A]-(zumindest) eine Benzylen-Einheit.

Im Rahmen einer weiteren, insbesondere alternativen oder zusätzlichen, speziellen Ausführungsform umfasst die Polymerrücken bildende Einheit -[A]-(zumindest) eine Alkylen-Einheit.

Im Rahmen einer weiteren, insbesondere alternativen oder zusätzlichen, speziellen Ausführungsform umfasst die Polymerrücken bildende Einheit -[A]-(zumindest) eine Alkylenoxid-Einheit, insbesondere Ethylenoxid-Einheit (PEO) und/oder Propylenoxid-Einheit, beispielsweise Oligo-Alkylenoxid-Einheit, zum Beispiel Oligo-Ethylenoxid-Einheit und/oder Oligo-Propylenoxid-Einheit, insbesondere Oligo-Ethylenoxid-Einheit. So kann vorteilhafterweise die lonenmobilität und damit die lonenleitfähigkeit erhöht werden.

Im Rahmen einer weiteren, insbesondere alternativen oder zusätzlichen, speziellen Ausführungsform umfasst die Polymerrücken bildende Einheit -[A]-(zumindest) eine, eine Carbonatgruppe, insbesondere eine organische Carbonatgruppe, umfassende Einheit. So kann vorteilhafterweise die Polarität des Polymerrückens erhöht werden und damit die Polysulfidlöslichkeit positiv beeinflusst, insbesondere reduziert, werden kann. Polymerisierte, insbesondere organische, Carbonatgruppen umfassende Wiederholungseinheiten können beispielsweise ein Polycarbonat, das heißt einen Polyester dessen Polymerrücken, beispielsweise mittels Kondensationsreaktion verknüpfte, insbesondere veresterte, Carbonatgruppen umfasst, bilden. Alternativ oder zusätzlich dazu können polymerisierte, insbesondere organische, Carbonatgruppen umfassende Wiederholungseinheiten jedoch auch ein Polymer aus Polymerrücken bildenden Struktureinheiten mit, insbesondere organische, Carbonatgruppen enthaltenden Seitengruppen bilden. Durch die Carbonatgruppen enthaltenden Seitengruppen kann dabei vorteilhafterweise die lonenleitfähigkeit des Polymers insgesamt erhöht werden. Der ausgebildete Polymerrücken kann dabei selbst Carbonatgruppen umfassen, beispielsweise ein Polycarbonat, sein oder auch Carbonatgruppen frei, insbesondere kein Polycarbonat, sein. Beispielsweise kann die Polymerrücken bildende Einheit -[A]-eine Einheit mit einer Polymerrücken bildenden Struktureinheit und mit einer, eine Carbonatgruppe enthaltenden Seitengruppe umfassen. Dabei kann die, die Carbonatgruppe enthaltende Seitengruppe zum Beispiel an ein Atom der Polymerrücken bildenden Struktureinheit angebunden sein. Beispielsweise kann die, die Carbonatgruppe enthaltende Seitengruppe jedoch auch cyclisch, beispielsweise in Form eines Fünfrings oder Sechsrings oder Siebenrings, insbesondere Fünfrings, an die Polymerrücken bildende Struktureinheit, insbesondere an zwei Atome der Polymerrücken bildenden Struktureinheit, angebunden sein. Insbesondere kann dabei eine Carbonatgruppe eine cyclisch an die Polymerrücken bildende Struktureinheit angebundene Seitengruppe bilden. Beispielsweise kann die Polymerrücken bildende Einheit -[A]- eine Einheit mit einer Polymerrücken bildenden Struktureinheit und mit einer Carbonatgruppe umfassen, wobei die Carbonatgruppe eine, an die Polymerrücken bildende Struktureinheit cyclisch angebundene Seitengruppe bildet. Zum Beispiel kann dabei die Carbonatgruppe über zwei Sauerstoffatome an zwei Atome der Polymerrücken bildenden Struktureinheit angebunden sein und beispielsweise (zusammen mit Atomen der Polymerrücken bildenden Struktureinheit) einen Fünfring oder Sechsring oder Siebenring, insbesondere Fünfring, bilden.

Die Polymerrücken bildende Einheit -[A]- kann sowohl monofunktionalisiert als auch polyfunktionalisiert, beispielsweise bifunktionalisiert, trifunktionalisiert oder tetrafunktionalisiert, mit der über den Spacer X angebundenen Gruppe Q sein. Dabei kann unter einer polyfunktionalisierten Polymerrücken bildende Einheit - [A]- insbesondere eine Polymerrücken bildende Einheit -[A]- verstanden werden, welche mit mindestens zwei Gruppen Q, beispielsweise Q⁺ und/oder Q⁻ und/oder Q, funktionalisiert ist, insbesondere wobei jeweils eine Gruppe Q, beispielsweise Q⁺ beziehungsweise Q⁻ beziehungsweise Q, - gegebenenfalls über einen Spacer X, insbesondere Xₓ, - an die Polymerrücken bildende Einheit -[A]- angebunden ist.

Im Folgenden werden beispielhaft einige allgemeine chemische Formeln vorgestellt, auf welchen die Polymerrücken bildende Einheit -[A]-beziehungsweise die Wiederholungseinheit ([A]-X-Q): 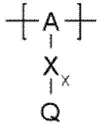
- und beispielsweise auch die später erläuterten Polymerrücken bildenden Einheiten -[A_{I}]-, -[A_{II}]-, -[A_{III}]-, -[A_{IV}]-, -[A_{V}]-, -[A_{VI}]-, -[A_{VII}]-, -[A_{VIII}]-, -[A_{IX}]-, -[Aₐ]-,-[A_{b}]-, -[A_{c}]-, -[A_{d}]-, -[Aₑ]-, -[A_{f}]-, -[A_{Z}]- beziehungsweise -[A_{Z1}]- und speziellen Wiederholungseinheiten - basieren kann. Im Fall einer Darstellung einer Polymerrücken bildenden Einheit -[A]- kann xq dabei (jeweils) für eine Anbindungsstelle stehen, an welcher die beziehungsweise (jeweils) eine Gruppe Q, beispielsweise über einen Spacer X, insbesondere Xₓ, (im Fall x = 0 indirekt über den Spacer oder im Fall x = 0 direkt) an die Polymerrücken bildende Einheit -[A]- angebunden ist. Im Fall einer Darstellung einer Wiederholungseinheit ([A]-X-Q) kann xq für XQ, also den beziehungsweise (jeweils) einen Spacer X, insbesondere Xₓ, und die beziehungsweise (jeweils) eine Gruppe Q, beispielsweise Q⁺ beziehungsweise Q⁻ beziehungsweise Q, stehen.

Zum Beispiel kann die Polymerrücken bildende Einheit -[A]- beziehungsweise die Wiederholungseinheit ([A]-X-Q) eine Alkylenoxid-Einheit, beispielsweise Ethylenoxid-Einheit, der allgemeinen chemischen Formel: 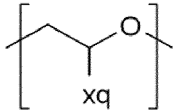 und/oder eine oder Propylenoxid-Wiederholungseinheit der allgemeinen chemischen Formel: 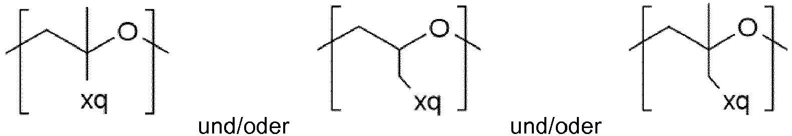 umfassen beziehungsweise sein.

Alternativ oder zusätzlich dazu, kann die Polymerrücken bildende Einheit -[A]-beziehungsweise die Wiederholungseinheit ([A]-X-Q) eine Wiederholungseinheit mit einer Polymerrücken bildenden Struktureinheit und mit einer, an die Polymerrücken bildende Struktureinheit cyclisch angebundenen Carbonatgruppe der allgemeinen chemischen Formel: 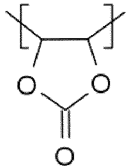 umfassen beziehungsweise sein.

Alternativ oder zusätzlich dazu, kann die Polymerrücken bildende Einheit -[A]-beziehungsweise die Wiederholungseinheit ([A]-X-Q) eine Siloxan-Einheit der allgemeinen chemischen Formel: 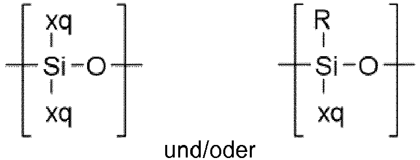 umfassen beziehungsweise sein, insbesondere wobei R für eine Alkylgruppe, beispielsweise für eine Methyl-, Ethyl- und/oder Propyl-Gruppe, zum Beispiel eine Methylgruppe, steht. Zum Beispiel kann die Polymerrücken bildende Einheit -[A]- beziehungsweise die Wiederholungseinheit ([A]-X-Q) eine Siloxan-Einheit der allgemeinen chemischen Formel: 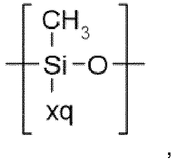 umfassen beziehungsweise sein.

Alternativ oder zusätzlich dazu, kann die Polymerrücken bildende Einheit -[A]-beziehungsweise die Wiederholungseinheit ([A]-X-Q) eine Phosphazen-Einheit der allgemeinen chemischen Formel: 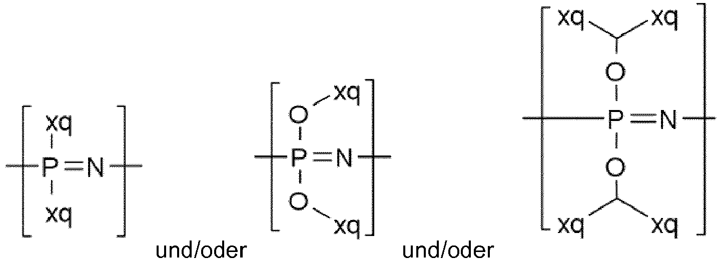 und/oder 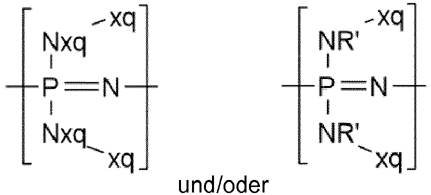 umfassen beziehungsweise sein, insbesondere wobei R' für Wasserstoff oder (vorzugsweise) für eine Alkylgruppe, beispielsweise für eine Methyl-, Ethyl- und/oder Propyl-Gruppe, zum Beispiel eine Methylgruppe, steht.

Alternativ oder zusätzlich dazu, kann die Polymerrücken bildende Einheit -[A]-beziehungsweise die Wiederholungseinheit ([A]-X-Q) eine Methylmethacrylat-Einheit der allgemeinen chemischen Formel: 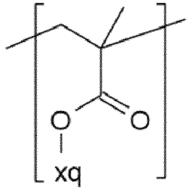 umfassen beziehungsweise sein.

Alternativ oder zusätzlich dazu, kann die Polymerrücken bildende Einheit -[A]-beziehungsweise die Wiederholungseinheit ([A]-X-Q) eine Methacrylat-Einheit der allgemeinen chemischen Formel: 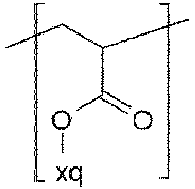 umfassen beziehungsweise sein.

Alternativ oder zusätzlich dazu, kann die Polymerrücken bildende Einheit -[A]-beziehungsweise die Wiederholungseinheit ([A]-X-Q) eine Phenylen-Einheit der allgemeinen chemischen Formel: 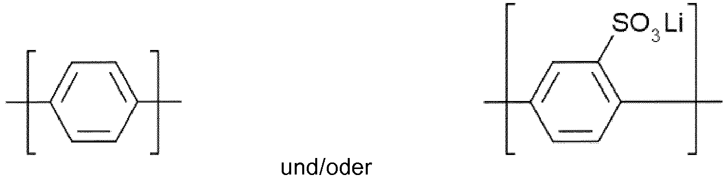 und/oder 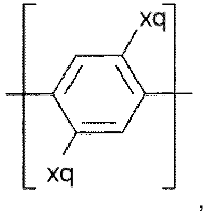 beispielsweise 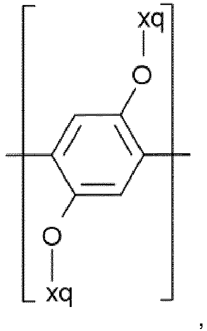 umfassen beziehungsweise sein.

Alternativ oder zusätzlich dazu, kann die Polymerrücken bildende Einheit -[A]-beziehungsweise die Wiederholungseinheit ([A]-X-Q) eine Etyhlen-Einheit der allgemeinen chemischen Formel: 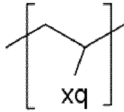 und/oder eine Propylen-Einheit der allgemeinen chemischen Formel: 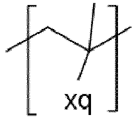 umfassen beziehungsweise sein.

Beispielsweise kann die Polymerrücken bildende Einheit -[A]-, (zumindest) eine Einheit mit einer Polymerrücken bildenden Struktureinheit und mit einer, eine Carbonatgruppe enthaltenden Seitengruppe umfassen. So kann vorteilhafterweise die lonenleitfähigkeit des Polymers insgesamt erhöht werden. Dabei kann die, die Carbonatgruppe enthaltende Seitengruppe zum Beispiel an ein Atom der Polymerrücken bildenden Struktureinheit angebunden sein. Zum Beispiel kann die Polymerrücken bildende Einheit -[A]-, (zumindest) eine Einheit mit einer Polymerrücken bildenden Struktureinheit und einer Carbonatgruppe sein, welche eine, an die Polymerrücken bildende Struktureinheit cyclisch angebundene Seitengruppe bildet. Beispielsweise kann dabei die Carbonatgruppe über zwei Sauerstoffatome an zwei Atome der Polymerrücken bildenden Struktureinheit angebunden sein und beispielsweise (zusammen mit der Polymerrücken bildenden Struktureinheit) einen Fünfring oder Sechsring oder Siebenring, insbesondere Fünfring, bilden.

Im Rahmen einer speziellen Ausführungsform umfasst die Polymerrücken bildende Einheit -[A]- (zumindest) eine Siloxan-Einheit und/oder eine Phosphazen-Einheit und/oder eine Methylmethacrylat-Einheit und/oder eine Methacrylat-Einheit und/oder eine Phenylen-Einheit, insbesondere eine *para-*Phenylen-Einheit. Insbesondere kann die Polymerrücken bildende Einheit -[A]-(zumindest) eine Siloxan-Einheit und/oder eine Phosphazen-Einheit und/oder eine Methylmethacrylat-Einheit und/oder eine Methacrylat-Einheit umfassen. Im Rahmen einer speziellen Ausgestaltung umfasst die Polymerrücken bildende Einheit -[A]- (zumindest) eine Methylmethacrylat-Einheit und/oder eine Methacrylat-Einheit und/oder eine Siloxan-Einheit. Durch Phosphazene und/oder Siloxane kann vorteilhafterweise eine geringe Glasübergangstemperatur des Polymers und damit eine hohe lonenleitfähigkeit erzielt werden. Methylmethacrylate und/oder Methacrylat können vorteilhafterweise eine Vereinfachung der Synthese ermöglichen. Durch Phenylen-Einheiten kann vorteilhafterweise zusätzlich eine elektrische Leitfähigkeit erzielt werden. Zudem können Phenylen-Einheiten beziehungsweise Polyphenylene auf einfache Weise einfach oder mehrfach substituiert, beispielsweise sulfoniert, werden.

Im Rahmen einer weiteren Ausführungsform umfasst die Polymerrücken bildende Einheit -[A]- (zumindest) eine polyfunktionalisierte, beispielsweise bifunktionalisierte, Siloxan-Einheit und/oder eine polyfunktionalisierte, beispielsweise bifunktionalisierte oder tetrafunktionalisierte, zum Beispiel oder durch eine Verzweigung in einer oder mehrerer Seitenketten polyfunktionalisierte, beispielsweise tetrafunktionalisierte, Phosphazen-Einheit und/oder polyfunktionalisierte, beispielsweise bifunktionalisierte, Methylmethacrylat-Einheit und/oder polyfunktionalisierte, beispielsweise bifunktionalisierte, Methacrylat-Einheit und/oder polyfunktionalisierte, beispielsweise bifunktionalisierte, Phenylen-Einheit. Im Rahmen einer speziellen Ausgestaltung dieser Ausführungsform umfasst die Polymerrücken bildende Einheit -[A]- (zumindest) eine polyfunktionalisierte, beispielsweise bifunktionalisierte, Siloxan-Einheit und/oder eine polyfunktionalisierte, beispielsweise bifunktionalisierte oder tetrafunktionalisierte, zum Beispiel oder durch eine Verzweigung in einer oder mehrerer Seitenketten polyfunktionalisierte, beispielsweise tetrafunktionalisierte, Phosphazen-Einheit. Im Rahmen einer sehr speziellen Ausgestaltung dieser Ausführungsform umfasst die Polymerrücken bildende Einheit -[A]- (zumindest) eine polyfunktionalisierte, beispielsweise bifunktionalisierte, Siloxan-Einheit. So kann das Polymer vorteilhafterweise auf einfache Weise mit mehreren Gruppen Q ausgestattet werden.

Im Rahmen einer weiteren Ausführungsform ist die Polymerrücken bildende Einheit -[A]- - beziehungsweise die später erläuterten Polymerrücken bildenden Einheiten -[A_{I}]-, -[A_{II}]-, -[A_{III}]-, -[A_{IV}]-, -[A_{VII}]-, -[A_{VIII}]-, -[A_{IX}]-, -[Aₐ]-,-[A_{b}]-, -[A_{c}]-, -[A_{d}]-, -[Aₑ]-, -[A_{f}]-, -[A_{Z}]- beziehungsweise -[A_{Z1}]- - und/oder der Spacer X - beziehungsweise die später erläuterten Spacer (X_{I}), (X_{II}), (X_{III}), (X_{IV}), (X_{V}), (X_{VI}), (X_{VII}), (X_{VIII}), (X_{IX}), (Xₐ), (X_{b}), (X_{c}), (X_{d}), (Xₑ), (X_{f}) beziehungsweise (X_{Z})-und/oder die Gruppe Q, beispielsweise Q⁺ und/oder Q⁻ und/oder Q, insbesondere teilweise oder vollständig, halogeniert, beispielsweise fluoriert, gegebenenfalls perfluoriert. Dabei können insbesondere (zumindest) Alkylenoxidgruppen und/oder Alkylengruppen und/oder Alkylgruppen und/oder Alkyoxygruppen halogeniert, insbesondere fluoriert, gegebenenfalls perfluoriert, sein. Durch Fluorieren, insbesondere von Alkylenoxidgruppen, wie Ethylenoxidgruppen und/oder Propylenoxidgruppen, und/oder Polyethern und/oder Alkylgruppen und/oder Alkylengruppen und/oder Alkyoxygruppen kann vorteilhafterweise die Löslichkeit von Polysulfiden durch das Polymer herabgesetzt werden. So kann wiederum vorteilhafterweise ein Herauslösen von Polysulfiden aus dem Kathodenaktivmaterial, beispielsweise einem Schwefel-Kohlenstoff-Komposit, zum Beispiel einem Schwefel-Polymer-Komposit, insbesondere einem Schwefel-Polyacrylnitril-Komposit, wie SPAN, und damit ein Aktivmaterialverlust verringert beziehungsweise vermieden werden und auf diese Weise die Leistungsfähigkeit, Zyklenbeständigkeit und Lebensdauer einer damit ausgestatteten Lithium-Schwefel-Zelle beziehungsweise eines damit ausgestatten Energiesystems, beispielsweise einer Lithium-Schwefel-Batterie, verbessert werden. Eine Fluorierung kann außerdem einen positiven Einfluss auf die Transferzahl haben und kann insbesondere die Transferzahl erhöhen.

Im Rahmen einer weiteren Ausführungsform umfasst daher der Spacer X-beziehungsweise die später erläuterten Spacer (X_{I}), (X_{II}), (X_{III}), (X_{IV}), (X_{V}), (X_{VI}), (X_{VII}), (X_{VIII}), (X_{IX}), (Xₐ), (X_{b}), (X_{c}), (X_{d}), (Xₑ), (X_{f}), (X_{Z}) beziehungsweise (X_{Z1})-und/oder die Polymerrücken bildende Einheit -[A]- - beziehungsweise die später erläuterten Polymerrücken bildenden Einheiten -[A_{I}]-, -[A_{II}]-, -[A_{III}]-, -[A_{IV}]-, -[A_{V}]-,-[A_{VI}]-, -[A_{VII}]-, -[A_{VIII}]-, -[A_{IX}]-, -[Aₐ]-, -[A_{b}]-, -[A_{c}]-, -[A_{d}]-, -[Aₑ]-, -[A_{f}]-, -[A_{Z}]-beziehungsweise -[A_{Z1}]- - und/oder die Gruppe Q beziehungsweise Q⁺ beziehungsweise Q⁻ - beziehungsweise die im Folgenden näher erläuterten Gruppen mit R10-R213 - eine fluorierte, insbesondere perfluorierte, Alkylenoxid-Einheit, beispielsweise Ethylenoxid-Einheit und/oder Propylenoxid-Einheit, insbesondere Ethylenoxid-Einheit, beispielsweise Oligo-Alkylenoxid-Einheit, zum Beispiel Oligo-Ethylenoxid-Einheit und/oder Oligo-Propylenoxid-Einheit, insbesondere Oligo-Ethylenoxid-Einheit. Gegebenenfalls kann dabei der Spacer X - beziehungsweise die später erläuterten Spacer (X_{I}), (X_{II}), (X_{III}), (X_{IV}), (X_{V}), (X_{VI}), (X_{VII}), (X_{VIII}), (X_{IX}), (Xₐ), (X_{b}), (X_{c}), (X_{d}), (Xₑ), (X_{f}), (X_{Z}) beziehungsweise (X_{Z1}) - und/oder die Polymerrücken bildende Einheit -[A]- - beziehungsweise die später erläuterten Polymerrücken bildenden Einheiten -[A_{I}]-, -[A_{II}]-, -[A_{III}]-, -[A_{IV}]-, -[A_{V}]-,-[A_{VI}]-, -[A_{VII}]-, -[A_{VIII}]-, -[A_{IX}]-, -[Aₐ]-, -[A_{b}]-, -[A_{c}]-, -[A_{d}]-, -[Aₑ]-, -[A_{f}]-, -[A_{Z}]-beziehungsweise -[A_{Z1}]- - und/oder die Gruppe Q beziehungsweise Q⁺ beziehungsweise Q⁻ - beziehungsweise die im Folgenden näher erläuterten Gruppen mit R10-R213 - frei von unfluorierten Alkylenoxid-Einheiten, beispielsweise Ethylenoxid-Einheiten und/oder Propylenoxid-Einheiten, insbesondere Ethylenoxid-Einheiten, beispielsweise Oligo-Alkylenoxid-Einheiten, zum Beispiel Oligo-Ethylenoxid-Einheiten und/oder Oligo-Propylenoxid-Einheiten, insbesondere Oligo-Ethylenoxid-Einheiten, sein. Durch einen Polymerelektrolyten, insbesondere welcher nicht oder nur teilweise auf unfluoriertem Polyethylenoxid basiert, beispielsweise welcher nicht auf unfluoriertem Polyethylenoxid basiert beziehungsweise welcher auf fluoriertem, insbesondere perfluoriertem, Polyethylenoxid basiert, kann vorteilhafterweise eine - im Vergleich zur Verwendung von unfluorierten, etherbasierten Flüssigelektrolyten, wie Dimethoxyethan (DME) oder Dioxolan (DOL) und Mischungen daraus, - reduzierte kathodenseitige Polysulfidlöslichkeit erzielt werden. So kann vorteilhafterweise der Kapazitätserhalt und damit die Lebensdauer der Zelle deutlich verbessert werden.

Im Rahmen einer weiteren, alternativen oder zusätzlichen Ausführungsform ist der Spacer X - beziehungsweise die später erläuterten Spacer (X_{I}), (X_{II}), (X_{III}), (X_{IV}), (X_{V}), (X_{VI}), (X_{VII}), (X_{VIII}), (X_{IX}), (Xₐ), (X_{b}), (X_{c}), (X_{d}), (Xₑ), (X_{f}), (X_{Z}) beziehungsweise (X_{Z1}) - und/oder die Polymerrücken bildende Einheit -[A]-beziehungsweise die später erläuterten Polymerrücken bildenden Einheiten -[A_{I}]-, -[A_{II}]-, -[A_{III}]-, -[A_{IV}]-, -[A_{V}]-, -[A_{VI}]-, -[A_{VII}]-, -[A_{VIII}]-, -[A_{IX}]-, -[Aₐ]-, -[A_{b}]-, -[A_{c}]-, -[A_{d}]-,-[Aₑ]-, -[A_{f}]-, -[A_{Z}]- beziehungsweise -[A_{Z1}]- - und/oder die Gruppe Q beziehungsweise Q⁺ beziehungsweise Q⁻ - beziehungsweise die im Folgenden näher erläuterten Gruppen mit R10-R213 - perfluoriert. So kann vorteilhafterweise die Löslichkeit von Polysulfiden durch das Polymer insbesondere herabgesetzt werden.

Im Rahmen einer Ausgestaltung steht die, insbesondere ungeladene, Gruppe Q für eine Gruppe, insbesondere eine cyclische Carbonatgruppe, der allgemeinen chemischen Formel:

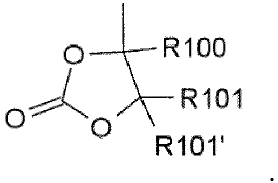

Im Rahmen einer weiteren Ausgestaltung steht die, insbesondere ungeladene, Gruppe Q für eine Gruppe, insbesondere eine Lactongruppe, der allgemeinen chemischen Formel: 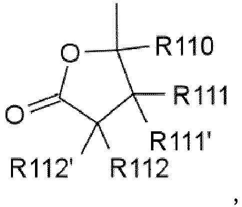 beispielsweise

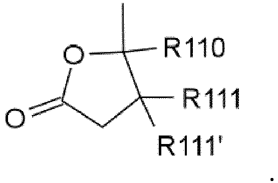

Im Rahmen einer weiteren Ausgestaltung steht die, insbesondere ungeladene, Gruppe Q für eine Gruppe, insbesondere eine cyclische Carbamatgruppe, der allgemeinen chemischen Formel:

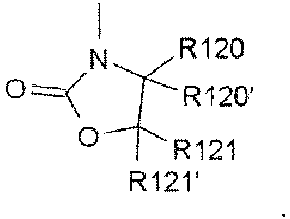

Im Rahmen einer weiteren Ausgestaltung steht die, insbesondere ungeladene, Gruppe Q für eine Gruppe, insbesondere eine Ethylenoxidgruppe, der allgemeinen chemischen Formel:

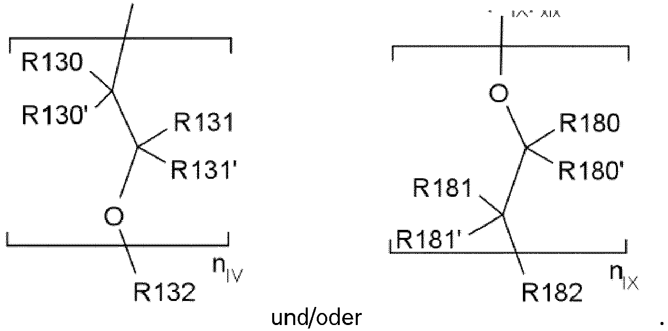

Dabei steht n_{IV} beziehungsweise n_{IX} für die Anzahl der Ethylenoxideinheiten und ist insbesondere 1 ≤ n_{IV} ≤ 15, beispielsweise 2 ≤ n_{IV} ≤ 6, beziehungsweise 1 ≤ n_{IX} ≤ 15, beispielsweise 2 ≤ n_{IX} ≤ 6.

Im Rahmen einer weiteren Ausgestaltung steht die, insbesondere ungeladene, Gruppe Q für eine Gruppe, insbesondere eine acyclische Carbonatgruppe, der allgemeinen chemischen Formel:

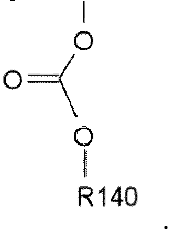

Im Rahmen einer weiteren Ausgestaltung steht die, insbesondere ungeladene, Gruppe Q für eine Gruppe, insbesondere eine acyclische Carbonsäureestergruppe, der allgemeinen chemischen Formel:

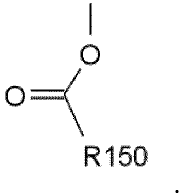

Im Rahmen einer weiteren Ausgestaltung steht die, insbesondere ungeladene, Gruppe Q für eine Gruppe, insbesondere eine acyclische Carbamatgruppe, der allgemeinen chemischen Formel:

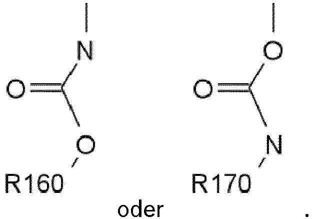

Im Rahmen einer weiteren Ausgestaltung steht die, insbesondere positiv geladene, Gruppe Q⁺ für eine Gruppe, insbesondere eine Pyridiniumgruppe, der allgemeinen chemischen Formel:

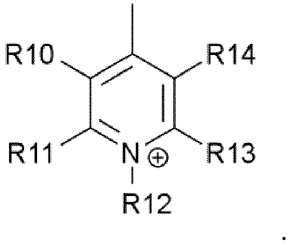

Im Rahmen einer weiteren Ausgestaltung steht die, insbesondere positiv geladene, Gruppe Q⁺ für eine Gruppe, insbesondere eine quartäre Ammoniumgruppe, der allgemeinen chemischen Formel:

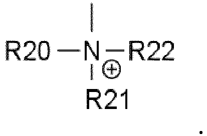

Im Rahmen einer weiteren Ausgestaltung steht die, insbesondere positiv geladene, Gruppe Q⁺ für eine Gruppe, insbesondere eine Imidazoliumgruppe, der allgemeinen chemischen Formel:

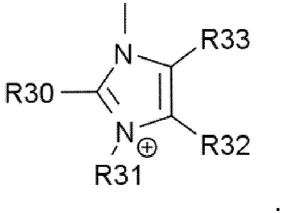

Im Rahmen einer weiteren Ausgestaltung steht die, insbesondere positiv geladene, Gruppe Q⁺ für eine Gruppe, insbesondere eine Piperidiniumgruppe, der allgemeinen chemischen Formel:

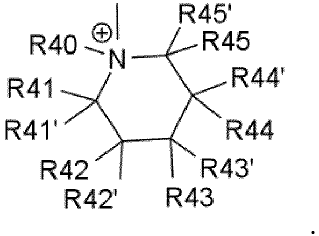

Im Rahmen einer weiteren Ausgestaltung steht die, insbesondere positiv geladene, Gruppe Q⁺ für eine Gruppe, insbesondere eine Pyrrolidiniumgruppe, der allgemeinen chemischen Formel:

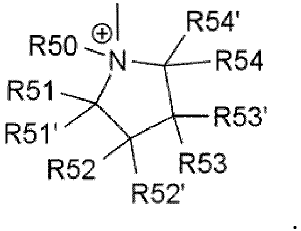

Im Rahmen einer weiteren Ausgestaltung steht die, insbesondere positiv geladene, Gruppe Q⁺ für eine Gruppe, insbesondere eine quartäre Phosphoniumgruppe, der allgemeinen chemischen Formel:

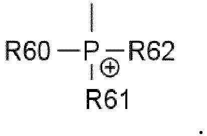

Im Rahmen einer weiteren Ausgestaltung steht die, insbesondere negativ geladene, Gruppe Q⁻ für eine Gruppe, insbesondere eine *para-*Benzolsulfonylimid-Gruppe, beispielsweise eine para-Trifluormethansulfonylimid-Benzol-Gruppe, der allgemeinen chemischen Formel: 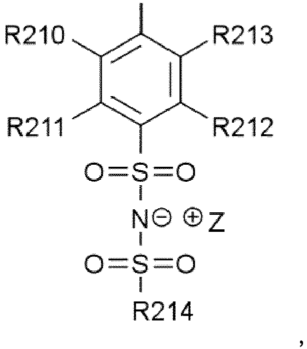 beispielsweise

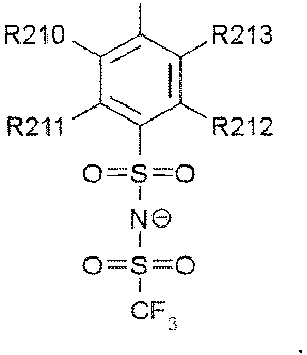

Im Rahmen einer weiteren Ausgestaltung steht die, insbesondere negativ geladene, Gruppe Q⁻ für eine Gruppe, insbesondere eine *para-*Benzolsulfonatgruppe, der allgemeinen chemischen Formel:

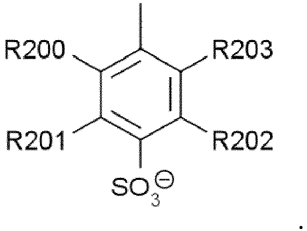

Dabei können R10, R11, R12, R13 und/oder R14 beziehungsweise R30, R31, R32 und/oder R33 beziehungsweise R40, R41, R41', R42, R42', R43, R43', R44, R44', R45 und/oder R45' beziehungsweise R50, R51, R51', R52, R52', R53, R53', R54 und/oder R54' beziehungsweise R100, R101 und/oder R101' beziehungsweise R110, R111, R111', R112 und/oder R112' beziehungsweise R120, R120', R121 und/oder R121' beziehungsweise R130, R130', R131, R131' und/oder R132 beziehungsweise R140 beziehungsweise R150 beziehungsweise R160 beziehungsweise R170 beziehungsweise R180, R180' R181, R181' und/oder R182 beziehungsweise R200, R201, R202 und/oder R203 beziehungsweise R210, R211, R212, 213 und/oder R214 jeweils unabhängig voneinander für Wasserstoff und/oder eine, insbesondere substituierte oder unsubstituierte, gesättigte oder ungesättigte, lineare oder verzweigte, Alkylgruppe, insbesondere mit einer Kettenlänge von ≥ 1 bis ≤ 16 Kohlenstoffatomen, und/oder eine, insbesondere substituierte oder unsubstituierte, gesättigte oder ungesättigte, lineare oder verzweigte, Alkylenoxidgruppe, beispielsweise Ethylenoxidgruppe oder Propylenoxidgruppe, insbesondere Oligo-Alkylenoxidgruppe, beispielsweise Oligo-Ethylenoxidgruppe oder Oligo-Propylenoxidgruppe, insbesondere mit ≥ 1 oder ≥ 2 bis ≤ 10 Wiederholungseinheiten, und/oder ein Halogenatom, insbesondere Fluor, und/oder eine, insbesondere substituierte oder unsubstituierte, gesättigte oder ungesättigte, lineare oder verzweigte, Alkoxygruppe, beispielsweise mit einer Kohlenstoffkettenlänge von ≥ 1 bis ≤ 16 Kohlenstoffatomen, und/oder eine, insbesondere substituierte oder unsubstituierte, Phenylenoxidgruppe, beispielsweise Oligo-Phenylenoxidgruppe, insbesondere mit ≥ 1 oder ≥ 2 bis ≤ 10 Wiederholungseinheiten, und/oder eine, insbesondere substituierte oder unsubstituierte, Phenoxygruppe und/oder eine, insbesondere substituierte oder unsubstituierte, Phenylengruppe, beispielsweise Oligo-Phenylengruppe, insbesondere mit ≥ 1 oder ≥ 2 bis ≤ 10 Wiederholungseinheiten, und/oder eine, insbesondere substituierte oder unsubstituierte, Phenylgruppe und/oder eine, insbesondere substituierte oder unsubstituierte, Benzylengruppe, beispielsweise Oligo-Benzylengruppe, insbesondere mit ≥ 1 oder ≥ 2 bis ≤ 10 Wiederholungseinheiten, und/oder eine, insbesondere substituierte oder unsubstituierte, Benzylgruppe und/oder eine Carbonylgruppe, insbesondere eine Ketongruppe, zum Beispiel eine Alkylcarbonylgruppe, und/oder eine, insbesondere cyclische und/oder acyclische, Carbonatgruppe, und/oder eine, insbesondere cyclische und/oder acyclische, Carbonsäureestergruppe, insbesondere eine Lactongruppe, und/oder eine, insbesondere cyclische und/oder acyclische, Carbamatgruppe und/oder - insbesondere im Fall von R41, R41', R42, R42', R43, R43', R44, R44', R45 und/oder R45' beziehungsweise R51, R51', R52, R52', R53, R53', R54 und/oder R54' beziehungsweise R100, R101 und/oder R101' beziehungsweise R110, R111, R111', R112 und/oder R112' beziehungsweise R120, R120', R121 und/oder R121' beziehungsweise R130, R130', R131, R131' und/oder R132 beziehungsweise R140 beziehungsweise R150 beziehungsweise R160 beziehungsweise R170 beziehungsweise R180, R180' R181, R181' und/oder R182 beziehungsweise R200, R201, R202 und/oder R203 beziehungsweise R210, R211, R212, 213 und/oder R214 - für eine geladene Gruppe, beispielsweise eine positiv geladene Gruppe, zum Beispiel auf der Basis eines Kations einer ionischen Flüssigkeit, beispielsweise eine quartäre Ammoniumgruppe und/oder eine quartäre Phosphoniumgruppe, und/oder eine negativ geladene Gruppe, zum Beispiel auf der Basis eines Leitsalzanions, insbesondere eines Lithium-Leitsalzanions, und/oder eines Anions einer ionischen Flüssigkeit, beispielsweise eine Sulfonylimidgruppe, und/oder eine Sulfonatgruppe, zum Beispiel eine Lithiumsulfonylimidgruppe und/oder Lithiumsulfonatgruppe, stehen.

R20, R21 und/oder R22 beziehungsweise R60, R61 und/oder R62 können dabei jeweils unabhängig voneinander eine, insbesondere substituierte oder unsubstituierte, gesättigte oder ungesättigte, lineare oder verzweigte, Alkylgruppe, insbesondere mit einer Kettenlänge von ≥ 1 bis ≤ 16 Kohlenstoffatomen, und/oder eine, insbesondere substituierte oder unsubstituierte, gesättigte oder ungesättigte, lineare oder verzweigte, Alkylenoxidgruppe, beispielsweise Ethylenoxidgruppe oder Propylenoxidgruppe, insbesondere Oligo-Alkylenoxidgruppe, beispielsweise Oligo-Ethylenoxidgruppe oder Oligo-Propylenoxidgruppe, insbesondere mit ≥ 1 oder ≥ 2 bis ≤ 10 Wiederholungseinheiten, und/oder eine, insbesondere substituierte oder unsubstituierte, gesättigte oder ungesättigte, lineare oder verzweigte, Alkoxygruppe, beispielsweise mit einer Kohlenstoffkettenlänge von ≥ 1 bis ≤ 16 Kohlenstoffatomen, und/oder eine, insbesondere substituierte oder unsubstituierte, Phenylenoxidgruppe, beispielsweise Oligo-Phenylenoxidgruppe, insbesondere mit ≥ 1 oder ≥ 2 bis ≤ 10 Wiederholungseinheiten, und/oder eine, insbesondere substituierte oder unsubstituierte, Phenoxygruppe und/oder eine, insbesondere substituierte oder unsubstituierte, Phenylengruppe, beispielsweise Oligo-Phenylengruppe, insbesondere mit ≥ 1 oder ≥ 2 bis ≤ 10 Wiederholungseinheiten, und/oder eine, insbesondere substituierte oder unsubstituierte, Phenylgruppe und/oder eine, insbesondere substituierte oder unsubstituierte, Benzylengruppe, beispielsweise Oligo-Benzylengruppe, insbesondere mit ≥ 1 oder ≥ 2 bis ≤ 10 Wiederholungseinheiten, und/oder eine, insbesondere substituierte oder unsubstituierte, Benzylgruppe und/oder eine Carbonylgruppe, insbesondere eine Ketongruppe, zum Beispiel eine Alkylcarbonylgruppe, und/oder eine, insbesondere cyclische und/oder acyclische, Carbonatgruppe, und/oder eine, insbesondere cyclische und/oder acyclische, Carbonsäureestergruppe, insbesondere eine Lactongruppe, und/oder eine, insbesondere cyclische und/oder acyclische, Carbamatgruppe stehen.

Unter einer Alkylgruppe beziehungsweise einer Alkylengruppe beziehungsweise einer Alkylenoxidgruppe beziehungsweise einer Etyhlenoxidgruppe beziehungsweise einer Propylenoxidgruppe beziehungsweise einer Oligo-Alkylenoxidgruppe beziehungsweise einer Oligo-Ethylenoxidgruppe beziehungsweise einer Oligo-Propylenoxidgruppe beziehungsweise einer Alkoxygruppe beziehungsweise einer Phenylenoxidgruppe beziehungsweise einer Oligo-Phenylenoxidgruppe beziehungsweise einer Phenoxygruppe beziehungsweise einer Phenylengruppe beziehungsweise einer Oligo-Phenylengruppe beziehungsweise einer Phenylgruppe beziehungsweise einer Benzylengruppe beziehungsweise einer Oligo-Benzylengruppe beziehungsweise einer Benzylgruppe kann im Sinne der vorliegenden Erfindung insbesondere eine jeweilige Gruppe verstanden werden, welche sowohl substituiert als auch unsubstituiert sein kann.

Im Rahmen von R10, R11, R12, R13, R14, R20, R21 R22, R30, R31, R32, R33, R40, R41, R41', R42, R42', R43, R43', R44, R44', R45, R45', R50, R51, R51', R52, R52', R53, R53', R54, R54', R60, R61, R62, R100, R101, R101', R110, R111, R111', R112, R112', R120, R120', R121, R121', R130, R130', R131, R131', R132, R140, R150, R160, R170, R180, R180' R181, R181', R182, R200, R201, R202, R203, R210, R211, R212, 213 und/oder R214 kann eine Alkylgruppe beziehungsweise Alkoxygruppe beispielsweise eine Kohlenstoffkettenlänge von ≥ 1 bis ≤ 16 Kohlenstoffatomen, zum Beispiel eine Kohlenstoffkettenlänge von ≥ 1 bis ≤ 4 Kohlenstoffatomen, und/oder von ≥ 4 bis ≤ 8 Kohlenstoffatomen und/oder von ≥ 9 bis ≤ 13 Kohlenstoffatomen aufweisen. Insbesondere kann eine Alkylgruppe eine gesättigte Alkylgruppe, beispielsweise die allgemeinen chemischen Formel: -(CH₂)ₐ-CH₃ mit 1 ≤ a ≤ 15, sein.

Im Rahmen von R10, R11, R12, R13, R14, R20, R21 R22, R30, R31, R32, R33, R40, R41, R41', R42, R42', R43, R43', R44, R44', R45, R45', R50, R51, R51', R52, R52', R53, R53', R54, R54', R60, R61, R62, R100, R101, R101', R110, R111, R111', R112, R112', R120, R120', R121, R121', R130, R130', R131, R131', R132, R140, R150, R160, R170, R180, R180' R181, R181', R182, R200, R201, R202, R203, R210, R211, R212, 213 und/oder R214 kann eine Alkylenoxidgruppe, beispielsweise Ethylenoxidgruppe oder Propylenoxidgruppe, insbesondere Oligo-Alkylenoxidgruppe, beispielsweise Oligo-Ethylenoxidgruppe oder Oligo-Propylenoxidgruppe, beziehungsweise eine Phenylenoxidgruppe, beispielsweise Oligo-Phenylenoxidgruppe, beziehungsweise eine Phenylengruppe, beispielsweise Oligo-Phenylengruppe, beziehungsweise eine Benzylengruppe, beispielsweise Oligo-Benzylengruppe, beispielsweise ≥ 1 oder ≥ 2 bis ≤ 10 Wiederholungseinheiten, zum Beispiel ≥ 1 oder ≥ 2 bis ≤ 4 Wiederholungseinheiten, aufweisen. Zum Beispiel kann dabei eine Alkylenoxideinheit die allgemeine chemische Formel: -[CH₂-CH₂-O-]_{b} mit 1 ≤ b ≤ 10, beispielsweise 1 ≤ oder 2 ≤ b ≤ 4, aufweisen.

Im Rahmen von R10, R11, R12, R13, R14, R20, R21 R22, R30, R31, R32, R33, R40, R41, R41', R42, R42', R43, R43', R44, R44', R45, R45', R50, R51, R51', R52, R52', R53, R53', R54, R54', R60, R61, R62, R100, R101, R101', R110, R111, R111', R112, R112', R120, R120', R121, R121', R130, R130', R131, R131', R132, R140, R150, R160, R170, R180, R180' R181, R181', R182, R200, R201, R202, R203, R210, R211, R212, 213 und/oder R214 sind auch Kombinationen dieser Gruppen, beispielsweise eine Alkyl-Alkylenoxid-Gruppe, zum Beispiel eine Alkyl-Oligo-Alkylenoxid-Gruppe, beispielsweise der allgemeinen chemischen Formel: H₃C-(CH₂)_{a1*}-[CH₂-CH₂-O-]_{b1*}- mit 0 ≤ a1* ≤ 15, insbesondere 0 ≤ a1* ≤ 3, und 1 ≤ b1* ≤ 10, insbesondere 1 ≤ oder 2 ≤ b1* ≤ 4, oder eine Alkyl-Alkylenoxid-Alkyl-Gruppe, zum Beispiel eine Alkyl-Oligo-Alkylenoxid-Alkyl-Gruppe, oder eine Alkoxy-Alkylenoxid-Gruppe, zum Beispiel Alkoxy-Oligo-Alkylenoxid-Gruppe, oder eine Alkoxy-Alkylenoxid-Alkyl-Gruppe, zum Beispiel Alkoxy-Oligo-Alkylenoxid-Alkylgruppe, beispielsweise der allgemeinen chemischen Formel: H₃C-(CH₂)_{a2'}-O-[CH₂-CH₂-O-]_{b2*}-(CH₂)_{a2*'}- mit 0 ≤ a2* ≤ 15, insbesondere 0 ≤ a2* ≤ 3, 0 ≤ a2*' ≤ 15, insbesondere 0 ≤ a2*' ≤ 3, und 1 ≤ b2* ≤ 10, insbesondere 1 ≤ oder 2 ≤ b2* ≤ 4, möglich.

Beispielsweise können R100, R101 und/oder R101' beziehungsweise R110, R111, R111', R112 und/oder R112', beispielsweise R110, R111 und/oder R111', beziehungsweise R120, R120', R121 und/oder R121' beziehungsweise R130, R130', R131 und/oder R131' beziehungsweise R150 beziehungsweise R180, R180' R181, R181' und/oder R182 beziehungsweise R10, R11, R13 und/oder R14 beziehungsweise R30, R32 und/oder R33 beziehungsweise R41, R41', R42, R42', R43, R43', R44, R44', R45 und/oder R45' beziehungsweise R51, R51', R52, R52', R53, R53', R54 und/oder R54' beziehungsweise R200, R201, R202 und/oder R203 beziehungsweise R210, R211, R212, 213 und/oder R214 jeweils unabhängig voneinander für Wasserstoff und/oder ein Halogenatom, insbesondere Fluor, und/oder eine Alkylgruppe und/oder eine Alkylenoxidgruppe, insbesondere eine Oligo-Alkylenoxidgruppe, und/oder eine Alkoxygruppe und/oder eine Phenylenoxidgruppe, insbesondere eine Oligo-Phenylenoxidgruppe, und/oder eine Phenoxygruppe und/oder eine Phenylengruppe, insbesondere eine Oligo-Phenylengruppe, und/oder eine Phenylgruppe und/oder eine Benzylengruppe, insbesondere eine Oligo-Benzylengruppe, und/oder eine Benzylgruppe und/oder eine Carbonylgruppe und/oder eine, insbesondere cyclische und/oder acyclische, Carbonatgruppe, und/oder eine, insbesondere cyclische und/oder acyclische, Carbonsäureestergruppe, insbesondere eine Lactongruppe, und/oder eine, insbesondere cyclische und/oder acyclische, Carbamatgruppe und/oder eine geladene Gruppe, beispielsweise eine positiv geladene Gruppe, insbesondere auf der Basis eines Kations einer ionischen Flüssigkeit, zum Beispiel eine quartäre Ammoniumgruppe und/oder eine quartäre Phosphoniumgruppe, und/oder eine negativ geladene Gruppe, insbesondere auf der Basis eines Leitsalzanions, insbesondere Lithium-Leitsalzanions, und/oder eines Anions einer ionischen Flüssigkeit, und/oder eine Sulfonatgruppe, beispielsweise eine Sulfonylimidgruppe und/oder einer Sulfonatgruppe, zum Beispiel eine Lithiumsulfonylimidgruppe und/oder eine Lithiumsulfonatgruppe, stehen.

Zum Beispiel können R41, R41', R42, R42', R43, R43', R44, R44', R45 und/oder R45' beziehungsweise R51, R51', R52, R52', R53, R53', R54 und/oder R54' beziehungsweise R100, R101 und/oder R101' beziehungsweise R110, R111, R111', R112 und/oder R112' beziehungsweise R120, R120', R121 und/oder R121' beziehungsweise R130, R130', R131, R131' und/oder R132 beziehungsweise R140 beziehungsweise R150 beziehungsweise R160 beziehungsweise R170 beziehungsweise R180, R180' R181, R181' und/oder R182 für eine positiv geladene Gruppe, insbesondere auf der Basis eines Kations einer ionischen Flüssigkeit, beispielsweise für eine Pyridiniumgruppe und/oder eine quartäre Ammoniumgruppe und/oder eine Imidazoliumgruppe und/oder eine Piperidiniumgruppe und/oder eine Pyrrolidiniumgruppe und/oder eine quartäre Phosphoniumgruppe und/oder eine Guanidiniumgruppe und/oder eine Morpholiniumgruppe und/oder eine Uroniumgruppe und/oder eine Thiouroniumgruppe, beispielsweise eine quartäre Ammoniumgruppe und/oder eine quartäre Phosphoniumgruppe, stehen. So kann die lonenleitfähigkeit gegebenenfalls weiter verbessert werden.

Insbesondere können R200, R201, R202 und/oder R203 beziehungsweise R210, R211, R212, 213 und/oder R214 für eine negativ geladene Gruppe, insbesondere auf der Basis eines Leitsalzanions, insbesondere Lithium-Leitsalzanions, und/oder eines Anions einer ionischen Flüssigkeit, beispielsweise eine Sulfonylimidgruppe, und/oder eine Sulfonatgruppe, zum Beispiel eine Lithiumsulfonylimidgruppe und/oder eine Lithiumsulfonatgruppe, stehen. Zum Beispiel kann zumindest einer der Reste R200, R201, R202 und R203 beziehungsweise R210, R211, R212, 213 und R214, beispielsweise mindestens zwei oder drei der Reste R200, R201, R202 und R203 beziehungsweise R210, R211, R212, 213 und R214, gegebenenfalls alle Reste R200, R201, R202 und R203 beziehungsweise R210, R211, R212, 213 und R214, für eine negativ geladene Gruppe, insbesondere auf der Basis eines Leitsalzanions, insbesondere Lithium-Leitsalzanions, und/oder eines Anions einer ionischen Flüssigkeit, beispielsweise eine Sulfonylimidgruppe, und/oder eine Sulfonatgruppe, zum Beispiel eine Lithiumsulfonylimidgruppe und/oder eine Lithiumsulfonatgruppe, stehen. So kann die lonenleitfähigkeit gegebenenfalls weiter verbessert werden.

R132 beziehungsweise R140 beziehungsweise R160 beziehungsweise R170 beziehungsweise R12 beziehungsweise R20, R21 und R22 beziehungsweise R31 beziehungsweise R40 beziehungsweise R50 beziehungsweise R60, R61 und R62 können jeweils unabhängig voneinander für eine Alkylgruppe und/oder eine Alkylenoxidgruppe, insbesondere eine Oligo-Alkylenoxidgruppe, und/oder eine Alkoxygruppe und/oder eine Phenylenoxidgruppe, insbesondere eine Oligo-Phenylenoxidgruppe, und/oder eine Phenoxygruppe und/oder eine Phenylengruppe, insbesondere eine Oligo-Phenylengruppe, und/oder eine Phenylgruppe und/oder eine Benzylengruppe, insbesondere eine Oligo-Benzylengruppe, und/oder eine Benzylgruppe und/oder eine Carbonylgruppe und/oder eine, insbesondere cyclische und/oder acyclische, Carbonatgruppe und/oder eine, insbesondere cyclische und/oder acyclische, Carbonsäureestergruppe, insbesondere eine Lactongruppe, und/oder eine, insbesondere cyclische und/oder acyclische, Carbamatgruppe stehen.

R132 kann insbesondere für oder eine, insbesondere cyclische und/oder acyclische, Carbonatgruppe, und/oder eine, insbesondere cyclische und/oder acyclische, Carbonsäureestergruppe, insbesondere eine Lactongruppe, und/oder eine, insbesondere cyclische und/oder acyclische, Carbamatgruppe und/oder eine Alkylgruppe, insbesondere eine Methylgruppe oder eine Ethylgruppe, beispielsweise eine Methylgruppe, stehen. So kann vorteilhafterweise die lonenleitfähigkeit weiter verbessert werden.

R20 und/oder R21 beziehungsweise R60 und/oder R61 beziehungsweise R132 beziehungsweise R140 beziehungsweise R150 beziehungsweise R160 beziehungsweise R170 kann insbesondere für eine Alkylgruppe, beispielsweise eine Methylgruppe oder eine Ethylgruppe, insbesondere eine Methylgruppe, und/oder eine Alkylenoxidgruppe, insbesondere eine Oligo-Alkylenoxidgruppe, stehen. Durch eine kurzkettige Alkylgruppe, wie eine Methylgruppe, kann vorteilhafterweise das Polymer hinsichtlich seiner ionenleitenden Funktion optimiert werden.

Im Rahmen einer speziellen Ausgestaltung sind die Reste R10, R11, R12, R13 und/oder R14 beziehungsweise R20, R21 und/oder R22 beziehungsweise R30, R31, R32 und/oder R33 beziehungsweise R40, R41, R41', R42, R42', R43, R43', R44, R44', R45 und/oder R45' beziehungsweise R50, R51, R51', R52, R52', R53, R53', R54 und/oder R54' beziehungsweise R60, R61 und/oder R62 beziehungsweise R100, R101 und/oder R101' beziehungsweise R110, R111, R111', R112 und/oder R112' beziehungsweise R120, R120', R121 und/oder R121' beziehungsweise R130, R130', R131, R131' und/oder R132 beziehungsweise R140 beziehungsweise R150 beziehungsweise R160 beziehungsweise R170 beziehungsweise R180, R180' R181, R181' und/oder R182 beziehungsweise R200, R201, R202 und/oder R203 beziehungsweise R210, R211, R212, 213 und/oder R214 teilweise oder vollständig halogeniert, insbesondere fluoriert. Durch eine Halogenierung, insbesondere Fluorierung, kann vorteilhafterweise die Polarität der Polymers beeinflusst werden und so die Löslichkeit von Polysulfiden durch das Polymer, insbesondere durch Alkylenoxidgruppen, möglicherweise verringert werden, was bei einer Verwendung in Kombination mit einem Schwefel-Kohlenstoff-Kompositen, beispielsweise Schwefel-Polymer- und/oder -Kohlenstoffmodifikation-Kompositen, insbesondere Schwefel-Polymer-Kompositen mit, beispielsweise kovalent und/oder ionisch, insbesondere kovalent, an das Polymer des Komposits gebundenem Schwefel, zum Beispiel Schwefel-Polyacrylnitril-Kompositen, beispielsweise einem SPAN-Komposit, als Kathodenmaterial besonders vorteilhaft sein kann.

Im Rahmen einer alternativen oder zusätzlichen Ausgestaltung sind die Reste R10, R11, R12, R13 und/oder R14 beziehungsweise R20, R21 und/oder R22 beziehungsweise R30, R31, R32 und/oder R33 beziehungsweise R40, R41, R41', R42, R42', R43, R43', R44, R44', R45 und/oder R45' beziehungsweise R50, R51, R51', R52, R52', R53, R53', R54 und/oder R54' beziehungsweise R60, R61 und/oder R62 beziehungsweise R100, R101 und/oder R101' beziehungsweise R110, R111, R111', R112 und/oder R112' beziehungsweise R120, R120', R121 und/oder R121' beziehungsweise R130, R130', R131, R131' und/oder R132 beziehungsweise R140 beziehungsweise R150 beziehungsweise R160 beziehungsweise R170 beziehungsweise R180, R180' R181, R181' und/oder R182 beziehungsweise R200, R201, R202 und/oder R203 beziehungsweise R210, R211, R212, 213 und/oder R214 mit mindestens einer positiv geladenen Gruppe, insbesondere auf der Basis eines Kations einer ionischen Flüssigkeit, beispielsweise einer, insbesondere quartären, Ammoniumgruppe und/oder einer, insbesondere quartären, Phosphoniumgruppe, und/oder mit mindestens einer negativ geladenen Gruppe, insbesondere auf der Basis eines Leitsalzanions, beispielsweise Lithium-Leitsalzanions, und/oder eines Anions einer ionischen Flüssigkeit, beispielsweise mit mindestens einer Sulfonylimidgruppe, zum Beispiel Lithiumsulfonylimidgruppe, und/oder mit mindestens einer Sulfonatgruppe, zum Beispiel Lithiumsulfonatgruppe, substituiert. So kann vorteilhafterweise die lonenleitfähigkeit, insbesondere durch lonendissoziation beziehungsweise Gegenionsolvatisierung, beispielsweise Lithiumionensolvatisierung, weiter erhöht werden. Insbesondere kann dabei R10, R11, R12, R13 und/oder R14 beziehungsweise R20, R21 und/oder R22 beziehungsweise R30, R31, R32 und/oder R33 beziehungsweise R40, R41, R41', R42, R42', R43, R43', R44, R44', R45 und/oder R45' beziehungsweise R50, R51, R51', R52, R52', R53, R53', R54 und/oder R54' beziehungsweise R60, R61 und/oder R62 mit mindestens einer positiv geladenen Gruppe substituiert beziehungsweise R200, R201, R202 und/oder R203 beziehungsweise R210, R211, R212, 213 und/oder R214 mit mindestens einer negativ geladenen Gruppe substituiert sein, beispielsweise welche insbesondere wie vorstehend, insbesondere im Rahmen der über den Spacer X angebundenen Gruppen Q⁺ beziehungsweise Q⁻, insbesondere Q⁻, erläutert ausgestaltet sein kann.

Im Rahmen einer alternativen oder zusätzlichen Ausgestaltung sind die Reste R10, R11, R12, R13 und/oder R14 beziehungsweise R20, R21 und/oder R22 beziehungsweise R30, R31, R32 und/oder R33 beziehungsweise R40, R41, R41', R42, R42', R43, R43', R44, R44', R45 und/oder R45' beziehungsweise R50, R51, R51', R52, R52', R53, R53', R54 und/oder R54' beziehungsweise R60, R61 und/oder R62 beziehungsweise R100, R101 und/oder R101' beziehungsweise R110, R111, R111', R112 und/oder R112' beziehungsweise R120, R120', R121 und/oder R121' beziehungsweise R130, R130', R131, R131' und/oder R132 beziehungsweise R140 beziehungsweise R150 beziehungsweise R160 beziehungsweise R170 beziehungsweise R180, R180' R181, R181' und/oder R182 beziehungsweise R200, R201, R202 und/oder R203 beziehungsweise R210, R211, R212, 213 und/oder R214 mit mindestens einer sauerstoffhaltigen Gruppe, beispielsweise Alkoxygruppe und/oder Alkylenoxidgruppe, beispielsweise Oligo-Alkylenoxidgruppe, zum Beispiel Oligo-Ethylenoxid-Gruppe und/oder Oligo-Propylenoxid-Gruppe, und/oder Ketongruppe, beispielsweise Alkylcarbonylgruppe, und/oder Carbonsäureestergruppe, substituiert. So kann vorteilhafterweise die lonenleitfähigkeit weiter erhöht werden, da - insbesondere Oligo-Alkylenoxidgruppen, wie Oligo-Ethylenoxid-Gruppen, - eine Möglichkeit bieten unter anderen die Glastemperatur des Polymers beziehungsweise Polymerelektrolyten herab zu setzen.

Aromatische Gruppen, wie Phenylengruppen und Benzylengruppen, bieten vorteilhafterweise mehrere Substitutionspositionen, welche mit geladenen Gruppen und/oder sauerstoffhaltigen Gruppen substituiert werden können, und ermöglichen damit insbesondere die lonenleitfähigkeit zu optimieren. Beispielsweise können daher R10, R11, R13 und/oder R14 beziehungsweise R30, R32 und/oder R33 beziehungsweise R41, R41', R42, R42', R43, R43', R44, R44', R45 und/oder R45' beziehungsweise R51, R51', R52, R52', R53, R53', R54 und/oder R54' beziehungsweise R100, R101 und/oder R101' beziehungsweise R110, R111, R111', R112 und/oder R112' beziehungsweise R120, R120', R121 und/oder R121' beziehungsweise R130, R130', R131 und/oder R131' beziehungsweise R150 beziehungsweise R180, R180' R181, R181' und/oder R182 beziehungsweise R200, R201, R202 und/oder R203 beziehungsweise R210, R211, R212, 213 und/oder R214 können daher beispielsweise jeweils unabhängig voneinander für Wasserstoff und/oder eine, teilweise oder vollständig halogenierte, insbesondere fluorierte, und/oder mit mindestens einer positiv geladenen Gruppe, insbesondere auf der Basis eines Kations einer ionischen Flüssigkeit, beispielsweise mit mindestens einer quartären Ammoniumgruppe und/oder Phosphoniumgruppe, substituierte und/oder mit mindestens einer negativ geladenen Gruppe, insbesondere auf der Basis eines Leitsalzanions, beispielsweise Lithium-Leitsalzanions, und/oder eines Anions einer ionischen Flüssigkeit, beispielsweise mit mindestens einer Lithiumsulfonylimidgruppe und/oder Lithiumsulfonatgruppe, substituierte und/oder mit mindestens einer sauerstoffhaltigen Gruppe substituierte Alkylgruppe, und/oder eine, teilweise oder vollständig halogenierte, insbesondere fluorierte, und/oder mit mindestens einer positiv geladenen Gruppe, insbesondere auf der Basis eines Kations einer ionischen Flüssigkeit, beispielsweise mit mindestens einer quartären Ammoniumgruppe und/oder Phosphoniumgruppe, substituierte und/oder mit mindestens einer negativ geladenen Gruppe, insbesondere auf der Basis eines Leitsalzanions, beispielsweise Lithium-Leitsalzanions, und/oder eines Anions einer ionischen Flüssigkeit, beispielsweise mit mindestens einer Lithiumsulfonylimidgruppe und/oder Lithiumsulfonatgruppe, substituierte und/oder mit mindestens einer sauerstoffhaltigen Gruppe substituierte Alkylenoxidgruppe, beispielsweise Ethylenoxidgruppe oder Propylenoxidgruppe, insbesondere Oligo-Alkylenoxidgruppe, beispielsweise Oligo-Ethylenoxidgruppe oder Oligo-Propylenoxidgruppe, und/oder eine, teilweise oder vollständig halogenierte, insbesondere fluorierte, und/oder mit mindestens einer positiv geladenen Gruppe, insbesondere auf der Basis eines Kations einer ionischen Flüssigkeit, beispielsweise mit mindestens einer quartären Ammoniumgruppe und/oder Phosphoniumgruppe, substituierte und/oder mit mindestens einer negativ geladenen Gruppe, insbesondere auf der Basis eines Leitsalzanions, beispielsweise Lithium-Leitsalzanions, und/oder eines Anions einer ionischen Flüssigkeit, beispielsweise mit mindestens einer Lithiumsulfonylimidgruppe und/oder Lithiumsulfonatgruppe, substituierte und/oder mit mindestens einer sauerstoffhaltigen Gruppe substituierte Alkoxygruppe, und/oder eine, teilweise oder vollständig halogenierte, insbesondere fluorierte, und/oder mit mindestens einer positiv geladenen Gruppe, insbesondere auf der Basis eines Kations einer ionischen Flüssigkeit, beispielsweise mit mindestens einer quartären Ammoniumgruppe und/oder Phosphoniumgruppe, substituierte und/oder mit mindestens einer negativ geladenen Gruppe, insbesondere auf der Basis eines Leitsalzanions, beispielsweise Lithium-Leitsalzanions, und/oder eines Anions einer ionischen Flüssigkeit, beispielsweise mit mindestens einer Lithiumsulfonylimidgruppe und/oder Lithiumsulfonatgruppe, substituierte und/oder mit mindestens einer sauerstoffhaltigen Gruppe substituierte Phenylenoxidgruppe, beispielsweise Oligo-Phenylenoxidgruppe, und/oder eine, teilweise oder vollständig halogenierte, insbesondere fluorierte, und/oder mit mindestens einer positiv geladenen Gruppe, insbesondere auf der Basis eines Kations einer ionischen Flüssigkeit, beispielsweise mit mindestens einer quartären Ammoniumgruppe und/oder Phosphoniumgruppe, substituierte und/oder mit mindestens einer negativ geladenen Gruppe, insbesondere auf der Basis eines Leitsalzanions, beispielsweise Lithium-Leitsalzanions, und/oder eines Anions einer ionischen Flüssigkeit, beispielsweise mit mindestens einer Lithiumsulfonylimidgruppe und/oder Lithiumsulfonatgruppe, substituierte und/oder mit mindestens einer sauerstoffhaltigen Gruppe substituierte Phenoxygruppe, und/oder eine, teilweise oder vollständig halogenierte, insbesondere fluorierte, und/oder mit mindestens einer positiv geladenen Gruppe, insbesondere auf der Basis eines Kations einer ionischen Flüssigkeit, beispielsweise mit mindestens einer quartären Ammoniumgruppe und/oder Phosphoniumgruppe, substituierte und/oder mit mindestens einer negativ geladenen Gruppe, insbesondere auf der Basis eines Leitsalzanions, beispielsweise Lithium-Leitsalzanions, und/oder eines Anions einer ionischen Flüssigkeit, beispielsweise mit mindestens einer Lithiumsulfonylimidgruppe und/oder Lithiumsulfonatgruppe, substituierte und/oder mit mindestens einer sauerstoffhaltigen Gruppe substituierte Phenylengruppe, beispielsweise Oligo-Phenylengruppe, und/oder eine, teilweise oder vollständig halogenierte, insbesondere fluorierte, und/oder mit mindestens einer positiv geladenen Gruppe, insbesondere auf der Basis eines Kations einer ionischen Flüssigkeit, beispielsweise mit mindestens einer quartären Ammoniumgruppe und/oder Phosphoniumgruppe, substituierte und/oder mit mindestens einer negativ geladenen Gruppe, insbesondere auf der Basis eines Leitsalzanions, beispielsweise Lithium-Leitsalzanions, und/oder eines Anions einer ionischen Flüssigkeit, beispielsweise mit mindestens einer Lithiumsulfonylimidgruppe und/oder Lithiumsulfonatgruppe, substituierte und/oder mit mindestens einer sauerstoffhaltigen Gruppe substituierte Phenylgruppe, und/oder eine, teilweise oder vollständig halogenierte, insbesondere fluorierte, und/oder mit mindestens einer positiv geladenen Gruppe, insbesondere auf der Basis eines Kations einer ionischen Flüssigkeit, beispielsweise mit mindestens einer quartären Ammoniumgruppe und/oder Phosphoniumgruppe, substituierte und/oder mit mindestens einer negativ geladenen Gruppe, insbesondere auf der Basis eines Leitsalzanions, beispielsweise Lithium-Leitsalzanions, und/oder eines Anions einer ionischen Flüssigkeit, beispielsweise mit mindestens einer Lithiumsulfonylimidgruppe und/oder Lithiumsulfonatgruppe, substituierte und/oder mit mindestens einer sauerstoffhaltigen Gruppe substituierte Benzylengruppe, beispielsweise Oligo-Benzylengruppe, und/oder eine, teilweise oder vollständig halogenierte, insbesondere fluorierte, und/oder mit mindestens einer positiv geladenen Gruppe, insbesondere auf der Basis eines Kations einer ionischen Flüssigkeit, beispielsweise mit mindestens einer quartären Ammoniumgruppe und/oder Phosphoniumgruppe, substituierte und/oder mit mindestens einer negativ geladenen Gruppe, insbesondere auf der Basis eines Leitsalzanions, beispielsweise Lithium-Leitsalzanions, und/oder eines Anions einer ionischen Flüssigkeit, beispielsweise mit mindestens einer Lithiumsulfonylimidgruppe und/oder Lithiumsulfonatgruppe, substituierte und/oder mit mindestens einer sauerstoffhaltigen Gruppe substituierte Benzylgruppe, und/oder eine Carbonylgruppe, insbesondere eine Ketongruppe, zum Beispiel Alkylcarbonylgruppe, und/oder eine, teilweise oder vollständig halogenierte, insbesondere fluorierte, und/oder mit mindestens einer positiv geladenen Gruppe, insbesondere auf der Basis eines Kations einer ionischen Flüssigkeit, beispielsweise mit mindestens einer quartären Ammoniumgruppe und/oder Phosphoniumgruppe, substituierte und/oder mit mindestens einer negativ geladenen Gruppe, insbesondere auf der Basis eines Leitsalzanions, beispielsweise Lithium-Leitsalzanions, und/oder eines Anions einer ionischen Flüssigkeit, beispielsweise mit mindestens einer Lithiumsulfonylimidgruppe und/oder Lithiumsulfonatgruppe, substituierte und/oder mit mindestens einer sauerstoffhaltigen Gruppe substituierte, insbesondere cyclische und/oder acyclische, Carbonatgruppe, und/oder eine, teilweise oder vollständig halogenierte, insbesondere fluorierte, und/oder mit mindestens einer positiv geladenen Gruppe, insbesondere auf der Basis eines Kations einer ionischen Flüssigkeit, beispielsweise mit mindestens einer quartären Ammoniumgruppe und/oder Phosphoniumgruppe, substituierte und/oder mit mindestens einer negativ geladenen Gruppe, insbesondere auf der Basis eines Leitsalzanions, beispielsweise Lithium-Leitsalzanions, und/oder eines Anions einer ionischen Flüssigkeit, beispielsweise mit mindestens einer Lithiumsulfonylimidgruppe und/oder Lithiumsulfonatgruppe, substituierte und/oder mit mindestens einer sauerstoffhaltigen Gruppe substituierte, insbesondere cyclische und/oder acyclische, Carbonsäureestergruppe, insbesondere eine Lactongruppe, und/oder eine, teilweise oder vollständig halogenierte, insbesondere fluorierte, und/oder mit mindestens einer positiv geladenen Gruppe, insbesondere auf der Basis eines Kations einer ionischen Flüssigkeit, beispielsweise mit mindestens einer quartären Ammoniumgruppe und/oder Phosphoniumgruppe, substituierte und/oder mit mindestens einer negativ geladenen Gruppe, insbesondere auf der Basis eines Leitsalzanions, beispielsweise Lithium-Leitsalzanions, und/oder eines Anions einer ionischen Flüssigkeit, beispielsweise mit mindestens einer Lithiumsulfonylimidgruppe und/oder Lithiumsulfonatgruppe, substituierte und/oder mit mindestens einer sauerstoffhaltigen Gruppe substituierte, insbesondere cyclische und/oder acyclische, Carbamatgruppe stehen.

R12 beziehungsweise R20, R21 und/oder R21 beziehungsweise R31 beziehungsweise R40 beziehungsweise R50 beziehungsweise R60, R61 und/oder R62 beziehungsweise R132 beziehungsweise R140 beziehungsweise R160 beziehungsweise R170 können daher insbesondere jeweils unabhängig voneinander für eine, teilweise oder vollständig halogenierte, insbesondere fluorierte, und/oder mit mindestens einer positiv geladenen Gruppe, insbesondere auf der Basis eines Kations einer ionischen Flüssigkeit, beispielsweise mit mindestens einer quartären Ammoniumgruppe und/oder Phosphoniumgruppe, substituierte und/oder mit mindestens einer negativ geladenen Gruppe, insbesondere auf der Basis eines Leitsalzanions, beispielsweise Lithium-Leitsalzanions, und/oder eines Anions einer ionischen Flüssigkeit, beispielsweise mit mindestens einer Lithiumsulfonylimidgruppe und/oder Lithiumsulfonatgruppe, substituierte und/oder mit mindestens einer sauerstoffhaltigen Gruppe substituierte Alkylgruppe, und/oder eine, teilweise oder vollständig halogenierte, insbesondere fluorierte, und/oder mit mindestens einer positiv geladenen Gruppe, insbesondere auf der Basis eines Kations einer ionischen Flüssigkeit, beispielsweise mit mindestens einer quartären Ammoniumgruppe und/oder Phosphoniumgruppe, substituierte und/oder mit mindestens einer negativ geladenen Gruppe, insbesondere auf der Basis eines Leitsalzanions, beispielsweise Lithium-Leitsalzanions, und/oder eines Anions einer ionischen Flüssigkeit, beispielsweise mit mindestens einer Lithiumsulfonylimidgruppe und/oder Lithiumsulfonatgruppe, substituierte und/oder mit mindestens einer sauerstoffhaltigen Gruppe substituierte Alkylenoxidgruppe, beispielsweise Ethylenoxidgruppe oder Propylenoxidgruppe, insbesondere Oligo-Alkylenoxidgruppe, beispielsweise Oligo-Ethylenoxidgruppe oder Oligo-Propylenoxidgruppe, und/oder eine, teilweise oder vollständig halogenierte, insbesondere fluorierte, und/oder mit mindestens einer positiv geladenen Gruppe, insbesondere auf der Basis eines Kations einer ionischen Flüssigkeit, beispielsweise mit mindestens einer quartären Ammoniumgruppe und/oder Phosphoniumgruppe, substituierte und/oder mit mindestens einer negativ geladenen Gruppe, insbesondere auf der Basis eines Leitsalzanions, beispielsweise Lithium-Leitsalzanions, und/oder eines Anions einer ionischen Flüssigkeit, beispielsweise mit mindestens einer Lithiumsulfonylimidgruppe und/oder Lithiumsulfonatgruppe, substituierte und/oder mit mindestens einer sauerstoffhaltigen Gruppe substituierte Alkoxygruppe und/oder eine, teilweise oder vollständig halogenierte, insbesondere fluorierte, und/oder mit mindestens einer positiv geladenen Gruppe, insbesondere auf der Basis eines Kations einer ionischen Flüssigkeit, beispielsweise mit mindestens einer quartären Ammoniumgruppe und/oder Phosphoniumgruppe, substituierte und/oder mit mindestens einer negativ geladenen Gruppe, insbesondere auf der Basis eines Leitsalzanions, beispielsweise Lithium-Leitsalzanions, und/oder eines Anions einer ionischen Flüssigkeit, beispielsweise mit mindestens einer Lithiumsulfonylimidgruppe und/oder Lithiumsulfonatgruppe, substituierte und/oder mit mindestens einer sauerstoffhaltigen Gruppe substituierte Phenylenoxidgruppe, beispielsweise Oligo-Phenylenoxidgruppe, und/oder eine, teilweise oder vollständig halogenierte, insbesondere fluorierte, und/oder mit mindestens einer positiv geladenen Gruppe, insbesondere auf der Basis eines Kations einer ionischen Flüssigkeit, beispielsweise mit mindestens einer quartären Ammoniumgruppe und/oder Phosphoniumgruppe, substituierte und/oder mit mindestens einer negativ geladenen Gruppe, insbesondere auf der Basis eines Leitsalzanions, beispielsweise Lithium-Leitsalzanions, und/oder eines Anions einer ionischen Flüssigkeit, beispielsweise mit mindestens einer Lithiumsulfonylimidgruppe und/oder Lithiumsulfonatgruppe, substituierte und/oder mit mindestens einer sauerstoffhaltigen Gruppe substituierte Phenoxygruppe, und/oder eine, teilweise oder vollständig halogenierte, insbesondere fluorierte, und/oder mit mindestens einer positiv geladenen Gruppe, insbesondere auf der Basis eines Kations einer ionischen Flüssigkeit, beispielsweise mit mindestens einer quartären Ammoniumgruppe und/oder Phosphoniumgruppe, substituierte und/oder mit mindestens einer negativ geladenen Gruppe, insbesondere auf der Basis eines Leitsalzanions, beispielsweise Lithium-Leitsalzanions, und/oder eines Anions einer ionischen Flüssigkeit, beispielsweise mit mindestens einer Lithiumsulfonylimidgruppe und/oder Lithiumsulfonatgruppe, substituierte und/oder mit mindestens einer sauerstoffhaltigen Gruppe substituierte Phenylengruppe, beispielsweise Oligo-Phenylengruppe, und/oder eine, teilweise oder vollständig halogenierte, insbesondere fluorierte, und/oder mit mindestens einer positiv geladenen Gruppe, insbesondere auf der Basis eines Kations einer ionischen Flüssigkeit, beispielsweise mit mindestens einer quartären Ammoniumgruppe und/oder Phosphoniumgruppe, substituierte und/oder mit mindestens einer negativ geladenen Gruppe, insbesondere auf der Basis eines Leitsalzanions, beispielsweise Lithium-Leitsalzanions, und/oder eines Anions einer ionischen Flüssigkeit, beispielsweise mit mindestens einer Lithiumsulfonylimidgruppe und/oder Lithiumsulfonatgruppe, substituierte und/oder mit mindestens einer sauerstoffhaltigen Gruppe substituierte Phenylgruppe und/oder eine, teilweise oder vollständig halogenierte, insbesondere fluorierte, und/oder mit mindestens einer positiv geladenen Gruppe, insbesondere auf der Basis eines Kations einer ionischen Flüssigkeit, beispielsweise mit mindestens einer quartären Ammoniumgruppe und/oder Phosphoniumgruppe, substituierte und/oder mit mindestens einer negativ geladenen Gruppe, insbesondere auf der Basis eines Leitsalzanions, beispielsweise Lithium-Leitsalzanions, und/oder eines Anions einer ionischen Flüssigkeit, beispielsweise mit mindestens einer Lithiumsulfonylimidgruppe und/oder Lithiumsulfonatgruppe, substituierte und/oder mit mindestens einer sauerstoffhaltigen Gruppe substituierte Benzylengruppe, beispielsweise Oligo-Benzylengruppe, und/oder eine, teilweise oder vollständig halogenierte, insbesondere fluorierte, und/oder mit mindestens einer positiv geladenen Gruppe, insbesondere auf der Basis eines Kations einer ionischen Flüssigkeit, beispielsweise mit mindestens einer quartären Ammoniumgruppe und/oder Phosphoniumgruppe, substituierte und/oder mit mindestens einer negativ geladenen Gruppe, insbesondere auf der Basis eines Leitsalzanions, beispielsweise Lithium-Leitsalzanions, und/oder eines Anions einer ionischen Flüssigkeit, beispielsweise mit mindestens einer Lithiumsulfonylimidgruppe und/oder Lithiumsulfonatgruppe, substituierte Benzylgruppe, und/oder eine Carbonylgruppe, insbesondere eine Ketongruppe, zum Beispiel Alkylcarbonylgruppe, und/oder eine, teilweise oder vollständig halogenierte, insbesondere fluorierte, und/oder mit mindestens einer positiv geladenen Gruppe, insbesondere auf der Basis eines Kations einer ionischen Flüssigkeit, beispielsweise mit mindestens einer quartären Ammoniumgruppe und/oder Phosphoniumgruppe, substituierte und/oder mit mindestens einer negativ geladenen Gruppe, insbesondere auf der Basis eines Leitsalzanions, beispielsweise Lithium-Leitsalzanions, und/oder eines Anions einer ionischen Flüssigkeit, beispielsweise mit mindestens einer Lithiumsulfonylimidgruppe und/oder Lithiumsulfonatgruppe, substituierte und/oder mit mindestens einer sauerstoffhaltigen Gruppe substituierte, insbesondere cyclische und/oder acyclische, Carbonatgruppe, und/oder eine, teilweise oder vollständig halogenierte, insbesondere fluorierte, und/oder mit mindestens einer positiv geladenen Gruppe, insbesondere auf der Basis eines Kations einer ionischen Flüssigkeit, beispielsweise mit mindestens einer quartären Ammoniumgruppe und/oder Phosphoniumgruppe, substituierte und/oder mit mindestens einer negativ geladenen Gruppe, insbesondere auf der Basis eines Leitsalzanions, beispielsweise Lithium-Leitsalzanions, und/oder eines Anions einer ionischen Flüssigkeit, beispielsweise mit mindestens einer Lithiumsulfonylimidgruppe und/oder Lithiumsulfonatgruppe, substituierte und/oder mit mindestens einer sauerstoffhaltigen Gruppe substituierte, insbesondere cyclische und/oder acyclische, Carbonsäureestergruppe, insbesondere eine Lactongruppe, und/oder eine, teilweise oder vollständig halogenierte, insbesondere fluorierte, und/oder mit mindestens einer positiv geladenen Gruppe, insbesondere auf der Basis eines Kations einer ionischen Flüssigkeit, beispielsweise mit mindestens einer quartären Ammoniumgruppe und/oder Phosphoniumgruppe, substituierte und/oder mit mindestens einer negativ geladenen Gruppe, insbesondere auf der Basis eines Leitsalzanions, beispielsweise Lithium-Leitsalzanions, und/oder eines Anions einer ionischen Flüssigkeit, beispielsweise mit mindestens einer Lithiumsulfonylimidgruppe und/oder Lithiumsulfonatgruppe, substituierte und/oder mit mindestens einer sauerstoffhaltigen Gruppe substituierte, insbesondere cyclische und/oder acyclische, Carbamatgruppe stehen.

Zum Beispiel können R100, R101 und/oder R101' beziehungsweise R110, R111, R111', R112 und/oder R112' beziehungsweise R120, R120', R121 und/oder R121' beziehungsweise R130, R130', R131 und/oder R131' beziehungsweise R150 beziehungsweise R180, R180' R181, R181' und/oder R182 beziehungsweise R10, R11, R13 und/oder R14 beziehungsweise R30, R32 und/oder R33 beziehungsweise R41, R41', R42, R42', R43, R43', R44, R44', R45 und/oder R45' beziehungsweise R51, R51', R52, R52', R53, R53', R54 und/oder R54' beziehungsweise R200, R201, R202 und/oder R203 beziehungsweise R210, R211, R212, 213 und/oder R214 jeweils unabhängig voneinander für Wasserstoff und/oder ein Halogenatom, insbesondere Fluor, oder eine Alkylgruppe und/oder eine Alkylenoxidgruppe, insbesondere Oligo-Alkylenoxidgruppe, und/oder eine Alkoxygruppe und/oder eine Phenylenoxidgruppe, insbesondere Oligo-Phenylenoxidgruppe, und/oder eine Phenoxygruppe und/oder eine Phenylengruppe, insbesondere Oligo-Phenylengruppe, und/oder eine Phenylgruppe und/oder eine Benzylengruppe, insbesondere Oligo-Benzylengruppe, und/oder eine Benzylgruppe und/oder eine Carbonylgruppe und/oder eine, insbesondere cyclische und/oder acyclische, Carbonatgruppe, und/oder eine, insbesondere cyclische und/oder acyclische, Carbonsäureestergruppe, insbesondere eine Lactongruppe, und/oder eine, insbesondere cyclische und/oder acyclische, Carbamatgruppe und/oder eine geladene Gruppe, beispielsweise eine positiv geladene Gruppe, insbesondere auf der Basis eines Kations einer ionischen Flüssigkeit, beispielsweise eine quartäre Ammoniumgruppe und/oder eine quartäre Phosphoniumgruppe, und/oder eine negativ geladene Gruppe, insbesondere auf der Basis eines Leitsalzanions, beispielsweise Lithium-Leitsalzanions, und/oder eines Anions einer ionischen Flüssigkeit, und/oder eine Sulfonatgruppe, beispielsweise eine Lithiumsulfonylimidgruppe und/oder Lithiumsulfonatgruppe, stehen.

Dabei können R132 beziehungsweise R140 beziehungsweise R160 beziehungsweise R170 beziehungsweise R12 beziehungsweise R20, R21 und R22 beziehungsweise R31 beziehungsweise R40 beziehungsweise R50 beziehungsweise R60, R61 und R62 jeweils unabhängig voneinander für eine Alkylgruppe und/oder eine Alkylenoxidgruppe, insbesondere Oligo-Alkylenoxidgruppe, und/oder eine Alkoxygruppe und/oder eine Phenylenoxidgruppe, insbesondere Oligo-Phenylenoxidgruppe, und/oder eine Phenoxygruppe und/oder eine Phenylengruppe, insbesondere Oligo-Phenylengruppe, und/oder eine Phenylgruppe und/oder eine Benzylengruppe, insbesondere Oligo-Benzylengruppe, und/oder eine Benzylgruppe und/oder eine Carbonylgruppe und/oder eine, insbesondere cyclische und/oder acyclische, Carbonatgruppe und/oder eine, insbesondere cyclische und/oder acyclische, Carbonsäureestergruppe und/oder eine, insbesondere cyclische und/oder acyclische, Carbamatgruppe stehen.

Im Rahmen einer speziellen Ausführungsform umfasst das Polymer beziehungsweise der Polymerelektrolyt beziehungsweise das mindestens eine Polymer, insbesondere des Kathodenmaterials, mindestens eine, auf einem cyclischen Carbonat basierende Wiederholungseinheit der allgemeinen chemischen Formel:

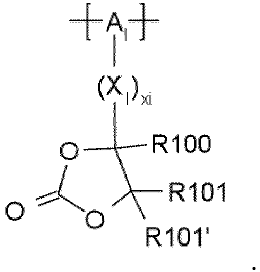

Im Rahmen einer weiteren, alternativen oder zusätzlichen, speziellen Ausführungsform umfasst das Polymer beziehungsweise der Polymerelektrolyt beziehungsweise das mindestens eine Polymer, insbesondere des Kathodenmaterials, mindestens eine, auf einem Lacton basierende Wiederholungseinheit der allgemeinen chemischen Formel: 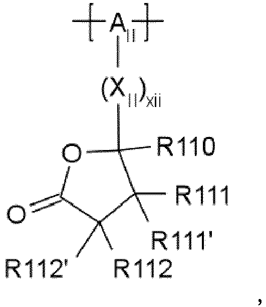 beispielsweise

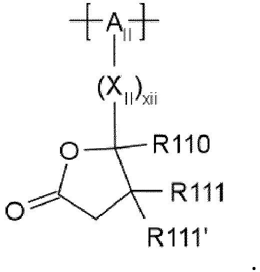

Im Rahmen einer weiteren, alternativen oder zusätzlichen, speziellen Ausführungsform umfasst das Polymer beziehungsweise der Polymerelektrolyt beziehungsweise das mindestens eine Polymer, insbesondere des Kathodenmaterials, mindestens eine, auf einem cyclischen Carbamat basierende Wiederholungseinheit der allgemeinen chemischen Formel:

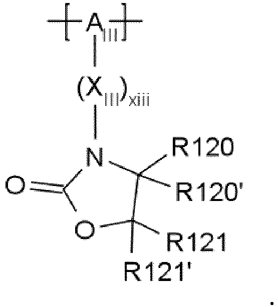

Im Rahmen einer weiteren, alternativen oder zusätzlichen, speziellen Ausführungsform umfasst das Polymer beziehungsweise der Polymerelektrolyt beziehungsweise das mindestens eine Polymer, insbesondere des Kathodenmaterials, mindestens eine, auf einem Alkylenoxid, insbesondere Ethylenoxid, basierende Wiederholungseinheit der allgemeinen chemischen Formel:

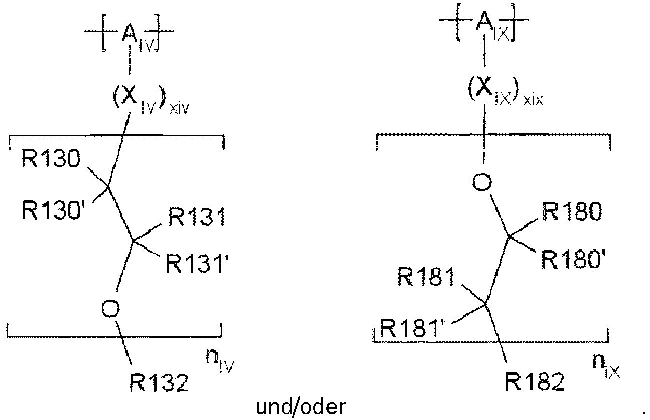

Dabei steht n_{IV} beziehungsweise n_{IX} für die Anzahl der Ethylenoxideinheiten. Zum Beispiel kann 1 ≤ n_{IV} ≤ 15, beispielsweise 2 ≤ n_{IV} ≤ 6, beziehungsweise 1 ≤ n_{IX} ≤ 15, beispielsweise 2 ≤ n_{IX} ≤ 6, sein.

Im Rahmen einer weiteren, alternativen oder zusätzlichen, speziellen Ausführungsform umfasst das Polymer beziehungsweise der Polymerelektrolyt beziehungsweise das mindestens eine Polymer, insbesondere des Kathodenmaterials, mindestens eine, auf einem acyclischen Carbonat basierende Wiederholungseinheit der allgemeinen chemischen Formel:

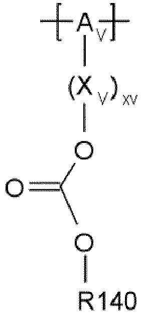

Im Rahmen einer weiteren, alternativen oder zusätzlichen, speziellen Ausführungsform umfasst das Polymer beziehungsweise der Polymerelektrolyt beziehungsweise das mindestens eine Polymer, insbesondere des Kathodenmaterials, mindestens eine, auf einem acyclischen Carbonsäureester basierende Wiederholungseinheit der allgemeinen chemischen Formel:

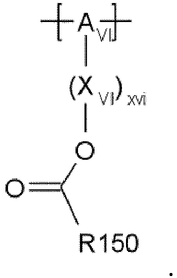

Im Rahmen einer weiteren, alternativen oder zusätzlichen, speziellen Ausführungsform umfasst das Polymer beziehungsweise der Polymerelektrolyt beziehungsweise das mindestens eine Polymer, insbesondere des Kathodenmaterials, mindestens eine, auf einem acyclischen Carbamat basierende Wiederholungseinheit der allgemeinen chemischen Formel:

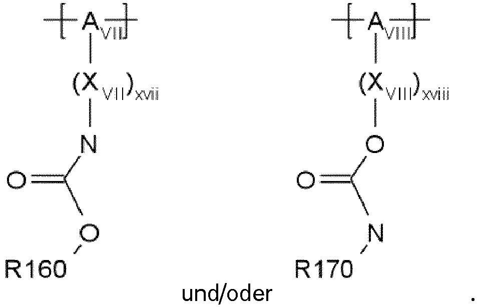

Dabei steht -[A_{I}]-, -[A_{II}]-, -[A_{III}]-, -[A_{IV}]-, -[A_{V}]-, -[A_{VI}]-, -[A_{VII}]-, -[A_{VIII}]-beziehungsweise -[A_{IX}]- insbesondere für eine Polymerrücken bildende Einheit. (X_{I}), (X_{II}), (X_{III}), (X_{IV}), (X_{V}), (X_{VI}), (X_{VII}), (X_{VIII}) beziehungsweise (X_{IX}) steht dabei insbesondere für einen Spacer. xi, xii, xiii, xiv, xv, xvi, xvii, xviii beziehungsweise xix steht dabei für die Anzahl, insbesondere das Vorhandensein beziehungsweise die Abwesenheit, des (jeweiligen) Spacers. Insbesondere kann dabei xi, xii, xiii, xiv, xv, xvi, xvii, xviii beziehungsweise xix 1 oder 0, beispielsweise 1, sein.

Die Polymerrücken bildende Einheit -[A_{I}]-, -[A_{II}]-, -[A_{III}]-, -[A_{IV}]-, -[A_{V}]-, -[A_{VI}]-, - [A_{VII}]-, -[A_{VIII}]- beziehungsweise -[A_{IX}]- kann beispielsweise wie im Zusammenhang mit der Polymerrücken bildenden Einheit -[A]- erläutert ausgestaltet sein. Der Spacer (X_{I}), (X_{II}), (X_{III}), (X_{IV}), (X_{V}), (X_{VI}), (X_{VII}), (X_{VIII}) beziehungsweise (X_{IX}) kann beispielsweise wie im Zusammenhang mit dem Spacer X erläutert ausgestaltet sein. R100, R101, R101', R110, R111, R111', R112, R112', R120, R120', R121, R121', R130, R130', R131, R131', R132, R140, R150, R160 R180, R180' R181, R181', R182 und/oder R170 können beispielsweise ebenfalls wie vorstehend erläutert ausgestaltet sein.

X_{I} beziehungsweise X_{II} beziehungsweise X_{III} beziehungsweise X_{IV} beziehungsweise X_{V} beziehungsweise X_{VI} beziehungsweise X_{VII} beziehungsweise X_{VIII} beziehungsweise X_{IX} kann dabei beispielsweise für einen, insbesondere gesättigten oder ungesättigten, linearen oder verzweigten, beispielsweise teilweise oder vollständig halogenierten, insbesondere fluorierten, Alkylenspacer, beispielsweise der allgemeinen chemischen Formel: -(CH₂)ₐ₁- mit 1 ≤ a1 ≤ 10, zum Beispiel mit 1 ≤ a1 ≤ 4, und/oder einen, insbesondere gesättigten oder ungesättigten, linearen oder verzweigten, beispielsweise teilweise oder vollständig halogenierten, insbesondere fluorierten, Alkylenoxidspacer, beispielsweise Oligo-Alkylenoxidspacer, insbesondere (Oligo-)Ethylenoxidspacer, insbesondere mit ≥ 1 oder ≥ 2 bis ≤ 10 Wiederholungseinheiten, beispielsweise mit ≥ 1 oder ≥ 2 bis ≤ 4 Wiederholungseinheiten, zum Beispiel der allgemeinen chemischen Formel:-CH₂-[CH₂-CH₂-O]_{b1}-CH₂- mit 1 ≤ b1 ≤ 10, beispielsweise mit 2 ≤ b1 ≤ 4, und/oder der allgemeinen chemischen Formel: -[CH₂-CH₂-O-]_{b} mit 1 ≤ b ≤ 10, beispielsweise mit 2 ≤ b ≤ 4, und/oder -(CH₂)ₐ₂-O-[CH₂-CH₂-O-]_{b2}-(CH₂)_{a2'}- mit 1 ≤ a2 ≤ 3, 1 ≤ b2 ≤ 10, insbesondere 1 ≤ b2 ≤ 4, und 1 ≤ a2' ≤ 3, und/oder eine geladene Gruppe, beispielsweise eine positiv geladene Gruppe, insbesondere auf der Basis eines Kations einer ionischen Flüssigkeit, zum Beispiel eine Pyridiniumgruppe und/oder eine quartäre Ammoniumgruppe, und/oder eine negativ geladene Gruppe, zum Beispiel eine Sulfonylimidgruppe und/oder Sulfonatgruppe, und/oder eine Phenylengruppe, beispielsweise eine, mit mindestens einer Alkylgruppe und/oder einer Alkylenoxidgruppe und/oder einer Alkoxygruppe und/oder einer geladenen Gruppe, beispielsweise einer positiv geladenen Gruppe, zum Beispiel einer quartären Ammoniumgruppe, und/oder einer negativ geladenen Gruppe, zum Beispiel einer Sulfonylimidgruppe und/oder Sulfonatgruppe, substituierte Phenylengruppe, und/oder eine Benzylengruppe, beispielsweise eine, mit mindestens einer Alkylgruppe und/oder einer Alkylenoxidgruppe und/oder einer Alkoxygruppe und/oder einer geladenen Gruppe, beispielsweise einer positiv geladenen Gruppe, insbesondere auf der Basis eines Kations einer ionischen Flüssigkeit, zum Beispiel einer quartären Ammoniumgruppe, und/oder einer negativ geladenen Gruppe, zum Beispiel einer Sulfonylimidgruppe und/oder Sulfonatgruppe, substituierte Benzylengruppe, und/oder eine Ketongruppe, beispielsweise Alkylcarbonylgruppe, steht.

R100, R101 und/oder R101 beziehungsweise R110, R111, R111', R112 und/oder R112' beziehungsweise R120, R120', R121 und/oder R121' beziehungsweise R130, R130', R131, R131' und/oder R132 beziehungsweise R140 beziehungsweise R150 beziehungsweise R160 beziehungsweise R170 beziehungsweise R180, R180' R181, R181' und/oder R182 können dabei beispielsweise jeweils unabhängig voneinander für Wasserstoff oder eine, insbesondere gesättigte oder ungesättigte, lineare oder verzweigte, beispielsweise teilweise oder vollständig halogenierte, insbesondere fluorierte, Alkylgruppe, beispielsweise der allgemeinen chemischen Formel: -(CH₂)_{a1*}-CH₃ mit 0 ≤ oder 1 ≤ a1* ≤ 10, zum Beispiel mit 0 ≤ oder 1 ≤ a1* ≤ 3, und/oder eine, insbesondere gesättigte oder ungesättigte, lineare oder verzweigte, beispielsweise teilweise oder vollständig halogenierte, insbesondere fluorierte, Alkylenoxidgruppe, beispielsweise eine Ethylenoxidgruppe, insbesondere eine Oligo-Alkylenoxidgruppe, zum Beispiel eine Oligo-Ethylenoxidgruppe, insbesondere mit ≥ 1 bis ≤ 10 Wiederholungseinheiten, beispielsweise mit ≥ 1 oder ≥ 2 bis ≤ 5 Wiederholungseinheiten, und/oder eine geladene Gruppe, beispielsweise eine positiv geladene Gruppe, insbesondere auf der Basis eines Kations einer ionischen Flüssigkeit, zum Beispiel eine Pyridiniumgruppe und/oder eine quartäre Ammoniumgruppe, und/oder eine negativ geladene Gruppe, zum Beispiel eine Sulfonylimidgruppe und/oder Sulfonatgruppe, und/oder eine Phenylengruppe, beispielsweise eine, mit mindestens einer Alkylgruppe und/oder einer Alkylenoxidgruppe und/oder einer Alkoxygruppe und/oder einer geladenen Gruppe, beispielsweise einer positiv geladenen Gruppe, zum Beispiel einer quartären Ammoniumgruppe, und/oder einer negativ geladenen Gruppe, zum Beispiel einer Sulfonylimidgruppe und/oder Sulfonatgruppe, substituierte Phenylengruppe, und/oder eine Benzylengruppe, beispielsweise eine, mit mindestens einer Alkylgruppe und/oder einer Alkylenoxidgruppe und/oder einer Alkoxygruppe und/oder einer geladenen Gruppe, beispielsweise einer positiv geladenen Gruppe, zum Beispiel einer quartären Ammoniumgruppe, und/oder einer negativ geladenen Gruppe, zum Beispiel einer Sulfonylimidgruppe und/oder Sulfonatgruppe, substituierte Benzylengruppe, und/oder eine Ketongruppe, beispielsweise Alkylcarbonylgruppe, stehen.

Dabei können zum Beispiel zumindest zwei der Reste R100, R101 und/oder R101 beziehungsweise R110, R111, R111', R112 und/oder R112' beziehungsweise R120, R120', R121 und/oder R121' beziehungsweise R130, R130', R131, R131' und/oder R132 beziehungsweise R140 beziehungsweise R150 beziehungsweise R160 beziehungsweise R170 beziehungsweise R180, R180' R181, R181' und/oder R182 - gegebenenfalls alle Reste R100, R101 und/oder R101 beziehungsweise R110, R111, R111', R112 und/oder R112' beziehungsweise R120, R120', R121 und/oder R121' beziehungsweise R130, R130', R131, R131' und/oder R132 beziehungsweise R140 beziehungsweise R150 beziehungsweise R160 beziehungsweise R170 beziehungsweise R180, R180' R181, R181' und/oder R182 - für unterschiedliche Gruppen, beispielsweise Alkylgruppen und/oder Oligo-Alkylenoxidgruppen, zum Beispiel mit unterschiedlicher Länge und/oder Substitution und/oder Sättigungsgrad und/oder Verzweigungsgrad und/oder Halogenierungsgrad, insbesondere Fluorierungsgrad, stehen. Insbesondere können R100, R101 und/oder R101 beziehungsweise R110, R111, R111', R112 und/oder R112' beziehungsweise R120, R120', R121 und/oder R121' beziehungsweise R130, R130', R131, R131' und/oder R132 beziehungsweise R140 beziehungsweise R150 beziehungsweise R160 beziehungsweise R170 beziehungsweise R180, R180' R181, R181' und/oder R182 jeweils unabhängig voneinander für Wasserstoff oder eine Methylgruppe oder eine Ethylgruppe oder eine, insbesondere gesättigte, Alkylgruppe mit einer Kettenlänge von ≥ 1 bis ≤ 10 Kohlenstoffatomen, beispielsweise von ≥ 3 bis ≤ 5 Kohlenstoffatomen, stehen.

R132 beziehungsweise R140 beziehungsweise R150 beziehungsweise R160 beziehungsweise R170 kann insbesondere für eine Alkylgruppe, beispielsweise eine Methylgruppe oder Ethylgruppe, insbesondere eine Methylgruppe, und/oder eine Alkylenoxidgruppe, insbesondere Oligo-Alkylenoxidgruppe, stehen. Durch eine kurzkettige Alkylgruppe, wie eine Methylgruppe, kann vorteilhafterweise das Polymer hinsichtlich seiner ionenleitenden Funktion optimiert werden.

Insbesondere kann R132 beziehungsweise R140 beziehungsweise R150 beziehungsweise R160 beziehungsweise R170 für eine Methylgruppe stehen.

Insbesondere kann die Polymerrücken bildende Einheit -[A_{I}]-, -[A_{II}]-, -[A_{III}]-, -[A_{IV}]-, -[A_{V}]-, -[A_{VI}]-, -[A_{VII}]-, -[A_{VIII}]-, -[A_{IX}]-, -[AJ-, -[A_{b}]-, -[A_{c}]-, -[A_{d}]-, -[Aₑ]-, -[A_{f}]-, -[A_{Z}]-beziehungsweise -[A_{Z1}]- beziehungsweise die Wiederholungseinheit ([A]-X-Q), eine Methacrylat-Einheit, zum Beispiel der allgemeinen chemischen Formel: 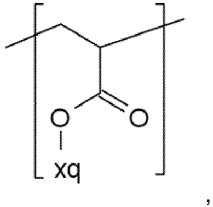 und/oder eine Methylmethacrylat-Einheit, zum Beispiel der allgemeinen chemischen Formel: 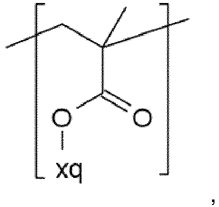 und/oder eine Siloxan-Einheit, zum Beispiel der allgemeinen Formel: 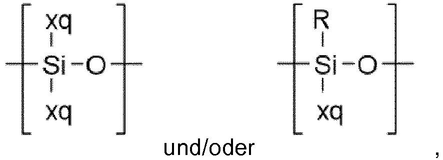 insbesondere wobei R für eine Alkylgruppe, beispielsweise für eine Methyl-, Ethyl- und/oder Propyl-Gruppe, zum Beispiel eine Methylgruppe, steht, zum Beispiel der allgemeinen chemischen Formel:
zum Beispiel der allgemeinen Formel: 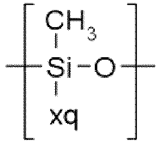 und/oder eine Phosphazen-Einheit, zum Beispiel der allgemeinen chemischen Formel:, 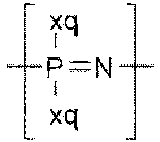 und/oder 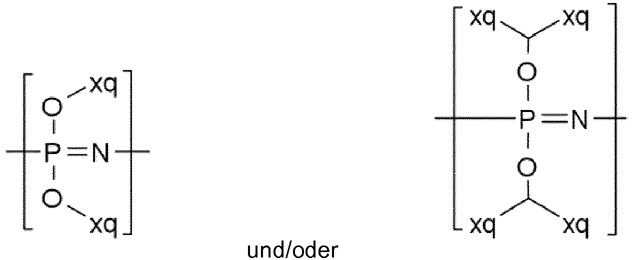 und/oder 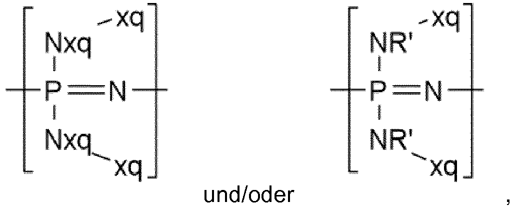 insbesondere wobei R' für Wasserstoff oder (vorzugsweise) für eine Alkylgruppe, beispielsweise für eine Methyl-, Ethyl- und/oder Propyl-Gruppe, zum Beispiel eine Methylgruppe, steht, und/oder eine Siloxan-Alkylenoxid-Einheit, beispielsweise eine Siloxan-Ethylenoxid-Einheit, zum Beispiel der allgemeinen chemischen Formel: 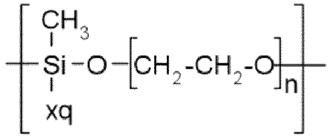 umfassen oder sein, insbesondere wobei xq die Anbindungsstelle/n kennzeichnet beziehungsweise für XQ steht. Durch Polysiloxane, Polyphosphazene und/oder Polymere aus Siloxan-Alkylenoxid-Einheiten können vorteilhafterweise niedrige Glasübergangstemperaturen erzielt werden. Polymethacrylate und/oder Polymethylmethacrylate können vorteilhafterweise vergleichsweise einfach synthetisch zugänglich sein.

Die Polymerrücken bildende Einheit -[A]-, -[A_{I}]-, -[A_{II}]-, -[A_{III}]-, -[A_{IV}]-, -[A_{V}]-, -[A_{VI}]-, -[A_{VII}]-, -[A_{VIII}]-, -[A_{IX}]-, -[Aₐ]-, -[A_{b}]-, -[A_{c}]-, -[A_{d}]-, -[Aₑ]-, -[A_{f}]-, -[A_{Z}]-beziehungsweise -[A_{Z1}]- kann beispielsweise für eine Alkylenoxid-Einheit, beispielsweise eine Ethylenoxid-Einheit und/oder eine Propylenoxid-Einheit, insbesondere für eine Ethylenoxid-Einheit, und/oder eine Alkylen-Einheit und/oder eine, eine Carbonatgruppe umfassende Einheit und/oder eine Methacrylat-Einheit und/oder eine Methylmethacrylat-Einheit und/oder eine Siloxan-Einheit und/oder eine Phosphazen-Einheit und/oder eine Phenylen-Einheit, beispielsweise eine Phenylenoxid-Einheit, und/oder eine Benzylen-Einheit stehen. Beispielsweise kann die Polymerrücken bildende Einheit -[A]-, - [A_{I}]-, -[A_{II}]-, -[A_{III}]-, -[A_{IV}]-, -[A_{V}]-, -[A_{VI}]-, -[A_{VII}]-, -[A_{VIII}]-, -[A_{IX}]-, -[Aₐ]-, -[A_{b}]-, -[A_{c}]-, - [A_{d}]-, -[Aₑ]-, -[A_{f}]-, -[A_{Z}]- beziehungsweise -[A_{Z1}]- für eine Alkylenoxid-Einheit, beispielsweise eine Ethylenoxid-Einheit und/oder eine Propylenoxid-Einheit, insbesondere für eine Ethylenoxid-Einheit, und/oder eine Alkylen-Einheit und/oder eine, eine Carbonatgruppe umfassende Einheit und/oder eine Methacrylat-Einheit und/oder eine Methylmethacrylat-Einheit und/oder eine Siloxan-Einheit und/oder eine Phosphazen-Einheit und/oder eine Phenylen-Einheit, beispielsweise eine Phenylenoxid-Einheit, stehen. Insbesondere kann die Polymerrücken bildende Einheit -[A]-, -[A_{I}]-, -[A_{II}]-, -[A_{III}]-, -[A_{IV}]-, -[A_{V}]-, -[A_{VI}]-, -[A_{VII}]-, -[A_{VIII}]-, -[A_{IX}]-, -[Aₐ]-, -[A_{b}]-, -[A_{c}]-, -[A_{d}]-, -[Aₑ]-, -[A_{f}]-, -[A_{Z}]-beziehungsweise -[A_{Z1}]- für eine Siloxan-Einheit und/oder eine Phosphazen-Einheit und/oder eine Methacrylat-Einheit und/oder eine Methylmethacrylat-Einheit und/oder eine Phenylen-Einheit, beispielsweise eine Siloxan-Einheit, stehen. Beispielsweise kann die Polymerrücken bildende Einheit -[A]-, -[A_{I}]-,-[A_{II}]-, -[A_{III}]-, -[A_{IV}]-, -[A_{V}]-, -[A_{VI}]-, -[A_{VII}]-, -[A_{VIII}]-, -[A_{IX}]-, -[Aₐ]-, -[A_{b}]-, -[A_{c}]-, -[A_{d}]-,-[Aₑ]-, -[A_{f}]-, -[A_{Z}]- beziehungsweise -[A_{Z1}]- für eine Siloxan-Einheit und/oder eine Phosphazen-Einheit und/oder eine Methacrylat-Einheit und/oder eine Methylmethacrylat-Einheit stehen

Im Rahmen einer weiteren Ausführungsform steht die Polymerrücken bildende Einheit -[A]-, -[A_{I}]-, -[Aₐ]-, -[A_{III}]-, -[A_{IV}]-, -[A_{V}]-, -[A_{VI}]-, -[A_{VII}]-, -[A_{VIII}]-, -[A_{IX}]-, -[Aₐ]-,-[A_{b}]-, -[A_{c}]-, -[A_{d}]-, -[Aₑ]-, -[A_{f}]-, -[A_{Z}]- beziehungsweise -[A_{Z1}]- für eine polyfunktionalisierte, beispielsweise bifunktionalisierte, trifunktionalisierten oder tetrafunktionalisierten, Polymerrücken bildende Einheit. Beispielsweise kann die Polymerrücken bildende Einheit -[A]-, -[A_{I}]-, -[A_{II}]-, -[A_{III}]-, -[A_{IV}]-, -[A_{V}]-, -[A_{VI}]-,-[A_{VII}]-, -[A_{VIII}]-, -[A_{IX}]-, -[Aₐ]-, -[A_{b}]-, -[A_{c}]-, -[A_{d}]-, -[Aₑ]-, -[A_{f}]-, -[A_{Z}]-beziehungsweise -[A_{Z1}]- für zumindest eine polyfunktionalisierte, beispielsweise bifunktionalisierte, Siloxan-Einheit und/oder eine polyfunktionalisierte, beispielsweise bifunktionalisierte oder tetrafunktionalisierte, Phosphazen-Einheit und/oder polyfunktionalisierte, beispielsweise bifunktionalisierte, Phenylen-Einheit, stehen.

Im Rahmen einer speziellen Ausgestaltung dieser Ausführungsform steht die Polymerrücken bildende Einheit -[A]-, -[A_{I}]-, -[A_{II}]-, -[A_{III}]-, -[A_{IV}]-, -[A_{V}]-, -[A_{VI}]-,-[A_{VII}]-, -[A_{VIII}]-, -[A_{IX}]-, -[Aₐ]-, -[A_{b}]-, -[A_{c}]-, -[A_{d}]-, -[Aₑ]-, -[A_{f}]-, -[A_{Z}]-beziehungsweise -[A_{Z1}]- beziehungsweise die Wiederholungseinheit ([A]-X-Q) für eine polyfunktionalisierte, beispielsweise bifunktionalisierte oder tetrafunktionalisierten, Polymerrücken bildende Einheit der allgemeinen chemischen Formel: 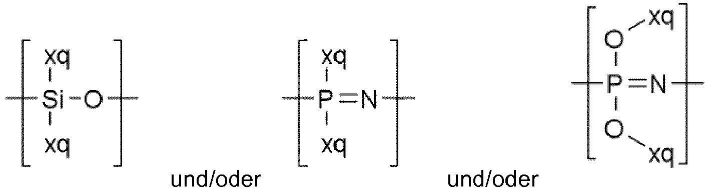 und/oder 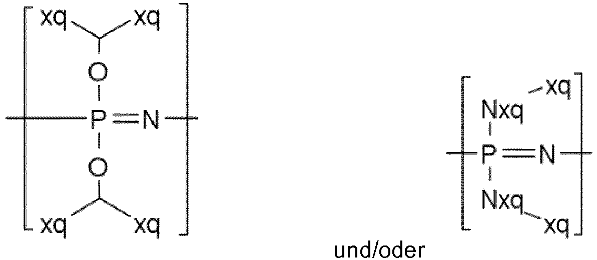 und/oder 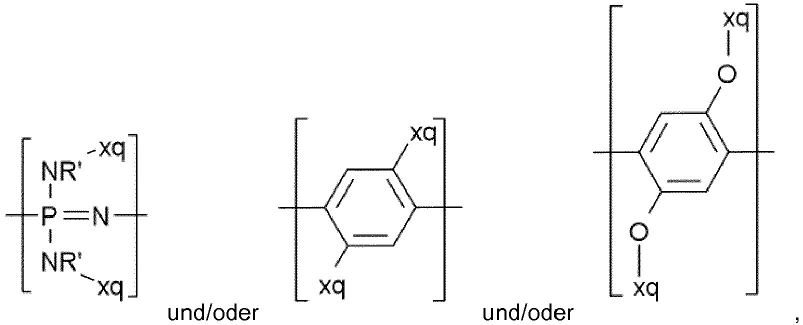 stehen. Dabei kann xq jeweils für eine Anbindungsstelle, insbesondere an welcher jeweils eine Gruppe Q, beispielsweise Q⁺ beziehungsweise Q⁻ beziehungsweise Q, über einen Spacer X, insbesondere Xₓ, an die Polymerrücken bildende Einheit -[A]- angebunden ist, beziehungsweise jeweils für XQ, also jeweils für eine Gruppe Q, beispielsweise Q⁺ beziehungsweise Q⁻ beziehungsweise Q, und einen Spacer X, insbesondere Xₓ, stehen. R' kann dabei insbesondere für Wasserstoff oder (vorzugsweise) für eine Alkylgruppe, beispielsweise für eine Methyl-, Ethyl- und/oder Propyl-Gruppe, zum Beispiel eine Methylgruppe, steht

An den Anbindungsstellen xq kann dabei jeweils eine mit R100, R101 und R101' substituierte cyclische Carbonatgruppe, insbesondere der der allgemeinen chemischen Formel: 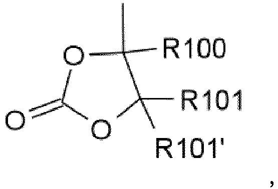 über einen Spacer (X_{I})ₓᵢ an die Polymerrücken bildende Einheit -[A_{I}]-angebunden sein.

Beziehungsweise an den Anbindungsstellen xq kann dabei jeweils eine mit R110, R111, R111', R112 und/oder R112' substituierte Lactongruppe, insbesondere der der allgemeinen chemischen Formel: 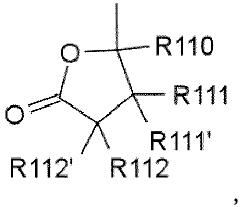 beispielsweise 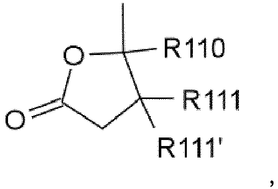 über einen Spacer (X_{II})ₓᵢᵢ an die Polymerrücken bildende Einheit -[A_{II}]-angebunden sein.

Beziehungsweise an den Anbindungsstellen xq kann dabei jeweils eine mit R120, R120', 121 und/oder R121' substituierte cyclische Carbamatgruppe, insbesondere der der allgemeinen chemischen Formel: 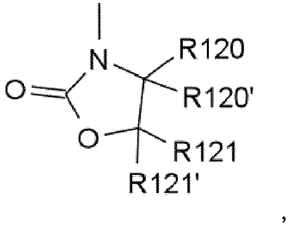 über einen Spacer (X_{III})ₓᵢᵢᵢ an die Polymerrücken bildende Einheit -[A_{III}]-angebunden sein.

Beziehungsweise an den Anbindungsstellen xq kann dabei jeweils eine mit R130, R130', 131, R131' und 132 substituierte Alkylenoxidgruppe, insbesondere der der allgemeinen chemischen Formel: 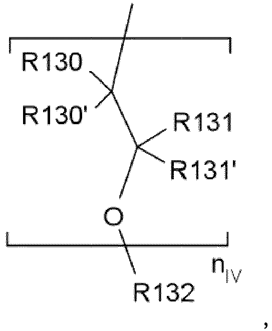 über einen Spacer (X_{IV})ₓᵢᵥ an die Polymerrücken bildende Einheit -[A_{IV}]-angebunden sein.

Beziehungsweise an den Anbindungsstellen xq kann dabei jeweils eine mit R140 substituierte acyclische Carbonatgruppe, insbesondere der der allgemeinen chemischen Formel: 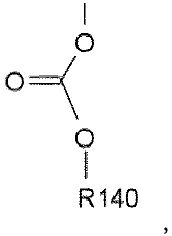 über einen Spacer (X_{V})ₓᵥ an die Polymerrücken bildende Einheit -[A_{V}]-angebunden sein.

Beziehungsweise an den Anbindungsstellen xq kann dabei jeweils eine mit R150 substituierte acyclische Carbonsäureestergruppe, insbesondere der der allgemeinen chemischen Formel: 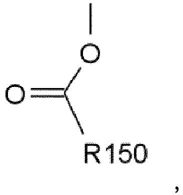 über einen Spacer (X_{VI})ₓᵥᵢ an die Polymerrücken bildende Einheit -[A_{VI}]-angebunden sein.

Beziehungsweise an den Anbindungsstellen xq kann dabei jeweils eine mit R160 substituierte acyclische Carbamatgruppe, insbesondere der der allgemeinen chemischen Formel: 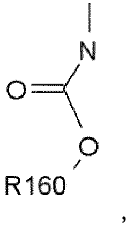 über einen Spacer (X_{VII})ₓᵥᵢᵢ an die Polymerrücken bildende Einheit -[A_{VII}]-angebunden sein.

Beziehungsweise an den Anbindungsstellen xq kann dabei jeweils eine mit R170 substituierte acyclische Carbamatgruppe, insbesondere der der allgemeinen chemischen Formel: 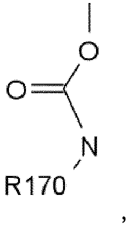 über einen Spacer (X_{VIII})ₓᵥᵢᵢᵢ an die Polymerrücken bildende Einheit -[A_{VIII}]-angebunden sein.

Beziehungsweise an den Anbindungsstellen xq kann dabei jeweils eine mit R180, R180' R181, R181' und R182 substituierte Alkylenoxidgruppe, insbesondere der der allgemeinen chemischen Formel: 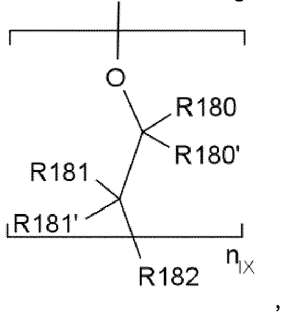 über einen Spacer (X_{IX})ₓᵢₓ an die Polymerrücken bildende Einheit -[A_{IX}]-angebunden sein.

Beziehungsweise an den Anbindungsstellen xq kann dabei jeweils eine mit R10, R11, R12, R13 und R14 substituierte Pyridiniumgruppe, insbesondere der der allgemeinen chemischen Formel: 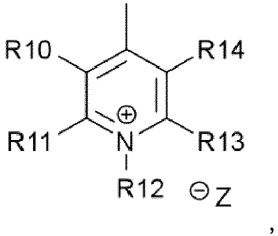 über einen Spacer (Xₐ)ₓₐ an die Polymerrücken bildende Einheit -[Aₐ]-angebunden sein.

Beziehungsweise an den Anbindungsstellen xq kann dabei jeweils eine mit R20, R21 und R22 substituierte Ammoniumgruppe, insbesondere der der allgemeinen chemischen Formel: 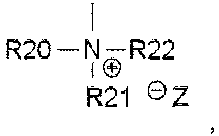 über einen Spacer (X_{b})_{xb} an die Polymerrücken bildende Einheit -[A_{b}]-angebunden sein.

Beziehungsweise an den Anbindungsstellen xq kann dabei jeweils eine mit R30, R31, R32 und R33 substituierte Imidazoliumgruppe, insbesondere der der allgemeinen chemischen Formel: 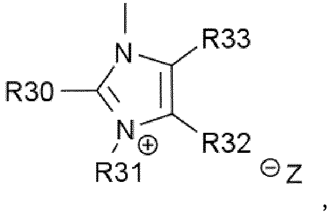 über einen Spacer (X_{c})_{xc} an die Polymerrücken bildende Einheit -[A_{c}]-angebunden sein.

Beziehungsweise an den Anbindungsstellen xq kann dabei jeweils eine mit R40, R41, R41', R42, R42', R43, R43', R44, R44', R45 und R45' substituierte Piperidiniumgruppe, insbesondere der der allgemeinen chemischen Formel: 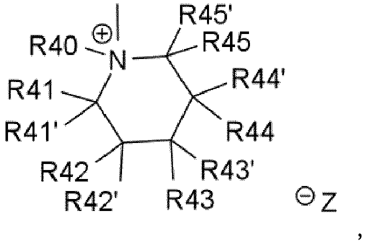 über einen Spacer (X_{d})_{xd} an die Polymerrücken bildende Einheit -[A_{d}]-angebunden sein.

Beziehungsweise an den Anbindungsstellen xq kann dabei jeweils eine mit R50, R51, R51', R52, R52', R53, R53', R54 und R54' substituierte Pyrrolidiniumgruppe, insbesondere der der allgemeinen chemischen Formel: 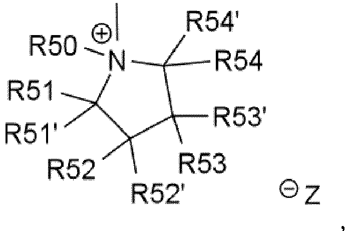 über einen Spacer (Xₑ)ₓₑ an die Polymerrücken bildende Einheit -[Aₑ]-angebunden sein.

Beziehungsweise an den Anbindungsstellen xq kann dabei jeweils eine mit R60, R61 und R62 substituierte Phosphoniumgruppe, insbesondere der der allgemeinen chemischen Formel: 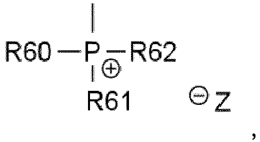 über einen Spacer (X_{f})_{xf} an die Polymerrücken bildende Einheit -[A_{f}]- angebunden sein.

Beziehungsweise an den Anbindungsstellen xq kann dabei jeweils eine mit R200, R201, R202 und R203 substituierte Benzolsulfonatgruppe, insbesondere der der allgemeinen chemischen Formel: 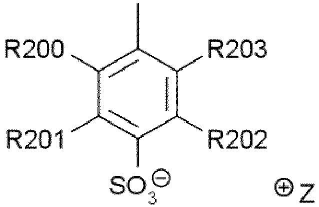 über einen Spacer (X_{Z})_{xz} an die Polymerrücken bildende Einheit -[A_{Z}]-angebunden sein.

Beziehungsweise an den Anbindungsstellen xq kann dabei jeweils eine mit R210, R211, R212, 213 und R214 substituierte para-Benzolsulfonylimid-Gruppe, beispielsweise eine para-Trifluormethansulfonylimid-Benzol-Gruppe, insbesondere der allgemeinen chemischen Formel: 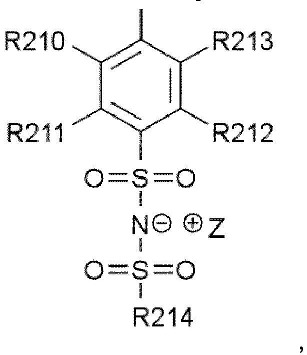 beispielsweise 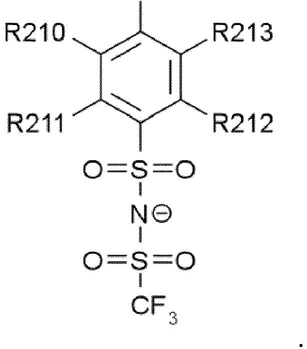 über einen Spacer (X_{Z1})_{xz1} an die Polymerrücken bildende Einheit -[A_{Z1}]-angebunden sein.

Die Polymerrücken bildende Einheit -[A_{I}]-, -[A_{II}]-, -[A_{III}]-, -[A_{IV}]-, -[A_{V}]-, -[A_{VI}]-,-[A_{VII}]-, -[A_{VIII}]- beziehungsweise -[A_{IX}]- können - ebenso wie die Polymerrücken bildenden Einheiten -[AJ-, -[A_{b}]-, -[A_{c}]-, -[A_{d}]-, -[Aₑ]-, -[A_{f}]-, -[A_{Z}]- und/oder -[A_{Z1}]-der im Folgenden erläuterten speziellen Ausgestaltungen, eine Alkylenoxid-Einheit, beispielsweise eine Ethylenoxid-Einheit, zum Beispiel der allgemeinen chemischen Formel: 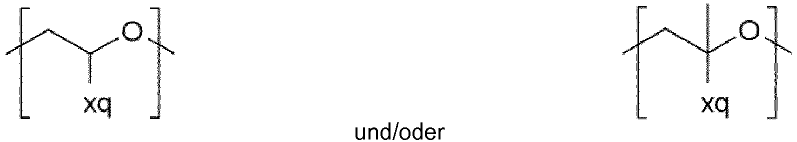 und/oder 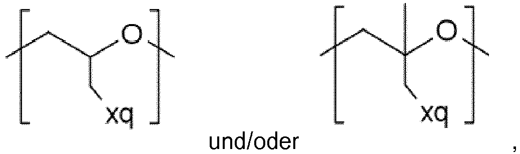 oder eine Alkylen-Einheit, beispielsweise eine Ethylen-Einheit und/oder Propylen-Einheit, zum Beispiel der allgemeinen chemischen Formel: 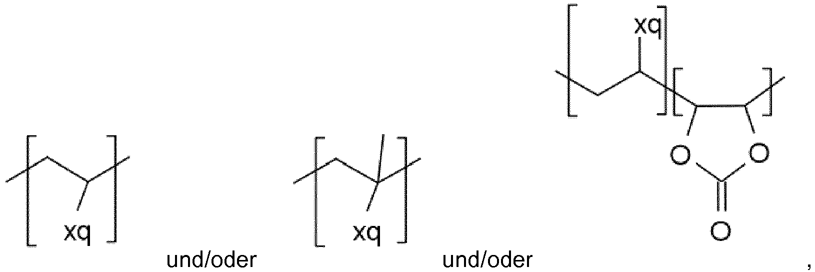 und/oder eine Carbonat-Einheit, und/oder eine Methacrylat-Einheit, zum Beispiel der allgemeinen chemischen Formel: 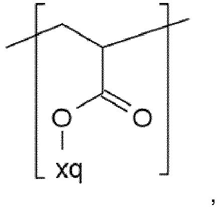 und/oder eine Methylmethacrylat-Einheit, zum Beispiel der allgemeinen chemischen Formel: 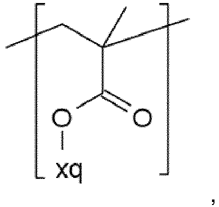 und/oder eine Siloxan-Einheit, zum Beispiel der allgemeinen Formel: 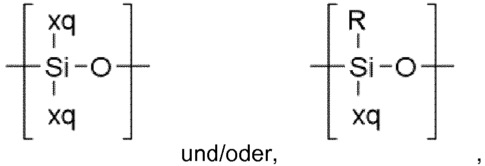 insbesondere wobei R für eine Alkylgruppe, beispielsweise für eine Methyl-, Ethyl- und/oder Propyl-Gruppe, zum Beispiel eine Methylgruppe, steht, zum Beispiel 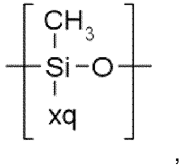 und/oder eine Phosphazen-Einheit, zum Beispiel der allgemeinen chemischen Formel: 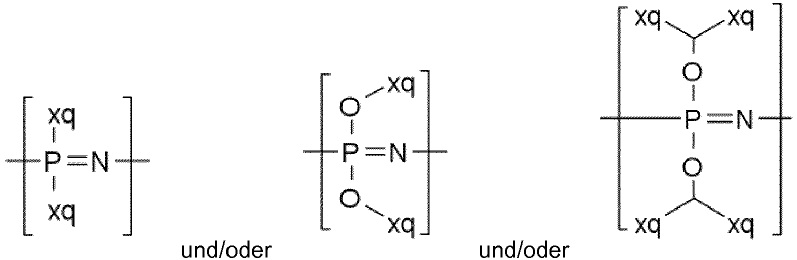 und/oder 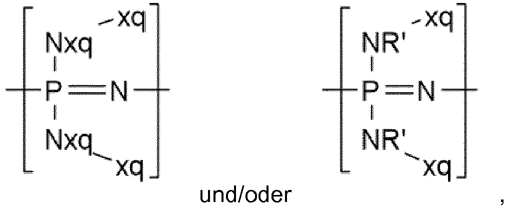 insbesondere wobei R' für Wasserstoff oder (vorzugsweise) für eine Alkylgruppe, beispielsweise für eine Methyl-, Ethyl- und/oder Propyl-Gruppe, zum Beispiel eine Methylgruppe, steht, und/oder eine Siloxan-Alkylenoxid-Einheit, beispielsweise eine Siloxan-Ethylenoxid-Einheit, zum Beispiel der allgemeinen chemischen Formel: 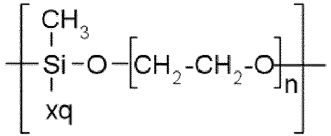 und/oder eine Phenylen-Einheit, insbesondere eines Polyphenylens, beispielsweise eines para-Polyphenylens, beispielsweise mit Etherfunktion, zum Beispiel der allgemeinen chemischen Formel: 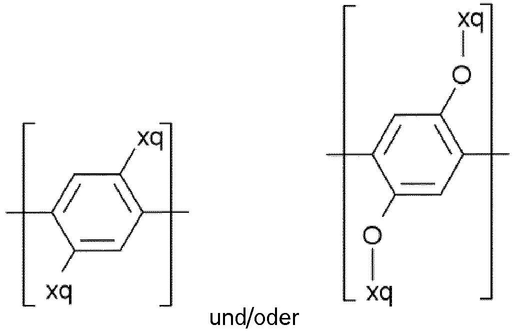 umfassen, insbesondere wobei xq die Anbindungsstelle/n kennzeichnet beziehungsweise für XQ steht.

Im Rahmen einer weiteren, alternativen oder zusätzlichen Ausführungsform umfasst das Polymer beziehungsweise der Polymerelektrolyt beziehungsweise das mindestens eine Polymer, insbesondere des Kathodenmaterials, mindestens eine pyridiniumbasierte Wiederholungseinheit der allgemeinen chemischen Formel:

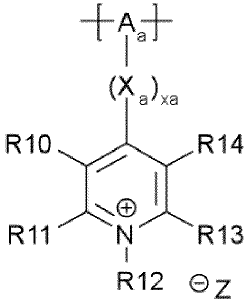

Dabei steht -[Aₐ]- für eine Polymerrücken bildende Einheit. (Xₐ) steht dabei für einen Spacer. xa steht dabei für die Anzahl, insbesondere das Vorhandensein beziehungsweise die Abwesenheit, des Spacers (Xₐ). Dabei kann xa insbesondere 1 oder 0, beispielsweise 1, sein. Die Polymerrücken bildende Einheit -[Aₐ]- kann beispielsweise wie im Zusammenhang mit der Polymerrücken bildenden Einheit -[A]- erläutert ausgestaltet sein. Die Spacer (Xₐ) kann beispielsweise wie im Zusammenhang mit dem Spacer X erläutert ausgestaltet sein. R10, R11, R12, R13 und/oder R14 können beispielsweise ebenfalls wie vorstehend erläutert ausgestaltet sein.

Z⁻ kann dabei insbesondere für Perchlorat und/oder Trifluormethansulfonat und/oder Tetrafluoroborat und/oder Bisoxalatoborat und/oder Hexafluorophosphat und/oder Bis(trifluormethansulfonyl)imid und/oder Difluorooxalatoborat und/oder Bromid und/oder lodid und/oder Chlorid stehen.

(Xₐ) kann dabei insbesondere für einen, insbesondere gesättigten oder ungesättigten, linearen oder verzweigten, beispielsweise teilweise oder vollständig halogenierten, insbesondere fluorierten, Alkylenspacer, beispielsweise der allgemeinen chemischen Formel: -(CH₂)ₐ₁- mit 1 ≤ a1 ≤ 12, zum Beispiel mit 1 ≤ a1 ≤ 3, und/oder einen, insbesondere gesättigten oder ungesättigten, linearen oder verzweigten, beispielsweise teilweise oder vollständig halogenierten, insbesondere fluorierten, Alkylenoxidspacer, insbesondere Ethylenoxidspacer, beispielsweise der allgemeinen chemischen Formel: -CH₂-[CH₂-CH₂-O]_{b1}-CH₂- mit 1 ≤ b1 ≤ 10, zum Beispiel 1 ≤ b1 ≤ 4, und/oder eine weitere positiv geladene Gruppe, zum Beispiel eine weitere Pyridiniumgruppe und/oder eine quartäre Ammoniumgruppe, und/oder eine Phenylengruppe, beispielsweise eine, mit mindestens einer Alkylgruppe und/oder einer Alkylenoxidgruppe und/oder einer Alkoxygruppe und/oder einer weiteren positiv geladenen Gruppe, zum Beispiel einer quartären Ammoniumgruppe, substituierte Phenylengruppe, und/oder eine Benzylengruppe, beispielsweise eine, mit mindestens einer Alkylgruppe und/oder einer Alkylenoxidgruppe und/oder einer Alkoxygruppe und/oder einer weiteren positiv geladenen Gruppe, zum Beispiel einer quartären Ammoniumgruppe, substituierte Benzylengruppe, und/oder eine Ketongruppe, beispielsweise Alkylcarbonylgruppe, stehen.

R12 steht dabei insbesondere für eine, insbesondere gesättigte oder ungesättigte, lineare oder verzweigte, beispielsweise teilweise oder vollständig halogenierte, insbesondere fluorierte, Alkylgruppe, insbesondere mit einer Kettenlänge von ≥ 1 bis ≤ 16 Kohlenstoffatomen, beispielsweise der allgemeinen chemischen Formel: -(CH₂)_{a1*}-CH₃ mit 1 ≤ a1* ≤ 15, zum Beispiel mit 8 ≤ a1* ≤ 12, und/oder eine, insbesondere gesättigte oder ungesättigte, lineare oder verzweigte, beispielsweise teilweise oder vollständig halogenierte, insbesondere fluorierte, Alkylenoxidgruppe, beispielsweise eine Ethylenoxidgruppe, insbesondere eine Oligo-Alkylenoxidgruppe, zum Beispiel eine Oligo-Ethylenoxidgruppe, insbesondere mit ≥ 1 bis ≤ 10 Wiederholungseinheiten, beispielsweise mit ≥ 1 oder ≥ 2 bis ≤ 5 Wiederholungseinheiten, und/oder eine weitere positiv geladene Gruppe, zum Beispiel eine weitere Pyridiniumgruppe und/oder eine quartäre Ammoniumgruppe, und/oder eine Phenylengruppe, beispielsweise eine, mit mindestens einer Alkylgruppe und/oder einer Alkylenoxidgruppe und/oder einer Alkoxygruppe und/oder einer weiteren positiv geladenen Gruppe, zum Beispiel einer quartären Ammoniumgruppe, substituierte Phenylengruppe, und/oder eine Benzylengruppe, beispielsweise eine, mit mindestens einer Alkylgruppe und/oder einer Alkylenoxidgruppe und/oder einer Alkoxygruppe und/oder einer weiteren positiv geladenen Gruppe, zum Beispiel einer quartären Ammoniumgruppe, substituierte Benzylengruppe, und/oder eine Ketongruppe, beispielsweise Alkylcarbonylgruppe. Beispielsweise kann R12 für eine gesättigte Alkylgruppe, insbesondere mit einer Kettenlänge von ≥ 1 bis ≤ 16 Kohlenstoffatomen, stehen. Zum Beispiel kann R12 für eine gesättigte Alkylgruppe mit einer Kettenlänge von ≥ 9 bis ≤ 13 Kohlenstoffatomen, zum Beispiel eine Undecylgruppe (-C₁₁H₂₃), stehen.

R10, R11, R13 und/oder R14 können dabei beispielsweise jeweils unabhängig voneinander für Wasserstoff oder eine, insbesondere gesättigte oder ungesättigte, lineare oder verzweigte, beispielsweise teilweise oder vollständig halogenierte, insbesondere fluorierte, Alkylgruppe, beispielsweise der allgemeinen chemischen Formel: -(CH₂)_{a1*}-CH₃ mit 1 ≤ a1* ≤ 15, zum Beispiel mit 1 ≤ a1* ≤ 3, beispielsweise eine Methylgruppe oder eine Ethylgruppe, und/oder eine, insbesondere gesättigte oder ungesättigte, lineare oder verzweigte, beispielsweise teilweise oder vollständig halogenierte, insbesondere fluorierte, Alkylenoxidgruppe, beispielsweise eine Ethylenoxidgruppe, insbesondere eine Oligo-Alkylenoxidgruppe, zum Beispiel eine Oligo-Ethylenoxidgruppe, insbesondere mit ≥ 1 bis ≤ 10 Wiederholungseinheiten, beispielsweise mit ≥ 1 oder ≥ 2 bis ≤ 5 Wiederholungseinheiten, und/oder eine weitere positiv geladene Gruppe, zum Beispiel eine weitere Pyridiniumgruppe und/oder eine quartäre Ammoniumgruppe, und/oder eine Phenylengruppe, beispielsweise eine, mit mindestens einer Alkylgruppe und/oder einer Alkylenoxidgruppe und/oder einer Alkoxygruppe und/oder einer weiteren positiv geladenen Gruppe, zum Beispiel einer quartären Ammoniumgruppe, substituierte Phenylengruppe, und/oder eine Benzylengruppe, beispielsweise eine, mit mindestens einer Alkylgruppe und/oder einer Alkylenoxidgruppe und/oder einer Alkoxygruppe und/oder einer weiteren positiv geladenen Gruppe, zum Beispiel einer quartären Ammoniumgruppe, substituierte Benzylengruppe, und/oder eine Ketongruppe, beispielsweise Alkylcarbonylgruppe, stehen. Dabei können zum Beispiel zumindest zwei, beispielsweise zumindest drei, der Reste R10, R11, R12, R13 und R14, gegebenenfalls alle Reste R10, R11, R12, R13 und R14, für unterschiedliche Gruppen, beispielsweise Alkylgruppen und/oder Oligo-Alkylenoxidgruppen, zum Beispiel mit unterschiedlicher Länge und/oder Substitution und/oder Sättigungsgrad und/oder Verzweigungsgrad und/oder Halogenierungsgrad, insbesondere Fluorierungsgrad, stehen.

### Beispiele für derartige Ausgestaltungen sind:

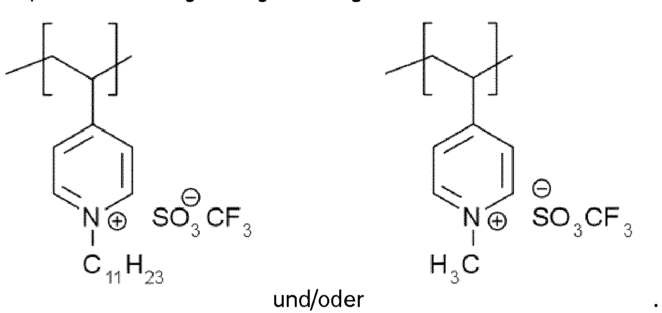

Im Rahmen einer weiteren, alternativen oder zusätzlichen Ausführungsform umfasst das Polymer beziehungsweise der Polymerelektrolyt beziehungsweise das mindestens eine Polymer, insbesondere des Kathodenmaterials, mindestens eine ammoniumbasierte Wiederholungseinheit der allgemeinen chemischen Formel:

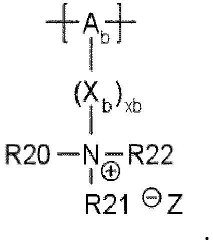

Dabei steht -[A_{b}]- für eine Polymerrücken bildende Einheit. (X_{b}) steht dabei für einen Spacer. xb steht dabei für die Anzahl, insbesondere das Vorhandensein beziehungsweise die Abwesenheit, des Spacers (X_{b}). Dabei kann xb insbesondere 1 oder 0, beispielsweise 1, sein. Die Polymerrücken bildende Einheit -[A_{b}]- kann beispielsweise wie im Zusammenhang mit der Polymerrücken bildenden Einheit -[A]- erläutert ausgestaltet sein. Die Spacer (X_{b}) kann beispielsweise wie im Zusammenhang mit dem Spacer X erläutert ausgestaltet sein. R20, R21 und/oder R22 können beispielsweise ebenfalls wie vorstehend erläutert ausgestaltet sein.

Z⁻ kann dabei insbesondere für Perchlorat und/oder Trifluormethansulfonat und/oder Tetrafluoroborat und/oder Bisoxalatoborat und/oder Hexafluorophosphat und/oder Bis(trifluormethansulfonyl)imid und/oder Difluorooxalatoborat und/oder Bromid und/oder lodid und/oder Chlorid stehen.

(X_{b}) kann dabei insbesondere für einen, insbesondere gesättigten oder ungesättigten, linearen oder verzweigten, beispielsweise teilweise oder vollständig halogenierten, insbesondere fluorierten, Alkylenspacer, beispielsweise der allgemeinen chemischen Formel: -(CH₂)ₐ₁- mit 1 ≤ a1 ≤ 12, zum Beispiel mit 1 ≤ a1 ≤ 3, und/oder einen, insbesondere gesättigten oder ungesättigten, linearen oder verzweigten, beispielsweise teilweise oder vollständig halogenierten, insbesondere fluorierten, Alkylenoxidspacer, insbesondere Ethylenoxidspacer, beispielsweise der allgemeinen chemischen Formel: -CH₂-[CH₂-CH₂-O]_{b1}-CH₂- mit 1 ≤ b1 ≤ 10, zum Beispiel 1 ≤ b1 ≤ 4, und/oder eine weitere positiv geladene Gruppe, zum Beispiel eine Pyridiniumgruppe und/oder eine quartäre Ammoniumgruppe, und/oder eine Phenylengruppe, beispielsweise eine, mit mindestens einer Alkylgruppe und/oder einer Alkylenoxidgruppe und/oder einer Alkoxygruppe und/oder einer weiteren positiv geladenen Gruppe, zum Beispiel einer quartären Ammoniumgruppe, substituierte Phenylengruppe, und/oder eine Benzylengruppe, beispielsweise eine, mit mindestens einer Alkylgruppe und/oder einer Alkylenoxidgruppe und/oder einer Alkoxygruppe und/oder einer weiteren positiv geladenen Gruppe, zum Beispiel einer quartären Ammoniumgruppe, substituierte Benzylengruppe, und/oder eine Ketongruppe, beispielsweise Alkylcarbonylgruppe, stehen.

R20, R21 und R22 können dabei beispielsweise jeweils unabhängig voneinander für Wasserstoff oder eine, insbesondere gesättigte oder ungesättigte, lineare oder verzweigte, beispielsweise teilweise oder vollständig halogenierte, insbesondere fluorierte, Alkylgruppe, beispielsweise der allgemeinen chemischen Formel: -(CH₂)_{a1*}-CH₃ mit 1 ≤ a1* ≤ 15, zum Beispiel 1 ≤ a1* ≤ 3 und/oder 8 ≤ a1* ≤ 12, beispielsweise eine Methylgruppe oder eine Ethylgruppe, und/oder eine, insbesondere gesättigte oder ungesättigte, lineare oder verzweigte, beispielsweise teilweise oder vollständig halogenierte, insbesondere fluorierte, Alkylenoxidgruppe, beispielsweise eine Ethylenoxidgruppe, insbesondere eine Oligo-Alkylenoxidgruppe, zum Beispiel eine Oligo-Ethylenoxidgruppe, insbesondere mit ≥ 1 bis ≤ 10 Wiederholungseinheiten, beispielsweise mit ≥ 1 oder ≥ 2 bis ≤ 5 Wiederholungseinheiten, und/oder eine weitere positiv geladene Gruppe, zum Beispiel eine Pyridiniumgruppe und/oder eine quartäre Ammoniumgruppe, und/oder eine Phenylengruppe, beispielsweise eine, mit mindestens einer Alkylgruppe und/oder einer Alkylenoxidgruppe und/oder einer Alkoxygruppe und/oder einer weiteren positiv geladenen Gruppe, zum Beispiel einer quartären Ammoniumgruppe, substituierte Phenylengruppe, und/oder eine Benzylengruppe, beispielsweise eine, mit mindestens einer Alkylgruppe und/oder einer Alkylenoxidgruppe und/oder einer Alkoxygruppe und/oder einer weiteren positiv geladenen Gruppe, zum Beispiel einer quartären Ammoniumgruppe, substituierte Benzylengruppe, und/oder eine Ketongruppe, beispielsweise Alkylcarbonylgruppe, stehen. Dabei können zum Beispiel zumindest zwei der Reste R20, R21 und R22, gegebenenfalls alle Reste R20, R21 und R22, für unterschiedliche Gruppen, beispielsweise Alkylgruppen und/oder Oligo-Alkylenoxidgruppen, zum Beispiel mit unterschiedlicher Länge und/oder Substitution und/oder Sättigungsgrad und/oder Verzweigungsgrad und/oder Halogenierungsgrad, insbesondere Fluorierungsgrad, stehen.

Im Rahmen einer speziellen Ausgestaltung stehen R20 und R21 für gleiche oder unterschiedliche, insbesondere gesättigte, Alkylgruppen mit einer Kettenlänge von ≥ 1 bis ≤ 4 Kohlenstoffatomen, beispielsweise eine Methylgruppe, und R22 für eine, insbesondere gesättigte, Alkylgruppe mit einer Kettenlänge von ≥ 9 bis ≤ 13 Kohlenstoffatomen, beispielsweise eine Undecylgruppe (-C₁₁H₂₃).

### Beispiele für derartige Ausgestaltungen sind:

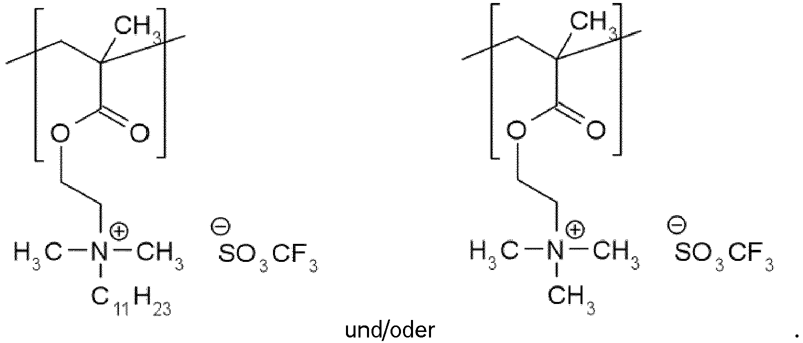

Im Rahmen einer weiteren, alternativen oder zusätzlichen Ausführungsform umfasst das Polymer beziehungsweise der Polymerelektrolyt beziehungsweise das mindestens eine Polymer, insbesondere des Kathodenmaterials, mindestens eine imidazoliumbasierte Wiederholungseinheit der allgemeinen chemischen Formel:

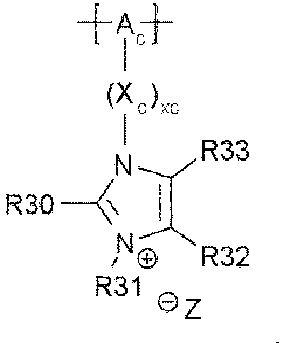

Dabei steht -[A_{c}]- für eine Polymerrücken bildende Einheit. (X_{c}) steht dabei für einen Spacer. xc steht dabei für die Anzahl, insbesondere das Vorhandensein beziehungsweise die Abwesenheit, des Spacers (X_{c}). Dabei kann xc insbesondere 1 oder 0, beispielsweise 1, sein. Die Polymerrücken bildende Einheit -[A_{c}]- kann beispielsweise wie im Zusammenhang mit der Polymerrücken bildenden Einheit -[A]- erläutert ausgestaltet sein. Die Spacer (X_{c}) kann beispielsweise wie im Zusammenhang mit dem Spacer X erläutert ausgestaltet sein. R30, R31, R32 und/oder R33 können beispielsweise ebenfalls wie vorstehend erläutert ausgestaltet sein.

Z⁻ kann dabei insbesondere für Perchlorat und/oder Trifluormethansulfonat und/oder Tetrafluoroborat und/oder Bisoxalatoborat und/oder Hexafluorophosphat und/oder Bis(trifluormethansulfonyl)imid und/oder Difluorooxalatoborat und/oder Bromid und/oder lodid und/oder Chlorid stehen.

(X_{c}) kann dabei beispielsweise für einen, insbesondere gesättigten oder ungesättigten, linearen oder verzweigten, beispielsweise teilweise oder vollständig halogenierten, insbesondere fluorierten, Alkylenspacer, beispielsweise der allgemeinen chemischen Formel: -(CH₂)ₐ₁- mit 1 ≤ a1 ≤ 12, zum Beispiel mit 3 ≤ a1 ≤ 5, und/oder einen, insbesondere gesättigten oder ungesättigten, linearen oder verzweigten, beispielsweise teilweise oder vollständig halogenierten, insbesondere fluorierten, Alkylenoxidspacer, insbesondere Ethylenoxidspacer, insbesondere mit ≥ 1 oder ≥ 2 bis ≤ 10 Wiederholungseinheiten, beispielsweise mit ≥ 1 oder ≥ 2 bis ≤ 4 Wiederholungseinheiten, zum Beispiel der allgemeinen chemischen Formel:-CH₂-[CH₂-CH₂-O]_{b1}-CH₂- mit 1 ≤ b1 ≤ 10, beispielsweise mit 2 ≤ b1 ≤ 4, und/oder der allgemeinen chemischen Formel: -[CH₂-CH₂-O-]_{b} mit 1 ≤ b ≤ 10, beispielsweise mit 2 ≤ b ≤ 4, und/oder eine weitere positiv geladene Gruppe, zum Beispiel eine Pyridiniumgruppe und/oder eine quartäre Ammoniumgruppe, und/oder eine Phenylengruppe, beispielsweise eine, mit mindestens einer Alkylgruppe und/oder einer Alkylenoxidgruppe und/oder einer Alkoxygruppe und/oder einer weiteren positiv geladenen Gruppe, zum Beispiel einer quartären Ammoniumgruppe, substituierte Phenylengruppe, und/oder eine Benzylengruppe, beispielsweise eine, mit mindestens einer Alkylgruppe und/oder einer Alkylenoxidgruppe und/oder einer Alkoxygruppe und/oder einer weiteren positiv geladenen Gruppe, zum Beispiel einer quartären Ammoniumgruppe, substituierte Benzylengruppe, beispielsweise der allgemeinen chemischen Formel: 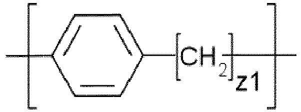 mit 1 ≤ z1 ≤ 4, und/oder eine Ketongruppe, beispielsweise Alkylcarbonylgruppe, stehen.

R30, R32 und/oder R33 können dabei beispielsweise jeweils unabhängig voneinander für Wasserstoff oder eine, insbesondere gesättigte oder ungesättigte, lineare oder verzweigte, beispielsweise teilweise oder vollständig halogenierte, insbesondere fluorierte, Alkylgruppe, beispielsweise der allgemeinen chemischen Formel: -(CH₂)_{a1*}-CH₃ mit 0 ≤ oder 1 ≤ oder 2 ≤ a1 * ≤ 15, zum Beispiel mit 0 ≤ oder 1 oder ≤ 2 ≤ a1* ≤ 4, und/oder eine, insbesondere gesättigte oder ungesättigte, lineare oder verzweigte, beispielsweise teilweise oder vollständig halogenierte, insbesondere fluorierte, Alkylenoxidgruppe, beispielsweise eine Ethylenoxidgruppe, insbesondere eine Oligo-Alkylenoxidgruppe, zum Beispiel eine Oligo-Ethylenoxidgruppe, insbesondere mit ≥ 1 bis ≤ 10 Wiederholungseinheiten, beispielsweise mit ≥ 1 oder ≥ 2 bis ≤ 5 Wiederholungseinheiten, und/oder eine weitere positiv geladene Gruppe, zum Beispiel eine Pyridiniumgruppe und/oder eine quartäre Ammoniumgruppe, und/oder eine Phenylengruppe, beispielsweise eine, mit mindestens einer Alkylgruppe und/oder einer Alkylenoxidgruppe und/oder einer Alkoxygruppe und/oder einer weiteren positiv geladenen Gruppe, zum Beispiel einer quartären Ammoniumgruppe, substituierte Phenylengruppe, und/oder eine Benzylengruppe, beispielsweise eine, mit mindestens einer Alkylgruppe und/oder einer Alkylenoxidgruppe und/oder einer Alkoxygruppe und/oder einer weiteren positiv geladenen Gruppe, zum Beispiel einer quartären Ammoniumgruppe, substituierte Benzylengruppe, und/oder eine Ketongruppe, beispielsweise Alkylcarbonylgruppe, stehen. Dabei können zum Beispiel zumindest zwei, insbesondere zumindest drei, der Reste R30, R31, R32 und R33, gegebenenfalls alle Reste R30, R31, R32 und R33, für unterschiedliche Gruppen, beispielsweise Alkylgruppen und/oder Oligo-Alkylenoxidgruppen, zum Beispiel mit unterschiedlicher Länge und/oder Substitution und/oder Sättigungsgrad und/oder Verzweigungsgrad und/oder Halogenierungsgrad, insbesondere Fluorierungsgrad, stehen. Insbesondere können R30, R31, R32 und R33 jeweils unabhängig voneinander für Wasserstoff oder eine Methylgruppe oder eine Alkylgruppe mit einer Kettenlänge von ≥ 2 bis ≤ 15 Kohlenstoffatomen, beispielsweise von ≥ 2 bis ≤ 4 Kohlenstoffatomen, stehen. R31 kann insbesondere für eine Methylgruppe stehen.

Im Rahmen einer weiteren, alternativen oder zusätzlichen Ausführungsform umfasst das Polymer beziehungsweise der Polymerelektrolyt beziehungsweise das mindestens eine Polymer, insbesondere des Kathodenmaterials, mindestens eine piperidiniumbasierte Wiederholungseinheit der allgemeinen chemischen Formel:

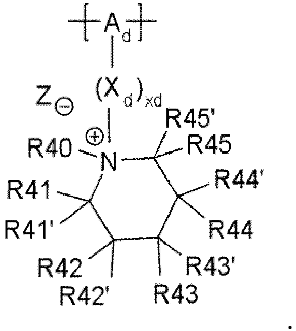

Dabei steht -[A_{d]}- für eine Polymerrücken bildende Einheit. (X_{d}) steht dabei für einen Spacer. xd steht dabei für die Anzahl, insbesondere das Vorhandensein beziehungsweise die Abwesenheit, des Spacers (X_{d}). Dabei kann xd insbesondere 1 oder 0, beispielsweise 1, sein. Die Polymerrücken bildende Einheit -[A_{d}]- kann beispielsweise wie im Zusammenhang mit der Polymerrücken bildenden Einheit -[A]- erläutert ausgestaltet sein. Die Spacer (X_{d}) kann beispielsweise wie im Zusammenhang mit dem Spacer X erläutert ausgestaltet sein. R40, R41, R41', R42, R42', R43, R43', R44, R44', R45 und/oder R45' können beispielsweise ebenfalls wie vorstehend erläutert ausgestaltet sein.

Z⁻ kann dabei insbesondere für Perchlorat und/oder Trifluormethansulfonat und/oder Tetrafluoroborat und/oder Bisoxalatoborat und/oder Hexafluorophosphat und/oder Bis(trifluormethansulfonyl)imid und/oder Difluorooxalatoborat und/oder Bromid und/oder lodid und/oder Chlorid stehen.

(X_{d}) kann dabei insbesondere für einen, insbesondere gesättigten oder ungesättigten, linearen oder verzweigten, beispielsweise teilweise oder vollständig halogenierten, insbesondere fluorierten, Alkylenspacer, beispielsweise der allgemeinen chemischen Formel: -(CH₂)ₐ₁- mit 1 ≤ a1 ≤ 15, zum Beispiel mit 3 ≤ a1 ≤ 5, und/oder einen, insbesondere gesättigten oder ungesättigten, linearen oder verzweigten, beispielsweise teilweise oder vollständig halogenierten, insbesondere fluorierten, Alkylenoxidspacer, insbesondere Ethylenoxidspacer, insbesondere mit ≥ 1 oder ≥ 2 bis ≤ 10 Wiederholungseinheiten, beispielsweise mit ≥ 1 oder ≥ 2 bis ≤ 4 Wiederholungseinheiten, zum Beispiel der allgemeinen chemischen Formel: - CH₂-[CH₂-CH₂-O]_{b1}-CH₂- mit 1 ≤ b1 ≤ 10, beispielsweise mit 2 ≤ b1 ≤ 4, und/oder der allgemeinen chemischen Formel: -[CH₂-CH₂-O-]_{b} mit 1 ≤ b ≤ 10, beispielsweise mit 2 ≤ b ≤ 4, und/oder eine weitere positiv geladene Gruppe, zum Beispiel eine Pyridiniumgruppe und/oder eine quartäre Ammoniumgruppe, und/oder eine Phenylengruppe, beispielsweise eine, mit mindestens einer Alkylgruppe und/oder einer Alkylenoxidgruppe und/oder einer Alkoxygruppe und/oder einer weiteren positiv geladenen Gruppe, zum Beispiel einer quartären Ammoniumgruppe, substituierte Phenylengruppe, und/oder eine Benzylengruppe, beispielsweise eine, mit mindestens einer Alkylgruppe und/oder einer Alkylenoxidgruppe und/oder einer Alkoxygruppe und/oder einer weiteren positiv geladenen Gruppe, zum Beispiel einer quartären Ammoniumgruppe, substituierte Benzylengruppe, und/oder eine Ketongruppe, beispielsweise Alkylcarbonylgruppe, stehen. Insbesondere kann der Spacer X ein gesättigter Alkylspacer mit einer Kettenlänge von ≥ 1 bis ≤ 15 Kohlenstoffatomen, beispielsweise von ≥ 3 bis ≤ 5 Kohlenstoffatomen, sein.

R40, R41, R41', R42, R42', R43, R43', R44, R44', R45 und/oder R45' können dabei beispielsweise jeweils unabhängig voneinander für Wasserstoff oder eine, insbesondere gesättigte oder ungesättigte, lineare oder verzweigte, beispielsweise teilweise oder vollständig halogenierte, insbesondere fluorierte, Alkylgruppe, beispielsweise der allgemeinen chemischen Formel: -(CH₂)_{a1*}-CH₃ mit 0 ≤ oder 1 ≤ oder 2 ≤ a1* ≤ 15, zum Beispiel mit 0 ≤ oder 1 oder ≤ 2 ≤ a1* ≤ 4, und/oder eine, insbesondere gesättigte oder ungesättigte, lineare oder verzweigte, beispielsweise teilweise oder vollständig halogenierte, insbesondere fluorierte, Alkylenoxidgruppe, beispielsweise eine Ethylenoxidgruppe, insbesondere eine Oligo-Alkylenoxidgruppe, zum Beispiel eine Oligo-Ethylenoxidgruppe, insbesondere mit ≥ 1 bis ≤ 10 Wiederholungseinheiten, beispielsweise mit ≥ 1 oder ≥ 2 bis ≤ 5 Wiederholungseinheiten, und/oder eine eine weitere positiv geladene Gruppe, zum Beispiel eine Pyridiniumgruppe und/oder eine quartäre Ammoniumgruppe, und/oder eine Phenylengruppe, beispielsweise eine, mit mindestens einer Alkylgruppe und/oder einer Alkylenoxidgruppe und/oder einer Alkoxygruppe und/oder einer weiteren positiv geladenen Gruppe, zum Beispiel einer quartären Ammoniumgruppe, substituierte Phenylengruppe, und/oder eine Benzylengruppe, beispielsweise eine, mit mindestens einer Alkylgruppe und/oder einer Alkylenoxidgruppe und/oder einer Alkoxygruppe und/oder einer weiteren positiv geladenen Gruppe, zum Beispiel einer quartären Ammoniumgruppe, substituierte Benzylengruppe, und/oder eine Ketongruppe, beispielsweise Alkylcarbonylgruppe, stehen. Dabei können zum Beispiel zumindest zwei, insbesondere zumindest drei, der Reste R40, R41, R41', R42, R42', R43, R43', R44, R44', R45 und/oder R45', gegebenenfalls alle Reste R40, R41, R41', R42, R42', R43, R43', R44, R44', R45 und/oder R45', für unterschiedliche Gruppen, beispielsweise Alkylgruppen und/oder Oligo-Alkylenoxidgruppen, zum Beispiel mit unterschiedlicher Länge und/oder Substitution und/oder Sättigungsgrad und/oder Verzweigungsgrad und/oder Halogenierungsgrad, insbesondere Fluorierungsgrad, stehen. Insbesondere können R40, R41, R41', R42, R42', R43, R43', R44, R44', R45 und/oder R45' jeweils unabhängig voneinander für Wasserstoff oder eine Methylgruppe oder eine Alkylgruppe mit einer Kettenlänge von ≥ 2 bis ≤ 15 Kohlenstoffatomen, beispielsweise von ≥ 2 bis ≤ 4 Kohlenstoffatomen, stehen. R41, R41', R42, R42', R43, R43', R44, R44', R45 und/oder R45' können insbesondere für Wasserstoff stehen. R40 kann insbesondere für eine Methylgruppe stehen.

Im Rahmen einer weiteren, alternativen oder zusätzlichen Ausführungsform umfasst das Polymer beziehungsweise der Polymerelektrolyt beziehungsweise das mindestens eine Polymer, insbesondere des Kathodenmaterials, mindestens eine pyrrolidiniumbasierte Wiederholungseinheit der allgemeinen chemischen Formel:

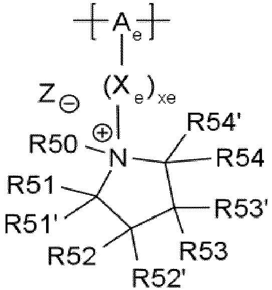

Dabei steht -[Aₑ]- für eine Polymerrücken bildende Einheit. (Xₑ) steht dabei für einen Spacer. xe steht dabei für die Anzahl, insbesondere das Vorhandensein beziehungsweise die Abwesenheit, des Spacers (Xₑ). Dabei kann xe insbesondere 1 oder 0, beispielsweise 1, sein. Die Polymerrücken bildende Einheit -[Aₑ]- kann beispielsweise wie im Zusammenhang mit der Polymerrücken bildenden Einheit -[A]- erläutert ausgestaltet sein. Die Spacer (Xₑ) kann beispielsweise wie im Zusammenhang mit dem Spacer X erläutert ausgestaltet sein. R50, R51, R51', R52, R52', R53, R53', R54 und/oder R54' können beispielsweise ebenfalls wie vorstehend erläutert ausgestaltet sein.

Z⁻ kann dabei insbesondere für Perchlorat und/oder Trifluormethansulfonat und/oder Tetrafluoroborat und/oder Bisoxalatoborat und/oder Hexafluorophosphat und/oder Bis(trifluormethansulfonyl)imid und/oder Difluorooxalatoborat und/oder Bromid und/oder lodid und/oder Chlorid stehen.

(Xₑ) kann dabei insbesondere für einen, insbesondere gesättigten oder ungesättigten, linearen oder verzweigten, beispielsweise teilweise oder vollständig halogenierten, insbesondere fluorierten, Alkylenspacer, beispielsweise der allgemeinen chemischen Formel: -(CH₂)ₐ₁- mit 1 ≤ a1 ≤ 15, zum Beispiel mit 3 ≤ a1 ≤ 5, und/oder einen, insbesondere gesättigten oder ungesättigten, linearen oder verzweigten, beispielsweise teilweise oder vollständig halogenierten, insbesondere fluorierten, Alkylenoxidspacer, insbesondere Ethylenoxidspacer, insbesondere mit ≥ 1 oder ≥ 2 bis ≤ 10 Wiederholungseinheiten, beispielsweise mit ≥ 1 oder ≥ 2 bis ≤ 4 Wiederholungseinheiten, zum Beispiel der allgemeinen chemischen Formel: - CH₂-[CH₂-CH₂-O]_{b1}-CH₂- mit 1 ≤ b1 ≤ 10, beispielsweise mit 2 ≤ b1 ≤ 4, und/oder der allgemeinen chemischen Formel: -[CH₂-CH₂-O-]_{b} mit 1 ≤ b ≤ 10, beispielsweise mit 2 ≤ b ≤ 4, und/oder eine weitere positiv geladene Gruppe, zum Beispiel eine Pyridiniumgruppe und/oder eine quartäre Ammoniumgruppe, und/oder eine Phenylengruppe, beispielsweise eine, mit mindestens einer Alkylgruppe und/oder einer Alkylenoxidgruppe und/oder einer Alkoxygruppe und/oder einer weiteren positiv geladenen Gruppe, zum Beispiel einer quartären Ammoniumgruppe, substituierte Phenylengruppe, und/oder eine Benzylengruppe, beispielsweise eine, mit mindestens einer Alkylgruppe und/oder einer Alkylenoxidgruppe und/oder einer Alkoxygruppe und/oder einer weiteren positiv geladenen Gruppe, zum Beispiel einer quartären Ammoniumgruppe, substituierte Benzylengruppe, und/oder eine Ketongruppe, beispielsweise Alkylcarbonylgruppe, stehen. Insbesondere kann der Spacer X ein gesättigter Alkylspacer mit einer Kettenlänge von ≥ 1 bis ≤ 15 Kohlenstoffatomen, beispielsweise von ≥ 3 bis ≤ 5 Kohlenstoffatomen, sein.

R50, R51, R51', R52, R52', R53, R53', R54 und/oder R54' können dabei beispielsweise jeweils unabhängig voneinander für Wasserstoff oder eine, insbesondere gesättigte oder ungesättigte, lineare oder verzweigte, beispielsweise teilweise oder vollständig halogenierte, insbesondere fluorierte, Alkylgruppe, beispielsweise der allgemeinen chemischen Formel: -(CH₂)_{a1*}-CH₃ mit 0 ≤ oder 1 ≤ oder 2 ≤ a1* ≤ 15, zum Beispiel mit 0 ≤ oder 1 oder ≤ 2 ≤ a1* ≤ 4, und/oder eine, insbesondere gesättigte oder ungesättigte, lineare oder verzweigte, beispielsweise teilweise oder vollständig halogenierte, insbesondere fluorierte, Alkylenoxidgruppe, beispielsweise eine Ethylenoxidgruppe, insbesondere eine Oligo-Alkylenoxidgruppe, zum Beispiel eine Oligo-Ethylenoxidgruppe, insbesondere mit ≥ 1 bis ≤ 10 Wiederholungseinheiten, beispielsweise mit ≥ 1 oder ≥ 2 bis ≤ 5 Wiederholungseinheiten, und/oder eine weitere positiv geladene Gruppe, zum Beispiel eine Pyridiniumgruppe und/oder eine quartäre Ammoniumgruppe, und/oder eine Phenylengruppe, beispielsweise eine, mit mindestens einer Alkylgruppe und/oder einer Alkylenoxidgruppe und/oder einer Alkoxygruppe und/oder einer weiteren positiv geladenen Gruppe, zum Beispiel einer quartären Ammoniumgruppe, substituierte Phenylengruppe, und/oder eine Benzylengruppe, beispielsweise eine, mit mindestens einer Alkylgruppe und/oder einer Alkylenoxidgruppe und/oder einer Alkoxygruppe und/oder einer weiteren positiv geladenen Gruppe, zum Beispiel einer quartären Ammoniumgruppe, substituierte Benzylengruppe, und/oder eine Ketongruppe, beispielsweise Alkylcarbonylgruppe, stehen. Dabei können zum Beispiel zumindest zwei, insbesondere zumindest drei, der Reste R50, R51, R51', R52, R52', R53, R53', R54 und/oder R54', gegebenenfalls alle Reste R50, R51, R51', R52, R52', R53, R53', R54 und/oder R54', für unterschiedliche Gruppen, beispielsweise Alkylgruppen und/oder Oligo-Alkylenoxidgruppen, zum Beispiel mit unterschiedlicher Länge und/oder Substitution und/oder Sättigungsgrad und/oder Verzweigungsgrad und/oder Halogenierungsgrad, insbesondere Fluorierungsgrad, stehen. Insbesondere können R50, R51, R51', R52, R52', R53, R53', R54 und/oder R54' jeweils unabhängig voneinander für Wasserstoff oder eine Methylgruppe oder eine Alkylgruppe mit einer Kettenlänge von ≥ 2 bis ≤ 15 Kohlenstoffatomen, beispielsweise von ≥ 2 bis ≤ 4 Kohlenstoffatomen, stehen. R51, R51', R52, R52', R53, R53', R54 und/oder R54' können insbesondere für Wasserstoff stehen. R50 kann insbesondere für eine Methylgruppe oder eine Ethylgruppe stehen.

Im Rahmen einer weiteren, alternativen oder zusätzlichen Ausführungsform umfasst das Polymer beziehungsweise der Polymerelektrolyt beziehungsweise das mindestens eine Polymer, insbesondere des Kathodenmaterials, mindestens eine phosphoniumbasierte Wiederholungseinheit der allgemeinen chemischen Formel:

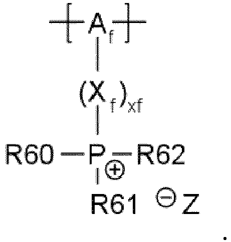

Dabei steht -[A_{f}]- für eine Polymerrücken bildende Einheit. (X_{f}) steht dabei für einen Spacer. xf steht dabei für die Anzahl, insbesondere das Vorhandensein beziehungsweise die Abwesenheit, des Spacers (X_{f}). Dabei kann xf insbesondere 1 oder 0, beispielsweise 1, sein. Die Polymerrücken bildende Einheit -[A_{f}]- kann beispielsweise wie im Zusammenhang mit der Polymerrücken bildenden Einheit -[A]- erläutert ausgestaltet sein. Die Spacer (X_{f}) kann beispielsweise wie im Zusammenhang mit dem Spacer X erläutert ausgestaltet sein. R60, R61 und/oder R62 können beispielsweise ebenfalls wie vorstehend erläutert ausgestaltet sein.

Z⁻ kann dabei insbesondere für Perchlorat und/oder Trifluormethansulfonat und/oder Tetrafluoroborat und/oder Bisoxalatoborat und/oder Hexafluorophosphat und/oder Bis(trifluormethansulfonyl)imid und/oder Difluorooxalatoborat und/oder Bromid und/oder lodid und/oder Chlorid stehen.

(X_{f}) kann dabei insbesondere für einen, insbesondere gesättigten oder ungesättigten, linearen oder verzweigten, beispielsweise teilweise oder vollständig halogenierten, insbesondere fluorierten, Alkylenspacer, beispielsweise der allgemeinen chemischen Formel: -(CH₂)ₐ₁- mit 1 ≤ a1 ≤ 15, zum Beispiel mit 2 ≤ a1 ≤ 8, und/oder einen, insbesondere gesättigten oder ungesättigten, linearen oder verzweigten, beispielsweise teilweise oder vollständig halogenierten, insbesondere fluorierten, Alkylenoxidspacer, insbesondere Ethylenoxidspacer, insbesondere mit ≥ 1 oder ≥ 2 bis ≤ 10 Wiederholungseinheiten, beispielsweise mit ≥ 1 oder ≥ 2 bis ≤ 4 Wiederholungseinheiten, zum Beispiel der allgemeinen chemischen Formel: - CH₂-[CH₂-CH₂-O]_{b1}-CH₂- mit 1 ≤ b1 ≤ 10, beispielsweise mit 2 ≤ b1 ≤ 4, und/oder der allgemeinen chemischen Formel: -[CH₂-CH₂-O-]_{b} mit 1 ≤ b ≤ 10, beispielsweise mit 2 ≤ b ≤ 4, und/oder eine weitere positiv geladene Gruppe, zum Beispiel eine Pyridiniumgruppe und/oder eine quartäre Ammoniumgruppe, und/oder eine Phenylengruppe, beispielsweise eine, mit mindestens einer Alkylgruppe und/oder einer Alkylenoxidgruppe und/oder einer Alkoxygruppe und/oder einer weiteren positiv geladenen Gruppe, zum Beispiel einer quartären Ammoniumgruppe, substituierte Phenylengruppe, und/oder eine Benzylengruppe, beispielsweise eine, mit mindestens einer Alkylgruppe und/oder einer Alkylenoxidgruppe und/oder einer Alkoxygruppe und/oder einer weiteren positiv geladenen Gruppe, zum Beispiel einer quartären Ammoniumgruppe, substituierte Benzylengruppe, und/oder eine Ketongruppe, beispielsweise Alkylcarbonylgruppe, stehen. Insbesondere kann der Spacer X ein gesättigter Alkylspacer mit einer Kettenlänge von ≥ 1 bis ≤ 16 Kohlenstoffatomen, beispielsweise von ≥ 3 bis ≤ 9 Kohlenstoffatomen, sein.

R60, R61 und R61 können dabei beispielsweise jeweils unabhängig voneinander für Wasserstoff oder eine, insbesondere gesättigte oder ungesättigte, lineare oder verzweigte, beispielsweise teilweise oder vollständig halogenierte, insbesondere fluorierte, Alkylgruppe, beispielsweise der allgemeinen chemischen Formel: -(CH₂)_{a1*}-CH₃ mit 0 ≤ oder 1 ≤ oder 2 ≤ a1* ≤ 15, zum Beispiel mit 0 ≤ oder 1 oder ≤ 2 ≤ a1* ≤ 4, und/oder eine, insbesondere gesättigte oder ungesättigte, lineare oder verzweigte, beispielsweise teilweise oder vollständig halogenierte, insbesondere fluorierte, Alkylenoxidgruppe, beispielsweise eine Ethylenoxidgruppe, insbesondere eine Oligo-Alkylenoxidgruppe, zum Beispiel eine Oligo-Ethylenoxidgruppe, insbesondere mit ≥ 1 bis ≤ 10 Wiederholungseinheiten, beispielsweise mit ≥ 1 oder ≥ 2 bis ≤ 5 Wiederholungseinheiten, und/oder eine weitere positiv geladene Gruppe, zum Beispiel eine Pyridiniumgruppe und/oder eine quartäre Ammoniumgruppe, und/oder eine Phenylengruppe, beispielsweise eine, mit mindestens einer Alkylgruppe und/oder einer Alkylenoxidgruppe und/oder einer Alkoxygruppe und/oder einer weiteren positiv geladenen Gruppe, zum Beispiel einer quartären Ammoniumgruppe, substituierte Phenylengruppe, und/oder eine Benzylengruppe, beispielsweise eine, mit mindestens einer Alkylgruppe und/oder einer Alkylenoxidgruppe und/oder einer Alkoxygruppe und/oder einer weiteren positiv geladenen Gruppe, zum Beispiel einer quartären Ammoniumgruppe, substituierte Benzylengruppe, und/oder eine Ketongruppe, beispielsweise Alkylcarbonylgruppe, stehen. Dabei können zum Beispiel zumindest zwei der Reste R60, R61 und R61, gegebenenfalls alle Reste R60, R61 und R61, für unterschiedliche Gruppen, beispielsweise Alkylgruppen und/oder Oligo-Alkylenoxidgruppen, zum Beispiel mit unterschiedlicher Länge und/oder Substitution und/oder Sättigungsgrad und/oder Verzweigungsgrad und/oder Halogenierungsgrad, insbesondere Fluorierungsgrad, stehen. Insbesondere können R60, R61 und R61 jeweils unabhängig voneinander für eine Alkylgruppe mit einer Kettenlänge von ≥ 1 bis ≤ 16 Kohlenstoffatomen, beispielsweise von ≥ 3 bis ≤ Kohlenstoffatomen, stehen.

Im Rahmen einer weiteren, alternativen oder zusätzlichen Ausführungsform umfasst das Polymer beziehungsweise der Polymerelektrolyt beziehungsweise das mindestens eine Polymer, insbesondere des Kathodenmaterials, mindestens eine, auf einem Benzolsulfonat basierende Wiederholungseinheit der allgemeinen chemischen Formel:

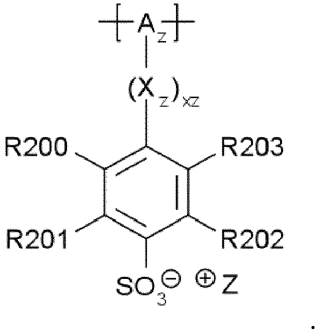

Dabei steht -[A_{Z}]- für eine Polymerrücken bildende Einheit. (X_{Z}) steht dabei für einen Spacer. xz steht dabei für die Anzahl, insbesondere das Vorhandensein beziehungsweise die Abwesenheit, des Spacers (X_{Z}). Dabei kann xz insbesondere 1 oder 0, beispielsweise 1, sein. Die Polymerrücken bildende Einheit -[A_{Z}]- kann beispielsweise wie im Zusammenhang mit der Polymerrücken bildenden Einheit -[A]- erläutert ausgestaltet sein. Die Spacer (X_{Z}) kann beispielsweise wie im Zusammenhang mit dem Spacer X erläutert ausgestaltet sein. R200, R201, R202 und/oder R203 können beispielsweise ebenfalls wie vorstehend erläutert ausgestaltet sein.

Z⁺ kann dabei insbesondere für ein Kation, insbesondere Metallkation, beispielsweise Alkaliion, zum Beispiel Lithiumion und/oder Natriumion, insbesondere Lithiumion (Li⁺), stehen.

(X_{Z}) kann dabei insbesondere für einen, insbesondere gesättigten oder ungesättigten, linearen oder verzweigten, beispielsweise teilweise oder vollständig halogenierten, insbesondere fluorierten, Alkylenspacer, beispielsweise der allgemeinen chemischen Formel: -(CH₂)ₐ₁- mit 1 ≤ a1 ≤ 15, zum Beispiel mit 1 ≤ a1 ≤ 3, und/oder einen, insbesondere gesättigten oder ungesättigten, linearen oder verzweigten, beispielsweise teilweise oder vollständig halogenierten, insbesondere fluorierten, Alkylenoxidspacer, insbesondere Ethylenoxidspacer, insbesondere mit ≥ 1 oder ≥ 2 bis ≤ 10 Wiederholungseinheiten, beispielsweise mit ≥ 1 oder ≥ 2 bis ≤ 4 Wiederholungseinheiten, zum Beispiel der allgemeinen chemischen Formel: - CH₂-[CH₂-CH₂-O]_{b1}-CH₂- mit 1 ≤ b1 ≤ 10, beispielsweise mit 2 ≤ b1 ≤ 4, und/oder der allgemeinen chemischen Formel: -[CH₂-CH₂-O-]_{b} mit 1 ≤ b ≤ 10, beispielsweise mit 2 ≤ b ≤ 4, und/oder -(CH₂)ₐ₂-O-[CH₂-CH₂-O-]_{b2}-(CH₂)ₐ₂- mit 1 ≤ a2 ≤ 3, 1 ≤ b2 ≤ 10, insbesondere 1 ≤ b2 ≤ 4, und 1 ≤ a2' ≤ 3, und/oder eine weitere Lithiumsulfonatgruppe und/oder eine Phenylengruppe, beispielsweise eine, mit mindestens einer Lithiumsulfonatgruppe substituierte Phenylengruppe (Phenylene-Sulfonat-Einheit), und/oder eine Benzylengruppe, beispielsweise eine, mit mindestens einer Lithiumsulfonatgruppe substituierte Benzylengruppe, und/oder eine Ketongruppe, beispielsweise Alkylcarbonylgruppe, und/oder einen Ethersauerstoff steht.

R200, R201, R202 und R203 können dabei beispielsweise jeweils unabhängig voneinander für Wasserstoff oder eine, insbesondere gesättigte oder ungesättigte, lineare oder verzweigte, beispielsweise teilweise oder vollständig halogenierte, insbesondere fluorierte, Alkylgruppe, beispielsweise der allgemeinen chemischen Formel: -(CH₂)_{a1*}-CH₃ mit 0 ≤ oder 1 ≤ a1* ≤ 15, zum Beispiel mit 1 ≤ a1* ≤ 2, und/oder eine, insbesondere gesättigte oder ungesättigte, lineare oder verzweigte, beispielsweise teilweise oder vollständig halogenierte, insbesondere fluorierte, Alkylenoxidgruppe, beispielsweise eine Ethylenoxidgruppe, insbesondere eine Oligo-Alkylenoxidgruppe, zum Beispiel eine Oligo-Ethylenoxidgruppe, insbesondere mit ≥ 1 bis ≤ 10 Wiederholungseinheiten, beispielsweise mit ≥ 1 oder ≥ 2 bis ≤ 5 Wiederholungseinheiten, und/oder eine weitere negative geladene Gruppe, beispielsweise Lithiumsulfonatgruppe, und/oder eine Phenylengruppe, beispielsweise eine, mit mindestens einer negativen Gruppe, beispielsweise Lithiumsulfonatgruppe, substituierte Phenylengruppe, und/oder eine Benzylengruppe, beispielsweise eine, mit mindestens einer negativen Gruppe, beispielsweise Lithiumsulfonatgruppe, substituierte Benzylengruppe, und/oder eine Ketongruppe, beispielsweise Alkylcarbonylgruppe, stehen. Dabei können zum Beispiel zumindest zwei der Reste R200, R201, R202 und R203, gegebenenfalls alle Reste R200, R201, R202 und R203, für unterschiedliche Gruppen, beispielsweise Alkylgruppen und/oder Oligo-Alkylenoxidgruppen, zum Beispiel mit unterschiedlicher Länge und/oder Substitution und/oder Sättigungsgrad und/oder Verzweigungsgrad und/oder Halogenierungsgrad, insbesondere Fluorierungsgrad, stehen. Insbesondere können R200, R201, R202 und R203 jeweils unabhängig voneinander für Wasserstoff oder eine Lithiumsulfonatgruppe oder eine, insbesondere mit mindestens einer Lithiumsulfonatgruppe substituierte, Alkylgruppe mit einer Kettenlänge von ≥ 1 bis ≤ 15 Kohlenstoffatomen, beispielsweise von ≥ 1 bis ≤ 2 Kohlenstoffatomen, beispielsweise der allgemeinen chemischen Formel: -(CH₂)ₛ₁SO₃Li mit 0 ≤ s1 ≤ 15, beispielsweise mit 0 ≤ s1 ≤ 2, stehen. Insbesondere können R200, R201, R202 und R203 jeweils unabhängig voneinander für Wasserstoff, eine, insbesondere gesättigte, beispielsweise teilweise oder vollständig, sulfonierte und/oder halogenierte, insbesondere fluorierte, Alkylgruppe mit einer Kettenlänge von ≥ 1 bis ≤ 16 Kohlenstoffatomen, beispielsweise von ≥ 1 oder ≥ 2 bis ≤ 4 Kohlenstoffatomen, und/oder eine, beispielsweise teilweise oder vollständig, sulfonierte und/oder halogenierte, insbesondere fluorierte, Alkylenoxidgruppe, insbesondere eine Oligo-Alkylenoxidgruppe, zum Beispiel eine Oligo-Ethylenoxidgruppe, stehen.

Insbesondere können R200, R201, R202 und/oder R203 mit mindestens einer Sulfonatgruppe, insbesondere Lithiumsulfonatgruppe, substituiert sein.

Im Rahmen einer weiteren, alternativen oder zusätzlichen Ausführungsform umfasst das Polymer beziehungsweise der Polymerelektrolyt beziehungsweise das mindestens eine Polymer, insbesondere des Kathodenmaterials, mindestens eine, auf einem Trifluormethansulfonylimid-Benzol-Gruppe basierende Wiederholungseinheit der allgemeinen chemischen Formel: 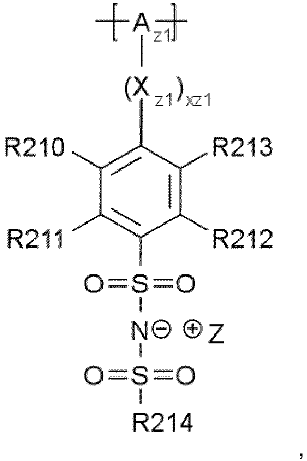 beispielsweise

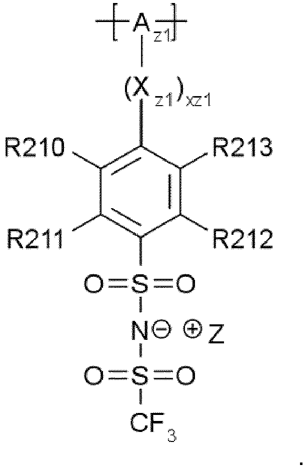

Dabei steht -[A_{Z1}]- für eine Polymerrücken bildende Einheit. (X_{Z1}) steht dabei für einen Spacer. xzl steht dabei für die Anzahl, insbesondere das Vorhandensein beziehungsweise die Abwesenheit, des Spacers (X_{Z1}). Dabei kann xz1 insbesondere 1 oder 0, beispielsweise 1, sein. Die Polymerrücken bildende Einheit -[A_{Z1}]- kann beispielsweise wie im Zusammenhang mit der Polymerrücken bildenden Einheit -[A]- erläutert ausgestaltet sein. Die Spacer (X_{Z1}) kann beispielsweise wie im Zusammenhang mit dem Spacer X erläutert ausgestaltet sein. R210, R211, R212, 213 und/oder R214 können beispielsweise ebenfalls wie vorstehend erläutert ausgestaltet sein.

Z⁺ kann dabei insbesondere für ein Kation, insbesondere Metallkation, beispielsweise Alkaliion, zum Beispiel Lithiumion und/oder Natriumion, insbesondere Lithiumion (Li⁺), stehen.

(X_{Z1}) kann dabei insbesondere für einen, insbesondere gesättigten oder ungesättigten, linearen oder verzweigten, beispielsweise teilweise oder vollständig halogenierten, insbesondere fluorierten, Alkylenspacer, beispielsweise der allgemeinen chemischen Formel: -(CH₂)ₐ₁- mit 1 ≤ a1 ≤ 15, zum Beispiel mit 1 ≤ a1 ≤ 3, und/oder einen, insbesondere gesättigten oder ungesättigten, linearen oder verzweigten, beispielsweise teilweise oder vollständig halogenierten, insbesondere fluorierten, Alkylenoxidspacer, insbesondere Ethylenoxidspacer, insbesondere mit ≥ 1 oder ≥ 2 bis ≤ 10 Wiederholungseinheiten, beispielsweise mit ≥ 1 oder ≥ 2 bis ≤ 4 Wiederholungseinheiten, zum Beispiel der allgemeinen chemischen Formel: - CH₂-[CH₂-CH₂-O]_{b1}-CH₂- mit 1 ≤ b1 ≤ 10, beispielsweise mit 2 ≤ b1 ≤ 4, und/oder der allgemeinen chemischen Formel: -[CH₂-CH₂-O-]_{b} mit 1 ≤ b ≤ 10, beispielsweise mit 2 ≤ b ≤ 4, und/oder -(CH₂)ₐ₂-O-[CH₂-CH₂-O-]_{b2}-(CH₂)ₐ₂- mit 1 ≤ a2 ≤ 3, 1 ≤ b2 ≤ 10, insbesondere 1 ≤ b2 ≤ 4, und 1 ≤ a2' ≤ 3, und/oder eine weitere Lithium-Trifluormethansulfonylimid-Benzol-Gruppe und/oder eine Phenylengruppe, beispielsweise eine, mit mindestens einer Lithium-Trifluormethansulfonylimid-Benzol-Gruppe substituierte Phenylengruppe (Phenylene-Bis(trifluormethansulfonyl)imid-Benzol-Einheit), und/oder eine Benzylengruppe, beispielsweise eine, mit mindestens einer Lithium-Trifluormethansulfonylimid-Benzol-Gruppe substituierte Benzylengruppe, und/oder eine Ketongruppe, beispielsweise Alkylcarbonylgruppe, und/oder einen Ethersauerstoff steht.

R210, R211, R212, 213 und R214 können dabei beispielsweise jeweils unabhängig voneinander für Wasserstoff oder eine, insbesondere gesättigte oder ungesättigte, lineare oder verzweigte, beispielsweise teilweise oder vollständig halogenierte, insbesondere fluorierte, Alkylgruppe, beispielsweise der allgemeinen chemischen Formel: -(CH₂)_{a1*}-CH₃ mit 0 ≤ oder 1 ≤ a1* ≤ 15, zum Beispiel mit 1 ≤ a1* ≤ 2, und/oder eine, insbesondere gesättigte oder ungesättigte, lineare oder verzweigte, beispielsweise teilweise oder vollständig halogenierte, insbesondere fluorierte, Alkylenoxidgruppe, beispielsweise eine Ethylenoxidgruppe, insbesondere eine Oligo-Alkylenoxidgruppe, zum Beispiel eine Oligo-Ethylenoxidgruppe, insbesondere mit ≥ 1 bis ≤ 10 Wiederholungseinheiten, beispielsweise mit ≥ 1 oder ≥ 2 bis ≤ 5 Wiederholungseinheiten, und/oder eine weitere Lithium-Trifluormethansulfonylimid-Benzol-Gruppe und/oder eine Phenylengruppe, beispielsweise eine, mit mindestens einer Lithium-Trifluormethansulfonylimid-Benzol-Gruppe substituierte Phenylengruppe, und/oder eine Benzylengruppe, beispielsweise eine, mit mindestens einer Lithium-Trifluormethansulfonylimid-Benzol-Gruppe substituierte Benzylengruppe, und/oder eine Ketongruppe, beispielsweise Alkylcarbonylgruppe, stehen. Dabei können zum Beispiel zumindest zwei der Reste R210, R211, R212, 213 und R214, gegebenenfalls alle Reste R210, R211, R212, 213 und R214, für unterschiedliche Gruppen, beispielsweise Alkylgruppen und/oder Oligo-Alkylenoxidgruppen, zum Beispiel mit unterschiedlicher Länge und/oder Substitution und/oder Sättigungsgrad und/oder Verzweigungsgrad und/oder Halogenierungsgrad, insbesondere Fluorierungsgrad, stehen. Insbesondere können R210, R211, R212, 213 und R214 jeweils unabhängig voneinander für Wasserstoff oder eine Lithium-Trifluormethansulfonylimid-Benzol-Gruppe oder eine, insbesondere mit mindestens einer Lithium-Trifluormethansulfonylimid-Benzol-Gruppe substituierte, Alkylgruppe mit einer Kettenlänge von ≥ 1 bis ≤ 15 Kohlenstoffatomen, beispielsweise von ≥ 1 bis ≤ 2 Kohlenstoffatomen, beispielsweise der allgemeinen chemischen Formel: -(CH₂)ₛ₂-SO₂NSO₂CF₃Li mit 0 ≤ s2 ≤ 15, beispielsweise mit 0 ≤ s2 ≤ 2, stehen. Insbesondere können R210, R211, R212, 213 und R214 jeweils unabhängig voneinander für Wasserstoff, eine, insbesondere gesättigte, beispielsweise teilweise oder vollständig, Bis(trifluormethansulfonyl)imid-substituierte und/oder halogenierte, insbesondere fluorierte, Alkylgruppe mit einer Kettenlänge von ≥ 1 bis ≤ 16 Kohlenstoffatomen, beispielsweise von ≥ 1 oder ≥ 2 bis ≤ 4 Kohlenstoffatomen, und/oder eine, beispielsweise teilweise oder vollständig, Bis(trifluormethansulfonyl)imid-substituierte und/oder halogenierte, insbesondere fluorierte, Alkylenoxidgruppe, insbesondere eine Oligo-Alkylenoxidgruppe, zum Beispiel eine Oligo-Ethylenoxidgruppe, stehen.

Insbesondere können R210, R211, R212, 213 und/oder R214 in Form einer weiteren Sulfonylimidgruppe, beispielsweise Trifluormethansulfonylimid-Gruppe, insbesondere Lithium-Trifluormethansulfonylimid-Gruppe, ausgeführt sein.

Insbesondere kann der Polymerrücken -[A_{z}]- beziehungsweise -[A_{z1}]- für eine Phenylen-Einheit, insbesondere eines Polyphenylens, beispielsweise eines *para-*Polyphenylens, beispielsweise mit Etherfunktion, zum Beispiel der allgemeinen chemischen Formel: 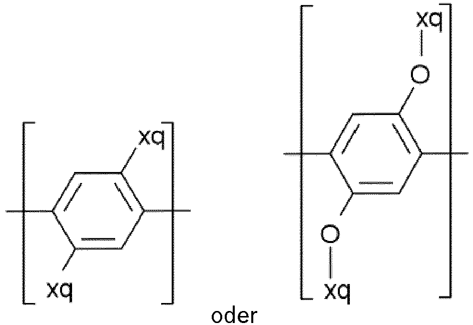 stehen, insbesondere wobei xq die Anbindungsstelle/n kennzeichnet beziehungsweise für XQ steht.

Dabei kann das Polymer beispielsweise mindestens eine, beispielsweise unsubstituierte, weitere Phenylen-Einheit und/oder mindestens eine, mit mindestens einer Lithiumsulfonatgruppe substituierte, weitere Phenylen-Einheit umfassen. Zum Beispiel kann der Polymerrücken -[A_{z}]- beziehungsweise -[A_{z1}]-für eine Phenylen-Einheit der allgemeinen chemischen Formel: 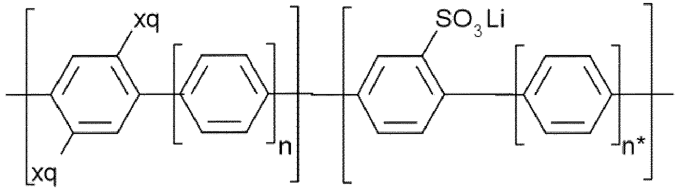 stehen, wobei n und n* für die Wiederholungszahlen der unsubstituierten Phenylen-Einheit stehen und beispielsweise dabei 0 ≤ n ≤ 3 und 0 ≤ n* ≤ 3 sind, insbesondere wobei xq die Anbindungsstelle/n kennzeichnet beziehungsweise für XQ steht.

Im Rahmen einer weiteren, alternativen oder zusätzlichen, speziellen Ausgestaltung umfasst beziehungsweise basiert das Polymer, insbesondere die mindestens eine erste Wiederholungseinheit -[A₁]-, auf einer, auf einem einfach oder mehrfach, sulfonierten Polyphenylen basierenden Wiederholungseinheit der allgemeinen chemischen Formel:

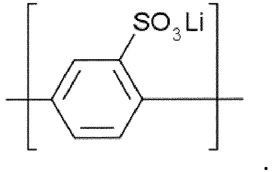

Im Rahmen einer weiteren Ausführungsform umfasst das Polymer beziehungsweise der Polymerelektrolyt beziehungsweise das mindestens eine Polymer, insbesondere des Kathodenmaterials, mindestens eine Wiederholungseinheit der allgemeinen chemischen Formel: 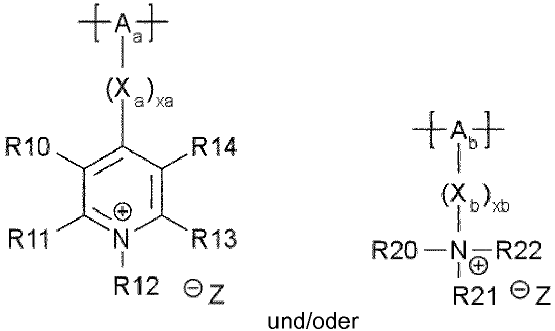 und/oder 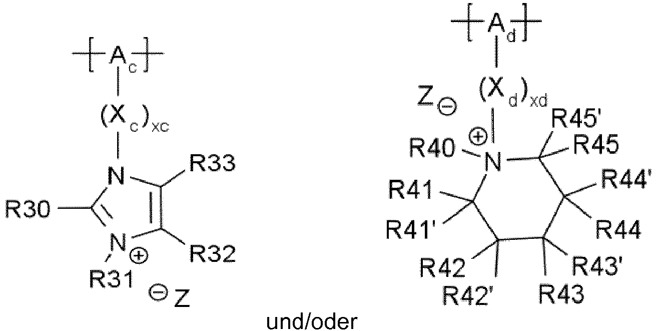 und/oder 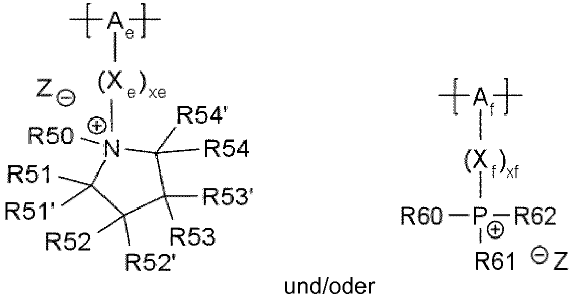 und/oder 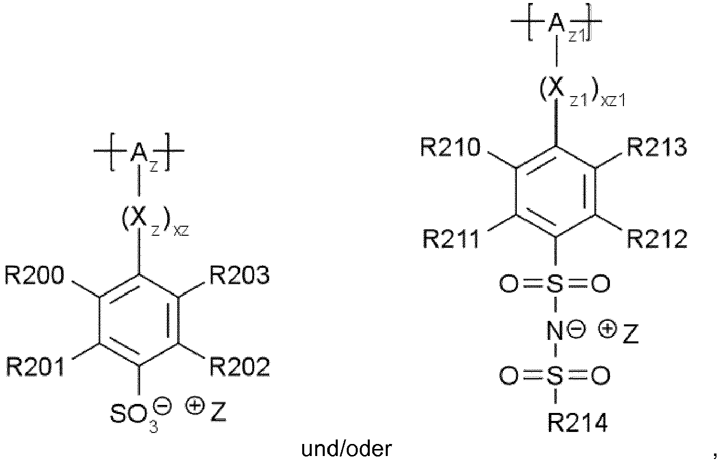 beispielsweise 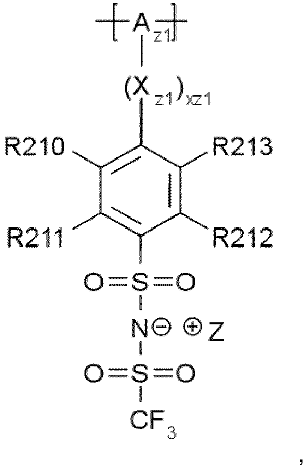 und/oder 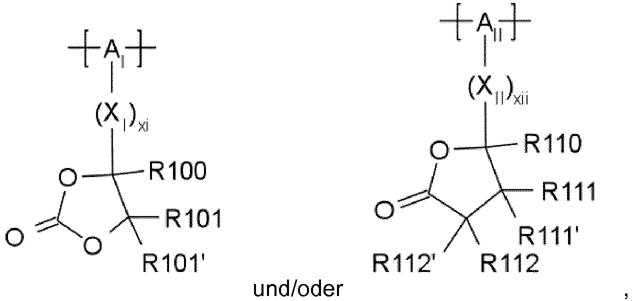 beispielsweise 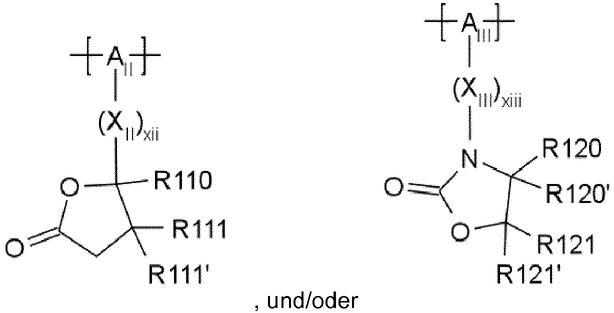 und/oder 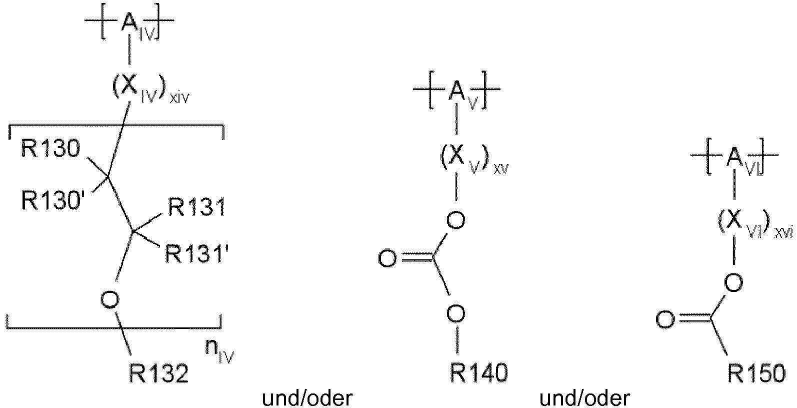 und/oder 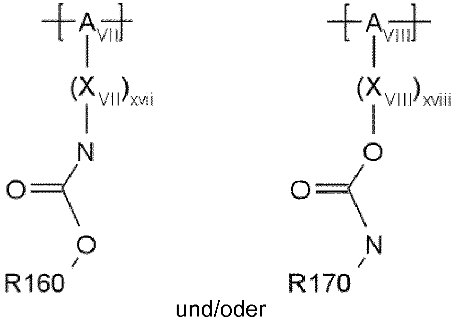 und/oder

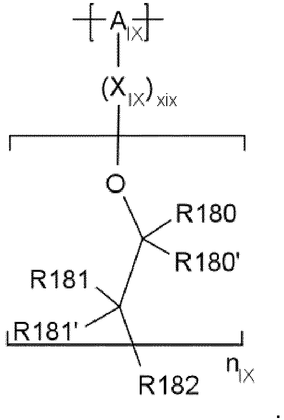

Dabei steht -[A_{I}]-, -[A_{II}]-, -[A_{III}]-, -[A_{IV}]-, -[A_{V}]-, -[A_{VI}]-, -[A_{VII}]-, -[A_{VIII}]-, -[A_{IX}]-, -[Aₐ]-, - [A_{b}]-, -[A_{c}]-, -[A_{d}]-, -[Aₑ]-, -[A_{f}]-, -[A_{Z1}]- beziehungsweise -[A_{Z1}]- insbesondere für eine Polymerrücken bildende Einheit. (X_{I}), (X_{II}), (X_{III}), (X_{IV}), (X_{V}), (X_{VI}), (X_{VII}), (X_{VIII}), (X_{IX}), (Xₐ), (X_{b}), (X_{c}), (X_{d}), (Xₑ), (X_{f}), (X_{Z}) beziehungsweise (X_{Z1}) steht dabei insbesondere für einen Spacer. xi, xii, xiii, xiv, xv, xvi, xvii, xviii, xix, xa, xb, xc, xd, xe, xf beziehungsweise xz steht dabei für die Anzahl, insbesondere das Vorhandensein beziehungsweise die Abwesenheit, des (jeweiligen) Spacers. Insbesondere kann dabei xi, xii, xiii, xiv, xv, xvi, xvii, xviii, xix, xa, xb, xc, xd, xe, xf beziehungsweise xz 1 oder 0, beispielsweise 1, sein. Dabei steht n_{IV} für die Anzahl der Ethylenoxideinheiten und ist insbesondere 1 ≤ n_{IV} ≤ 15, beispielsweise 2 ≤ n_{IV} ≤ 6. Dabei steht n_{IX} für die Anzahl der Ethylenoxideinheiten und ist insbesondere 1 ≤ n_{IX} ≤ 15, beispielsweise 2 ≤ n_{IX} ≤ 6.

Die Polymerrücken bildende Einheit -[A_{I}]-, -[A_{II}]-, -[A_{III}]-, -[A_{IV}]-, -[A_{V}]-, -[A_{VI}]-, - [A_{VII}]-, -[A_{VIII}]-, -[A_{IX}]-, -[Aₐ]-, -[A_{b}]-, -[A_{c}]-, -[A_{d}]-, -[Aₑ]-, -[A_{f}]-, -[A_{Z}]-beziehungsweise -[A_{Z1}]- kann beispielsweise wie im Zusammenhang mit der Polymerrücken bildenden Einheit -[A]- erläutert ausgestaltet sein. Der Spacer (X_{I}), (X_{II}), (X_{III}), (X_{IV}), (X_{V}), (X_{VI}), (X_{VII}), (X_{VIII}), (X_{IX}), (Xₐ), (X_{b}), (X_{c}), (X_{d}), (Xₑ), (X_{f}), (X_{Z}) beziehungsweise (X_{Z1}) kann beispielsweise wie im Zusammenhang mit dem Spacer X erläutert ausgestaltet sein. R10, R11, R12, R13, R14, R20, R21 R22, R30, R31, R32, R33, R40, R41, R41', R42, R42', R43, R43', R44, R44', R45, R45', R50, R51, R51', R52, R52', R53, R53', R54, R54', R60, R61, R62, R100, R101, R101', R110, R111, R111', R112, R112', R120, R120', R121, R121', R130, R130', R131, R131', R132, R140, R150, R160, R170, R180, R180' R181, R181', R182, R200, R201, R202, R203, R210, R211, R212, 213 und/oder R214 können beispielsweise ebenfalls wie vorstehend erläutert ausgestaltet sein.

Der Spacer (X_{I}), (X_{II}), (X_{III}), (X_{IV}), (X_{V}), (X_{VI}), (X_{VII}), (X_{VIII}), (X_{IX}), (Xₐ), (X_{b}), (X_{c}), (X_{d}), (Xₑ), (X_{f}), (X_{Z}) beziehungsweise (X_{Z1}) kann insbesondere - wie im Zusammenhang mit dem Spacer X erläutert - mindestens eine Alkylenoxidgruppe, beispielsweise Ethylenoxid-Gruppe, insbesondere Oligo-Alkylenoxid-Gruppe, beispielsweise Oligo-Ethylenoxid-Gruppe, umfassen beziehungsweise ein Alkylenoxid-Spacer, beispielsweise Ethylenoxid-Spacer insbesondere Oligo-Alkylenoxid-Spacer, beispielsweise Oligo-Ethylenoxid-Spacer, sein.

Beispielsweise kann die Polymerrücken bildende Einheit -[A_{I}]-, -[A_{II}]-, -[A_{III}]-, - [A_{IV}]-, -[A_{V}]-, -[A_{VI}]-, -[A_{VII}]-, -[A_{VIII}]-, -[A_{IX}]-, -[Aₐ]-, -[A_{b}]-, -[A_{c}]-, -[A_{d}]-, -[Aₑ]-, -[A_{f}]-, - [A_{Z}]- beziehungsweise -[A_{Z1}]- (zumindest) für eine Alkylenoxid-Einheit, insbesondere eine Ethylenoxid-Einheit und/oder Propylenoxid-Einheit, und/oder eine Alkylen-Einheit und/oder eine, eine Carbonatgruppe umfassende Einheit und/oder eine Methacrylat-Einheit und/oder eine Methylmethacrylat-Einheit und/oder eine Siloxan-Einheit und/oder eine Phosphazen-Einheit und/oder eine Phenylen-Einheit stehen. Zum Beispiel kann die Polymerrücken bildende Einheit -[A_{I}]-, -[A_{II}]-, -[A_{III}]-, -[A_{IV}]-, -[A_{V}]-, -[A_{VI}]-, -[A_{VII}]-, -[A_{VIII}]-, -[A_{IX}]-, -[Aₐ]-, -[A_{b}]-, -[A_{c}]-, - [A_{d}]-, -[Aₑ]-, -[A_{f}]-, -[A_{Z}]- beziehungsweise -[A_{Z1}]- (zumindest) für eine Siloxan-Einheit und/oder eine Phosphazen-Einheit und/oder eine Methacrylat-Einheit und/oder eine Methylmethacrylat-Einheit und/oder eine Phenylen-Einheit stehen.

Insbesondere kann die Polymerrücken bildende Einheit -[A_{I}]-, -[A_{II}]-, -[A_{III}]-, -[A_{IV}]-, -[A_{V}]-, -[A_{VI}]-, -[A_{VII}]-, -[A_{VIII}]-, -[A_{IX}]-, -[AJ-, -[A_{b}]-, -[A_{c}]-, -[A_{d}]-, -[Aₑ]-, -[A_{f}]-, -[A_{Z}]-beziehungsweise -[A_{Z1}]- (zumindest) für eine Siloxan-Einheit und/oder eine Phosphazen-Einheit und/oder eine Methacrylat-Einheit und/oder eine Methylmethacrylat-Einheit stehen.

R10, R11, R13 und/oder R14 beziehungsweise R30, R32 und/oder R33 beziehungsweise R41, R41', R42, R42', R43, R43', R44, R44', R45 und/oder R45' beziehungsweise R51, R51', R52, R52', R53, R53', R54 und/oder R54' beziehungsweise R200, R201, R202 und/oder R203 beziehungsweise R210, R211, R212, 213 und/oder R214 beziehungsweise R100, R101 und/oder R101' beziehungsweise R110, R111, R111', R112 und/oder R112' beziehungsweise R120, R120', R121 und/oder R121' beziehungsweise R130, R130', R131 und/oder R131' beziehungsweise R150 beziehungsweise R180, R180' R181, R181' und/oder R182 können insbesondere jeweils unabhängig voneinander für Wasserstoff und/oder ein Halogenatom, insbesondere Fluor, und/oder eine Alkylgruppe und/oder eine Alkylenoxidgruppe, insbesondere Oligo-Alkylenoxidgruppe, und/oder eine Alkoxygruppe und/oder eine Phenylenoxidgruppe, insbesondere Oligo-Phenylenoxidgruppe, und/oder eine Phenoxygruppe und/oder eine Phenylengruppe, insbesondere Oligo-Phenylengruppe, und/oder eine Phenylgruppe und/oder eine Benzylengruppe, insbesondere Oligo-Benzylengruppe, und/oder eine Benzylgruppe und/oder eine Carbonylgruppe und/oder eine, insbesondere cyclische und/oder acyclische, Carbonatgruppe, und/oder eine, insbesondere cyclische und/oder acyclische, Carbonsäureestergruppe, insbesondere eine Lactongruppe, und/oder eine, insbesondere cyclische und/oder acyclische, Carbamatgruppe und/oder eine geladene Gruppe, beispielsweise eine positiv geladene Gruppe, insbesondere auf der Basis eines Kations einer ionischen Flüssigkeit, zum Beispiel eine quartäre Ammoniumgruppe und/oder eine quartäre Phosphoniumgruppe, und/oder eine negativ geladene Gruppe, insbesondere auf der Basis eines Leitsalzanions, insbesondere eines Lithium-Leitsalzanions, und/oder eines Anions einer ionischen Flüssigkeit, insbesondere eine Sulfonylimidgruppe, und/oder eine Sulfonatgruppe, beispielsweise eine Lithiumsulfonatgruppe und/oder eine Lithiumsulfonatgruppe, stehen.

R12 beziehungsweise R20, R21 und R22 beziehungsweise R31 beziehungsweise R40 beziehungsweise R50 beziehungsweise R60, R61 und R62 beziehungsweise R132 beziehungsweise R140 beziehungsweise R160 beziehungsweise R170 können insbesondere jeweils unabhängig voneinander für eine Alkylgruppe und/oder eine Alkylenoxidgruppe, insbesondere Oligo-Alkylenoxidgruppe, und/oder eine Alkoxygruppe und/oder eine Phenylenoxidgruppe, insbesondere Oligo-Phenylenoxidgruppe, und/oder eine Phenoxygruppe und/oder eine Phenylengruppe, insbesondere Oligo-Phenylengruppe, und/oder eine Phenylgruppe und/oder eine Benzylengruppe, insbesondere Oligo-Benzylengruppe, und/oder eine Benzylgruppe und/oder eine Carbonylgruppe und/oder eine, insbesondere cyclische und/oder acyclische, Carbonatgruppe und/oder eine, insbesondere cyclische und/oder acyclische, Carbonsäureestergruppe und/oder eine, insbesondere cyclische und/oder acyclische, Carbamatgruppe stehen.

Das Polymer beziehungsweise der Polymerelektrolyt beziehungsweise das mindestens eine Polymer, insbesondere des Kathodenmaterials, kann ein Co-Polymer, beispielsweise ein Block-Co-Polymer, zum Beispiel ein Multi-Block-Co-Polymer, und/oder ein alternierendes Co-Polymer und/oder ein statistisches Co-Polymer sein. Das Kathodenmaterial beziehungsweise der Polymerelektrolyt kann beispielsweise sowohl ein Homo-Polymer als auch mehrere HomoPolymere und/oder sowohl ein Co-Polymer als auch mehrere Co-Polymere, als auch eine Homo-Polymer-Co-Polymer-Mischung umfassen oder sein.

Gemäß einer nicht erfindungsgemäßen Ausführungsform ist das Polymer beziehungsweise der Polymerelektrolyt ein Homo-Polymer beziehungsweise umfasst das Kathodenmaterial mindestens ein Homo-Polymer, welches mindestens eine Wiederholungseinheit der allgemeinen chemischen Formel: 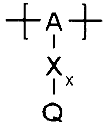 umfasst. A, X, x und Q können dabei wie vorstehend erläutert ausgestaltet sein. Insbesondere kann dabei das Homo-Polymer eine der vorstehend erläuterten speziellen Wiederholungseinheiten umfassen.

Im Rahmen einer erfindungsgemäßen Ausführungsform ist das Polymer beziehungsweise der Polymerelektrolyt ein Co-Polymer beziehungsweise umfasst das Kathodenmaterial mindestens ein Co-Polymer, beispielsweise ein Block-Co-Polymer, zum Beispiel ein Multi-Block-Co-Polymer, und/oder ein alternierendes Co-Polymer und/oder ein statistisches Co-Polymer, welches mindestens eine erste Wiederholungseinheit und mindestens eine zweite, von der mindestens einen ersten Wiederholungseinheit unterschiedliche Wiederholungseinheit umfasst, wobei die mindestens eine erste Wiederholungseinheit die allgemeine chemische Formel: 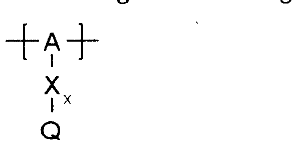 aufweist. A, X, x und Q können dabei wie vorstehend erläutert ausgestaltet sein. Beispielsweise kann dabei das Co-Polymer mindestens eine der vorstehend erläuterten speziellen Wiederholungseinheiten umfassen. Insbesondere kann die mindestens eine erste Wiederholungseinheit eine der vorstehend erläuterten speziellen Wiederholungseinheiten umfassen beziehungsweise sein.

Die mindestens eine zweite Wiederholungseinheit kann dabei beispielsweise eine beliebige Polymerrücken bildende Einheit sein. Beispielsweise kann die mindestens eine zweite Wiederholungseinheit eine Alkylenoxid-Einheit, beispielsweise eine perfluorierte Alkylenoxid-Einheit und/oder eine Perfluoropolyether-Einheit, und/oder eine Carbonat-Einheit und/oder eine Siloxan-Einheit und/oder eine Phosphazen-Einheit und/oder eine Methylmethacrylat-Einheit und/oder eine Methacrylat-Einheit und/oder eine Phenylen-Einheit und/oder eine Phenylenoxid-Einheit und/oder eine Benzylen-Einheit und/oder eine Alkylen-Einheit und/oder eine Styrol-Einheit umfassen oder sein. Insbesondere kann die mindestens eine zweite Wiederholungseinheit eine Alkylenoxid-Einheit und/oder eine Siloxan-Einheit und/oder eine Phosphazen-Einheit und/oder eine Methylmethacrylat-Einheit und/oder eine Methacrylat-Einheit, beispielsweise eine Phenylenoxid-Einheit, und/oder eine Alkylen-Einheit und/oder eine Phenylen-Einheit umfassen oder sein.

Gegebenenfalls kann die mindestens eine zweite Wiederholungseinheit keine Gruppe Q aufweisen und beispielsweise eine, insbesondere einfache, Alkylenoxid-Einheit, beispielsweise eine perfluorierte Alkylenoxid-Einheit und/oder eine Perfluoropolyether-Einheit, und/oder eine Carbonat-Einheit und/oder eine Siloxan-Einheit und/oder eine Phosphazen-Einheit und/oder eine Methylmethacrylat-Einheit und/oder eine Methacrylat-Einheit und/oder eine Phenylen-Einheit und/oder eine Phenylenoxid-Einheit und/oder eine Benzylen-Einheit und/oder eine Alkylen-Einheit, zum Beispiel eine Alkylenoxid-Einheit und/oder eine Phenylen-Einheit, oder eine sonstige Polymerrücken bildende Einheit, beispielsweise eine (Poly-)Styrol-Einheit, sein. (Poly-)phenylen-Einheiten und/oder (Poly-)Styrol-Einheiten, welche zu höheren Glasübergangstemperaturen führen können, können im Hinblick auf mechanische Eigenschaften vorteilhaft sein.

Die Polymerrücken bildende Einheit -[A]-, beispielsweise -[A_{I}]-, -[A_{II}]-, -[A_{III}]-, - [A_{IV}]-, -[A_{V}]-, -[A_{VI}]-, -[A_{VII}]-, -[A_{VIII}]-, -[A_{IX}]-, -[AJ-, -[A_{b}]-, -[A_{c}]-, -[A_{d}]-, -[Aₑ]-, -[A_{f}]-, - [A_{Z}]- beziehungsweise -[A_{Z1}]- ,der mindestens einen ersten Wiederholungseinheit und die Polymerrücken bildende Einheit der mindestens einen zweiten Wiederholungseinheit können gleichartig oder voneinander unterschiedlich sein und beispielsweise ausgewählt sein, aus der Gruppe der Alkylenoxid-Einheit/en, insbesondere Ethylenoxid-Einheit/en und/oder Propylenoxid-Einheit/en, und/oder, insbesondere organische, Carbonatgruppen umfassenden Einheit/en und/oder Siloxan-Einheit/en und/oder Phosphazen-Einheit/en und/oder Methylmethacrylat-Einheit/en und/oder Methacrylat-Einheit/en und/oder eine Phenylen-Einheit und/oder eine Phenylenoxid-Einheit/en und/oder eine Benzylen-Einheit/en und/oder eine Alkylen-Einheit/en.

Insbesondere kann die Polymerrücken bildende Einheit -[A]-, beispielsweise -[A_{I}]-, -[A_{II}]-, -[A_{III}]-, -[A_{IV}]-, -[A_{V}]-, -[A_{VI}]-, -[A_{VII}]-, -[A_{VIII}]-, -[A_{IX}]-, -[Aₐ]-, -[A_{b}]-, -[A_{c}]-, -[A_{d}]-, -[Aₑ]-, -[A_{f}]-, -[A_{Z}]- beziehungsweise -[A_{Z1}]-, der mindestens einen ersten Wiederholungseinheit und die Polymerrücken bildende Einheit der mindestens einen zweiten Wiederholungseinheit aus derselben Polymerklasse, beispielsweise aus den im Zusammenhang mit -[A]-, -[A_{I}]-, -[A_{II}]-, -[A_{III}]-, -[A_{IV}]-, - [A_{V}]-. -[A_{VI}]-, -[A_{VII}]-, -[A_{VIII}]-, -[A_{IX}]-, -[Aₐ]-, -[A_{b}]-, -[A_{c}]-, -[A_{d}]-, -[Aₑ]-, -[A_{f}]-, -[A_{Z}]-beziehungsweise -[A_{Z1}]- erläuterten Polymerklassen, zum Beispiel der Siloxan-Einheiten (aus der Klasse der Polysiloxane), ausgewählt sein. So kann vorteilhafterweise die Synthese vereinfacht werden. Gegebenenfalls können dabei die Polymerrücken bildende Einheit -[A]-, beispielsweise -[A_{I}]-, -[A_{II}]-, -[A_{III}]-, -[A_{IV}]-, -[A_{V}]-, -[A_{VI}]-, -[A_{VII}]-, -[A_{VIII}]-, -[A_{IX}]-, -[Aₐ]-, -[A_{b}]-, -[A_{c}]-, -[A_{d}]-, -[Aₑ]-, -[A_{f}]-, - [A_{Z}]- beziehungsweise -[A_{Z1}]-, der mindestens einen ersten Wiederholungseinheit und die Polymerrücken bildende Einheit der mindestens einen zweiten Wiederholungseinheit jedoch voneinander unterschiedlich funktionalisiert sein.

Beispielsweise können jedoch auch die Polymerrücken bildende Einheit -[A]-, beispielsweise -[A_{I}]-, -[A_{II}]-, -[A_{III}]-, -[A_{IV}]-, -[A_{V}]-, -[A_{VI}]-, -[A_{VII}]-, -[A_{VIII}]-, -[A_{IX}]-, -[Aₐ]-, -[A_{b}]-, -[A_{c}]-, -[A_{d}]-, -[Aₑ]-, -[A_{f}]-, -[A_{Z}]- beziehungsweise -[A_{Z1}]-, der mindestens einen ersten Wiederholungseinheit und die Polymerrücken bildende Einheit der mindestens einen zweiten Wiederholungseinheit aus unterschiedlichen Polymerklassen, beispielsweise aus den im Zusammenhang mit -[A]-, -[A_{I}]-, -[A_{II}]-, -[A_{III}]-, -[A_{IV}]-, -[A_{V}]-, -[A_{VI}]-, -[A_{VII}]-, -[A_{VIII}]-, -[A_{IX}]-, -[Aₐ]-, -[A_{b}]-, -[A_{c}]-, -[A_{d}]-, -[Aₑ]-, -[A_{f}]-, -[A_{Z}]- beziehungsweise -[A_{Z1}]- erläuterten Polymerklassen, zum Beispiel Siloxan-Einheiten (aus der Klasse der Polysiloxane) und der AlkylenoxidEinheiten (aus der Klasse der Polyalkylene beziehungsweise Polyether), ausgewählt sein und/oder sich durch unterschiedliche Funktionalisierungen, voneinander unterscheiden. So können vorteilhafterweise Polymerblöcke mit verschiedenen unter anderem mechanischen und/oder solvatisierenden und/oder elektrischen Eigenschaften realisiert werden, um so vorteilhafte Solvatationseigenschaften kombiniert mit hohen lonenleitfähigkeiten einzustellen.

Ein Beispiel hiefür ist das Siloxan-Ethylenoxid-Co-Polymer der allgemeinen chemischen Formel: 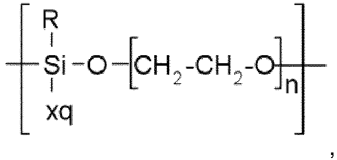 zum Beispiel 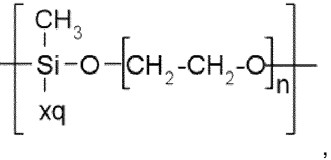 insbesondere wobei R für eine Alkylgruppe, zum Beispiel eine Methyl-, Ethyl- oder Propyl-Gruppe steht und wobei n für die Wiederholungszahl der Ethylenoxid-Einheit, beispielsweise 1 ≤ n ≤ 10, steht.

Die Polymerrücken bildende Einheit -[A]-, beispielsweise -[A_{I}]-, -[A_{II}]-, -[A_{III}]-, - [A_{V}]-. -[A_{V}]-, -[A_{VI}]-, -[A_{VII}]-, -[A_{VIII}]-, -[A_{IX}]-, -[Aₐ]-, -[A_{b}]-, -[A_{c}]-, -[A_{d}]-, -[Aₑ]-, -[A_{f}]-, - [A_{Z}]- beziehungsweise -[A_{Z1}]-, der mindestens einen ersten Wiederholungseinheit und die Polymerrücken bildende Einheit der mindestens einen zweiten Wiederholungseinheit können jedoch insbesondere aus derselben Polymerklasse, beispielsweise der Phenylen-Einheiten (Polyphenylene) beziehungsweise der Alkylen-Einheiten (Polyolefine), ausgewählt sein und sich durch unterschiedliche Funktionalisierungen beziehungsweise fehlende Funktionalisierungen, beispielsweise unterschiedliche Gruppen Q und/oder unterschiedliche Spacer, voneinander unterscheiden.

Beispiele hiefür sind das Phenylen-Phenylen-Co-Polymer der allgemeinen chemischen Formel: 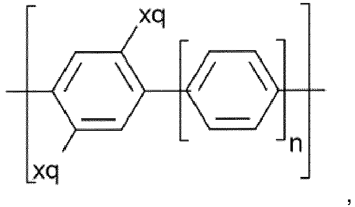 insbesondere wobei n für die Wiederholungszahl der Phenylen-Einheit der unsubstituierten Wiederholungseinheit, beispielsweise für 0 ≤ n ≤ 3, steht, und/oder
das Phenylen-Phenylen-Co-Polymer der allgemeinen chemischen Formel: 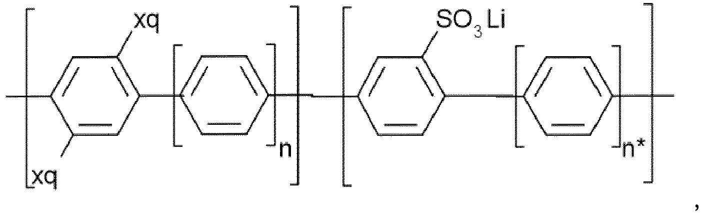 insbesondere wobei n und n* für die Wiederholungszahlen der unsubstituierten Phenylen-Einheiten stehen und beispielsweise dabei 0 ≤ n ≤ 3 und 0 ≤ n* ≤ 3 ist, und/oder das Alkylen-Alkylen-Co-Polymer der allgemeinen chemischen Formel:

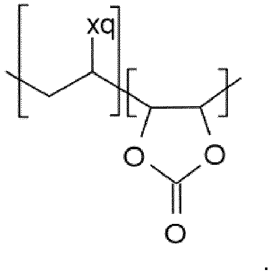

Zum Beispiel kann die mindestens eine zweite Wiederholungseinheit eine Polymerrücken bildendende Struktureinheit, beispielsweise ausgewählt aus der Gruppe der Siloxan-Einheit/en und/oder Phosphazen-Einheit/en und/oder Methylmethacrylat-Einheit/en und/oder Methacrylat-Einheit/en und/oder Phenylen-Einheit/en, zum Beispiel mit einer, eine Carbonatgruppe und/oder eine Alkylenoxidgruppe, beispielsweise Oligo-Alkylenoxid, enthaltenden Seitengruppe aufweisen. Dabei kann die, die Carbonatgruppe und/oder Alkylenoxidgruppe enthaltende Seitengruppe zum Beispiel an ein Atom der Polymerrücken bildenden Struktureinheit angebunden sein. Die, die Carbonatgruppe und/oder Alkylenoxidgruppe enthaltende Seitengruppe, insbesondere die Carbonatgruppe, kann jedoch auch cyclisch an zwei Atome der Polymerrücken bildenden Struktureinheit, angebunden sein. Der ausgebildete Polymerrücken kann dabei selbst Carbonatgruppen beziehungsweise Alyklenoxidgruppen umfassen, beispielsweise ein Polycarbonat beziehungsweise ein Polyalkylenoxid, sein oder auch Carbonatgruppen beziehungsweise Alyklenoxidgruppen frei sein.

Im Rahmen einer speziellen Ausgestaltung umfasst die mindestens eine zweite Wiederholungseinheit jedoch eine von der mindestens einen ersten Wiederholungseinheit unterschiedliche Wiederholungseinheit der allgemeinen chemischen Formel: 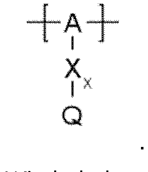 Beispielsweise kann die mindestens eine zweite Wiederholungseinheit eine der vorstehend erläuterten speziellen Wiederholungseinheiten umfassen beziehungsweise sein.

Beispielsweise können dabei die Polymerrücken bildende Einheit -[A]-, beispielsweise -[A_{I}]-, -[A_{II}]-, -[A_{III}]-, -[A_{IV}]-, -[A_{V}]-, -[A_{VI}]-, -[A_{VII}]-, -[A_{VIII}]-, -[A_{IX}]-, -[Aₐ]-, -[A_{b}]-, -[A_{c}]-, -[A_{d}]-, -[Aₑ]-, -[A_{f}]-, -[A_{Z}]- beziehungsweise -[A_{Z1}]-, der mindestens einen ersten Wiederholungseinheit und die Polymerrücken bildende Einheit -[A]-, beispielsweise -[A_{I}]-, -[A_{II}]-, -[A_{III}]-, -[A_{IV}]-, -[A_{V}]-, -[A_{VI}]-, -[A_{VII}]-, -[A_{VIII}]-, -[A_{IX}]-, -[Aₐ]-, -[A_{b}]-, -[A_{c}]-, -[A_{d}]-, -[Aₑ]-, -[A_{f}]-, -[A_{Z}]- beziehungsweise -[A_{Z1}]-, der mindestens einen zweiten Wiederholungseinheit aus unterschiedlichen Polymerklassen, beispielsweise der Siloxan-Einheiten (Polysiloxane) und der AlkylenoxidEinheiten (Polyalkylene, Polyether), ausgewählt sein und/oder sich durch unterschiedliche Funktionalisierungen, voneinander unterscheiden.

Die Polymerrücken bildende Einheit -[A]-, beispielsweise -[A_{I}]-, -[A_{II}]-, -[A_{III}]-, - [A_{V}]-. -[A_{V}]-, -[A_{VI}]-, -[A_{VII}]-, -[A_{VIII}]-, -[A_{IX}]-, -[Aₐ]-, -[A_{b}]-, -[A_{c}]-, -[A_{d}]-, -[Aₑ]-, -[A_{f}]-, - [A_{Z}]- beziehungsweise -[A_{Z1}]-, der mindestens einen ersten Wiederholungseinheit und die Polymerrücken bildende Einheit -[A]-, beispielsweise beispielsweise -[A_{I}]-, -[A_{II]}-, -[A_{III}]-, -[A_{IV}]-, -[A_{V}]-, -[A_{IV}]-, -[A_{VII}]-, -[A_{VIII}]-, -[A_{IX}]-, -[Aₐ]-, -[A_{b}]-, -[A_{c}]-, -[A_{d}]-, -[Aₑ]-, -[A_{f}]-, -[A_{Z}]- beziehungsweise -[A_{Z1}]-, der mindestens einen zweiten Wiederholungseinheit können jedoch insbesondere aus derselben Polymerklasse, beispielsweise der Siloxan-Einheit/en (Polysiloxane) und/oder Phosphazen-Einheit/en (Polyphosphazene) und/oder Methylmethacrylat-Einheit/en (Methylmethacrylate) und/oder Methacrylat-Einheit/en (Methacrylate) und/oder der Phenylen-Einheit/en (Polyphenylene) beziehungsweise der Alkylen-Einheiten (Polyolefine), ausgewählt sein und sich durch unterschiedliche Funktionalisierungen beziehungsweise fehlende Funktionalisierungen, beispielsweise unterschiedliche Gruppen Q und/oder unterschiedliche Spacer, voneinander unterscheiden.

Im Rahmen einer weiteren Ausführungsform ist das Polymer beziehungsweise der Polymerelektrolyt beziehungsweise umfasst das mindestens eine Polymer, insbesondere des Kathodenmaterials, mindestens ein Co-Polymer (P), beispielsweise ein Block-Co-Polymer, zum Beispiel ein Multi-Block-Co-Polymer, und/oder ein alternierendes Co-Polymer und/oder ein statistisches Co-Polymer, insbesondere ein Block-Co-Polymer, beispielsweise ein Kamm-Co-Polymer, der allgemeinen chemischen Formel: 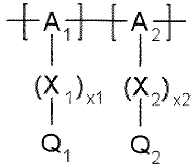 wobei die Wiederholungseinheit 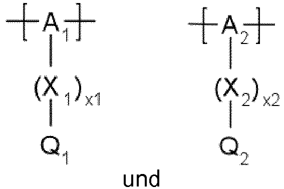 voneinander unterschiedliche Wiederholungseinheiten der allgemeinen chemischen Formel: 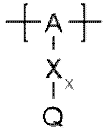 sind. Beispielsweise können dabei die Wiederholungseinheiten vorstehend erläuterte spezielle Wiederholungseinheiten umfassen beziehungsweise sein.

Im Rahmen einer Ausgestaltung dieser Ausführungsform umfassen dabei die Wiederholungseinheiten 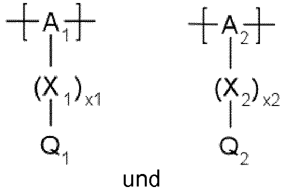 voneinander unterschiedliche Wiederholungseinheiten der allgemeinen chemischen Formel: 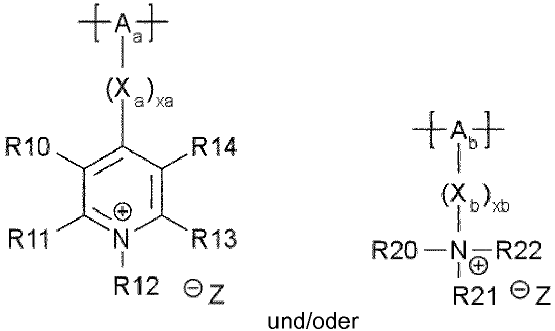 und/oder 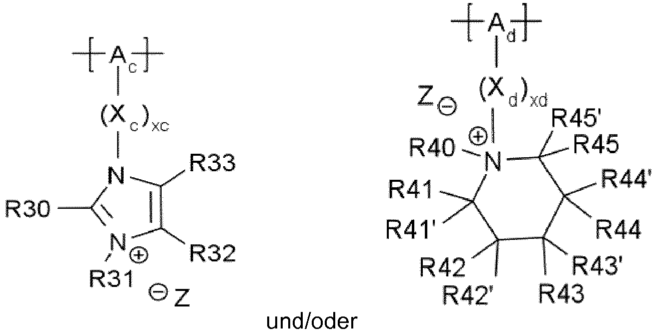 und/oder 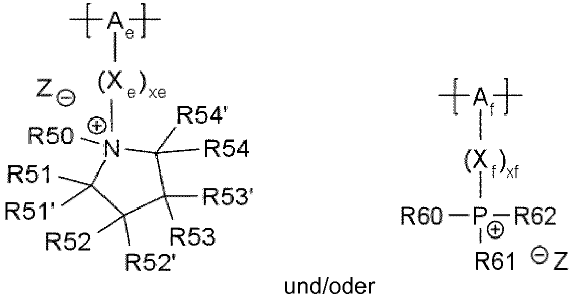 und/oder 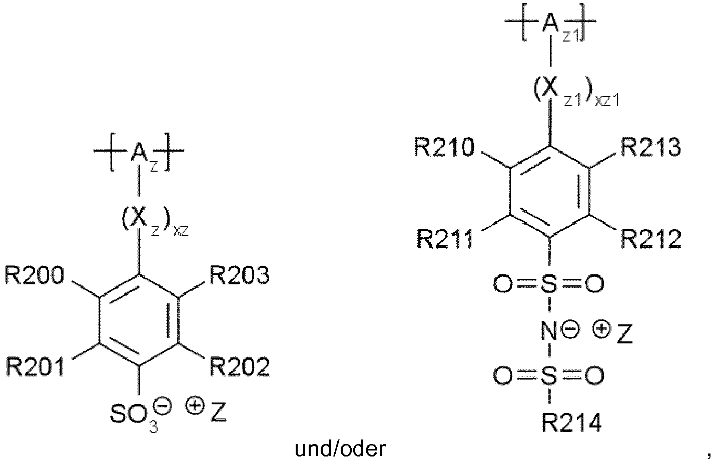 beispielsweise 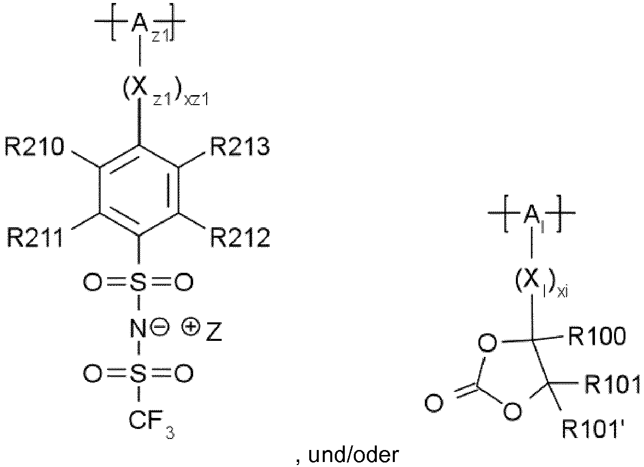 und/oder 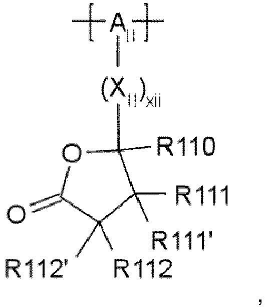 beispielsweise 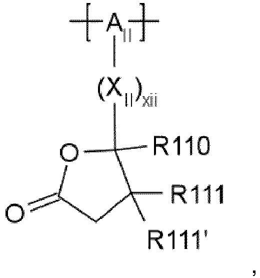 und/oder 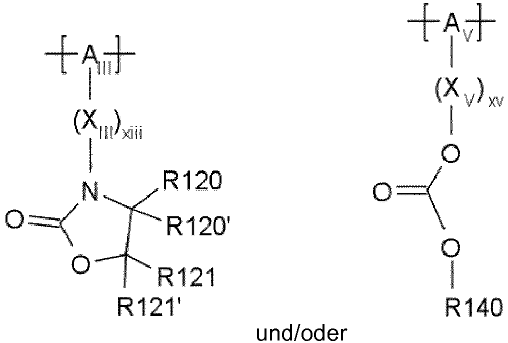 und/oder 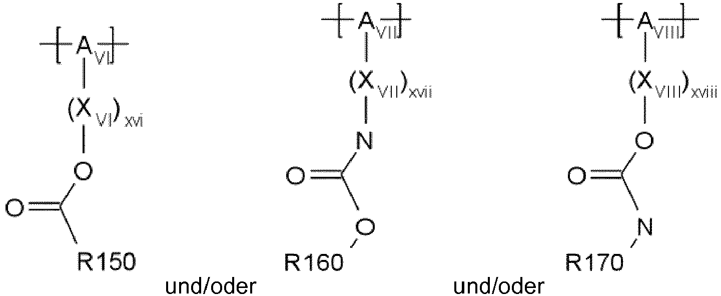 und/oder 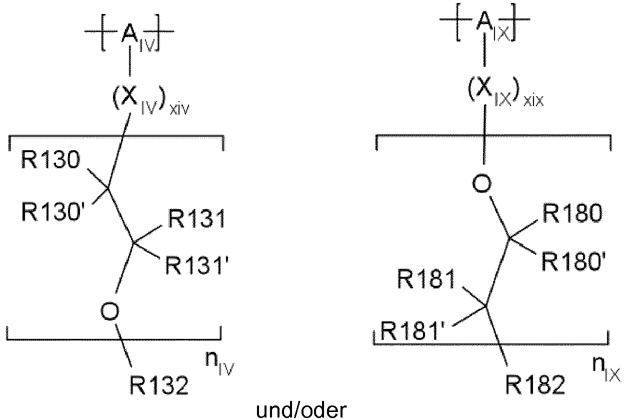 beziehungsweise stehen für mindestens eine Wiederholungseinheit der vorstehenden allgemeinen chemischen Formeln. Die Kombination von den vorstehenden Wiederholungseinheiten, kann - verglichen mit den entsprechenden Homopolymeren - zu einer Erhöhung der lonenleitfähigkeit, insbesondere Lithiumionenleitfähigkeit, gegebenenfalls in Mischung mit Lithiumsalz, führen. Das Molekulargewicht beziehungsweise die mittlere Anzahl an Wiederholungseinheiten der Polymere kann dabei eng mit der Glastemperatur des reinen Polymers zusammenhängen, welche die resultierenden Lithiumionenleitfähigkeit der Polymer/Salzmischung maßgeblich bestimmen kann.

Im Rahmen einer speziellen Ausgestaltung dieser Ausführungsform umfasst die mindestens eine erste Wiederholungseinheit, beispielsweise die Wiederholungseinheit: 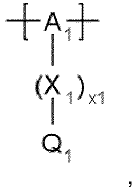 (mindestens) eine Wiederholungseinheit der allgemeinen chemischen Formel: 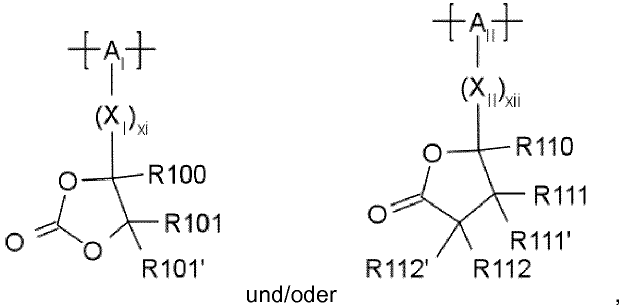 beispielsweise 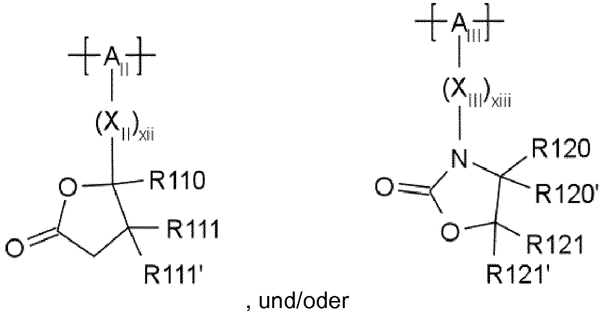 und/oder 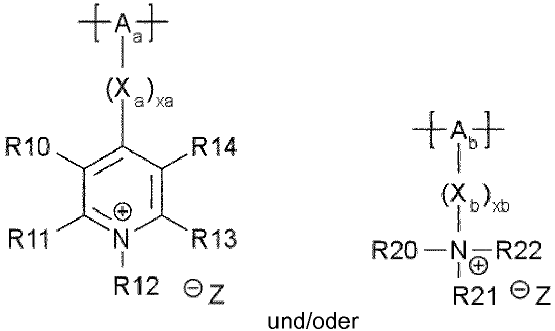 und/oder 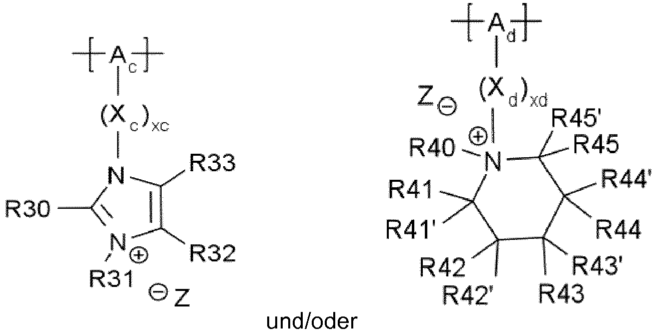 und/oder 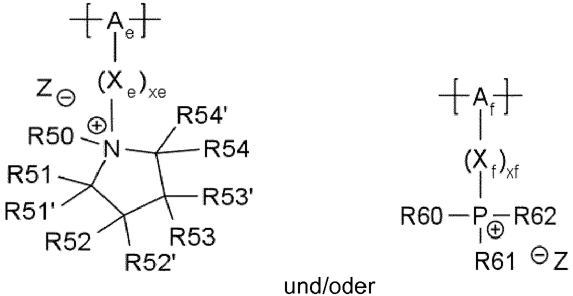 und/oder 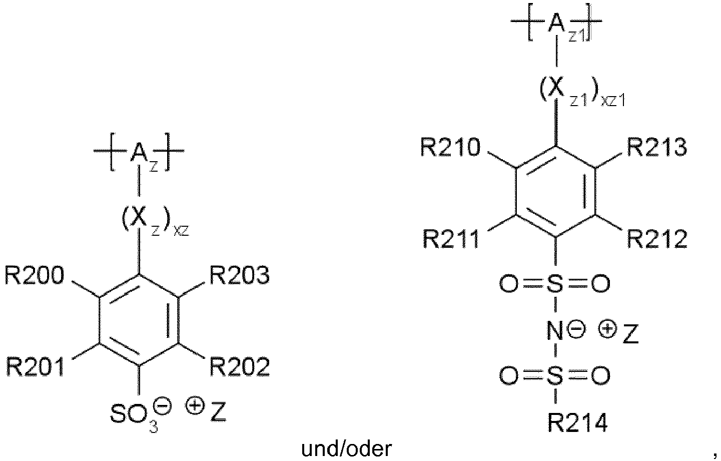 beispielsweise 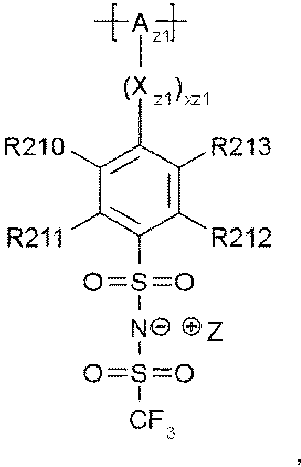 beziehungsweise steht dafür. Auch die Kombination von den vorstehenden Wiederholungseinheiten mit Wiederholungseinheiten die eine Oligo-Ethylenoxid-Funktion, zum Beispiel eine (Oligo-)Ethylenoxidgruppe mit 1 ≤ n_{IV} beziehungsweise n_{IX} ≤ 15, beispielsweise 2 ≤ n_{IV} beziehungsweise n_{IX} ≤ 6, Wiederholungseinheiten, tragen, kann - verglichen mit den entsprechenden Homopolymeren - zu einer Erhöhung der lonenleitfähigkeit, insbesondere Lithiumionenleitfähigkeit, gegebenenfalls in Mischung mit Lithiumsalz, führen.

Die mindestens eine zweite Wiederholungseinheit, beispielsweise die Wiederholungseinheit: 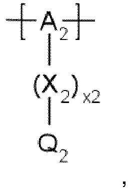 kann daher beispielsweise eine oder mehrere Wiederholungseinheiten die eine Oligo-Ethylenoxid-Funktion, zum Beispiel eine (Oligo-)Ethylenoxidgruppe mit 1 ≤ n ≤ 15, beispielsweise 2 ≤ n ≤ 6, Wiederholungseinheiten, tragen, umfassen beziehungsweise sein.

Im Rahmen einer weiteren, zusätzlichen oder alternativen, speziellen Ausgestaltung dieser Ausführungsform umfasst die mindestens eine zweite Wiederholungseinheit, beispielsweise die Wiederholungseinheit: 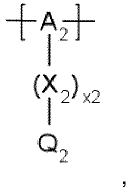 (mindestens) eine Wiederholungseinheit der allgemeinen chemischen Formel: 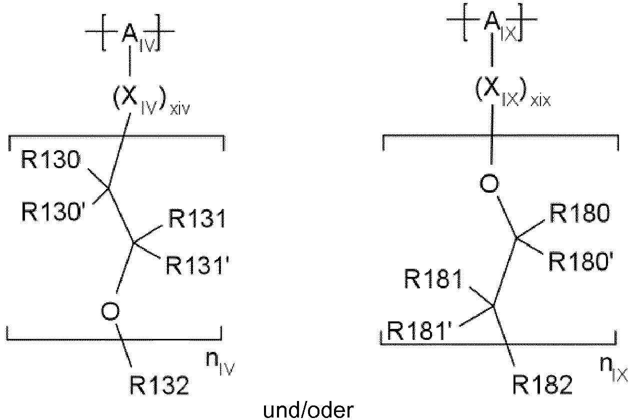 beziehungsweise steht dafür.

Um die Lösung von Polysulfiden möglichst gering zu halten, kann beispielsweise der Anteil an Ethylenoxideinheiten gering, beispielsweise möglichst gering, gehalten werden. Durch das Fluorieren der Ethylenoxideinheiten beziehungsweise auch von Polyethern, insbesondere von Polyethylenoxid und/oder Polypropylenoxid, kann die Polysulfidlöslichkeit jedoch zurückgedrängt werden. Insbesondere kann daher die mindestens eine zweite Widerholungseinheit perfluorierte Alkylenoxideinheiten, insbesondere perfluorierte Ethylenoxideinheiten, aufweisen beziehungsweise ein Perfluoropolyether sein. Beispielsweise könne die Gruppe R130-132 beziehungsweise R180-R182 perfluoriert sein und/oder für ein Fluoratom stehen.

Wie bereits erläutert, kann aus diesen Gründen auch der Spacer X, (X_{I}), (X_{II}), (X_{III}), (X_{IV}), (X_{V}), (X_{VI}), (X_{VII}), (X_{VIII}), (X_{IX}), (Xₐ), (X_{b}), (X_{c}), (X_{d}), (Xₑ), (X_{f}), (X_{Z}) beziehungsweise (X_{Z1}) und/oder die Polymerrücken bildende Einheit -[A]-, -[A_{I}]-, - [A_{II}]-, -[A_{III}]-, -[A_{IV}]-, -[A_{V}]-, -[A_{VI}]-, -[A_{VII}]-, -[A_{VIII}]-, -[A_{IX}]-, -[Aₐ]-, -[A_{b}]-, -[A_{c}]-, -[A_{d}]-, - [Aₑ]-, -[A_{f}]-, -[A_{Z}]- beziehungsweise -[A_{Z1}]- - und/oder die Gruppe Q beziehungsweise Q⁺ beziehungsweise Q⁻ - beziehungsweise die Gruppen mit R10-R213 perfluorierte Alkylenoxidgruppen, insbesondere perfluorierte Ethylenoxidgruppen und/oder perfluorierte Propylenoxidgruppen, beispielsweise perfluorierte Oligo-Alkylenoxidgruppen, beispielsweise perfluorierte Oligo-Ethylenoxidgruppen und/oder perfluorierte Oligo-Propylenoxidgruppen, aufweisen und/oder perfluoriert sein.

Im Rahmen einer speziellen Ausgestaltung umfasst beziehungsweise ist das Polymer beziehungsweise der Polymerelektrolyt beziehungsweise das mindestens eine Polymer, insbesondere des Kathodenmaterials, (mindestens) ein Co-Polymer (P), beispielsweise ein Block-Co-Polymer, zum Beispiel ein Multi-Block-Co-Polymer, und/oder ein alternierendes Co-Polymer und/oder ein statistisches Co-Polymer, insbesondere ein Block-Co-Polymer, beispielsweise ein Kamm-Co-Polymer, der allgemeinen chemischen Formel:

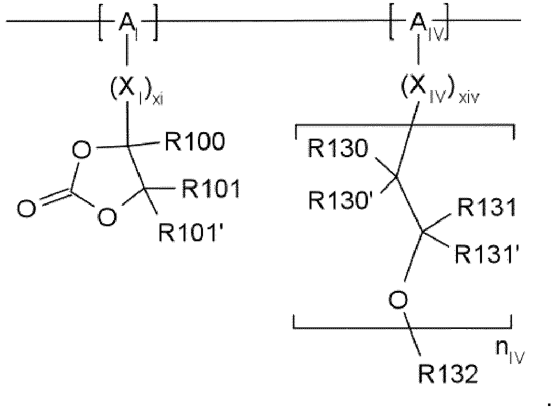

Beispielsweise kann das Polymer beziehungsweise der Polymerelektrolyt beziehungsweise das mindestens eine Polymer, insbesondere des Kathodenmaterials, auf einem Co-Polymer, beispielsweise einem Block-Co-Polymer, zum Beispiel einem Multi-Block-Co-Polymer, und/oder einem alternierenden Co-Polymer und/oder einem statistischen Co-Polymer, dieser allgemeinen chemischen Formel basieren beziehungsweise ein solches sein. Beispielsweise kann das Co-Polymer ein Block-Co-Polymer oder ein alternierendes Co-Polymer oder ein statistisches Co-Polymer, zum Beispiel ein Block-Co-Polymer oder ein alternierendes Co-Polymer, sein. Insbesondere kann das Co-Polymer dieser allgemeinen chemischen Formel ein Block-Co-Polymer sein. Durch ein derartiges Co-Polymer, beispielsweise Block-Co-Polymere, zum Beispiel Kamm-Co-Polymer, kann vorteilhafterweise eine vergleichsweise hohe Lithiumionenleitfähigkeit erzielt werden.

Zum Beispiel kann dabei das Polymer beziehungsweise der Polymerelektrolyt beziehungsweise das mindestens eine Polymer, insbesondere des Kathodenmaterials, ein Co-Polymer, beispielsweise ein Block-Co-Polymer, zum Beispiel ein Multi-Block-Co-Polymer, und/oder ein alternierendes Co-Polymer und/oder ein statistisches Co-Polymer, insbesondere ein Block-Co-Polymer, beispielsweise ein Kamm-Co-Polymer, der allgemeinen chemischen Formel: 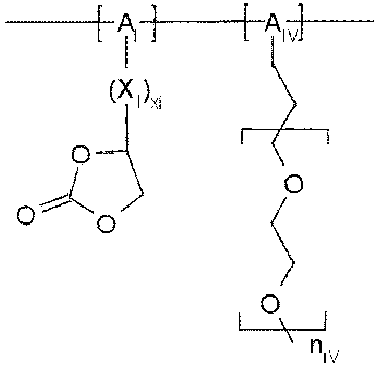 beziehungsweise 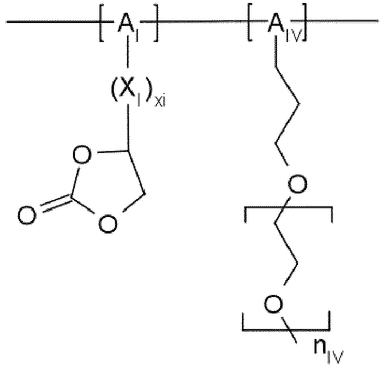 umfassen, beispielsweise darauf basieren, zum Beispiel sein.

Im Rahmen einer speziellen Ausgestaltung umfasst beziehungsweise ist das Polymer beziehungsweise der Polymerelektrolyt beziehungsweise das mindestens eine Polymer, insbesondere des Kathodenmaterials, (mindestens) ein Co-Polymer (P), beispielsweise ein Block-Co-Polymer, zum Beispiel ein Multi-Block-Co-Polymer, und/oder ein alternierendes Co-Polymer und/oder ein statistisches Co-Polymer, insbesondere ein Block-Co-Polymer, beispielsweise ein Kamm-Co-Polymer, der allgemeinen chemischen Formel:

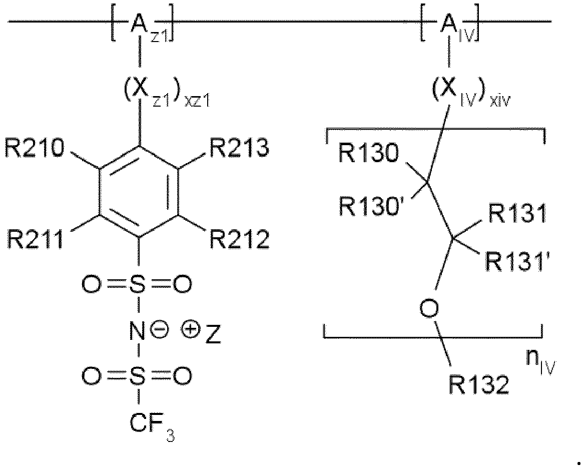

Beispielsweise kann das Polymer beziehungsweise der Polymerelektrolyt beziehungsweise das mindestens eine Polymer, insbesondere des Kathodenmaterials, auf einem Co-Polymer, beispielsweise einem Block-Co-Polymer, zum Beispiel einem Multi-Block-Co-Polymer, und/oder einem alternierenden Co-Polymer und/oder einem statistischen Co-Polymer, dieser allgemeinen chemischen Formel basieren beziehungsweise ein solches sein. Beispielsweise kann das Co-Polymer ein Block-Co-Polymer oder ein alternierendes Co-Polymer oder ein statistisches Co-Polymer, zum Beispiel ein Block-Co-Polymer oder ein alternierendes Co-Polymer, sein. Insbesondere kann das Co-Polymer dieser allgemeinen chemischen Formel ein Block-Co-Polymer sein. Durch ein derartiges Co-Polymer, beispielsweise Block-Co-Polymere, zum Beispiel Kamm-Co-Polymer, kann vorteilhafterweise eine vergleichsweise hohe Lithiumionenleitfähigkeit erzielt werden.

Zum Beispiel kann dabei das Polymer beziehungsweise der Polymerelektrolyt beziehungsweise das mindestens eine Polymer, insbesondere des Kathodenmaterials, ein Co-Polymer, beispielsweise ein Block-Co-Polymer, zum Beispiel ein Multi-Block-Co-Polymer, und/oder ein alternierendes Co-Polymer und/oder ein statistisches Co-Polymer, insbesondere ein Block-Co-Polymer, beispielsweise ein Kamm-Co-Polymer, der allgemeinen chemischen Formel: 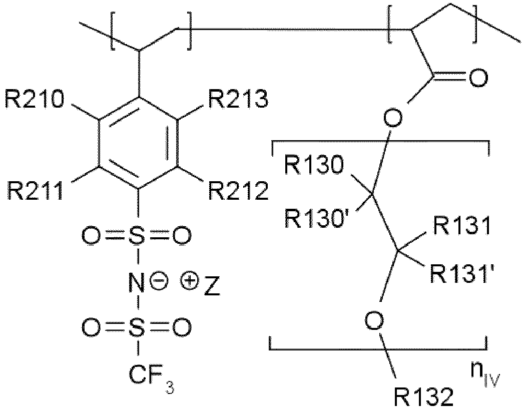 umfassen, beispielsweise darauf basieren, zum Beispiel sein.

Im Rahmen einer weiteren Ausführungsform umfasst das Polymer beziehungsweise der Polymerelektrolyt beziehungsweise das Kathodenmaterial (weiterhin) mindestens ein (einfach oder mehrfach) fluoriertes, beispielsweise perfluoriertes, und/oder Lithiumsulfonat substituiertes Polymer. Beispielsweise kann das mindestens eine, fluorierte und/oder Lithiumsulfonat substituierte Polymer ein Perfluoropolyether und/oder ein Lithiumsulfonat substituiertes, insbesondere fluoriertes, beispielsweise perfluoriertes, Polyolefin, beispielsweise Tetrafluorethylen-Polymer, und/oder ein Lithiumsulfonat substituierter, insbesondere fluorierter, beispielsweise perfluorierter, Polyether, zum Beispiel ein Lithiumionen haltiges, zum Beispiel Lithiumionen ausgetauschtes, Nafion, und/oder ein Lithiumsulfonat substituiertes, insbesondere fluoriertes, beispielsweise perfluoriertes, Polyphenylen, sein. So kann die Lithiumleitfähigkeit gegebenenfalls weiter gesteigert werden. Lithiumsulfonat substituierte und/oder fluorierte Polymere, wie Lithium-Nafion und/oder mit Lithiumsulfonat substituierte Polyphenylene und/oder fluorierte, insbesondere perfluorierte, Polyether (Perfluoropolyether), können vorteilhaft in Lithium-Schwefel-Zellen, zum Beispiel mit einem Schwefel-Kohlenstoff-Komposit, beispielsweise SPAN, als Kathodenaktivmaterial, eingesetzt werden, insbesondere da so eine reduzierte Polysulfidlöslichkeit erzielt werden kann. Fluorierte, insbesondere perfluorierte, Polyether (Perfluoropolyether), können dabei in Lithium-Schwefel-Zellen, zum Beispiel mit einem Schwefel-Kohlenstoff-Komposit, beispielsweise SPAN, als Kathodenaktivmaterial, besonders vorteilhaft in Kombination mit mindestens einem Lithium-Leitsalz eingesetzt werden. Lithium-Nafion kann beispielsweise eine Wiederholungseinheitenkombination aus einer unsubstituierten Tetrafluorethylen-Einheit und einer Lithiumsulfonat substituierten Tetrafluorethylen-Einheit, beispielsweise mit einem Oligo-Alkylenoxid-Spacer, aufweisen und beispielsweise auf der allgemeinen chemischen Formel: 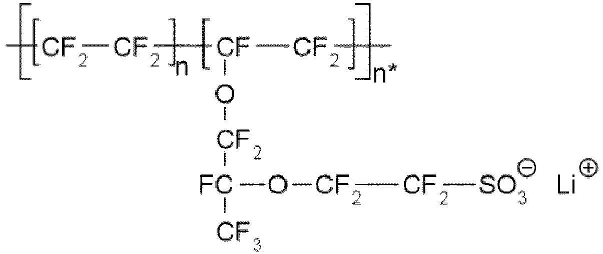 basieren, wobei n für die Wiederholungszahl der unsubstituierten Tetrafluorethylen-Einheiten und n* für die Wiederholungszahl der Wiederholungseinheitenkombination steht.

Ein weiteres Beispiel für ein Lithiumsulfonat substituiertes, beispielsweise fluoriertes, zum Beispiel perfluoriertes, Polymer, ist ein Lithiumsulfonat substituiertes Polyphenylen mit einer Lithiumsulfonat substituierten Phenylen-Einheit und gegebenenfalls einer unsubstituierten Phenylen-Einheit, beispielsweise welches auf der allgemeinen chemischen Formel: 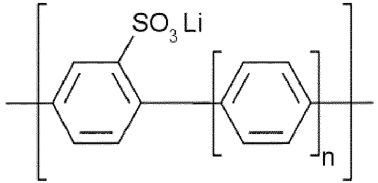 basiert, insbesondere wobei n für die Wiederholungszahl der unsubstituierten Phenylen-Einheiten, beispielsweise 0 ≤ n ≤ 3, steht.

Im Rahmen einer weiteren Ausführungsform umfasst das Polymer beziehungsweise der Polymerelektrolyt beziehungsweise das Kathodenmaterial eine Polymermischung, insbesondere ein Polymerblend, aus mindestens einem ersten Polymer und mindestens einem zweiten Polymer. Dabei kann das mindestens eine erste Polymer (mindestens) ein erfindungsgemäßes Polymer, beispielsweise Homo-Polymer und/oder Co-Polymer, beispielsweise ein Block-Co-Polymer, zum Beispiel ein Multi-Block-Co-Polymer, und/oder ein alternierendes Co-Polymer und/oder ein statistisches Co-Polymer, insbesondere ein Block-Co-Polymer, beispielsweise ein Kamm-Co-Polymer, umfassen beziehungsweise sein, insbesondere welches mindestens eine Wiederholungseinheit der allgemeinen chemischen Formel: 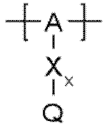 umfasst. A, X, x und Q können dabei wie vorstehend erläutert ausgestaltet sein. Beispielsweise kann dabei die Polymermischung Co-Polymer mindestens eine der vorstehend erläuterten speziellen Wiederholungseinheiten umfassen. Insbesondere kann die mindestens eine erste Wiederholungseinheit eine der vorstehend erläuterten speziellen Wiederholungseinheiten umfassen beziehungsweise sein.

Das mindestens eine zweite Polymer kann dabei beispielsweise (mindestens) ein beliebiges Polymer sein. Beispielsweise kann das mindestens eine zweite Polymer ein Polyalkylenoxid (Polyether), insbesondere einen Perfluoropolyether, und/oder ein Polycarbonat und/oder ein Polysiloxan und/oder ein Polyphosphazen und/oder ein Polymethylmethacrylat und/oder ein Polymethacrylat und/oder ein Polyphenylen und/oder ein Polyphenylenoxid und/oder ein Polybenzylen und/oder ein Polyolefin und/oder ein Polystyrrol umfassen oder sein. Zum Beispiel kann das mindestens eine zweite Polymer ein Polyalkylenoxid und/oder ein Polysiloxan und/oder ein Polyphosphazen und/oder ein Polymethylmethacrylat und/oder ein Polymethacrylat und/oder ein Polyolefin und/oder ein Polyphenylen, insbesondere ein Polyalkylenoxid und/oder Polyolefin und/oder ein Polyphenylen, umfassen oder sein.

Zum Beispiel kann die mindestens eine zweite Polymer keine Gruppe Q aufweisen und beispielsweise eine, insbesondere einfaches, Polyalkylenoxid (Polyether), insbesondere einen Perfluoropolyether, und/oder Polycarbonat und/oder Polysiloxan und/oder Polyphosphazen und/oder Polymethylmethacrylat und/oder Polymethacrylat und/oder Polyphenylen und/oder Polyphenylenoxid und/oder Polybenzylen-Einheit und/oder Polyolefin, zum Beispiel ein Polyalkylenoxid (Polyether) und/oder Polyphenylen, beispielsweise einem *para-*Polyphenylen, und/oder Polystyrrole oder ein sonstiges Polymer sein.

Perfluoropolyether, gegebenenfalls in Kombination mit mindestens einem Lithium-Leitsalz, können als Polymerelektrolyt insbesondere in Lithium-Schwefel-Zellen, insbesondere mit SPAN als Kathodenmaterial, vorteilhaft verwendet werden. (Poly-)phenylen-Einheiten und/oder (Poly-)Styrol-Einheiten, welche zu höheren Glasübergangstemperaturen führen können, können im Hinblick auf mechanische Eigenschaften, insbesondere als lithiumionen-leitfähige Matrix für SPAN, vorteilhaft sein.

Im Rahmen einer speziellen Ausgestaltung umfasst beziehungsweise ist das mindestens eine zweite Polymer jedoch (mindestens) ein erfindungsgemäßes Polymer, insbesondere Homopolymer und/oder Co-Polymer, mit mindestens einer, von der mindestens einen Wiederholungseinheit des mindestens einen ersten Polymers unterschiedlichen Wiederholungseinheit, insbesondere der allgemeinen chemischen Formel: 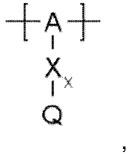 und/oder mindestens ein, fluoriertes und/oder Lithiumsulfonat substituiertes Polymer, insbesondere einen Perfluoropolyether und/oder ein Lithiumsulfonat substituiertes, insbesondere fluoriertes, Polyolefin und/oder einen Lithiumsulfonat substituierten, insbesondere fluorierten, Polyether und/oder ein Lithiumsulfonat substituiertes, insbesondere fluoriertes, Polyphenylen, beispielsweise ein Lithiumionen haltiges, zum Beispiel Lithiumionen ausgetauschtes, Nafion. A, X, x und Q können dabei wie vorstehend erläutert ausgestaltet sein. So kann die Lithiumleitfähigkeit gegebenenfalls weiter gesteigert werden.

Im Rahmen einer weiteren Ausführungsform ist das mindestens eine Polymer beziehungsweise der mindestens eine Polymerelektrolyt, insbesondere des Kathodenmaterials, beziehungsweise umfasst das Kathodenmaterial mindestens ein Polymer, insbesondere Polymerelektrolyten, aufweisend mindestens eine Wiederholungseinheit der allgemeinen chemischen Formel: 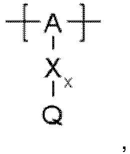 wobei -[A]- für eine Polymerrücken bildende Einheit steht,
wobei X für einen Spacer steht, wobei x für die Anzahl des Spacers X steht und 1 oder 0 ist, und wobei Q für eine negativ geladene Gruppe Q⁻ und ein Gegenion Z⁺ steht oder wobei Q für eine positiv geladene Gruppe Q⁺ und ein Gegenion Z⁻ steht. Dies hat sich als besonders vorteilhaft herausgestellt, da hierdurch die lonendissoziation erhöht und die Polysulfidlöslichkeit verringert werden kann.

Im Rahmen einer Ausgestaltung dieser Ausführungsform ist das mindestens eine Polymer beziehungsweise der mindestens eine Polymerelektrolyt, insbesondere des Kathodenmaterials, beziehungsweise umfasst das Kathodenmaterial:
- mindestens ein Polymer, insbesondere Polymerelektrolyten, (mindestens) ein Co-Polymer, beispielsweise ein Block-Co-Polymer, zum Beispiel ein Multi-Block-Co-Polymer, und/oder ein alternierendes Co-Polymer und/oder ein statistisches Co-Polymer, insbesondere ein Block-Co-Polymer, beispielsweise ein Kamm-Co-Polymer, welches mindestens eine erste Wiederholungseinheit und mindestens eine zweite, von der mindestens einen ersten Wiederholungseinheit unterschiedliche Wiederholungseinheit aufweist, wobei die mindestens eine erste Wiederholungseinheit die allgemeine chemische Formel: 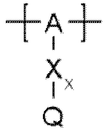 aufweist, und/oder
- eine Polymermischung, insbesondere ein Polymerblend, aus mindestens einem ersten Polymer und mindestens einem zweiten Polymer, wobei das mindestens eine erste Polymer mindestens eine Wiederholungseinheit der allgemeinen chemischen Formel: 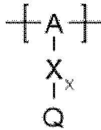 aufweist.

A, X, x und Q können dabei wie vorstehend erläutert ausgestaltet sein. Beispielsweise kann dabei das (Co-)Polymer beziehungsweise die Polymermischung mindestens eine der vorstehend erläuterten speziellen Wiederholungseinheiten umfassen.

Besonders vorteilhaft können Wiederholungseinheiten mit einer positiv geladenen Gruppe Q⁺ und einem Gegenion Z⁻ und/oder mit einer negativ geladenen Gruppe Q⁻ und einem Gegenion Z⁺ in Kombination mit ungeladenen, ionenleitfähigen beziehungsweise -leitenden, Gruppen, beispielsweise Alkylenoxidgruppen und/oder cyclischen und/oder acyclischen Carbonatgruppen und/oder cyclischen und/oder acyclischen Carbonsäureestergruppen, beispielsweise Lactongruppen und/oder cyclischen und/oder acyclischen Carbamatgruppen, insbesondere Alkylenoxidgruppen, wie Oligo-AlkylenoxidGruppen und/oder Polyethern, herausgestellt, da durch die positiv beziehungsweise negativ geladene Gruppe Q⁺ beziehungsweise Q⁻ die lonendissoziation erhöht und durch die ungeladene Gruppe Q die lonenmobilität erhöht werden kann, was insgesamt zu einer deutlichen Steigerung der lonenleitfähigkeit, beispielsweise Lithiumionenleitfähigkeit, führen kann.

Daher kann die mindestens eine zweite Wiederholungseinheit und/oder das mindestens eine zweite Polymer insbesondere ein Alkylenoxid und/oder eine cyclische Carbonatgruppe und/oder eine Lactongruppe und/oder eine cyclische Carbamatgruppe und/oder eine acyclische Carbonatgruppe und/oder eine acyclische Carbonsäureestergruppe und/oder eine acyclische Carbamatgruppe aufweisen.

Im Rahmen einer Ausgestaltung dieser Ausführungsform ist
- die mindestens eine zweite Wiederholungseinheit eine Alkylenoxid-Einheit und/oder eine Wiederholungseinheit, die eine Alkylenoxid-Funktion (Alkylenoxid-Gruppe) trägt, und/oder
- das mindestens eine zweite Polymer ein Polyalkylenoxid (Polyether) und/oder weist eine Wiederholungseinheit auf, die eine Alkylenoxid-Funktion (Alkylenoxid-Gruppe) trägt.

Eine Kombination von einer positiv oder negativ geladenen Gruppe Q⁺ ,Q⁻ und einem Alkylenoxid, beispielsweise einer Alkylenoxid-Einheit und/oder einer Alkylenoxid-Funktion und/oder einem Polyalkylenoxid, hat sich als besonders vorteilhaft herausgestellt, da durch die positiv beziehungsweise negativ geladene Gruppe Q⁺ beziehungsweise Q⁻ die lonendissoziation erhöht und durch das Alkylenoxid die lonenmobilität erhöht werden kann, was insgesamt zu einer deutlichen Steigerung der lonenleitfähigkeit, beispielsweise Lithiumionenleitfähigkeit, führen kann.

Insbesondere kann das Co-Polymer ein Block-Co-Polymer, zum Beispiel ein Multi-Block-Co-Polymer, sein. Dabei kann insbesondere die Länge der Blöcke so gewählt sein, dass das Leitsalz, insbesondere Lithium-Leitsalz, dissoziert vorliegt und gleichzeitig eine ausreichende Beweglichkeit der Ionen, insbesondere Lithiumionen, im Alkylenoxid, beispielsweise Polyether, vorliegt.

Die mindestens eine zweite Wiederholungseinheit kann insbesondere eine Alkylenoxid-Einheit und/oder eine Wiederholungseinheit, die eine Alkylenoxid-Funktion, beispielsweise eine Oligo-Alkylenoxid-Funktion, zum Beispiel mit 1 beziehungsweise 2 bis 15, beispielsweise 2 bis 6 Wiederholungseinheiten, trägt, sein. Beispielsweise kann die mindestens eine zweite Wiederholungseinheit eine Ethylenoxid-Einheit und/oder eine Propylenoxid-Einheit und/oder eine Wiederholungseinheit sein, die eine Ethylenoxid-Funktion und/oder eine Propylenoxid-Funktion, zum Beispiel eine Oligo-Ethylenoxid-Funktion und/oder eine Oligo-Propylenoxid-Funktion, beispielsweise mit 1 beziehungsweise 2 bis 15, beispielsweise 2 bis 6 Wiederholungseinheiten, trägt. Insbesondere kann die mindestens eine zweite Wiederholungseinheit eine Ethylenoxid-Einheit und/oder eine Wiederholungseinheit sein, die eine Ethylenoxid-Funktion, zum Beispiel eine Oligo-Ethylenoxid-Funktion, beispielsweise eine (Oligo-)Ethylenoxidgruppe mit 1 beziehungsweise 2 bis 15, beispielsweise 2 bis 6 Wiederholungseinheiten, trägt.

Das mindestens eine zweite Polymer kann insbesondere ein Polyalkylenoxid (Polyether) sein und/oder eine Wiederholungseinheit aufweisen, die eine Alkylenoxid-Funktion, beispielsweise eine Oligo-Alkylenoxid-Funktion, zum Beispiel mit 1 beziehungsweise 2 bis 15, beispielsweise 2 bis 6 Wiederholungseinheiten, trägt. Beispielsweise kann das mindestens eine zweite Polymer ein Polyethylenoxid (PEO) und/oder Polypropylenoxid sein und/oder eine Wiederholungseinheit aufweisen, die eine Ethylenoxid-Funktion und/oder eine Propylenoxid-Funktion, zum Beispiel eine Oligo-Ethylenoxid-Funktion und/oder eine Oligo-Propylenoxid-Funktion, beispielsweise mit 1 beziehungsweise 2 bis 15, beispielsweise 2 bis 6 Wiederholungseinheiten, trägt. Insbesondere kann das mindestens eine zweite Polymer ein Polyethylenoxid (PEO) sein und/oder eine Wiederholungseinheit aufweisen, die eine Ethylenoxid-Funktion, zum Beispiel eine Oligo-Ethylenoxid-Funktion, beispielsweise eine (Oligo-)Ethylenoxidgruppe mit 1 beziehungsweise 2 bis 15, beispielsweise 2 bis 6 Wiederholungseinheiten, trägt.

Gegebenenfalls kann die mindestens eine zweite Wiederholungseinheit und/oder das mindestens eine zweite Polymer fluoriert und/oder mit Lithiumsulfonat substituiert sein. Beispielsweise kann die mindestens eine zweite Wiederholungseinheit und/oder das mindestens eine zweite Polymer ein Perfluoropolyether und/oder ein Lithiumsulfonat substituiertes, insbesondere fluoriertes, Polyolefin und/oder ein Lithiumsulfonat substituierter, insbesondere fluorierter, Polyether und/oder ein Lithiumsulfonat substituiertes, gegebenenfalls fluoriertes, Polyphenylen umfassen oder sein.

Im Rahmen einer speziellen Ausgestaltung dieser Ausführungsform ist
- die mindestens eine zweite Wiederholungseinheit eine teilweise oder vollständig fluorierte, insbesondere perfluorierte, Alkylenoxid-Einheit und/oder eine Wiederholungseinheit, die eine teilweise oder vollständig fluorierte, insbesondere perfluorierte, Alkylenoxid-Funktion, beispielsweise Oligo-Alkylenoxid-Funktion, trägt, und/oder
- das mindestens eine zweite Polymer ein teilweise oder vollständig fluoriertes, insbesondere perfluoriertes, Polyalkylenoxid (Perfluorpolyether) und/oder weist eine Wiederholungseinheit auf, die eine teilweise oder vollständig fluorierte, insbesondere perfluorierte, Alkylenoxid-Funktion, beispielsweise Oligo-Alkylenoxid-Funktion, trägt.

Durch eine Fluorierung kann vorteilhafterweise die Polysulfidlöslichkeit reduziert werden.

Die mindestens eine zweite Wiederholungseinheit kann insbesondere eine eine teilweise oder vollständig fluorierte, insbesondere perfluorierte, Alkylenoxid-Einheit und/oder eine Wiederholungseinheit, die eine eine teilweise oder vollständig fluorierte, insbesondere perfluorierte, Alkylenoxid-Funktion, beispielsweise eine Oligo-Alkylenoxid-Funktion, zum Beispiel mit 1 beziehungsweise 2 bis 15, beispielsweise 2 bis 6 Wiederholungseinheiten, trägt, sein. Beispielsweise kann die mindestens eine zweite Wiederholungseinheit eine teilweise oder vollständig fluorierte, insbesondere perfluorierte, Ethylenoxid-Einheit und/oder Propylenoxid-Einheit und/oder eine Wiederholungseinheit sein, die eine teilweise oder vollständig fluorierte, insbesondere perfluorierte, Ethylenoxid-Funktion und/oder Propylenoxid-Funktion trägt. Insbesondere kann die mindestens eine zweite Wiederholungseinheit eine teilweise oder vollständig fluorierte, insbesondere perfluorierte, Ethylenoxid-Einheit und/oder eine Wiederholungseinheit sein, die eine teilweise oder vollständig fluorierte, insbesondere perfluorierte, Ethylenoxid-Funktion, zum Beispiel eine Oligo-Ethylenoxid-Funktion, trägt.

Das mindestens eine zweite Polymer kann insbesondere ein teilweise oder vollständig fluoriertes, insbesondere perfluoriertes, Polyalkylenoxid (Polyether) sein und/oder eine Wiederholungseinheit aufweisen, die eine teilweise oder vollständig fluorierte, insbesondere perfluorierte, Alkylenoxid-Funktion, beispielsweise eine Oligo-Alkylenoxid-Funktion, zum Beispiel mit 1 beziehungsweise 2 bis 15, beispielsweise 2 bis 6 Wiederholungseinheiten, trägt. Beispielsweise kann das mindestens eine zweite Polymer ein teilweise oder vollständig fluoriertes, insbesondere perfluoriertes, Polyethylenoxid und/oder Propylenoxid sein und/oder eine Wiederholungseinheit aufweisen, die eine teilweise oder vollständig fluorierte, insbesondere perfluorierte, Ethylenoxid-Funktion und/oder Propylenoxid-Funktion trägt. Insbesondere kann das mindestens eine zweite Polymer ein teilweise oder vollständig fluoriertes, insbesondere perfluoriertes, Polyethylenoxid sein und/oder eine Wiederholungseinheit aufweisen, die eine teilweise oder vollständig fluorierte, insbesondere perfluorierte, Ethylenoxid-Funktion, zum Beispiel eine Oligo-Ethylenoxid-Funktion, trägt.

Im Rahmen einer speziellen Ausgestaltung dieser Ausführungsform ist das mindestens eine Polymer beziehungsweise der mindestens eine Polymerelektrolyt, insbesondere des Kathodenmaterials, beziehungsweise umfasst das Kathodenmaterial mindestens eine Wiederholungseinheit der allgemeinen chemischen Formel: 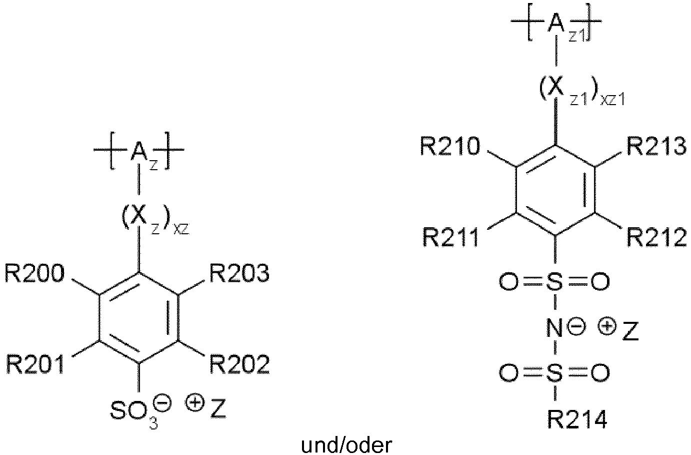 und/oder 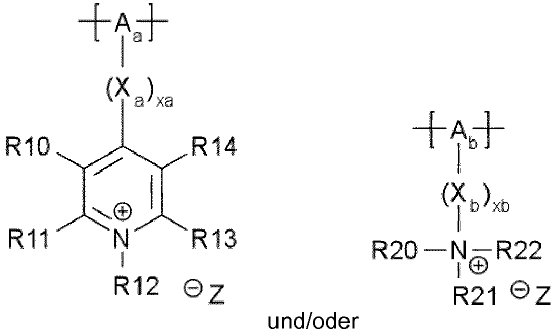 und/oder 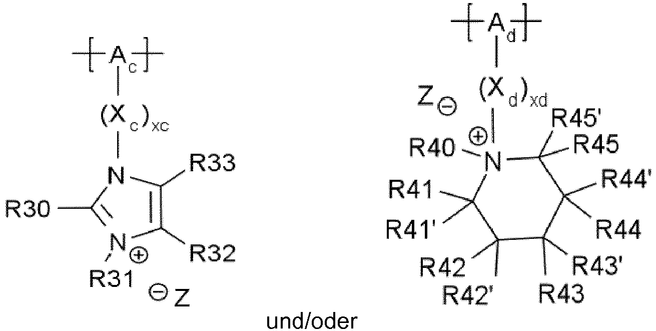 und/oder 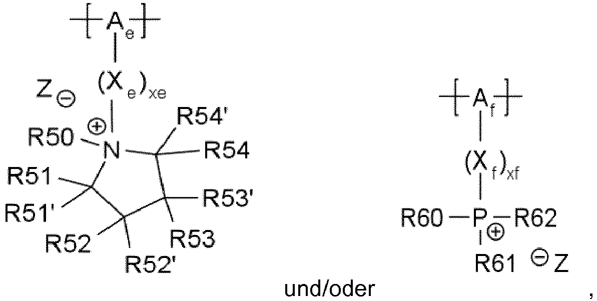 insbesondere wobei die mindestens eine erste Wiederholungseinheit, beispielsweise die Wiederholungseinheit: 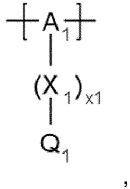 und/oder das mindestens eine erste Polymer mindestens eine Wiederholungseinheit der vorstehenden allgemeinen chemischen Formel aufweist. Die mindestens eine zweite Wiederholungseinheit, beispielsweise die Wiederholungseinheit: 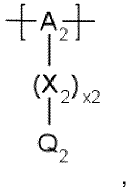 kann dabei beispielsweise (mindestens) eine Wiederholungseinheit der allgemeinen chemischen Formel: 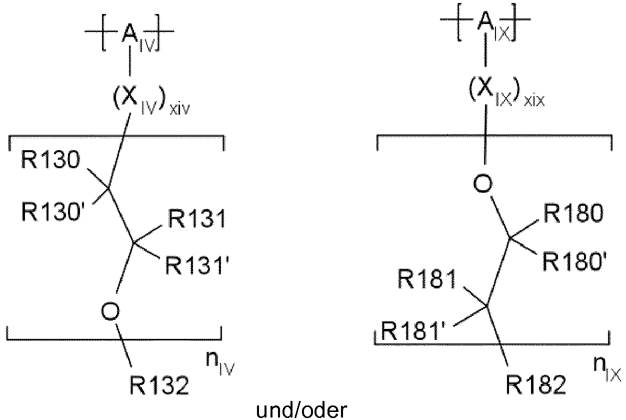 und/oder 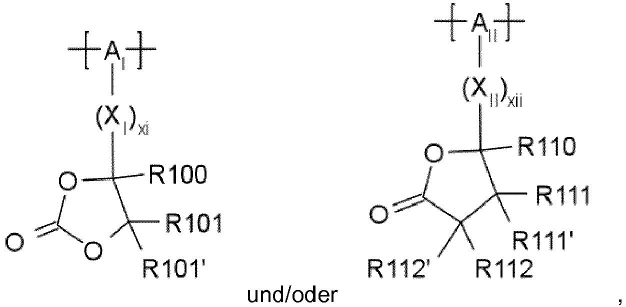 beispielsweise 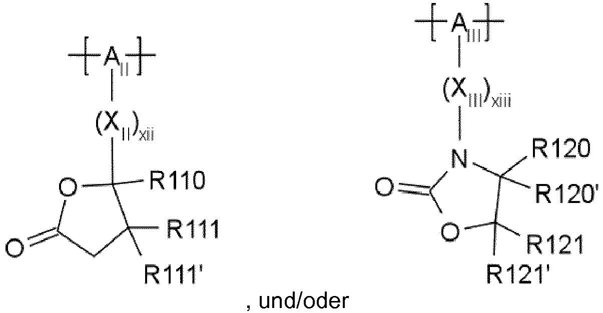 und/oder 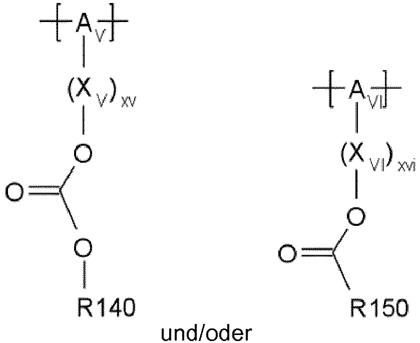 und/oder 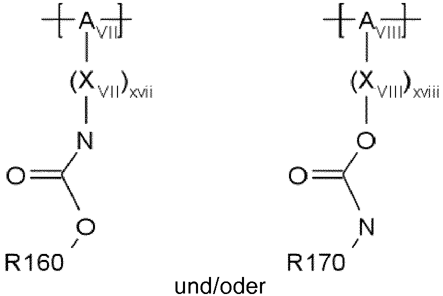 umfassen beziehungsweise dafür stehen. Insbesondere kann die mindestens eine zweite Wiederholungseinheit, beispielsweise die Wiederholungseinheit: 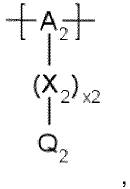 dabei beispielsweise (mindestens) eine Wiederholungseinheit der allgemeinen chemischen Formel: 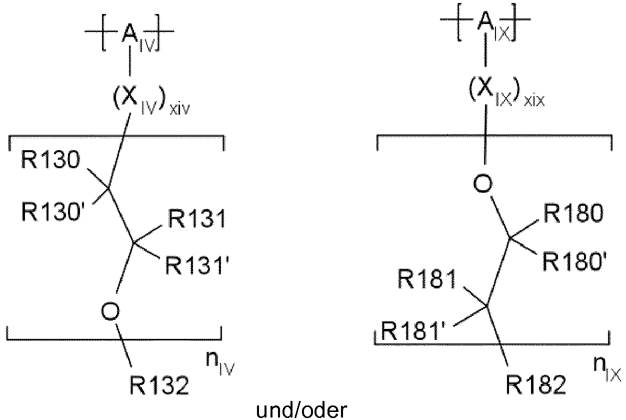 umfassen beziehungsweise dafür stehen. Zum Beispiel kann das Co-Polymer Poly[(4-styrolsulfonyl)(trifluoromethansulfonyl)imid] sein,

Gegebenenfalls kann das Co-Polymer (P) weiterhin mindestens eine dritte Wiederholungseinheit und/oder die Polymermischung weiterhin mindestens ein drittes, insbesondere von dem ersten Polymer und dem zweiten Polymer unterschiedliches, Polymer umfassen.

Im Rahmen einer weiteren Ausführungsform umfasst der Polymerelektrolyt beziehungsweise das Kathodenmaterial weiterhin mindestens ein Leitsalz, insbesondere Lithium-Leitsalz. So kann gegebenenfalls die lonenleitfähigkeit, insbesondere Lithiumionenleitfähigkeit, weiter erhöht werden. Je nach Block-Co-Polymer kann trotz einer hohen Transferzahl eine geringe Beimischung eines Leitsalzes, insbesondere Lithium-Leitsalzes, von Vorteil sein, um den Glaspunkt des Block-Co-Polymers zu verringern und damit die Gesamtmobilität der Lithiumionen im System zu erhöhen, was jedoch auf Kosten einer Reduktion der Transferzahl gehen kann. Idealerweise kann in diesem Fall ein Leitsalz, insbesondere Lithium-Leitsalz, verwendet werden, dessen Anion gut mit der Gruppe Q wechselwirkt. Zum Beispiel kann Lithiumbis(trifluormethansulfonyl)imid (LiTFSI) bei einer Sulfonylimidgruppe eingesetzt werden. Das Leitsalz kann beispielsweise ein Lithiumleitsalz oder ein Natriumleitsalz, insbesondere ein Lithiumleitsalz, sein. Als Lithiumsalze können gängige Lithium-Leitsalze eingesetzt werden. Beispielsweise kann das mindestens eine Lithium-Leitsalz Lithiumhexafluorophosphat (LiPF₆) und/oder Lithiumbis(trifluormethansulfonyl)imid (LiTFSI) und/oder Lithiumbisoxalatoborat (LiBOB) und/oder Trifluormethansulfonat (LiTriflate) und/oder Lithiumperchlorat (LiClO₄) und/oder Lithiumdifluorooxalatoborat (LiDFOB) und/oder Lithiumtetrafluoroborat (LiBF₄) und/oder Lithiumbromid (LiBr) und/oder Lithiumiodid (Lil) und/oder Lithiumchlorid (LiCI) umfassen oder sein. Dabei können das Anion Z⁻ und das Anion des mindestens einen Lithium-Leitsalzes unterschiedlich oder identisch sein.

Im Rahmen einer Ausgestaltung dieser Ausführungsform sind das Anion des mindestens einen Leitsalzes, insbesondere Lithium-Leitsalzes, und Z⁻ beziehungsweise Q⁻ aus der gleichen Anionenklasse, beispielsweise der Sulfonylimide, zum Beispiel Trifluormethansulfonylimid und/oder Pentafluorethansulfonylimid und/oder Fluorsulfonylimid, insbesondere Ttrifluormethansulfonylimid, ausgewählt. So können vorteilhafterweise unerwünschte Nebenreaktionen vermieden werden und insbesondere zudem erzielt werden, dass das Anion des mindestens einen Leitsalzes und Z⁻ beziehungsweise Q⁻ Alkaliionen, insbesondere Lithiumionen, ähnlich, beispielsweise gleich, stark koordinieren, was sich vorteilhaft auf die lonenmobilität auswirken kann.

Im Rahmen einer speziellen Ausgestaltung dieser Ausführungsform weist das mindestens eine Leitsalz, insbesondere Lithium-Leitsalz, das Gegenion Z⁻ beziehungsweise Z⁺ des Polymers beziehungsweise Polymerelektrolyten, insbesondere der positiv geladenen Gruppe Q⁺ beziehungsweise der negativ geladenen Gruppe Q⁻, auf. Beispielsweise kann das Anion Z⁻ gleich dem Anion des mindestens einen Leitsalzes, insbesondere Lithium-Leitsalzes, sein.

Die Lithiumsalzkonzentration kann insbesondere von der Anzahl der Sauerstoffatome im Polymer beziehungsweise Polymerelektrolyten abhängen. Insbesondere kann das stöchiometrische Verhältnis von Lithiumionen des mindestens einen Lithium-Leitsalzes zu Sauerstoffatomen des Polymers beziehungsweise Polymerelektrolyten beziehungsweise des Polymers, insbesondere des mindestens einen Kathodenmaterials, in einem Bereich 1:2 bis 1:100, insbesondere von 1:5 beziehungsweise 1:10 bis 1:25, beispielsweise vom 1:10 bis 1:15, liegen. Dies kann vorteilhafterweise ein optimaler Bereich im Hinblick auf die effektiven, mobilen Ladungsträger und die Mobilität in Abhängigkeit von der Glastemperatur sein. Das stöchiometrische Verhältnis von Lithiumionen des mindestens einen Lithium-Leitsalzes zu Wiederholungseinheiten des Polymers beziehungsweise des Polymerelektrolyten beziehungsweise des Polymers, insbesondere des mindestens einen Kathodenmaterials, kann beispielsweise in einem Bereich von 2:1 bis 1:100 liegen.

Im Rahmen einer weiteren Ausführungsform sind Partikel des Kathodenaktivmaterials, insbesondere des Schwefel-Kohlenstoff-Komposits, beispielsweise SPAN-Partikel, mit einem ionenleitfähigen beziehungsweise ionenleitenden, insbesondere lithiumionenleitfähigen beziehungsweise lithiumionenleitenden, Polymer beziehungsweise Polymerelektrolyten, beispielsweise der allgemeinen chemischen Formel: 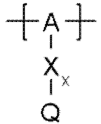 und/oder mit Polyethylenglycol und/oder Polyethylenoxid, beschichtet. So können Polysulfide vorteilhafterweise besonders effektiv an einem Wegdiffundieren gehindert werden. A, X, x und Q können dabei wie vorstehend erläutert ausgestaltet sein. Die Beschichtung kann dabei beispielsweise ein vorstehend beschriebenes Polymer beziehungsweise Polymerelektrolyten umfassen beziehungsweise daraus ausgebildet sein. Beispielsweise kann dabei das Polymer der Beschichtung mindestens eine der vorstehend erläuterten speziellen Wiederholungseinheiten umfassen.

Des Weiteren ist es möglich die Leitfähigkeit durch die Beimischung von ionischen Flüssigkeiten (Englisch: lonic Liquids) zu erhöhen.

Im Rahmen einer weiteren Ausführungsform umfasst der Polymerelektrolyt beziehungsweise das Kathodenmaterial daher weiterhin mindestens eine ionische Flüssigkeit. So kann vorteilhafterweise die Mobilität im System erhöht beziehungsweise die Glastemperatur reduziert werden und so die lonenleitfähigkeit, insbesondere Lithiumionenleitfähigkeit, erhöht werden. Insbesondere kann die ionische Flüssigkeit mindestens ein Kation, ausgewählt aus der Gruppe bestehend aus Pyridinium-Kationen und/oder, insbesondere quartären, Ammonium-Kationen und/oder Imidazolium-Kationen und/oder Piperidinium-Kationen und/oder Pyrrolidinium-Kationen und/oder, insbesondere quartäre, Phosphonium-Kationen und/oder Guanidinium-Kationen und/oder Morpholinium-Kationen und/oder Uronium-Kationen und/oder Thiouronium-Kationen, und/oder mindestens ein Anion, ausgewählt aus der Gruppe bestehend aus Trifluormethansulfonat (Triflat) und/oder Tetrafluoroborat und/oder Bisoxalatoborat und/oder Hexafluorophosphat und/oder Bis(trifluormethansulfonyl)imid und/oder Bis(perfluorethansulfonyl)imid und/oder Bis(fluormethansulfonyl)imid und/oder Difluorooxalatoborat und/oder Perchlorat und/oder Bromid und/oder lodid und/oder Chlorid, umfassen. Dabei können das Anion Z⁻ und das Anion des mindestens einen Lithium-Leitsalzes und/oder der ionischen Flüssigkeit unterschiedlich oder gleich sein. Insbesondere kann jedoch das Anion Z⁻ gleich dem Anion des mindestens einen Lithium-Leitsalzes und/oder der ionischen Flüssigkeit sein. So können vorteilhafterweise unerwünschte Nebenreaktionen beziehungsweise ein Auskristallisieren von Lithiumsalz vermieden werden.

Darüber hinaus ist es möglich die Leitfähigkeit durch die Beimischung von nichtwässrigen Lösungsmitteln und/oder Komponenten, die in Flüssigelektrolyten eingesetzt werden, beispielsweise Carbonat- und/oder Ether-basierte Substanzen beziehungsweise Lösungsmittel, zu erhöhen.

Gegebenenfalls kann der Polymerelektrolyt beziehungsweise das Kathodenmaterial weiterhin mindestens einen Carbonat-basierten und/oder Ether-basierten Zusatzstoff, beispielsweise mindestens ein Carbonat-basiertes und/oder Ether-basiertes Lösungsmittel, umfassen.

Im Rahmen einer speziellen Ausgestaltung umfasst der Polymerelektrolyt, mindestens eine Wiederholungseinheit der allgemeinen chemischen Formel: 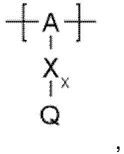
wobei -[A]- für eine Polymerrücken bildende Einheit steht,
wobei X für einen Spacer steht, wobei x für die Anzahl des Spacers X steht und 1 oder 0 ist, und
wobei Q für eine positiv geladene Gruppe Q⁺ und ein Gegenion Z⁻ steht, insbesondere wobei Q⁺ für eine Gruppe auf der Basis eines Kations einer ionischen Flüssigkeit steht, beispielsweise wobei Q⁺ für wobei Pyridiniumgruppe oder eine Ammoniumgruppe oder eine Imidazoliumgruppe oder eine Piperidiniumgruppe oder eine Pyrrolidiniumgruppe oder eine Phosphoniumgruppe oder eine Guanidiniumgruppe oder eine Morpholiniumgruppe oder eine Uroniumgruppe oder eine Thiouroniumgruppe und/oder wobei Z⁻ für ein Anion, insbesondere ein Lithium-Leitsalzanion, steht, oder
wobei Q für eine negativ geladene Gruppe Q⁻ und ein Gegenion Z⁺ steht, insbesondere wobei Q⁻ für eine Gruppe auf der Basis eines Lithium-Leitsalzanions und/oder eines Anions einer ionischen Flüssigkeit oder eine Sulfonatgruppe steht, beispielsweise wobei Q⁻ für eine Sulfonylimidgruppe und/oder eine Sulfonatgruppe, und/oder Z⁺ für ein Alkaliion, beispielsweise ein Lithiumion und/oder Natriumion, insbesondere ein Lithiumion, steht, oder wobei Q für eine cyclische Carbonatgruppe oder eine Lactongruppe oder eine cyclische Carbamatgruppe oder eine acyclische Carbonatgruppe oder eine acyclische Carbonsäureestergruppe oder eine acyclische Carbamatgruppe oder eine Alkylenoxidgruppe steht, insbesondere wobei Q für eine cyclische Carbonatgruppe oder eine Lactongruppe oder eine cyclische Carbamatgruppe oder eine acyclische Carbonatgruppe oder eine acyclische Carbonsäureestergruppe oder eine acyclische Carbamatgruppe steht, und wobei die Polymerrücken bildende Einheit -[A]- zumindest eine polyfunktionalisierte Siloxan-Einheit und/oder eine polyfunktionalisierte Phosphazen-Einheit und/oder eine polyfunktionalisierte Phenylen-Einheit, beispielsweise eine polyfunktionalisierte Siloxan-Einheit, umfasst.

Insbesondere kann dabei die Polymerrücken bildende Einheit -[A]- für eine polyfunktionalisierte Polymerrücken bildende Einheit der allgemeinen chemischen Formel: 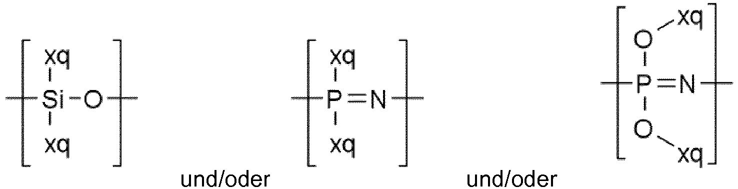 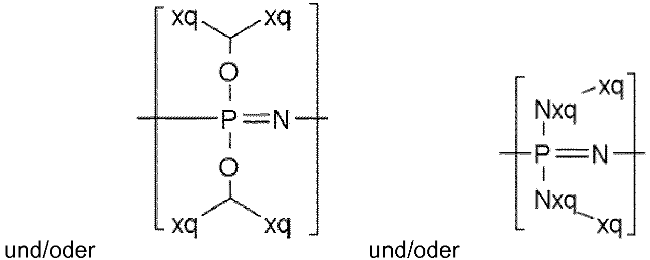 und/oder 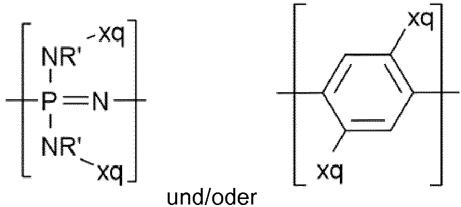 und/oder 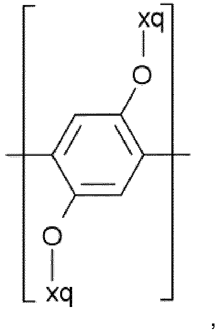 stehen beziehungsweise diese umfassen, wobei xq jeweils für eine Anbindungsstelle steht, an welcher jeweils eine Gruppe Q, insbesondere Q⁺ beziehungsweise Q⁻ beziehungsweise Q, über einen Spacer Xₓ an die Polymerrücken bildende Einheit -[A]- angebunden ist, insbesondere wobei R' für Wasserstoff oder eine Alkylgruppe steht.

Dabei kann die Polymerrücken bildende Einheit -[A]- und/oder der Spacer X und/oder die Gruppe Q, beispielsweise Q⁺ beziehungsweise Q⁻ beziehungsweise Q, und/oder das Anion Z⁻ und/oder das Kation Z⁺ wie vorstehend erläutert ausgestaltet sein. Beispielsweise kann dabei die mindestens eine Wiederholungseinheit (mindestens) eine vorstehend erläuterte spezielle Wiederholungseinheit umfassen beziehungsweise sein.

Im Rahmen einer weiteren speziellen Ausgestaltung umfasst der Polymerelektrolyt mindestens ein Co-Polymer (P), insbesondere Block-Co-Polymer, beispielsweise Multi-Block-Co-Polymer, aufweisend mindestens eine erste Wiederholungseinheit und mindestens eine zweite, von der mindestens einen ersten Wiederholungseinheit unterschiedliche Wiederholungseinheit, wobei die mindestens eine erste Wiederholungseinheit die allgemeine chemische Formel: 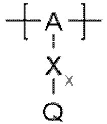 aufweist,
wobei -[A]- für eine Polymerrücken bildende Einheit steht,
wobei X für einen Spacer steht, wobei x für die Anzahl des Spacers X steht und 1 oder 0 ist, und
wobei Q für eine positiv geladene Gruppe Q⁺ und ein Gegenion Z⁻ steht, insbesondere wobei Q⁺ für eine Gruppe auf der Basis eines Kations einer ionischen Flüssigkeit steht, beispielsweise wobei Q⁺ für wobei Pyridiniumgruppe oder eine Ammoniumgruppe oder eine Imidazoliumgruppe oder eine Piperidiniumgruppe oder eine Pyrrolidiniumgruppe oder eine Phosphoniumgruppe oder eine Guanidiniumgruppe oder eine Morpholiniumgruppe oder eine Uroniumgruppe oder eine Thiouroniumgruppe und/oder wobei Z⁻ für ein Anion, insbesondere ein Lithium-Leitsalzanion, steht, insbesondere wobei der Spacer X mindestens eine weitere, positiv geladene Gruppe Q⁺, insbesondere auf der Basis eines Kations einer ionischen Flüssigkeit, insbesondere mindestens eine Ammoniumiongruppe und/oder mindestens eine Pyridiniumgruppe und/oder mindestens eine Imidazoliumgruppe und/oder mindestens eine Piperidiniumgruppe und/oder mindestens eine

Pyrrolidiniumgruppe und/oder mindestens eine Phosphoniumgruppe und/oder mindestens eine Guanidiniumgruppe und/oder mindestens eine Morpholiniumgruppe und/oder mindestens eine Uroniumgruppe und/oder mindestens eine Thiouroniumgruppe, insbesondere mindestens eine Ammoniumgruppe und/oder mindestens eine Pyridiniumgruppe und/oder mindestens eine Imidazoliumgruppe, beispielsweise mindestens eine Ammoniumgruppe und/oder mindestens eine Pyridiniumgruppe, umfasst, oder wobei Q für eine negativ geladene Gruppe Q⁻ und ein Gegenion Z⁺, beispielsweise Alkaliion, insbesondere Lithiumion, steht, insbesondere wobei Q⁻ für eine Gruppe auf der Basis eines Lithium-Leitsalzanions und/oder eines Anions einer ionischen Flüssigkeit oder eine Sulfonatgruppe steht, beispielsweise wobei Q⁻ für eine Sulfonylimidgruppe und/oder eine Sulfonatgruppe, und/oder Z⁺ für ein Alkaliion, beispielsweise ein Lithiumion und/oder Natriumion, insbesondere ein Lithiumion, steht, wobei der Spacer X mindestens eine weitere, negativ geladene Gruppe Q⁻, insbesondere auf der Basis eines Lithium-Leitsalzanions und/oder eines Anions einer ionischen Flüssigkeit und/oder eine Sulfonatgruppe, insbesondere mindestens eine Sulfonylimidgruppe und/oder mindestens eine Sulfonatgruppe, umfasst.

Dabei kann die mindestens eine zweite Wiederholungseinheit die allgemeine chemische Formel: 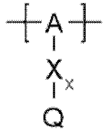
aufweisen, wobei -[A]- für eine Polymerrücken bildende Einheit steht,
wobei X für einen Spacer steht, wobei x für die Anzahl des Spacers X steht und 1 oder 0 ist,
wobei Q jedoch für eine ungeladene Gruppe Q, beispielsweise für eine Alkylenoxidgruppe oder eine cyclische Carbonatgruppe oder eine Lactongruppe oder eine cyclische Carbamatgruppe oder eine acyclische Carbonatgruppe oder eine acyclische Carbonsäureestergruppe oder eine acyclische Carbamatgruppe steht, insbesondere für eine Alkylenoxidgruppe, steht.

Dabei kann die Polymerrücken bildende Einheit -[A]- und/oder der Spacer X und/oder die Gruppe Q, beispielsweise Q⁺ beziehungsweise Q⁻ beziehungsweise Q, und/oder das Anion Z⁻ und/oder das Kation Z⁺ wie vorstehend erläutert ausgestaltet sein. Beispielsweise kann dabei die mindestens eine erste und/oder zweite Wiederholungseinheit (mindestens) eine vorstehend erläuterte spezielle Wiederholungseinheit umfassen beziehungsweise sein.

Hinsichtlich weiterer technischer Merkmale und Vorteile des erfindungsgemäßen Polymers beziehungsweise Polyelektrolyten beziehungsweise des Polymers, insbesondere des mindestens einen Kathodenmaterials, wird hiermit explizit auf die Erläuterungen im Zusammenhang mit der erfindungsgemäßer Verwendung, dem erfindungsgemäßen Kathodenmaterial, der erfindungsgemäßen Kathode, dem erfindungsgemäßen Separator, der erfindungsgemäßen Schutzschicht, der erfindungsgemäßen Zelle und dem erfindungsgemäßen Energiespeichersystem sowie auf die Figuren und die Figurenbeschreibung verwiesen.

Ein weiterer Gegenstand der Erfindung ist die Verwendung eines erfindungsgemäßen Polymers beziehungsweise eines erfindungsgemäßen Polymerelektrolyten als lonenleiter, beispielsweise Lithiumionenleiter, und/oder Binder für ein Kathodenmaterial, beispielsweise für einen Schwefel-Kohlenstoff-Komposit und/oder einen Lithium-Schwefel-Komposit, beispielsweise einen Schwefel-Polymer-Komposit, zum Beispiel ein Polymer, insbesondere basierend auf Polyacrylnitril, mit, insbesondere kovalent, gebundenem Schwefel, insbesondere für SPAN, insbesondere einer elektrochemischen Zelle, beispielsweise einer Alkalimetall-Zelle, beispielsweise einer Lithium-Zelle und/oder einer Natrium-Zelle, insbesondere einer Lithium-Zelle, beispielsweise einer Alkalimetall-Schwefel-Zelle, beispielsweise einer Lithium-Schwefel-Zelle und/oder Natrium-Schwefel-Zelle, insbesondere einer Lithium-Schwefel-Zelle, und/oder als Separator und/oder als Schutzschicht, insbesondere zwischen der Anode und der Kathode einer elektrochemischen Zelle, beispielsweise einer Alkalimetall-Zelle, beispielsweise einer Lithium-Zelle und/oder einer Natrium-Zelle, insbesondere einer Lithium-Zelle, beispielsweise einer Alkalimetall-Schwefel-Zelle, beispielsweise einer Lithium-Schwefel-Zelle und/oder Natrium-Schwefel-Zelle, insbesondere einer Lithium-Schwefel-Zelle, beispielsweise als Kathodenschutzschicht. Insbesondere kann das Polymer beziehungsweise der Polymerelektrolyt in Kombination mit einem Schwefel-Polyacrylnitril(PAN)-Komposit, insbesondere mit SPAN, als Kathodenaktivmaterial beziehungsweise als Kathodenmaterial, beispielsweise für eine Alkalimetall-Schwefel-Zelle, zum Beispiel für eine Lithium-Schwefel-Zelle und/oder Natrium-Schwefel-Zelle, insbesondere für eine Lithium-Schwefel-Zelle, verwendet werden.

Hinsichtlich weiterer technischer Merkmale und Vorteile der erfindungsgemäßen Verwendung wird hiermit explizit auf die Erläuterungen im Zusammenhang mit dem erfindungsgemäßen Polymer beziehungsweise Polyelektrolyten, dem erfindungsgemäßen Kathodenmaterial, der erfindungsgemäßen Kathode, dem erfindungsgemäßen Separator, der erfindungsgemäßen Schutzschicht, der erfindungsgemäßen Zelle und dem erfindungsgemäßen Energiespeichersystem sowie auf die Figuren und die Figurenbeschreibung verwiesen.

Ein weiterer Gegenstand ist ein Kathodenmaterial für eine elektrochemische Zelle, zum Beispiel für eine Alkalimetall-Zelle, beispielsweise für eine Lithium-Zelle und/oder Natrium-Zelle, insbesondere für eine Lithium-Zelle, zum Beispiel für eine Alkalimetall-Schwefel-Zelle, beispielsweise für eine Lithium-Schwefel-Zelle und/oder Natrium-Schwefel-Zelle, insbesondere für eine Lithium-Schwefel-Zelle, welches mindestens ein Kathodenaktivmaterial und/oder mindestens einen, insbesondere lithiumionenleitenden oder lithiumionenleitfähigen, Polymerelektrolyten umfasst. Das Kathodenmaterial kann insbesondere wie vorstehend erläutert ausgestaltet sein. Der mindestens eine Polymerelektrolyt kann dabei vorteilhafterweise als Matrix(material) für das mindestens eine Kathodenaktivmaterial dienen.

Das Kathodenmaterial kann dabei insbesondere ein Kathodenmaterial für eine Lithium-Schwefel-Zelle sein. Das mindestens eine Kathodenaktivmaterial kann dabei insbesondere schwefelhaltig sein. Zum Beispiel kann das mindestens eine Kathodenaktivmaterial einen Schwefel-Kohlenstoff-Komposit, beispielsweise in dem Schwefel kovalent, insbesondere an Kohlenstoff, gebunden ist, umfassen. Beispielsweise kann das mindestens eine Kathodenaktivmaterial ein Polymer, insbesondere auf der Basis von Polyacrylnitril (PAN), mit, insbesondere kovalent, gebundenem Schwefel, beziehungsweise einen Schwefel-Polyacrylnitril-Komposit, insbesondere SPAN, umfassen beziehungsweise sein.

Der mindestens eine Polymerelektrolyt kann insbesondere wie vorstehend beschrieben ausgestaltet sein. Beispielsweise kann der mindestens eine Polymerelektrolyt mindestens ein Polymer beziehungsweise Polymerelektrolyten, welches beziehungsweise welcher mindestens eine Wiederholungseinheit der allgemeinen chemischen Formel: 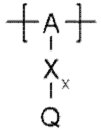 umfasst, und/oder mindestens ein (einfach oder mehrfach) fluoriertes, beispielsweise perfluoriertes, und/oder Lithiumsulfonat substituiertes Polymer, beispielsweise einen Perfluoropolyether und/oder ein Lithiumsulfonat substituiertes, insbesondere fluoriertes, beispielsweise perfluoriertes, Polyolefin, beispielsweise Tetrafluorethylen-Polymer, und/oder einen Lithiumsulfonat substituierten, insbesondere fluorierten, beispielsweise perfluorierten, Polyether, zum Beispiel ein Lithiumionen haltiges, zum Beispiel Lithiumionen ausgetauschtes, Nafion, und/oder ein Lithiumsulfonat substituiertes, insbesondere fluoriertes, beispielsweise perfluoriertes, Polyphenylen, umfassen beziehungsweise sein. Wie vorstehend erläutert kann dies insbesondere vorteilhaft bei Lithium-Schwefel-Zellen, zum Beispiel mit einem Schwefel-Kohlenstoff-Komposit, beispielsweise SPAN, als Kathodenaktivmaterial, sein. Darüber hinaus kann das Kathodenmaterial weitere Komponenten umfassen.

Das Kathodenmaterial kann beispielsweise, bezogen auf das Gesamtgewicht des Kathodenmaterials, ≥ 60 Gew.-% bis ≤ 90 Gew.-%, beispielsweise ≥ 60 Gew.-% bis ≤ 75 Gew.-% an Kathodenaktivmaterial und ≥ 10 Gew.-% bis ≤ 40 Gew.-%, beispielsweise ≥ 10 Gew.-% bis ≤ 30 Gew.-%, an Polymerelektrolyt umfassen. Gegebenenfalls kann das Kathodenmaterial weiterhin, bezogen auf das Gesamtgewicht des Kathodenmaterials, ≥ 5 Gew.-% bis ≤ 15 Gew.-% an Zusätzen und/oder Additiven, beispielsweise Leitfähigkeitszusätzen und/oder - Additiven, umfassen.

Beispielsweise kann das Kathodenmaterial mindestens einen Leitfähigkeitszusatz- und/oder -additiv, insbesondere zur Steigerung der elektrischen Leitfähigkeit in der Kathode, umfassen. Zum Beispiel kann das Kathodenmaterial mindestens einen, insbesondere elektrischen, Leitzusatz beziehungsweise Leitadditiv, insbesondere mindestens eine Kohlenstoffmodifikation, zum Beispiel Leitkohlenstoff, wie Ruß, Kohlenstofffasern, Graphit, et cetera, umfassen. Alternativ oder zusätzlich kann das Kathodenmaterial mindestens ein Leitsalz, insbesondere Lithium-Leitsalz, umfassen. Gegebenenfalls kann das Kathodenmaterial weiterhin mindestens eine ionische Flüssigkeit umfassen.

Das Kathodenmaterial kann insbesondere für eine erfindungsgemäße Zelle ausgelegt sein.

Hinsichtlich weiterer technischer Merkmale und Vorteile des erfindungsgemäßen Kathodenmaterials wird hiermit explizit auf die Erläuterungen im Zusammenhang mit dem erfindungsgemäßen Polymer beziehungsweise Polyelektrolyten, der erfindungsgemäßen Verwendung, der erfindungsgemäßen Kathode, dem erfindungsgemäßen Separator, der erfindungsgemäßen Schutzschicht, der erfindungsgemäßen Zelle und dem erfindungsgemäßen Energiespeichersystem sowie auf die Figuren und die Figurenbeschreibung verwiesen.

Ein weiterer Gegenstand ist eine Kathode für eine elektrochemische Zelle, zum Beispiel für eine Alkalimetall-Zelle, beispielsweise für eine Lithium-Zelle und/oder Natrium-Zelle, insbesondere für eine Lithium-Zelle, zum Beispiel für eine Alkalimetall-Schwefel-Zelle, beispielsweise für eine Lithium-Schwefel-Zelle und/oder Natrium-Schwefel-Zelle, insbesondere für eine Lithium-Schwefel-Zelle, welche mindestens ein erfindungsgemäßes Polymer beziehungsweise mindestens einen erfindungsgemäßen Polymerelektrolyten und/oder mindestens ein erfindungsgemäßes Kathodenmaterial umfasst. Zum Beispiel kann der die Kathode mindestens ein erfindungsgemäßes Polymer beziehungsweise mindestens einen erfindungsgemäßen Polymerelektrolyten und/oder mindestens ein erfindungsgemäßes Kathodenmaterial und/oder mindestens ein, einfach oder mehrfach Lithiumsulfonat substituiertes, beispielsweise fluoriertes, zum Beispiel perfluoriertes, Polymer, beispielsweise Polyether und/oder Polyphenylen und/oder Tetrafluorethylen-Polymer, zum Beispiel Lithium-Nafion, und/oder mindestens einen fluorierten, insbesondere perfluorierten, Polyether (Perfluoropolyether) umfassen. Wie vorstehend erläutert kann dies insbesondere vorteilhaft bei Lithium-Schwefel-Zellen, zum Beispiel mit einem Schwefel-Kohlenstoff-Komposit, beispielsweise SPAN, als Kathodenaktivmaterial, sein. Dabei kann die Kathode beispielsweise eine Polymerelektrolyt-Kathode sein. Insbesondere kann die Kathode den Polymerelektrolyten als Binder zur Bindung des Kathodenaktivmaterials, beispielsweise von Kathodenaktivmaterialpartikeln, umfassen.

Die Kathode kann dabei beispielsweise einen Schwefel-Kohlenstoff-Komposit, beispielsweise in dem Schwefel kovalent, insbesondere an Kohlenstoff, gebunden ist, als Kathodenaktivmaterial umfassen. Insbesondere kann die Kathode dabei ein Polymer, insbesondere auf der Basis von Polyacrylnitril (PAN), mit, insbesondere kovalent, gebundenem Schwefel, beziehungsweise einen Schwefel-Polyacrylnitril-Komposit, insbesondere SPAN, als Kathodenaktivmaterial umfassen. Die Kathode kann insbesondere für eine erfindungsgemäße Zelle ausgelegt sein.

Beispielsweise kann die Kathode einen Kathodenstromableiter aufweisen. Der Kathodenstromableiter kann zum Beispiel aus Aluminium oder Kohlenstoff ausgebildet sein. Gegebenenfalls kann der Kathodenstromableiter mit einer Beschichtung zur Verbesserung der Haftung und/oder der der elektrischen Kontaktierung und/oder der der chemischen Stabilität und/oder der Korrosionsstabilität versehen sein. Die Beschichtung kann beispielsweise eine Polymerschicht, insbesondere eine Kohlenstoffmodifikation-Polymerschicht, gegebenenfalls mit einem oder mehreren Additiven, wie Haftvermittlern, Korrosionsschutzadditive, etc., sein. Beispielsweise kann die Beschichtung einen erfindungsgemäßen Polymerelektrolyten umfassen und/oder eine erfindungsgemäße Schutzschicht, insbesondere Kathodenschutzschicht und/oder Anodenschutzschicht, sein.

Die Kathode kann beispielsweise dadurch hergestellt werden, dass Kathodenbestandteile, zum Beispiel in einem Dissolver, mit mindestens einem Lösungsmittel zu einer Schlämme (Englisch: Slurry) gemischt und damit ein Substrat, zum Beispiel eine Folie, beispielsweise eine Aluminiumfolie, insbesondere eine mit einer Kohlenstoffmodifikation beschichtete Folie, beispielsweise Aluminiumfolie, beschichtet wird. Dabei kann das beschichten durch Rakeln erfolgen. Danach kann die Beschichtung getrocknet und/oder kalandriert werden. Dies kann insbesondere derart erfolgen, dass die Porosität minimiert wird.

Alternativ dazu kann die Kathode durch Trockenbeschichten, also lösemittelfreies Beschichten, hergestellt werden.

Hinsichtlich weiterer technischer Merkmale und Vorteile der erfindungsgemäßen Kathode wird hiermit explizit auf die Erläuterungen im Zusammenhang mit dem erfindungsgemäßen Polymer beziehungsweise Polyelektrolyten, der erfindungsgemäßen Verwendung, dem erfindungsgemäßen Kathodenmaterial, dem erfindungsgemäßen Separator, der erfindungsgemäßen Schutzschicht, der erfindungsgemäßen Zelle und dem erfindungsgemäßen Energiespeichersystem sowie auf die Figuren und die Figurenbeschreibung verwiesen.

Weitere nicht erfindungsgemäße Gegenstände sind ein Separator und/oder eine Schutzschicht, beispielsweise eine Kathodenschutzschicht und/oder eine Anodenschutzschicht, zum Beispiel eine Kathodenschutzschicht, für eine elektrochemische Zelle, zum Beispiel für eine Alkalimetall-Zelle, beispielsweise für eine Lithium-Zelle und/oder Natrium-Zelle, insbesondere für eine Lithium-Zelle, zum Beispiel für eine Alkalimetall-Schwefel-Zelle, beispielsweise für eine Lithium-Schwefel-Zelle und/oder Natrium-Schwefel-Zelle, insbesondere für eine Lithium-Schwefel-Zelle, umfassend mindestens einen, insbesondere lithiumionenleitenden oder lithiumionenleitfähigen, Polymerelektrolyten. Der mindestens eine Polymerelektrolyt kann insbesondere wie vorstehend beschrieben ausgestaltet sein. Beispielsweise kann der mindestens eine Polymerelektrolyt mindestens ein Polymer beziehungsweise Polymerelektrolyten, welches beziehungsweise welcher mindestens eine Wiederholungseinheit der allgemeinen chemischen Formel: 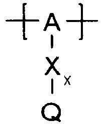 umfasst, und/oder mindestens ein (einfach oder mehrfach) fluoriertes, beispielsweise perfluoriertes, und/oder Lithiumsulfonat substituiertes Polymer, beispielsweise einen Perfluoropolyether und/oder ein Lithiumsulfonat substituiertes, insbesondere fluoriertes, beispielsweise perfluoriertes, Polyolefin, beispielsweise Tetrafluorethylen-Polymer, und/oder einen Lithiumsulfonat substituierten, insbesondere fluorierten, beispielsweise perfluorierten, Polyether, zum Beispiel ein Lithiumionen haltiges, zum Beispiel Lithiumionen ausgetauschtes, Nafion, und/oder ein Lithiumsulfonat substituiertes, insbesondere fluoriertes, beispielsweise perfluoriertes, Polyphenylen, umfassen beziehungsweise sein. A, X, x und Q können dabei wie vorstehend erläutert ausgestaltet sein. Zum Beispiel kann der Separator und/oder die Schutzschicht und/ mindestens ein erfindungsgemäßes Polymer beziehungsweise mindestens einen erfindungsgemäßen Polymerelektrolyten und/oder mindestens ein, einfach oder mehrfach Lithiumsulfonat substituiertes, beispielsweise fluoriertes, zum Beispiel perfluoriertes, Polymer, beispielsweise Polyether und/oder Polyphenylen und/oder Tetrafluorethylen-Polymer, zum Beispiel Lithium-Nafion, und/oder mindestens einen fluorierten, insbesondere perfluorierten, Polyether (Perfluoropolyether) umfassen. Wie vorstehend erläutert kann dies insbesondere vorteilhaft bei Lithium-Schwefel-Zellen, zum Beispiel mit einem Schwefel-Kohlenstoff-Komposit, beispielsweise SPAN, als Kathodenaktivmaterial, sein.

Insbesondere kann daher der Separator beziehungsweise die Schutzschicht für eine Lithium-Schwefel-Zelle, zum Beispiel mit einem Schwefel-Kohlenstoff-Komposit, beispielsweise SPAN, als Kathodenaktivmaterial, ausgelegt sein.

Hinsichtlich weiterer technischer Merkmale und Vorteile des Separators und der Schutzschicht wird hiermit explizit auf die Erläuterungen im Zusammenhang mit dem erfindungsgemäßen Polymer beziehungsweise Polyelektrolyten, der erfindungsgemäßen Verwendung, dem erfindungsgemäßen Kathodenmaterial, der erfindungsgemäßen Kathode, der erfindungsgemäßen Zelle und dem erfindungsgemäßen Energiespeichersystem sowie auf die Figuren und die Figurenbeschreibung verwiesen.

Ein weiterer Gegenstand ist eine elektrochemische Zelle, zum Beispiel eine Alkalimetall-Zelle, beispielsweise eine Lithium-Zelle und/oder Natrium-Zelle, insbesondere eine Lithium-Zelle, zum Beispiel eine Alkalimetall-Schwefel-Zelle, beispielsweise eine Lithium-Schwefel-Zelle und/oder Natrium-Schwefel-Zelle, insbesondere eine Lithium-Schwefel-Zelle, welche (mindestens) einen, insbesondere lithiumionenleitenden oder lithiumionenleitfähigen, Polymerelektrolyten, insbesondere (mindestens) ein erfindungsgemäßes Polymer beziehungsweise (mindesten) einen erfindungsgemäßen Polymerelektrolyten, und/oder ein erfindungsgemäßes Kathodenmaterial und/oder eine erfindungsgemäße Kathode und/oder einen erfindungsgemäßen Separator und/oder eine erfindungsgemäße Schutzschicht, beispielsweise Anodenschutzschicht und/oder Kathodenschutzschicht, umfasst. Die Zelle kann insbesondere eine Kathode und eine Anode umfassen. Insbesondere kann die Zelle eine Lithium-Schwefel-Zelle sein. Dabei kann die Kathode beispielsweise einen Schwefel-Kohlenstoff-Komposit als Kathodenaktivmaterial umfassen. Insbesondere kann die Kathode einen Schwefel-Polyacrylnitril-Komposit, beispielsweise SPAN, als Kathodenaktivmaterial umfassen. Die Anode kann beispielsweise Lithium und/oder Natrium umfassen. Insbesondere kann die Anode Lithium umfassen. Insbesondere kann die Anode eine metallische Anode sein und beispielsweise metallisches Lithium beziehungsweise eine Lithiumlegierung umfassen.

Im Rahmen einer Ausführungsform umfasst die Zelle ein erfindungsgemäßes Kathodenmaterial und/oder einen erfindungsgemäßen Polymerelektrolyten und/oder eine erfindungsgemäße Kathode. Insbesondere kann dabei die Zelle die Zelle, insbesondere zwischen der Anode und der Kathode, einen Separator und/oder eine Schutzschicht aufweisen.

Im Rahmen einer Ausführungsform der Zelle umfasst die Zelle, insbesondere zwischen der Anode und der Kathode, einen Separator und/oder eine Schutzschicht, beispielsweise eine Anodenschutzschicht und/oder eine Kathodenschutzschicht.

Im Rahmen einer Ausgestaltung dieser Ausführungsform umfasst der Separator und/oder die Schutzschicht, beispielsweise die Anodenschutzschicht und/oder die Anodenschutzschicht und/oder Kathodenschutzschicht, ein Block-Co-Polymer. Das Block-Co-Polymer kann dabei beispielsweise ein Di- Block-Co-Polymer oder Tri-Block-Co-Polymer sein. Insbesondere kann dabei der Separator und/oder die Schutzschicht, beispielsweise Anodenschutzschicht, aus dem Block-Co-Polymer, insbesondere aus dem Di- Block-Co-Polymer oder Tri-Block-Co-Polymer, ausgebildet sein. Dabei kann das Block-Co-Polymer insbesondere eine ionisch leitfähige Phase und eine mechanisch stabile Phase aufweisen, die chemisch miteinander verbunden sind und durch Selbstorganisation ein bikontinuierliches Netzwerk ausbilden. Das erfindungsgemäße Kathodenmaterial, beispielsweise auf der Basis eines Schwefel-Polymer-Komposits mit, beispielsweise kovalent und/oder ionisch, insbesondere ionisch, an das Polymer des Komposits gebundenem Schwefel, beispielsweise auf der Basis eines Schwefel-Polyacrylnitril-Komposits, zum Beispiel SPAN, kann mit derartigen Block-Co-Polymeren besonders vorteilhaft eingesetzt werden, da auf den Einsatz von niedermolekularen Etherverbindungen beziehungsweise -lösungsmitteln, welche beispielsweise ansonsten Block-Co-Polymere aufquellen und in ein Polymergel überführen könnten, verzichtet und auf diese Weise ein Aufquellen des Block-Co-Polymers des Separators und/oder der Schutzschicht, beispielsweise der Anodenschutzschicht, verhindert und dessen beziehungsweise deren Funktionsfähigkeit gewährleistet werden kann.

Im Rahmen einer speziellen Ausgestaltung dieser Ausführungsform umfasst der Separator und/oder die Schutzschicht, beispielsweise die Anodenschutzschicht und/oder die Kathodenschutzschicht, mindestens ein Polystyrol-Polyalkylenoxid-Block-Co-Polymer, insbesondere Polystyrol-Polyetyhlenoxid-Block-Co-Polymer, zum Beispiel Poly(styrol-b-ethylenoxid), insbesondere mit einer Molmasse der Blöcke von ≥ 5000 Dalton, beispielsweise mit einer Gesamtmolmasse von ≥ 150.000 Dalton, insbesondere mit einer Gesamtmolmasse von ≥ 350.000 Dalton. Insbesondere kann dabei der Separator und/oder die Schutzschicht aus dem Polystyrol-Polyalkylenoxid-Block-Co-Polymer, insbesondere Polystyrol-Polyetyhlenoxid-Block-Co-Polymer, zum Beispiel Poly(styrol-b-ethylenoxid), insbesondere mit einer Molmasse der Blöcke von ≥ 5000 Dalton, beispielsweise mit einer Gesamtmolmasse von ≥ 150.000 Dalton, insbesondere mit einer Gesamtmolmasse von ≥ 350.000 Dalton, ausgebildet sein. Der Separator und/oder die Schutzschicht, beispielsweise die Anodenschutzschicht und/oder die Kathodenschutzschicht, kann jedoch auch ein Block-Co-Polymer, beispielsweise Tri-Block-Co-Polymer, umfassen beziehungsweise daraus ausgebildet sein, welches mindestens eine Polystyrolkomponente und mindestens eine Polyethylenoxidkomponente und mindestens eine weitere Polymerkomponente, beispielsweise eine Polyisoprenkomponente, umfasst. Polystyrol-Polyetyhlenoxid-Block-Co-Polymer können vorteilhafterweise bei Betriebstemperaturen von elektrochemischen Zellen, insbesondere Lithium-Schwefel-Zellen, eine ionische Leitfähigkeit von > 10⁻⁵ S/cm aufweisen.

Im Rahmen einer weiteren, alternativen oder zusätzlichen, speziellen Ausgestaltung dieser Ausführungsform umfasst der Separator und/oder die Schutzschicht, beispielsweise die Anodenschutzschicht und/oder die Kathodenschutzschicht, mindestens ein Polyacrylat-Polyalkylenoxid-Block-Co-Polymer, insbesondere Polyacrylat-Polyethylenoxid-Block-Co-Polymer, zum Beispiel Poly(acrylate-ethyleneoxid), insbesondere mit einer Molmasse der Blöcke von ≥ 5000 Dalton, beispielsweise mit einer Gesamtmolmasse von ≥ 150.000 Dalton, insbesondere mit einer Gesamtmolmasse von ≥ 350.000 Dalton. Insbesondere kann dabei der Separator und/oder die Schutzschicht aus dem Polyacrylat-Polyalkylenoxid-Block-Co-Polymer, insbesondere Polyacrylat-Polyethylenoxid-Block-Co-Polymer, zum Beispiel Poly(acrylate-ethyleneoxid), insbesondere mit einer Molmasse der Blöcke von ≥ 5000 Dalton, beispielsweise mit einer Gesamtmolmasse von ≥ 150.000 Dalton, insbesondere mit einer Gesamtmolmasse von ≥ 350.000 Dalton, ausgebildet sein. Der Separator und/oder die Schutzschicht, beispielsweise die Anodenschutzschicht und/oder die Kathodenschutzschicht, kann jedoch auch ein Block-Co-Polymer, beispielsweise Tri-Block-Co-Polymer, umfassen beziehungsweise daraus ausgebildet sein, welches mindestens eine Polyacrylatkomponente und mindestens eine Polyethylenoxidkomponente und mindestens eine weitere Polymerkomponente, beispielsweise eine Polyisoprenkomponente, umfasst. Polyacrylat-Polyethylenoxid-Block-Co-Polymer können vorteilhafterweise ebenfalls bei Betriebstemperaturen von elektrochemischen Zellen, insbesondere Lithium-Schwefel-Zellen, eine hohe ionische Leitfähigkeit aufweisen.

Im Rahmen einer weiteren, alternativen oder zusätzlichen, speziellen Ausgestaltung dieser Ausführungsform umfasst der Separator und/oder die Schutzschicht, beispielsweise Anodenschutzschicht und/oder die Kathodenschutzschicht, mindestens ein Polymer beziehungsweise Polymerelektrolyten, zum Beispiel in Form eines Block-Co-Polymers, aufweisend mindestens eine Wiederholunseinheit der allgemeinen chemischen Formel: 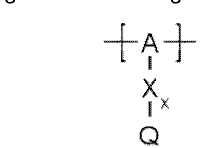 wobei -[A]- für eine Polymerrücken bildende Einheit steht, wobei X für einen Spacer steht, wobei x für die Anzahl des Spacers X steht und 1 oder 0 ist, und wobei Q für eine positiv geladene Gruppe Q⁺ und ein Gegenion Z⁻ steht, oder wobei Q für eine negativ geladene Gruppe Q⁻ und ein Gegenion Z⁺ steht, oder wobei Q für eine ungeladene Gruppe Q, insbesondere für eine cyclische Carbonatgruppe oder eine Lactongruppe oder eine cyclische Carbamatgruppe oder eine acyclische Carbonatgruppe oder eine acyclische Carbonsäureestergruppe oder eine acyclische Carbamatgruppe oder eine Alkylenoxidgruppe, steht.

Dabei kann die Polymerrücken bildende Einheit -[A]- und/oder der Spacer X und/oder die Gruppe Q, beispielsweise Q⁺ beziehungsweise Q⁻ beziehungsweise Q, und/oder das Anion Z⁻ und/oder das Kation Z⁺ wie vorstehend erläutert ausgestaltet sein. Beispielsweise kann dabei die mindestens eine Wiederholungseinheit (mindestens) eine vorstehend erläuterte spezielle Wiederholungseinheit umfassen beziehungsweise sein.

Der mindestens eine Polymerelektrolyt kann insbesondere wie vorstehend beschrieben ausgestaltet sein. Beispielsweise kann der mindestens eine Polymerelektrolyt mindestens ein Polymer beziehungsweise Polymerelektrolyten, welcher mindestens eine Wiederholungseinheit der allgemeinen chemischen Formel: 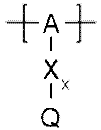 umfasst, und/oder mindestens ein (einfach oder mehrfach) fluoriertes, beispielsweise perfluoriertes, und/oder Lithiumsulfonat substituiertes Polymer, beispielsweise einen Perfluoropolyether und/oder ein Lithiumsulfonat substituiertes, insbesondere fluoriertes, beispielsweise perfluoriertes, Polyolefin, beispielsweise Tetrafluorethylen-Polymer, und/oder einen Lithiumsulfonat substituierten, insbesondere fluorierten, beispielsweise perfluorierten, Polyether, zum Beispiel ein Lithiumionen haltiges, zum Beispiel Lithiumionen ausgetauschtes, Nafion, und/oder ein Lithiumsulfonat substituiertes, insbesondere fluoriertes, beispielsweise perfluoriertes, Polyphenylen, umfassen beziehungsweise sein. Zum Beispiel kann der Polymerelektrolyt ein erfindungsgemäßer Polymerelektrolyt und/oder ein, einfach oder mehrfach Lithiumsulfonat substituiertes, beispielsweise fluoriertes, zum Beispiel perfluoriertes, Polymer, beispielsweise Polyether und/oder Polyphenylen und/oder Tetrafluorethylen-Polymer, zum Beispiel Lithium-Nafion, und/oder mindestens ein fluorierter, insbesondere perfluorierter, Polyether (Perfluoropolyether) sein. Wie vorstehend erläutert kann dies insbesondere vorteilhaft bei Lithium-Schwefel-Zellen, zum Beispiel mit einem Schwefel-Kohlenstoff-Komposit, beispielsweise SPAN, als Kathodenaktivmaterial, sein.

Die Kathode kann insbesondere ein Kathodenmaterial umfassen. Dabei kann das Kathodenmaterial mindestens ein Kathodenaktivmaterial umfassen. Das mindestens eine Kathodenaktivmaterial kann insbesondere einen Schwefel-Kohlenstoff-Komposit, beispielsweise in dem Schwefel kovalent, insbesondere an Kohlenstoff, gebunden ist, umfassen. Insbesondere kann das mindestens eine Kathodenaktivmaterial ein Polymer, insbesondere auf der Basis von Polyacrylnitril (PAN), mit, insbesondere kovalent, gebundenem Schwefel, beziehungsweise einen Schwefel-Polyacrylnitril-Komposit, insbesondere SPAN, umfassen oder sein. Das Kathodenmaterial kann beispielsweise ein erfindungsgemäßes Kathodenmaterial beziehungsweise die Kathode kann beispielsweise eine erfindungsgemäße Kathode sein.

Dabei kann die lonenleitung innerhalb der Kathode und hin zur Anode beziehungsweise hin zu einem Separator beziehungsweise Anodenraum auf der Basis des mindestens einen Polymerelektrolyten erfolgen. Der mindestens eine Polymerelektrolyt kann beispielsweise im Kathodenmaterial und/oder in einem Bereich zwischen Anode und Kathode, beispielsweise in einem Separator und/oder in einer Schutzschicht, enthalten sein.

Im Rahmen einer Ausgestaltung dient der Polymerelektrolyt als Matrix(material) für das Kathodenaktivmaterial. Dabei kann insbesondere das Kathodenmaterial den mindestens einen Polymerelektrolyten umfassen. Beispielsweise kann das Kathodenmaterial eine Mischung aus dem mindestens einen Kathodenaktivmaterial und dem mindestens einen Polymerelektrolyten umfassen. Insbesondere kann die Zelle ein erfindungsgemäßes Kathodenmaterial beziehungsweise eine erfindungsgemäße Kathode umfassen.

Durch den Polymerelektrolyten kann dabei vorteilhafterweise eine elastische Verbindung zwischen Kathodenaktivmaterialpartikeln und beispielsweise Partikeln eines elektrischen Leitzusatzes eingehen und aufgrund seiner Eigenschaften eine für den Zellbetrieb ausreichende lonenleitfähigkeit, insbesondere Lithiumionenleitfähigkeit, gewährleisten. So kann wiederum vorteilhafterweise auf einen zusätzlichen Binder zur Bindung des Kathodenmaterials verzichtet werden. Zudem kann so auch auf die Verwendung eines reinen Flüssigelektrolyten verzichtet und die Gesamtsicherheit des Systems erhöht werden.

Im Rahmen einer zusätzlichen oder alternativen Ausgestaltung dient der Polymerelektrolyt als Separator oder Schutzschicht. Dabei kann insbesondere eine zwischen der Kathode und der Anode angeordnete Schicht, beispielsweise ein Separator und/oder eine Schutzschicht, den mindestens einen Polymerelektrolyten umfassen. Beispielsweise kann die zwischen der Kathode und der Anode angeordnete Schicht, beispielsweise ein Separator und/oder eine Schutzschicht, aus dem mindestens einen Polymerelektrolyten ausgebildet sein. Dabei kann die zwischen der Kathode und der Anode angeordnete Schicht zum Beispiel ein erfindungsgemäßer Separator und/oder eine erfindungsgemäße Schutzschicht sein. Beispielsweise kann die zwischen der Kathode und der Anode angeordnete Schicht eine Separator- und/oder Schutzschichtfunktion übernehmen oder auch als zusätzliche Separatorschicht und/oder Schutzschicht, beispielsweise Kathodenschutzschicht, zwischen Anode und Kathode, beispielsweise zwischen Anodenschutzschicht und Kathode, angeordnet sein.

Durch die Verwendung eines Polymerelektrolyten kann vorteilhafterweise die Sicherheit erhöht und beispielsweise auf einen herkömmlichen flüssigen Elektrolyten verzichtet werden. Herkömmliche Flüssigelektrolyte weisen in der Regel einen zu hohen Dampfdruck auf, um bei erhöhten Temperaturen dauerhaft betrieben werden zu können. Die Verwendung eines Polymerelektrolyten kann daher insbesondere dann vorteilhaft sein, wenn die Zelle während des Betriebes höheren Temperaturen, beispielsweise Außentemperaturen ausgesetzt ist, oder die Betriebstemperatur der Zelle selbst bei Temperaturen deutlich über der Raumtemperatur liegt.

Durch die Verwendung eines Polymerelektrolyten im Kathodenmaterial und/oder einer Schutzschicht und/oder einem Separator kann zudem vorteilhafterweise - aufgrund der geringen Fließfähigkeit der Polymerelektrolyten - auf einfache Weise eine Trennung beziehungsweise Abdichtung des Kathodenraums und/oder Separatorraums und/oder Anodenraums erzielt und insbesondere eine komplizierte Trennung beziehungsweise Abdichtung des Kathodenraums und/oder Separatorraums und/oder Anodenraums voneinander vermieden werden. Eine Trennung ist insbesondere in Lithium-Schwefel-(Akkumulator-)Zellen wichtig, um einen Kontakt beziehungsweise eine Reaktion zwischen Anodenmaterial, insbesondere einer Lithium-Metallanode, oder Anodenmaterialschutzschicht mit gelösten Reaktionsprodukten und/oder Kathodenmaterial und/oder Elektrolyten der Kathodenseite zu vermeiden. Der Polymerelektrolyt kann vorteilhafterweise zudem innerhalb der Kathode Binderaufgaben übernehmen und sich den Volumenänderungen von elektroaktiven Partikeln innerhalb Kathode, welche beispielsweise aufgrund der elektrochemischen Reaktionen während des Laden und Entladens der Zelle auftreten können, anpassen. So können wiederum vorteilhafterweise Risse oder Brüche vermieden werden. Dabei kann durch den Polymerelektrolyten zudem erzielt werden, dass die Kathode als Ganzes eine dichte Schicht bilden kann.

In dem Kathodenmaterial und in der Schicht kann sowohl der gleich als auch ein unterschiedlicher Polymerelektrolyt verwendet werden. Insbesondere kann in dem Kathodenmaterial und in der Schicht der gleiche Polymerelektrolyt eingesetzt werden.

Der mindestens eine Polymerelektrolyt kann insbesondere mindestens ein Lithium-Leitsalz und/oder beispielsweise mindestens eine ionische Flüssigkeit und/oder zum Beispiel weitere vorstehend beschriebene Komponenten umfassen.

Alternativ oder zusätzlich kann die Zelle mindestens eine Anodenschutzschicht, beispielsweise aus polymeren und/oder anorganischen, insbesondere anorganischen, zum Beispiel keramischen und/oder glasartigen, lonenleiter, insbesondere Lithiumionenleiter, aufweisen. Durch eine Anodenschutzschicht aus einem anorganischen lonenleiter kann vorteilhafterweise ein Dendritenwachstum besonders effektiv gehindert werden.

Darüber hinaus kann die Zelle mindestens einen Stromableiter, insbesondere Kathodenstromableiter und/oder Anodenstromableiter, umfassen. Der Kathodenstromableiter kann zum Beispiel aus Aluminium oder Kohlenstoff ausgebildet sein. Gegebenenfalls kann der mindestens eine Stromableiter, insbesondere Kathodenstromableiter und/oder Anodenstromableiter, mit einer Beschichtung zur Verbesserung der Haftung und/oder der der elektrischen Kontaktierung und/oder der der chemischen Stabilität und/oder der Korrosionsstabilität versehen sein. Die Beschichtung kann beispielsweise eine Polymerschicht, insbesondere eine Kohlenstoffmodifikation-Polymerschicht, gegebenenfalls mit einem oder mehreren Additiven, wie Haftvermittlern, Korrosionsschutzadditive, etc., sein. Beispielsweise kann die Beschichtung einen erfindungsgemäßen Polymerelektrolyten umfassen und/oder eine erfindungsgemäße Schutzschicht, insbesondere Kathodenschutzschicht und/oder Anodenschutzschicht, sein.

Insbesondere kann die Zelle eine Feststoffzelle sein.

Hinsichtlich weiterer technischer Merkmale und Vorteile der erfindungsgemäßen Zelle wird hiermit explizit auf die Erläuterungen im Zusammenhang mit dem erfindungsgemäßen Polymer beziehungsweise Polyelektrolyten, der erfindungsgemäßen Verwendung, dem erfindungsgemäßen Kathodenmaterial, der erfindungsgemäßen Kathode, dem erfindungsgemäßen Separator, der erfindungsgemäßen Schutzschicht und dem erfindungsgemäßen Energiespeichersystem sowie auf die Figuren und die Figurenbeschreibung verwiesen.

Darüber hinaus betrifft die Erfindung ein Energiespeichersystem welches mindestens zwei erfindungsgemäße Zellen umfasst. Beispielsweise kann das Energiespeichersystem eine Alkalimetall-Batterie, beispielsweise eine Lithium-Batterie und/oder Natrium-Batterie, insbesondere eine Lithium-Batterie, zum Beispiel eine Alkalimetall-Schwefel-Batterie, beispielsweise eine Lithium-Schwefel-Batterie und/oder Natrium-Schwefel-Batterie, insbesondere eine Lithium-Schwefel-Batterie, gegebenenfalls eine Alkalimetall-Luft-Batterie beziehungsweise Alkalimetall-Ionen-Batterie, beispielsweise eine Lithium-Luft-Batterie beziehungsweise Lithium-Ionen-Batterie sein, beispielsweise welche auch als Akkumulator bezeichnet werden kann. Das Energiespeichersystem kann beispielsweise zur Speicherung von elektrischem Strom aus Solarzellen und/oder aus einem Windkraftwerk und/oder für ein Fahrzeug, beispielsweise Elektrofahrzeug oder Hybridfahrzeug, und/oder für ein elektronisches Gerät ausgelegt sein.

Hinsichtlich weiterer technischer Merkmale und Vorteile des erfindungsgemäßen Energiespeichersystems wird hiermit explizit auf die Erläuterungen im Zusammenhang mit dem erfindungsgemäßen Polymer beziehungsweise Polyelektrolyten, der erfindungsgemäßen Verwendung, dem erfindungsgemäßen Kathodenmaterial, der erfindungsgemäßen Kathode, dem erfindungsgemäßen Separator, der erfindungsgemäßen Schutzschicht und der erfindungsgemäßen Zelle sowie auf die Figuren und die Figurenbeschreibung verwiesen.

### Zeichnung

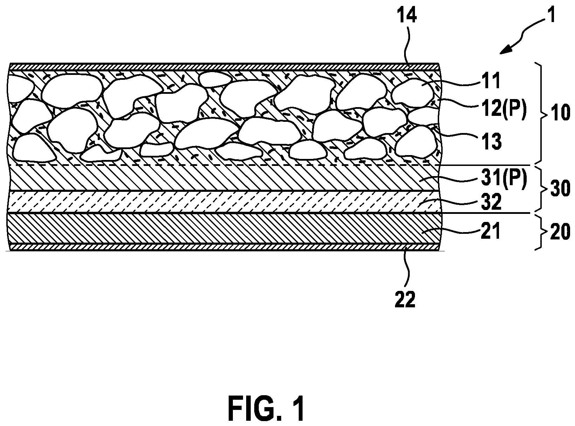

Weitere Vorteile und vorteilhafte Ausgestaltungen der erfindungsgemäßen Gegenstände werden durch die Zeichnung veranschaulicht und in der nachfolgenden Beschreibung erläutert. Dabei ist zu beachten, dass die Zeichnung nur beschreibenden Charakter hat und nicht dazu gedacht ist, die Erfindung in irgendeiner Form einzuschränken. Es zeigt
- Fig. 1: einen schematischen Querschnitt durch eine Ausführungsform einer erfindungsgemäßen Zelle.

Figur 1 zeigt eine Lithium-Zelle 1, insbesondere eine Lithium-Schwefel-Zelle, welche eine Kathode 10, eine Anode 20 und einen Bereich 30 zwischen der Kathode 10 und der Anode 20 aufweist.

Figur 1 illustriert, dass dabei die Kathode 10 insbesondere ein partikelförmiges Kathodenaktivmaterial 11 und einen Kathodenstromableiter 14 aufweist. Das partikelförmige Kathodenaktivmaterial 11 kann beispielsweise ein Schwefel-Kohlenstoff-Komposit, insbesondere ein Schwefel-Polyacrylnitril-Komposit, zum Beispiel SPAN, sein. Der Kathodenstromableiter 14 kann dabei beispielsweise aus Aluminium ausgebildet sein und insbesondere sowohl zur elektrischen Kontaktierung als auch als Träger dienen. Das partikelförmige Kathodenaktivmaterial 11 ist dabei mittels eines, als Binder 12 dienenden Polymerelektrolyten P mit dem Kathodenstromableiter 14, beispielsweise elastisch, verbunden. Der Polymerelektrolyt P kann beispielsweise ein Block-Co-Polymer sein.

Figur 1 veranschaulicht, dass dem partikelförmigen Kathodenaktivmaterial 11 ein partikelförmiges, insbesondere elektrisches, Leitadditiv 13, beispielsweise eine Kohlenstoffmodifikation, zugemischt ist, welches ebenfalls mittels des, als Binder 12 dienenden Polymerelektrolyten P mit dem Kathodenaktivmaterial 11 und dem Kathodenstromableiter 14, beispielsweise elastisch, verbunden ist.

Figur 1 zeigt, dass die Anode 20 ein Anodenaktivmaterial 21, beispielsweise metallisches Lithium oder eine Lithiumlegierung, und einen Anodenstromableiter 22, zum Beispiel aus Kupfer, umfasst.

Figur 1 veranschaulicht, dass zwischen 30 der Kathode 10 und der Anode 20 eine Schicht 31 aus dem Polymerelektrolyten P ausgebildet ist, welche als Separator und/oder Schutzschicht dient. Figur 1 zeigt, dass dabei zusätzlich eine Anodenschutzschicht 32, beispielsweise aus einem anorganischen, zum Beispiel keramischen und/oder glasartigen, Material vorgesehen werden kann, welche beispielsweise als Sperrschicht gegen Dendritenwachstum dient. Gegebenenfalls kann die Schicht aus dem Polymerelektrolyten P jedoch auch als alleinige Schicht zwischen Anode 20 und Kathode 10 dienen, welche die Anodenschutzschicht ersetzt (nicht dargestellt).

## Patentansprüche

1. Kathodenmaterial (10) für eine Alkalimetall-Zelle (1), insbesondere eine Lithium-Schwefel-Zelle, umfassend
- mindestens ein Kathodenaktivmaterial (11), wobei das mindestens eine Kathodenaktivmaterial (11) schwefelhaltig ist, und
- mindestens ein Polymer (P), insbesondere Polymerelektrolyt, aufweisend mindestens eine Wiederholungseinheit der allgemeinen chemischen Formel: 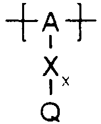
wobei -[A]- für eine Polymerrücken bildende Einheit steht,
wobei X für einen Spacer steht, wobei x für die Anzahl des Spacers X steht und 1 oder 0 ist, und
wobei Q für eine negativ geladene Gruppe Q⁻ und ein Gegenion Z⁺ steht, oder
wobei Q für eine positiv geladene Gruppe Q+ und ein Gegenion Z⁻ steht, **gekennzeichnet dadurch, dass** das Kathodenmaterial als Polymer mindestens ein Co-Polymer (P) umfasst, welches mindestens eine erste Wiederholungseinheit und mindestens eine zweite, von der mindestens einen ersten Wiederholungseinheit unterschiedliche Wiederholungseinheit aufweist, wobei die mindestens eine erste Wiederholungseinheit die allgemeine chemische Formel: 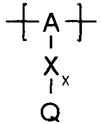 aufweist, und
wobei die mindestens eine zweite Wiederholungseinheit eine teilweise oder vollständig fluorierte, insbesondere perfluorierte, Alkylenoxid-Einheit, und/oder eine Wiederholungseinheit ist, die eine teilweise oder vollständig fluorierte, insbesondere perfluorierte, Alkylenoxid-Funktion, trägt.

2. Kathodenmaterial (10) nach Anspruch 1, wobei zusätzlich das Kathodenmaterial eine Polymermischung, insbesondere ein Polymerblend, aus mindestens einem ersten Polymer und mindestens einem zweiten Polymer umfasst, wobei das mindestens eine erste Polymer mindestens eine Wiederholungseinheit der allgemeinen chemischen Formel: 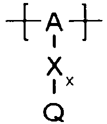 aufweist.

3. Kathodenmaterial nach Anspruch 1, wobei die mindestens eine zweite Wiederholungseinheit eine Alkylenoxid-Einheit und/oder eine Wiederholungseinheit ist, die eine Alkylenoxid-Funktion trägt, insbesondere wobei die mindestens eine zweite Wiederholungseinheit eine Ethylenoxid-Einheit und/oder eine Wiederholungseinheit ist, die eine Ethylenoxid-Funktion, insbesondere eine Oligo-Ethylenoxid-Funktion, trägt.

4. Kathodenmaterial (10) nach Anspruch 2, wobei das mindestens eine zweite Polymer ein Polyalkylenoxid ist und/oder eine Wiederholungseinheit aufweist, die eine Alkylenoxid-Funktion trägt, insbesondere wobei das mindestens eine zweite Polymer ein Polyethylenoxid ist und/oder eine Wiederholungseinheit aufweist, die eine Ethylenoxid-Funktion, insbesondere eine Oligo-Ethylenoxid-Funktion, trägt.

5. Kathodenmaterial (10) nach einem der Ansprüche 2 und 4, wobei das mindestens eine zweite Polymer ein teilweise oder vollständig fluoriertes, insbesondere perfluoriertes, Polyalkylenoxid ist und/oder eine Wiederholungseinheit aufweist, die eine teilweise oder vollständig fluorierte, insbesondere perfluorierte, Alkylenoxid-Funktion trägt.

6. Kathodenmaterial (10) nach einem der Ansprüche 1 bis 5,
wobei Q⁻ für eine Gruppe auf der Basis eines Lithium-Leitsalzanions oder für eine Gruppe auf der Basis eines Anions einer ionischen Flüssigkeit oder für eine Sulfonatgruppe oder für eine Sulfatgruppe oder für eine Carboxylatgruppe oder für eine Gruppe auf der Basis eines phosphorsäurebasierten Anions oder für eine Gruppe auf der Basis eines Anions eines lmids oder für eine Gruppe auf der Basis eines Anions eines Amids oder für eine Gruppe auf der Basis eines Anions eines Carbonsäureamids und Z⁺ für ein ein Alkaliion, insbesondere ein Lithiumion, steht, und/oder
wobei Q⁺ für eine Gruppe auf der Basis eines Kations einer ionischen Flüssigkeit und Z⁻ für ein Anion, insbesondere ein Lithium-Leitsalzanion, steht.

7. Kathodenmaterial (10) nach einem der Ansprüche 1 bis oder 6,
wobei Q⁻ für eine Sulfonylimidgruppe oder für eine Sulfonatgruppe steht, insbesondere wobei Q⁻ für eine Trifluormethansulfonylimid-Gruppe oder Perfluorethansulfonylimid-Gruppe oder Fluorsulfonylimid-Gruppe oder eine Sulfonatgruppe oder eine Trifluormethansulfonat-Gruppe steht, und Z⁺ für ein Alkaliion, insbesondere ein Lithiumion, steht, oder
wobei Q+ für eine Pyridiniumgruppe oder eine Ammoniumgruppe oder eine Imidazoliumgruppe oder eine Piperidiniumgruppe oder eine Pyrrolidiniumgruppe oder eine Phosphoniumgruppe oder eine Guanidiniumgruppe oder eine Morpholiniumgruppe oder eine Uroniumgruppe oder eine Thiouroniumgruppe und Z⁻ für ein Anion, insbesondere ein Lithium-Leitsalzanion, steht.

8. Kathodenmaterial (10) nach einem der Ansprüche 1 bis 7, wobei Z⁻ für Bis(trifluormethansulfonyl)imid und/oder Bis(perfluorethansulfonyl)imid und/oder Bis(fluorsulfonyl)imid, insbesondere Bis(trifluormethansulfonyl)imid, und/oder Trifluormethansulfonat und/oder Tetrafluoroborat und/oder Bisoxalatoborat und/oder Difluorooxalatoborat und/oder Bromid und/oder lodid und/oder Chlorid steht, insbesondere wobei Z⁻ für Bis(trifluormethansulfonyl)imid und/oder Bis(perfluorethansulfonyl)imid und/oder Bis(fluorsulfonyl)imid, insbesondere für Bis(trifluormethansulfonyl)imid, und/oder Trifluormethansulfonat steht, oder wobei Z⁺ für ein Lithiumion steht.

9. Kathodenmaterial (10) nach einem der Ansprüche 1 bis 8, wobei die Polymerrücken bildende Einheit -[A]- zumindest eine polyfunktionalisierte Siloxan-Einheit und/oder eine polyfunktionalisierte Phosphazen-Einheit und/oder eine polyfunktionalisierte Phenylen-Einheit umfasst.

10. Kathodenmaterial (10) nach einem der Ansprüche 1 bis 9, wobei der Spacer X mindestens eine Alkylenoxidgruppe, insbesondere Oligo-AlkylenoxidGruppe, umfasst.

11. Kathodenmaterial (10) nach einem der Ansprüche 1 bis 10, wobei der Spacer X mindestens eine Carbonylgruppe, insbesondere mindestens eine cyclische Carbonatgruppe und/oder mindestens eine Lactongruppe und/oder mindestens eine cyclische Carbamatgruppe und/oder mindestens eine acyclische Carbonatgruppe und/oder mindestens eine acyclische Carbonsäureestergruppe und/oder mindestens eine acyclische Carbamatgruppe, insbesondere mindestens eine acyclische Carbonatgruppe, umfasst.

12. Kathodenmaterial (10) nach einem der Ansprüche 1 bis 11, wobei der Spacer X
- mindestens eine weitere, negativ geladene Gruppe Q⁻, insbesondere mindestens eine Sulfonylimidgruppe, und/oder eine Sulfonatgruppe, und ein Gegenion Z+, beispielsweise Alkaliion, insbesondere Lithiumion, umfasst, und/oder
- mindestens eine weitere, positiv geladene Gruppe Q+, insbesondere auf der Basis eines Kations einer ionischen Flüssigkeit, insbesondere mindestens eine Ammoniumiongruppe und/oder mindestens eine Pyridiniumgruppe und/oder mindestens eine Imidazoliumgruppe und/oder mindestens eine Piperidiniumgruppe und/oder mindestens eine Pyrrolidiniumgruppe und/oder mindestens eine Phosphoniumgruppe und/oder mindestens eine Guanidiniumgruppe und/oder mindestens eine Morpholiniumgruppe und/oder mindestens eine Uroniumgruppe und/oder mindestens eine Thiouroniumgruppe und ein Gegenion Z⁻, beispielsweise Leitsalzanion, insbesondere Lithium-Leitsalzanion,
umfasst.

13. Kathodenmaterial (10) nach einem der Ansprüche 1 bis 12, wobei die Polymerrücken bildende Einheit -[A]- und/oder der Spacer X und/oder die Gruppe Q beziehungsweise Q⁺ beziehungsweise Q⁻ halogeniert, insbesondere fluoriert, ist.

14. Kathodenmaterial (10) nach einem der Ansprüche 1 bis 13, wobei die Polymerrücken bildende Einheit -[A]- und/oder der Spacer X und/oder die Q⁺ beziehungsweise Q⁻ eine fluorierte, insbesondere perfluorierte, Alkylenoxid-Einheit, insbesondere Oligo-Alkylenoxid-Einheit, umfasst und/oder wobei die Polymerrücken bildende Einheit -[A]- und/oder der Spacer X und/oder die Q+ beziehungsweise Q⁺ perfluoriert ist.

15. Kathodenmaterial (10) nach einem der Ansprüche 1 bis 14, wobei das mindestens eine Polymer (P) mindestens eine Wiederholungseinheit der allgemeinen chemischen Formel, insbesondere wobei die mindestens eine erste Wiederholungseinheit die allgemeine chemische Formel: 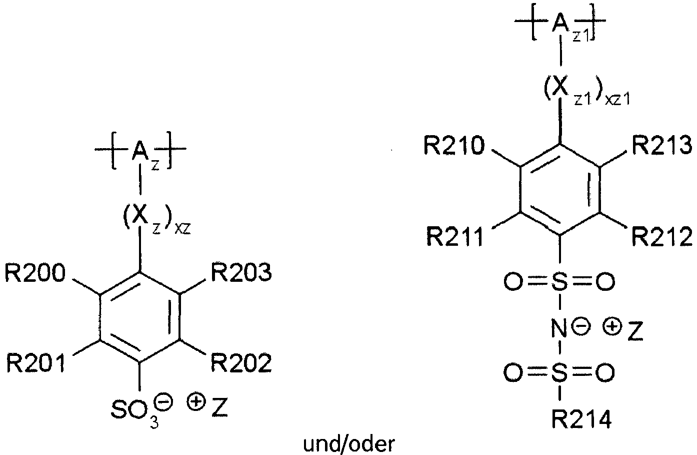 und/oder 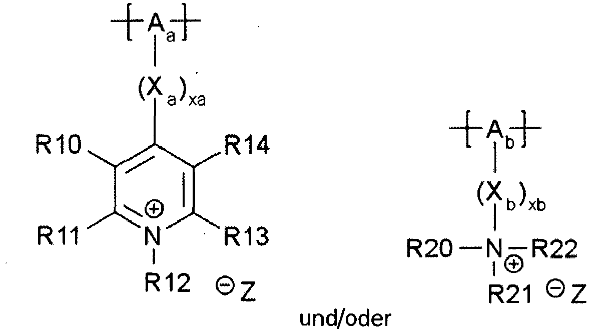 und/oder 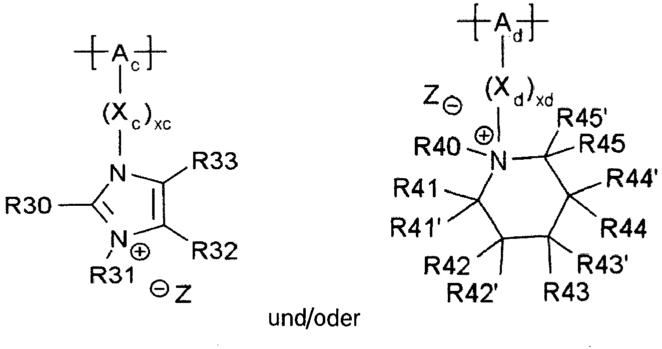 und/oder 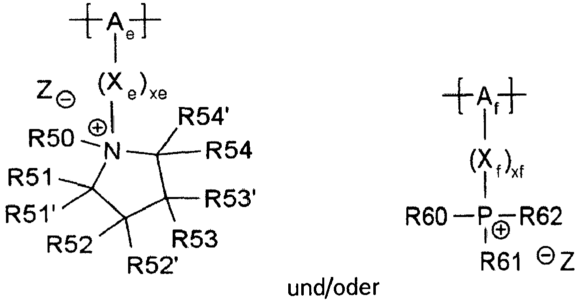 aufweist beziehungsweise umfasst,
wobei -[Aₐ]-, -[A_{b}]-, -[A_{c}]-, -[A_{d}]-, -[Aₑ]-, -[Af]-, -[Az]- beziehungsweise -[A_{Z1}]- für eine Polymerrücken bildende Einheit steht,
wobei (Xₐ), (X_{b}), (X_{c}), (X_{d}), (Xₑ), (X_{f}), (Xz) beziehungsweise (X_{Z1}) für einen Spacer steht,
wobei xa, xb, xc, xd, xe, xf, xz beziehungsweise xz1 für die Anzahl des Spacers steht und 1 oder 0 ist, und
wobei die Polymerrücken bildende Einheit -[Aₐ]-, -[A_{b}]-, -[A_{c}]-, -[A_{d}]-, -[Aₑ]-, -[A_{f}]-, - [Az]- beziehungsweise -[A_{Z1}]- für eine Alkylenoxid-Einheit, insbesondere eine Ethylenoxid-Einheit, und/oder eine Alkylen-Einheit und/oder eine, eine Carbonatgruppe umfassende Einheit und/oder eine Methacrylat-Einheit und/oder eine Methylmethacrylat-Einheit und/oder eine Siloxan-Einheit und/oder eine Phosphazen-Einheit und/oder Phenylen-Einheit stehen,
wobei R10, R11, R13 und R14 beziehungsweise R30, R32 und R33 beziehungsweise R41, R41', R42, R42', R43, R43', R44, R44', R45 und R45' beziehungsweise R51, R51', R52, R52', R53, R53', R54 und R54' beziehungsweise R200, R201, R202 und R203 beziehungsweise R210, R211, R212, 213 und R214 jeweils unabhängig voneinander für Wasserstoff oder ein Halogenatom, insbesondere Fluor, oder eine Alkylgruppe und/oder eine Alkylenoxidgruppe, insbesondere Oligo-Alkylenoxidgruppe, und/oder eine Alkoxygruppe und/oder eine Phenylenoxidgruppe und/oder eine Phenoxygruppe und/oder eine Phenylengruppe und/oder eine Phenylgruppe und/oder eine Benzylengruppe und/oder eine Benzylgruppe und/oder eine Carbonylgruppe und/oder eine, insbesondere cylische oder acyclische, Carbonatgruppe, und/oder eine, insbesondere cyclische oder acyclische, Carbonsäureestergruppe, insbesondere eine Lactongruppe, und/oder eine, insbesondere cyclische oder acyclische, Carbamatgruppe und/oder eine geladene Gruppe, insbesondere eine positiv geladene Gruppe, insbesondere auf der Basis eines Kations einer ionischen Flüssigkeit, zum Beispiel eine quartäre Ammoniumgruppe und/oder eine quartäre Phosphoniumgruppe, und/oder eine negativ geladene Gruppe, insbesondere auf der Basis eines Leitsalzanions, insbesondere Lithium-Leitsalzanions, und/oder eines Anions einer ionischen Flüssigkeit oder eine Sulfonatgruppe, zum Beispiel eine Sulfonylimidgruppe oder eine Sulfonatgruppe, stehen,
wobei R12 beziehungsweise R20, R21 und R22 beziehungsweise R31 beziehungsweise R40 beziehungsweise R50 beziehungsweise R60, R61 und R62 jeweils unabhängig voneinander für eine Alkylgruppe und/oder eine Alkylenoxidgruppe, insbesondere Oligo-Alkylenoxidgruppe, und/oder eine Alkoxygruppe und/oder eine Phenylenoxidgruppe und/oder eine Phenoxygruppe und/oder eine Phenylengruppe und/oder eine Phenylgruppe und/oder eine Benzylengruppe und/oder eine Benzylgruppe und/oder eine Carbonylgruppe und/oder eine Carbonatgruppe und/oder eine Carbonsäureestergruppe und/oder eine Carbamatgruppe stehen.

16. Kathodenmaterial (10) nach Anspruch 15, wobei das Kathodenmaterial (10) mindestens ein Co-Polymer (P), insbesondere Block-Co-Polymer, der allgemeinen chemischen Formel: 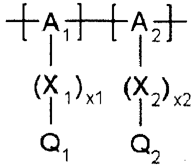 umfasst, wobei die Wiederholungseinheit: 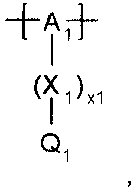 mindestens eine Wiederholungseinheit der allgemeinen chemischen Formel: 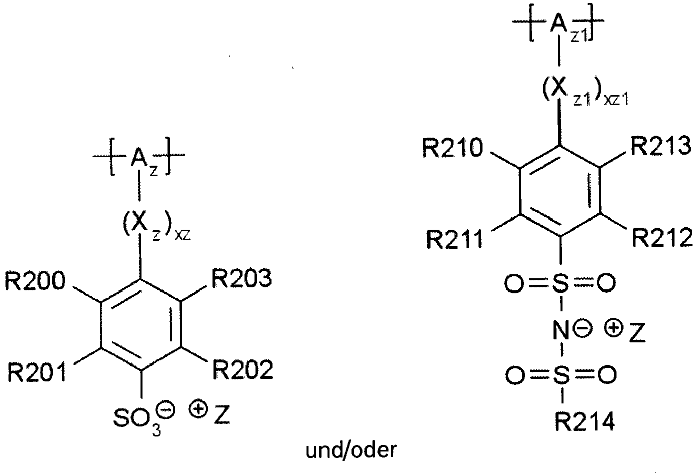 und/oder 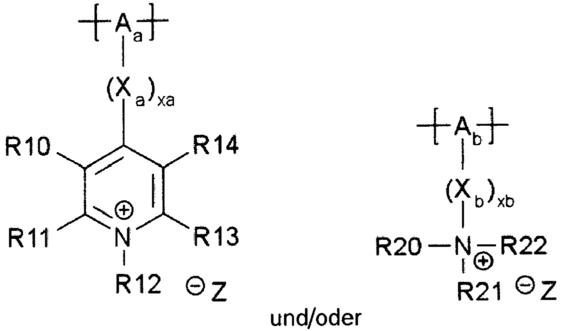 und/oder 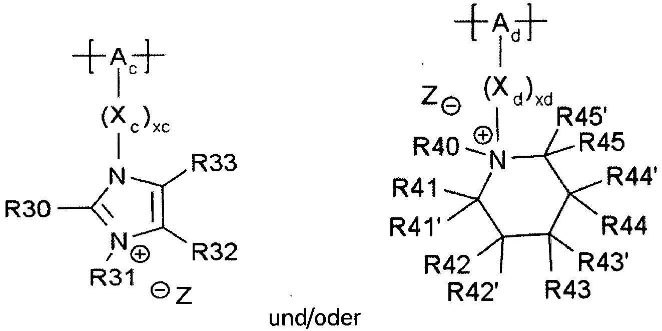 und/oder 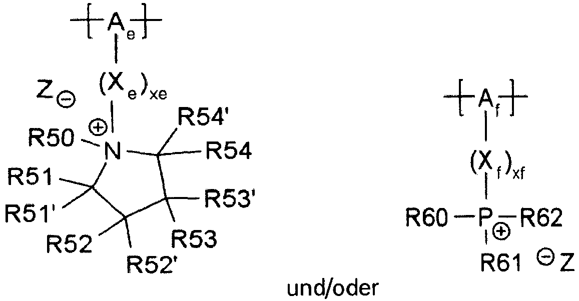 umfasst beziehungsweise dafür steht.

17. Kathodenmaterial (10) nach Anspruch 16, wobei die Wiederholungseinheit: 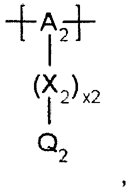 mindestens eine Wiederholungseinheit der allgemeinen chemischen Formel: 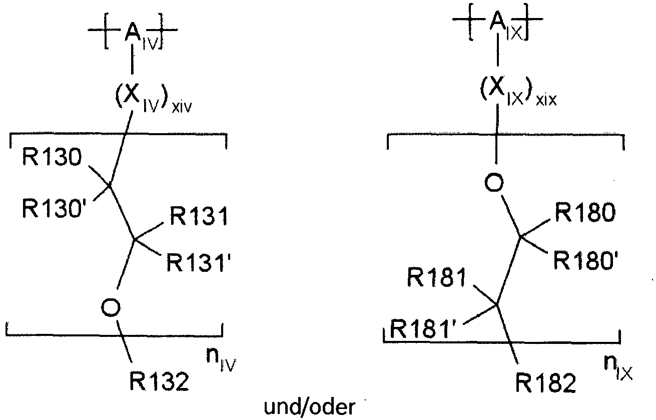 und/oder. 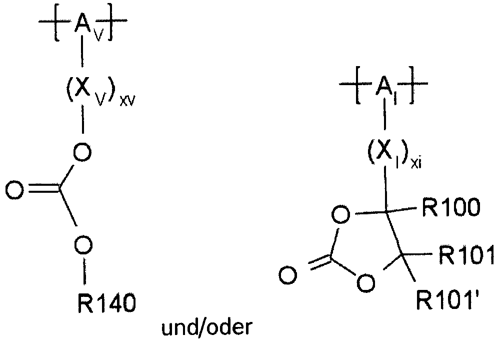 und/oder 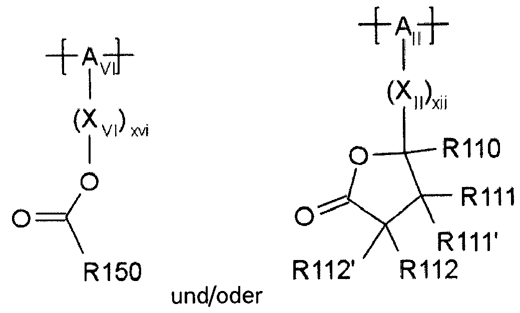 und/oder 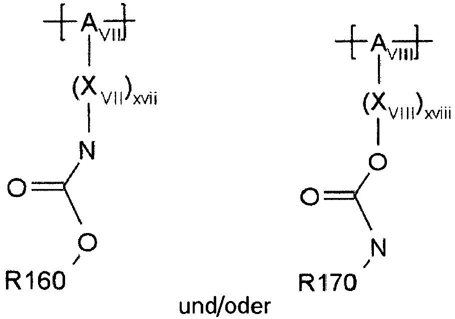 und/oder 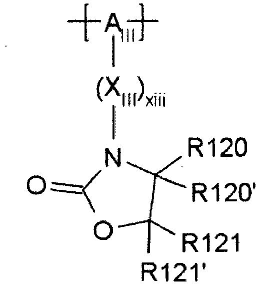 umfasst,
wobei -[A_{I}]-, -[A_{II}]-, -[A_{III}]-, -[A_{IV}]-, -[A_{V}]-, -[A_{VI}]-, -[A_{VII}]-, -[A_{VIII}]- beziehungsweise - [A_{XI}]- für eine Polymerrücken bildende Einheit steht,
wobei (X_{I}), (X_{II}), (X_{III}), (X_{IV}), (Xv), (X_{VI}), (X_{VII}), (X_{VIII)} beziehungsweise (X_{IX}) für einen Spacer steht,
wobei xi, xii, xiii, xiv, xv, xvi, xvii, xviii beziehungsweise xix für die Anzahl des Spacers steht und 1 oder 0 ist, und
wobei n_{IV} für die Anzahl der Ethylenoxideinheiten steht und 1 ≤ n_{IV} ≤ 15 ist, wobei n_{IX} für die Anzahl der Ethylenoxideinheiten steht und 1 ≤ n_{IX} ≤ 15 ist, wobei die Polymerrücken bildende Einheit -[A_{I}]-, -[A_{II}]-, -[A_{III}]-, -[A_{IV}]-, -[A_{V}]-, -[A_{VI}]-, -[A_{VII}]-, -[A_{VIII}]- beziehungsweise -[A_{IX}]- für eine Alkylenoxid-Einheit, insbesondere eine Ethylenoxid-Einheit, und/oder eine Alkylen-Einheit und/oder eine, eine Carbonatgruppe umfassende Einheit und/oder eine Methacrylat-Einheit und/oder eine Methylmethacrylat-Einheit und/oder eine Siloxan-Einheit und/oder eine Phosphazen-Einheit und/oder Phenylen-Einheit stehen,
wobei R100, R101 und R101' beziehungsweise R110, R111, R111', R112 und R112', beispielsweise R110, Rill und R111', beziehungsweise R120, R120', R121 und R121' beziehungsweise R130, R130', R131 und R131' beziehungsweise R150 beziehungsweise R180, R180' R181, R181' und R182 jeweils unabhängig voneinander für Wasserstoff oder ein Halogenatom, insbesondere Fluor, oder eine Alkylgruppe und/oder eine Alkylenoxidgruppe, insbesondere Oligo-Alkylenoxidgruppe, und/oder eine Alkoxygruppe und/oder eine Phenylenoxidgruppe und/oder eine Phenoxygruppe und/oder eine Phenylengruppe und/oder eine Phenylgruppe und/oder eine Benzylengruppe und/oder eine Benzylgruppe und/oder eine Carbonylgruppe und/oder eine, insbesondere cylische oder acyclische, Carbonatgruppe, und/oder eine, insbesondere cyclische oder acyclische, Carbonsäureestergruppe, insbesondere eine Lactongruppe, und/oder eine, insbesondere cyclische oder acyclische, Carbamatgruppe und/oder eine geladene Gruppe, insbesondere eine positiv geladene Gruppe, insbesondere auf der Basis eines Kations einer ionischen Flüssigkeit, zum Beispiel eine quartäre Ammoniumgruppe und/oder eine quartäre Phosphoniumgruppe, und/oder eine negativ geladene Gruppe, insbesondere auf der Basis eines Lithium-Leitsalzanions und/oder eines Anions einer ionischen Flüssigkeit, insbesondere eine Sulfonylimidgruppe , und/oder eine Sulfonatgruppe, stehen,
wobei R132 beziehungsweise R140 beziehungsweise R160 beziehungsweise R170 jeweils unabhängig voneinander für eine Alkylgruppe und/oder eine Alkylenoxidgruppe, insbesondere Oligo-Alkylenoxidgruppe, und/oder eine Alkoxygruppe und/oder eine Phenylenoxidgruppe und/oder eine Phenoxygruppe und/oder eine Phenylengruppe und/oder eine Phenylgruppe und/oder eine Benzylengruppe und/oder eine Benzylgruppe und/oder eine Carbonylgruppe und/oder eine Carbonatgruppe und/oder eine Carbonsäureestergruppe und/oder eine Carbamatgruppe stehen.

18. Kathodenmaterial (10) nach Anspruch 16 oder 17, wobei die Wiederholungseinheit: 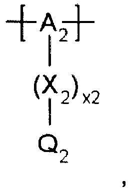 mindestens eine Wiederholungseinheit der allgemeinen chemischen Formel: 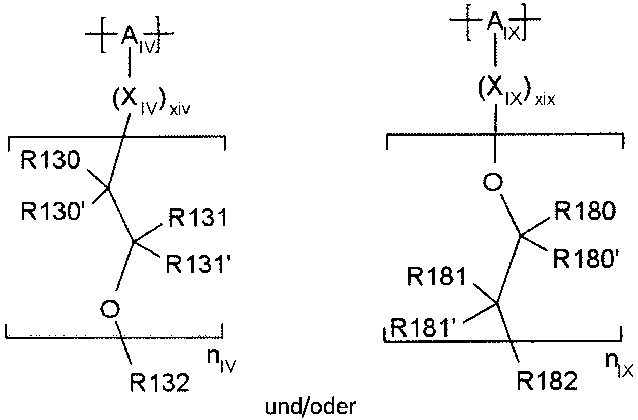 umfasst, insbesondere wobei R130, R130', R131 und R131' beziehungsweise R180, R180' R181, R181' und R182 für ein Fluoratom stehen.

19. Kathodenmaterial (10) nach einem der Ansprüche 1 bis 18, wobei das mindestens eine Kathodenaktivmaterial (11) einen Schwefel-Polymer- und/oder - Kohlenstoff-Komposit umfasst.

20. Kathodenmaterial (10) nach einem der Ansprüche 1 bis 19, wobei das mindestens eine Kathodenaktivmaterial (11) einen Schwefel-Polyacrylnitril-Komposit umfasst.

21. Kathodenmaterial (10) nach einem der Ansprüche 1 bis 20, wobei das Kathodenmaterial (10) weiterhin mindestens ein Lithium-Leitsalz umfasst, wobei das Anion des mindestens einen Lithium-Leitsalzes und Q⁻ beziehungsweise Z⁻ aus der gleichen Anionenklasse, insbesondere der Sulfonylimide, ausgewählt sind.

22. Kathode für eine Alkalimetall-Zelle, insbesondere Lithium-Zelle, umfassend mindestens ein Kathodenmaterial nach einem der Ansprüche 1 bis 21.

23. Alkalimetall-Zelle, insbesondere Lithium-Zelle, umfassend ein Kathodenmaterial nach einem der Ansprüche 1 bis 21 und/oder eine Kathode nach Anspruch 22.

24. Alkalimetall-Zelle nach Anspruch 23, wobei die Zelle, insbesondere zwischen der Anode (20) und der Kathode (10), einen Separator und/oder eine Schutzschicht (30) aufweist, wobei der Separator und/oder die Schutzschicht (30) mindestens ein Polystyrol-Polyetyhlenoxid-Block-Co-Polymer und/oder mindestens ein Polyacrylat-Polyethylenoxid-Block-Co-Polymer und/oder mindestens ein Polymer (P), insbesondere Polymerelektrolyten, aufweisend mindestens eine Wiederholungseinheit der allgemeinen chemischen Formel: 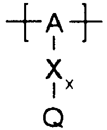 umfasst, wobei -[A]- für eine Polymerrücken bildende Einheit steht, wobei X für einen Spacer steht, wobei x für die Anzahl des Spacers X steht und 1 oder 0 ist, und wobei Q für eine positiv geladene Gruppe Q⁺ und ein Gegenion Z⁻ steht, oder wobei Q für eine negativ geladene Gruppe Q⁻ und ein Gegenion Z⁺ steht, oder wobei Q für eine ungeladene Gruppe steht.

## Claims

1. Cathode material (10) for an alkali metal cell (1), especially a lithium-sulfur cell, comprising
- at least one cathode active material (11), wherein the at least one cathode active material (11) is sulfur-containing, and
- at least one polymer (P), especially polymer electrolyte, having at least one repeat unit of the general chemical formula: 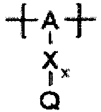
where -[A]- is a polymer backbone-forming unit,
where X is a spacer, where x is the number of the spacer X and is 1 or 0, and
where Q is a negatively charged group Q⁻ and a counterion Z⁺, or
where Q is a positively charged group Q⁺ and a counterion Z⁻,
**characterized in that**
the cathode material comprises, as polymer, at least one copolymer (P) having at least one first repeat unit and at least one second repeat unit different from the at least one first repeat unit, wherein the at least one first repeat unit has the general chemical formula: 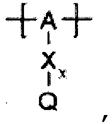 and
wherein the at least one second repeat unit is a partly or fully fluorinated, especially perfluorinated, alkylene oxide unit, and/or a repeat unit bearing a partly or fully fluorinated, especially perfluorinated, alkylene oxide function.

2. Cathode material (10) according to Claim 1, wherein the cathode material additionally includes a polymer mixture, especially a polymer blend, composed of at least one first polymer and at least one second polymer, wherein the at least one first polymer has at least one repeat unit of the general chemical formula:

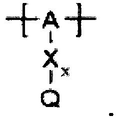

3. Cathode material according to Claim 1, wherein the at least one second repeat unit is an alkylene oxide unit and/or a repeat unit bearing an alkylene oxide function, especially wherein the at least one second repeat unit is an ethylene oxide unit and/or a repeat unit bearing an ethylene oxide function, especially an oligo(ethylene oxide) function.

4. Cathode material (10) according to Claim 2, wherein the at least one second polymer is a polyalkylene oxide and/or has a repeat unit bearing an alkylene oxide function, especially wherein the at least one second polymer is a polyethylene oxide and/or has a repeat unit bearing an ethylene oxide function, especially an oligo(ethylene oxide) function.

5. Cathode material (10) according to either of Claims 2 and 4, wherein the at least one second polymer is a partly or fully fluorinated, especially perfluorinated, polyalkylene oxide, and/or has a repeat unit bearing a partly or fully fluorinated, especially perfluorinated, alkylene oxide function.

6. Cathode material (10) according to any of Claims 1 to 5,
wherein Q⁻ is a group based on a lithium conductive salt anion or is a group based on an anion of an ionic liquid or is a sulfonate group or is a sulfate group or is a carboxylate group or is a group based on a phosphoric acid-based anion or is a group based on an anion of an imide or is a group based on an anion of an amide or is a group based on an anion of a carboxamide, and Z⁺ is an alkali metal ion, especially a lithium ion, and/or wherein Q⁺ is a group based on a cation of an ionic liquid and Z⁻ is an anion, especially a lithium conductive salt anion.

7. Cathode material (10) according to any of Claims 1 to or 6,
wherein Q⁻ is a sulfonylimide group or is a sulfonate group, especially wherein Q⁻ is a trifluoromethane-sulfonylimide group or perfluoroethanesulfonylimide group or fluorosulfonylimide group or a sulfonate group or a trifluoromethanesulfonate group, and Z⁺ is an alkali metal ion, especially a lithium ion, or
wherein Q⁺ is a pyridinium group or an ammonium group or an imidazolium group or a piperidinium group or a pyrrolidinium group or a phosphonium group or a guanidinium group or a morpholinium group or a uronium group or a thiouronium group, and Z⁻ is an anion, especially a lithium conductive salt anion.

8. Cathode material (10) according to any of Claims 1 to 7, wherein Z⁻ is bis(trifluoromethanesulfonyl)imide and/or bis(perfluoroethanesulfonyl)imide and/or bis-(fluorosulfonyl)imide, especially bis(trifluoromethanesulfonyl)imide, and/or trifluoromethanesulfonate and/or tetrafluoroborate and/or bisoxalatoborate and/or difluorooxalatoborate and/or bromide and/or iodide and/or chloride, especially wherein Z⁻ is bis(trifluoromethanesulfonyl)imide and/or bis(perfluoro-ethanesulfonyl)imide and/or bis(fluorosulfonyl)imide, especially is bis(trifluoromethanesulfonyl)imide, and/or trifluoromethanesulfonate, or wherein Z⁺ is a lithium ion.

9. Cathode material (10) according to any of Claims 1 to 8, wherein the polymer backbone-forming unit -[A]-comprises at least a polyfunctionalized siloxane unit and/or a polyfunctionalized phosphazene unit and/or a polyfunctionalized phenylene unit.

10. Cathode material (10) according to any of Claims 1 to 9, wherein the spacer X comprises at least one alkylene oxide group, especially oligo(alkylene oxide) group.

11. Cathode material (10) according to any of Claims 1 to 10, wherein the spacer X comprises at least one carbonyl group, especially at least one cyclic carbonate group and/or at least one lactone group and/or at least one cyclic carbamate group and/or at least one acyclic carbonate group and/or at least one acyclic carboxylic ester group and/or at least one acyclic carbamate group, especially at least one acyclic carbonate group.

12. Cathode material (10) according to any of Claims 1 to 11, wherein the spacer X comprises
- at least one further, negatively charged Q⁻ group, especially at least one sulfonylimide group, and/or a sulfonate group, and a counterion Z⁺, for example alkali metal ion, especially lithium ion, and/or
- at least one further, positively charged Q⁺ group, especially based on a cation of an ionic liquid, especially at least one ammonium ion group and/or at least one pyridinium group and/or at least one imidazolium group and/or at least one piperidinium group and/or at least one pyrrolidinium group and/or at least one phosphonium group and/or at least one guanidinium group and/or at least one morpholinium group and/or at least one uronium group and/or at least one thiouronium group, and a counterion Z⁻, for example conductive salt anion, especially lithium conductive salt anion.

13. Cathode material (10) according to any of Claims 1 to 12, wherein the polymer backbone-forming unit -[A]- and/or the spacer X and/or the Q or Q⁺ or Q⁻ group has been halogenated, especially fluorinated.

14. Cathode material (10) according to any of Claims 1 to 13, wherein the polymer backbone-forming unit -[A]- and/or the spacer X and/or the Q⁺ or Q⁻ comprises a fluorinated, especially perfluorinated, alkylene oxide unit, especially oligo(alkylene oxide) unit, and/or wherein the polymer backbone-forming unit -[A]- and/or the spacer X and/or the Q⁺ or Q⁺ has been perfluorinated.

15. Cathode material (10) according to any of Claims 1 to 14, wherein the at least one polymer (P) has or comprises at least one repeat unit of the general chemical formula, especially wherein the at least one first repeat unit has or comprises the general chemical formula: 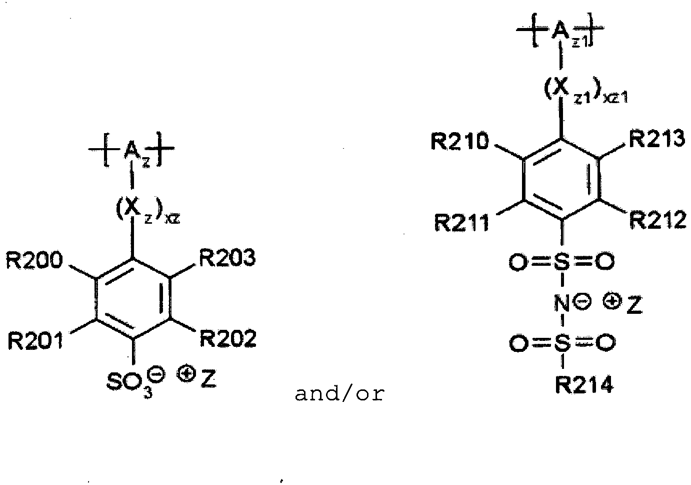 and/or 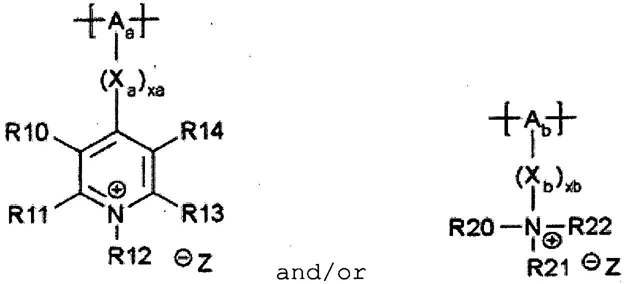 and/or 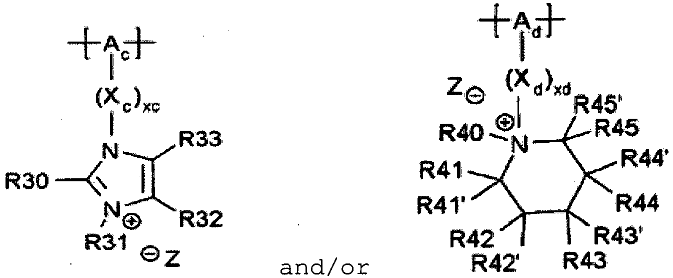 and/or 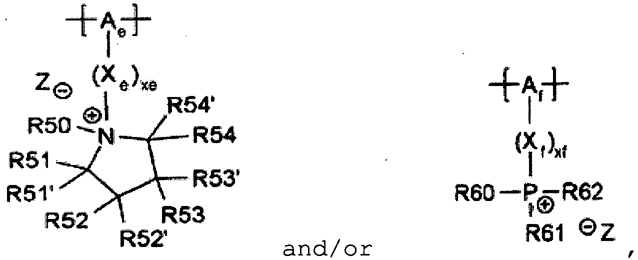
where -[Aₐ]-, -[A_{b}]-, -[A_{c}]-, -[A_{d}]-, -[Aₑ]-, -[A_{f}]-, -[A_{Z}]- or -[A_{Z1}]- is a polymer backbone-forming unit, where (Xₐ) , (X_{b}), (X_{c}), (X_{d}), (Xₑ), (X_{f}), (X_{z}) or (X_{z1}) is a spacer,
where xa, xb, xc, xd, xe, xf, xz or xz1 is the number of the spacer and is 1 or 0, and
where the polymer backbone-forming unit -[Aₐ]-, -[A_{b}]-, - [A_{c}]-, -[A_{d}]-, -[Aₑ]-, -[A_{f}]-, -[A_{z}]- or -[A_{z1}]- is an alkylene oxide unit, especially an ethylene oxide unit, and/or an alkylene unit and/or a unit comprising a carbonate group and/or a methacrylate unit and/or a methyl methacrylate unit and/or a siloxane unit and/or a phosphazene unit and/or a phenylene unit,
where R10, R11, R13 and R14 or R30, R32 and R33 or R41, R41', R42, R42', R43, R43', R44, R44', R45 and R45' or R51, R51', R52, R52', R53, R53', R54 and R54' or R200, R201, R202 and R203 or R210, R211, R212, 213 and R214 are each independently hydrogen or a halogen atom, especially fluorine, or an alkyl group and/or an alkylene oxide group, especially oligo(alkylene oxide) group, and/or an alkoxy group and/or a phenylene oxide group and/or a phenoxy group and/or a phenylene group and/or a phenyl group and/or a benzylene group and/or a benzyl group and/or a carbonyl group and/or a carbonate group, especially a cyclic or acyclic carbonate group, and/or a carboxylic ester group, especially a cyclic or acyclic carboxylic ester group, especially a lactone group, and/or a carbamate group, especially a cyclic or acyclic carbamate group, and/or a charged group, especially a positively charged group, especially based on a cation of an ionic liquid, for example a quaternary ammonium group and/or a quaternary phosphonium group, and/or a negatively charged group, especially based on a conductive salt anion, especially lithium conductive salt anion, and/or an anion of an ionic liquid or a sulfonate group, for example a sulfonylimide group or a sulfonate group,
where R12 or R20, R21 and R22 or R31 or R40 or R50 or R60, R61 and R62 are each independently an alkyl group and/or an alkylene oxide group, especially oligo(alkylene oxide) group, and/or an alkoxy group and/or a phenylene oxide group and/or a phenoxy group and/or a phenylene group and/or a phenyl group and/or a benzylene group and/or a benzyl group and/or a carbonyl group and/or a carbonate group and/or a carboxylic ester group and/or a carbamate group.

16. Cathode material (10) according to Claim 15, wherein the cathode material (10) comprises at least one copolymer (P), especially block copolymer, of the general chemical formula: 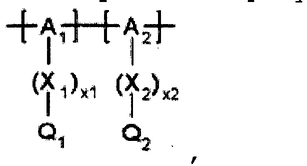 wherein the repeat unit: 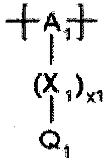 comprises or represents at least one repeat unit of the general chemical formula: 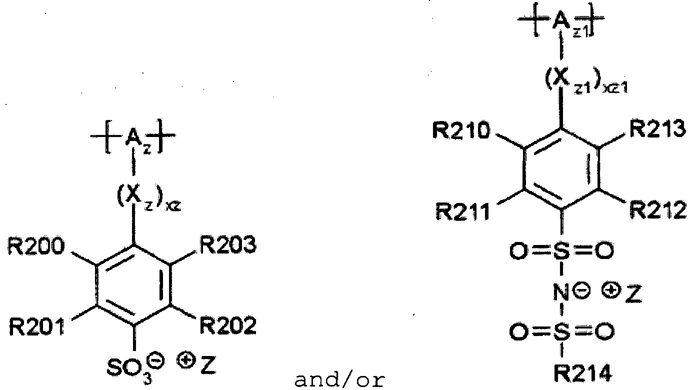 and/or 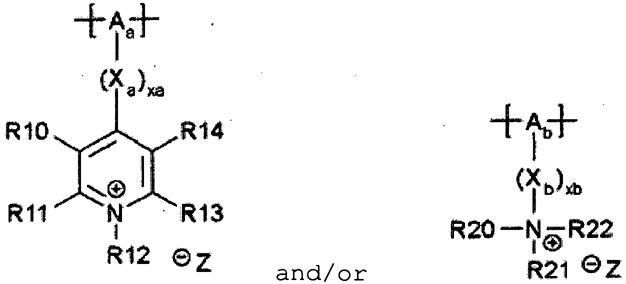 and/or 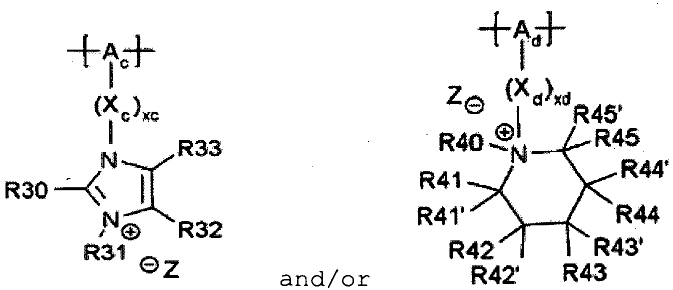 and/or

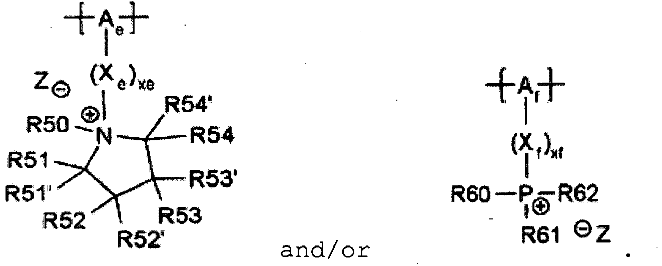

17. Cathode material (10) according to Claim 16, wherein the repeat unit: 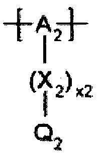 comprises at least one repeat unit of the general chemical formula: 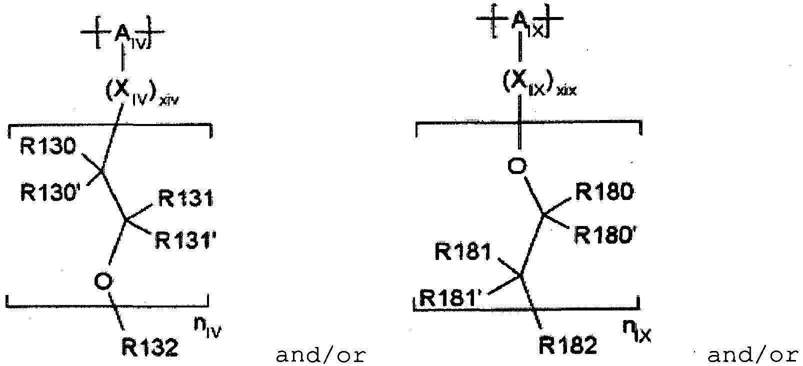 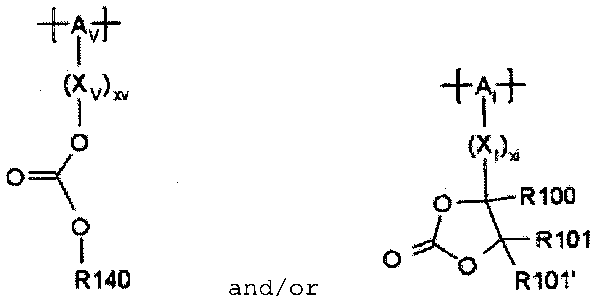 and/or 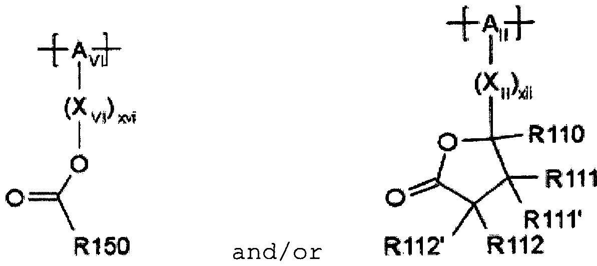 and/or 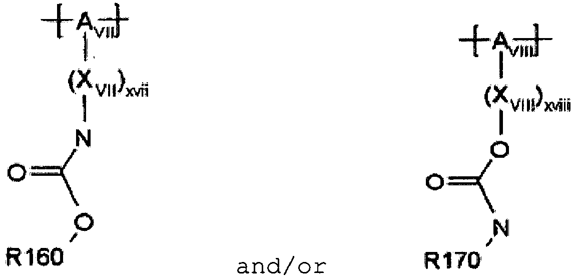 and/or 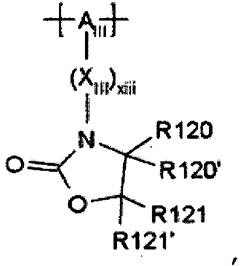
where -[A_{I}]-, -[A_{II}]-, - [A_{III}]-, -[A_{IV}]-, -[A_{V}]-, -[A_{VI}]-, -[A_{VII}]-, -[A_{VIII}]- or -[A_{IX}]- is a polymer backbone-forming unit,
where (X_{I}), (X_{II}), (X_{III}), (X_{IV}), (X_{V}), (X_{VI}), (X_{VII}), (X_{VIII}) or (X_{IX}) is a spacer,
where xi, xii, xiii, xiv, xv, xvi, xvii, xviii or xix is the number of the spacer and is 1 or 0, and
where n_{IV} is the number of the ethylene oxide units and is 1 ≤ n_{IV} ≤ 15,
where n_{IX} is the number of the ethylene oxide units and is 1 ≤ n_{IX} ≤ 15,
where the polymer backbone-forming unit -[A_{I}]-, -[A_{II}]-, -[A_{III}]-, -[A_{IV}]-, -[A_{V}]-, -[A_{VI}]-, -[A_{VII}]-, -[A_{VIII}]- or - [A_{IX}]- is an alkylene oxide unit, especially an ethylene oxide unit, and/or an alkylene unit and/or a unit comprising a carbonate group and/or a methacrylate unit and/or a methyl methacrylate unit and/or a siloxane unit and/or a phosphazene unit and/or a phenylene unit,
where R100, R101 and R101' or R110, Rill, R111', R112 and R112', for example R110, R111 and R111', or R120, R120', R121 and R121' or R130, R130', R131 and R131' or R150 or R180, R180', R181, R181' and R182 are each independently hydrogen or a halogen atom, especially fluorine, or an alkyl group and/or an alkylene oxide group, especially oligo(alkylene oxide) group, and/or an alkoxy group and/or a phenylene oxide group and/or a phenoxy group and/or a phenylene group and/or a phenyl group and/or a benzylene group and/or a benzyl group and/or a carbonyl group and/or a carbonate group, especially a cyclic or acyclic carbonate group, and/or a carboxylic ester group, especially a cyclic or acyclic carboxylic ester group, especially a lactone group, and/or a carbamate group, especially a cyclic or acyclic carbamate group, and/or a charged group, especially a positively charged group, especially based on a cation of an ionic liquid, for example a quaternary ammonium group and/or a quaternary phosphonium group, and/or a negatively charged group, especially based on a lithium conductive salt anion and/or an anion of an ionic liquid, especially a sulfonylimide group, and/or a sulfonate group,
where R132 or R140 or R160 or R170 are each independently an alkyl group and/or an alkylene oxide group, especially oligo(alkylene oxide) group, and/or an alkoxy group and/or a phenylene oxide group and/or a phenoxy group and/or a phenylene group and/or a phenyl group and/or a benzylene group and/or a benzyl group and/or a carbonyl group and/or a carbonate group and/or a carboxylic ester group and/or a carbamate group.

18. Cathode material (10) according to Claim 16 or 17, wherein the repeat unit: 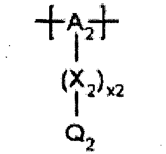 comprises at least one repeat unit of the general chemical formula: 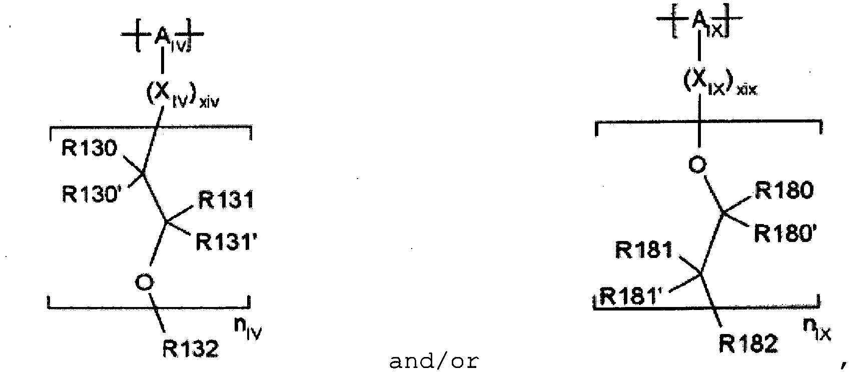 especially where R130, R130', R131 and R131' or R180, R180', R181, R181' and R182 are a fluorine atom.

19. Cathode material (10) according to any of Claims 1 to 18, wherein the at least one cathode active material (11) comprises a sulfur polymer composite and/or carbon composite.

20. Cathode material (10) according to any of Claims 1 to 19, wherein the at least one cathode active material (11) comprises a sulfur-polyacrylonitrile composite.

21. Cathode material (10) according to any of Claims 1 to 20, wherein the cathode material (10) further comprises at least one lithium conductive salt, wherein the anion of the at least one lithium conductive salt and Q⁻ or Z⁻ are selected from the same anion class, especially of the sulfonylimides.

22. Cathode for an alkali metal cell, especially lithium cell, comprising at least one cathode material according to any of Claims 1 to 21.

23. Alkali metal cell, especially lithium cell, comprising a cathode material according to any of Claims 1 to 21 and/or a cathode according to Claim 22.

24. Alkali metal cell according to Claim 23, wherein the cell, especially between the anode (20) and the cathode (10), has a separator and/or a protective layer (30), wherein the separator and/or the protective layer (30) comprises at least one polystyrene-polyethylene oxide block copolymer and/or at least one polyacrylate-polyethylene oxide block copolymer and/or at least one polymer (P), especially polymer electrolytes, having at least one repeat unit of the general chemical formula: 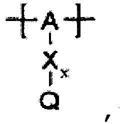 where -[A]- is a polymer backbone-forming unit, where X is a spacer, where x is the number of the spacer X and is 1 or 0, and where Q is a positively charged group Q⁺ and a counterion Z⁻, or where Q is a negatively charged group Q⁻ and a counterion Z⁺, or where Q is an uncharged group.

## Revendications

1. Matériau de cathode (10) pour une cellule de métal alcalin (1), en particulier une cellule lithium-soufre, comprenant
- au moins un matériau actif (11) de cathode, l'au moins un matériau actif (11) de cathode contenant du soufre, et
- au moins un polymère (P), en particulier au moins un électrolyte polymère, présentant au moins un motif répétitif de formule chimique générale : 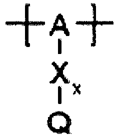
-[A]- représentant un motif formant le squelette de polymère,
X représentant un espaceur, x représentant le nombre de l'espaceur X et étant 1 ou 0, et
Q représentant un groupe chargé négativement Q⁻ et un contre-ion Z⁺, ou
Q représentant un groupe chargé positivement Q⁺ et un contre-ion Z⁻,
**caractérisé en ce que** le matériau de cathode comprend en tant que polymère au moins un co-polymère (P), qui présente au moins un premier motif répétitif et au moins un deuxième motif répétitif différent de l'au moins un premier motif répétitif, l'au moins un premier motif répétitif présentant la formule chimique générale : 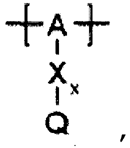 et l'au moins un deuxième motif répétitif étant un motif oxyde d'alkylène partiellement ou totalement fluoré, en particulier perfluoré, et/ou étant un motif répétitif qui porte une fonction oxyde d'alkylène partiellement ou totalement fluoré, en particulier perfluoré.

2. Matériau de cathode (10) selon la revendication 1, le matériau de cathode comprenant de plus un mélange de polymère, en particulier un assemblage de polymère, composé d'au moins un premier polymère et d'au moins un deuxième polymère, l'au moins un premier polymère présentant au moins un motif répétitif de formule chimique générale :

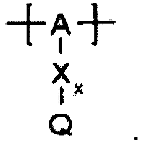

3. Matériau de cathode selon la revendication 1, l'au moins un deuxième motif répétitif étant un motif oxyde d'alkylène et/ou étant un motif répétitif qui porte une fonction oxyde d'alkylène, en particulier l'au moins un deuxième motif répétitif étant un motif oxyde d'éthylène et/ou étant un motif répétitif qui porte une fonction oxyde d'éthylène, en particulier une fonction oligo-oxyde d'éthylène.

4. Matériau de cathode (10) selon la revendication 2, l'au moins un deuxième polymère étant un poly(oxyde d'alkylène) et/ou présentant un motif répétitif, qui porte une fonction oxyde d'alkylène, en particulier l'au moins un deuxième polymère étant un poly(oxyde d'éthylène) et/ou présentant un motif répétitif qui porte une fonction oxyde d'éthylène, en particulier une fonction oligo-oxyde d'éthylène.

5. Matériau de cathode (10) selon l'une quelconque des revendications 2 et 4, l'au moins un deuxième polymère étant un poly(oxyde d'alkylène) partiellement ou totalement fluoré, en particulier perfluoré, et/ou présentant un motif répétitif qui porte une fonction oxyde d'alkylène partiellement ou totalement fluoré, en particulier perfluoré.

6. Matériau de cathode (10) selon l'une quelconque des revendications 1 à 5, Q⁻ représentant un groupe à base d'un anion de sel conducteur de lithium ou un groupe à base d'un anion d'un liquide ionique ou un groupe sulfonate ou un groupe sulfate ou un groupe carboxylate ou un groupe à base d'un anion à base d'acide phosphorique ou un groupe à base d'un anion d'un imide ou un groupe à base d'un anion d'un amide ou un groupe à base d'un anion d'un amide d'acide carboxylique et Z⁺ représentant un ion alcalin, en particulier un ion lithium, et/ou
Q⁺ représentant un groupe à base d'un cation d'un liquide ionique et Z⁻ représentant un anion, en particulier un anion de sel conducteur de lithium.

7. Matériau de cathode (10) selon l'une quelconque des revendications 1 à ou 6, Q⁻ représentant un groupe sulfonylimide ou un groupe sulfonate, en particulier Q⁻ représentant un groupe trifluorométhanesulfonylimide ou un groupe perfluoroéthanesulfonylimide ou un groupe fluorosulfonylimide ou un groupe sulfonate ou un groupe trifluorométhanesulfonate, et Z⁺ représentant un ion alcalin, en particulier un ion lithium, ou
Q⁺ représentant un groupe pyridinium ou un groupe ammonium ou un groupe imidazolium ou un groupe pipéridinium ou un groupe pyrrolidinium ou un groupe phosphonium ou un groupe guanidinium ou un groupe morpholinium ou un groupe uronium ou un groupe thiouronium et Z⁻ représentant un anion, en particulier un anion de sel conducteur de lithium.

8. Matériau de cathode (10) selon l'une quelconque des revendications 1 à 7, Z⁻ représentant bis(trifluorométhanesulfonyl)imide et/ou bis(perfluoroéthanesulfonyl)imide et/ou bis(fluorosulfonyl)imide, en particulier bis(trifluorométhanesulfonyl)imide, et/ou trifluorométhanesulfonate et/ou tétrafluoroborate et/ou bisoxalatoborate et/ou difluorooxalatoborate et/ou bromure et/ou iodure et/ou chlorure, en particulier Z⁻ représentant bis(trifluorométhanesulfonyl)imide et/ou bis(perfluoroéthanesulfonyl)imide et/ou bis(fluorosulfonyl)imide, en particulier représentant bis(trifluorométhanesulfonyl)imide, et/ou trifluorométhanesulfonate, ou Z⁺ représentant un ion lithium.

9. Matériau de cathode (10) selon l'une quelconque des revendications 1 à 8, le motif -[A]- formant le squelette de polymère comprenant au moins un motif siloxane polyfonctionnalisé et/ou un motif phosphazène polyfonctionnalisé et/ou un motif phénylène polyfonctionnalisé.

10. Matériau de cathode (10) selon l'une quelconque des revendications 1 à 9, l'espaceur X comprenant au moins un groupe oxyde d'alkylène, en particulier un groupe oligo-oxyde d'alkylène.

11. Matériau de cathode (10) selon l'une quelconque des revendications 1 à 10, l'espaceur X comprenant au moins un groupe carbonyle, en particulier au moins un groupe carbonate cyclique et/ou au moins un groupe lactone et/ou au moins un groupe carbamate cyclique et/ou au moins un groupe carbonate acyclique et/ou au moins un groupe ester d'acide carboxylique acyclique et/ou au moins un groupe carbamate acyclique, en particulier au moins un groupe carbonate acyclique.

12. Matériau de cathode (10) selon l'une quelconque des revendications 1 à 11, l'espaceur X
- comprenant au moins un groupe Q⁻ chargé négativement supplémentaire, en particulier au moins un groupe sulfonylimide, et/ou un groupe sulfonate, et un contre-ion Z⁺, par exemple un ion alcalin, en particulier un ion lithium, et/ou
- comprenant au moins un groupe Q⁺ chargé positivement supplémentaire, en particulier à base d'un cation d'un liquide ionique, en particulier au moins un groupe ion ammonium et/ou au moins un groupe pyridinium et/ou au moins un groupe imidazolium et/ou au moins un groupe pipéridinium et/ou au moins un groupe pyrrolidinium et/ou au moins un groupe phosphonium et/ou au moins un groupe guanidinium et/ou au moins un groupe morpholinium et/ou au moins un groupe uronium et/ou au moins un groupe thiouronium et un contre-ion Z⁻, par exemple un anion de sel conducteur, en particulier un anion de sel conducteur de lithium.

13. Matériau de cathode (10) selon l'une quelconque des revendications 1 à 12, le motif -[A]- formant le squelette de polymère et/ou l'espaceur X et/ou le groupe Q, respectivement Q⁺, respectivement Q⁻ étant halogénés, en particulier fluorés.

14. Matériau de cathode (10) selon l'une quelconque des revendications 1 à 13, le motif -[A]- formant le squelette de polymère et/ou l'espaceur X et/ou le Q⁺, respectivement le Q⁻ comprenant un motif oxyde d'alkylène, en particulier un motif oligo-oxyde d'alkylène, fluoré, en particulier perfluoré et/ou le motif -[A]- formant le squelette de polymère et/ou l'espaceur X et/ou le Q⁺, respectivement le Q⁺ étant perfluorés.

15. Matériau de cathode (10) selon l'une quelconque des revendications 1 à 14, l'au moins un polymère (P) présentant ou comprenant au moins un motif répétitif de la formule chimique générale, en particulier l'au moins un premier motif répétitif présentant ou comprenant la formule chimique générale : 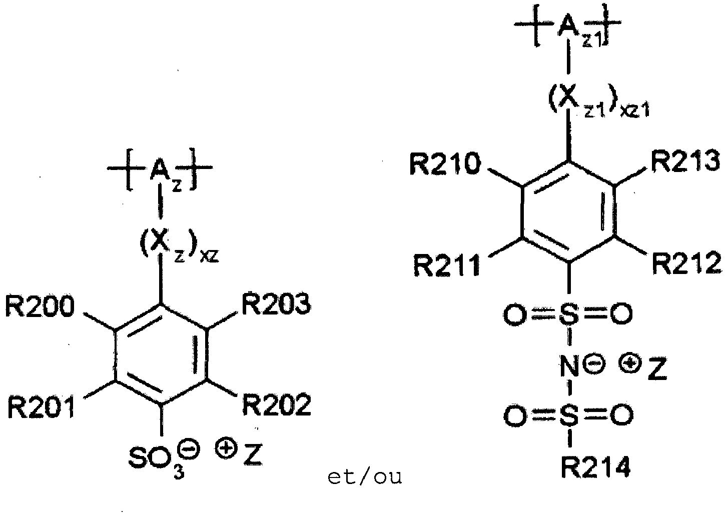 et/ou 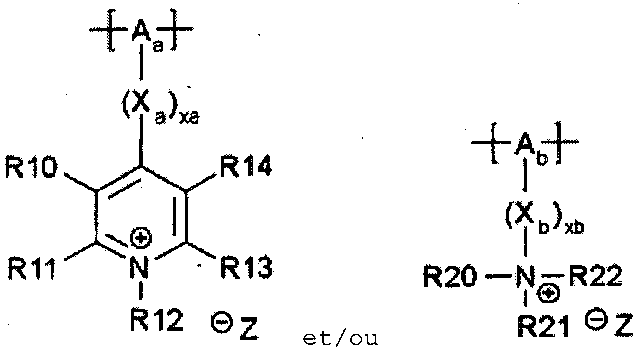 et/ou 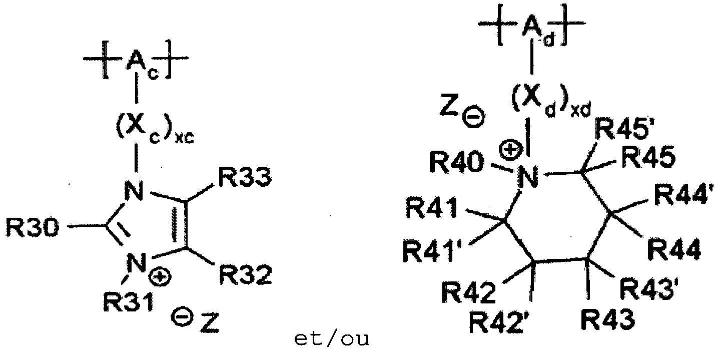 et/ou 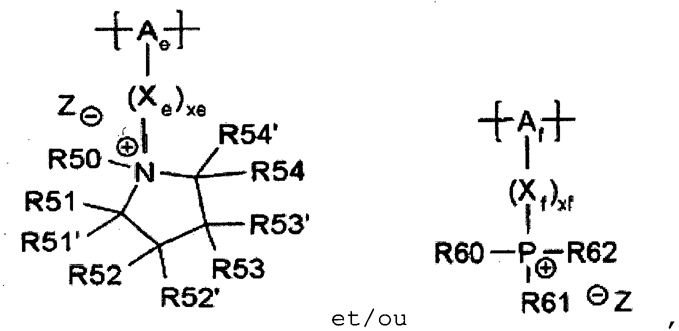
-[Aₐ]-, -[A_{b}]-, -[A_{c}]-, -[A_{d}]-, -[Aₑ]-, -[A_{f}]-, -[A_{Z}]- respectivement -[A_{Z1}]- représentant un motif formant le squelette de polymère,
(Xₐ), (X_{b}), (X_{c}), (X_{d}), (Xₑ), (X_{f}), (X_{Z}) respectivement (X_{Z1}) représentant un espaceur, xa, xb, xc, xd, xe, xf, xz respectivement xz1 représentant le nombre de l'espaceur et étant 1 ou 0, et
le motif formant le squelette de polymère -[Aₐ]-,
-[A_{b}]-, -[A_{c}]-, -[A_{d}]-, -[Aₑ]-, -[A_{f}]-, -[A_{Z}]-respectivement -[A_{Z1}]- représentant un motif oxyde d'alkylène, en particulier un motif oxyde d'éthylène, et/ou un motif alkylène et/ou un motif comprenant un groupe carbonate et/ou un motif méthacrylate et/ou un motif méthacrylate de méthyle et/ou un motif siloxane et/ou un motif phosphazène et/ou un motif phénylène,
R10, R11, R13 et R14 respectivement R30, R32 et R33 respectivement R41, R41', R42, R42', R43, R43', R44, R44', R45 et R45' respectivement R51, R51', R52, R52', R53, R53', R54 et R54' respectivement R200, R201, R202 et R203 respectivement R210, R211, R212, 213 et R214 à chaque fois indépendamment les uns des autres représentant hydrogène ou un atome d'halogène, en particulier fluor, ou un groupe alkyle et/ou un groupe oxyde d'alkylène, en particulier un groupe oligo-oxyde d'alkylène, et/ou un groupe alcoxy et/ou un groupe oxyde de phénylène et/ou un groupe phénoxy et/ou un groupe phénylène et/ou un groupe phényle et/ou un groupe benzylène et/ou un groupe benzyle et/ou un groupe carbonyle et/ou un groupe carbonate, en particulier cyclique ou acyclique, et/ou un groupe ester d'acide carboxylique, en particulier cyclique ou acyclique, en particulier un groupe lactone, et/ou un groupe carbamate, en particulier cyclique ou acyclique, et/ou un groupe chargé, en particulier un groupe chargé positivement, en particulier à base d'un cation d'un liquide ionique, par exemple un groupe ammonium quaternaire et/ou un groupe phosphonium quaternaire, et/ou un groupe chargé négativement, en particulier à base d'un anion de sel conducteur, en particulier d'un anion de sel conducteur de lithium, et/ou d'un anion d'un liquide ionique ou un groupe sulfonate, par exemple un groupe sulfonylimide ou un groupe sulfonate,
R12 respectivement R20, R21 et R22 respectivement R31 respectivement R40 respectivement R50 respectivement R60, R61 et R62 à chaque fois indépendamment les uns des autres représentant un groupe alkyle et/ou un groupe oxyde d'alkylène, en particulier un groupe oligo-oxyde d'alkylène, et/ou un groupe alcoxy et/ou un groupe oxyde de phénylène et/ou un groupe phénoxy et/ou un groupe phénylène et/ou un groupe phényle et/ou un groupe benzylène et/ou un groupe benzyle et/ou un groupe carbonyle et/ou un groupe carbonate et/ou un groupe ester d'acide carboxylique et/ou un groupe carbamate.

16. Matériau de cathode (10) selon la revendication 15, le matériau de cathode (10) comprenant au moins un co-polymère (P), en particulier un co-polymère à blocs, de formule chimique générale : 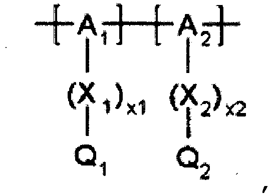 le motif répétitif : 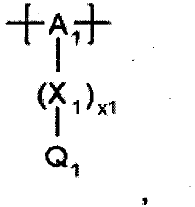 comprenant, respectivement représentant au moins un motif répétitif de formule chimique générale : 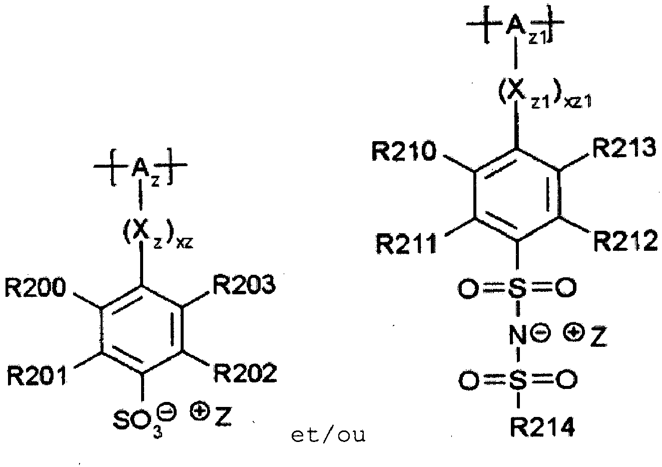 et/ou 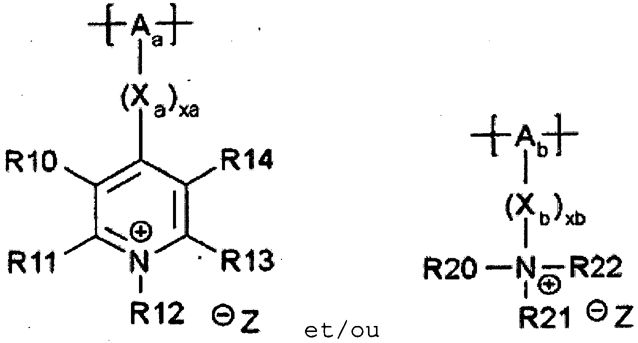 et/ou 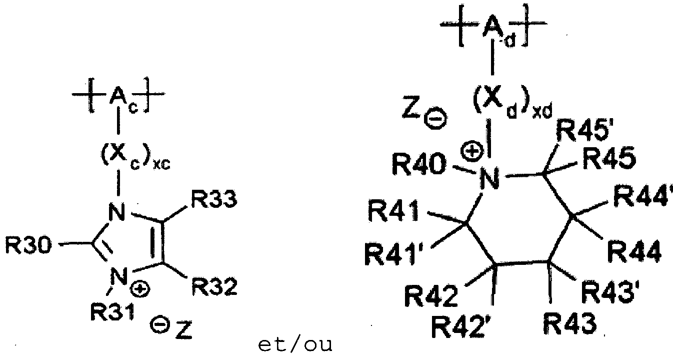 et/ou

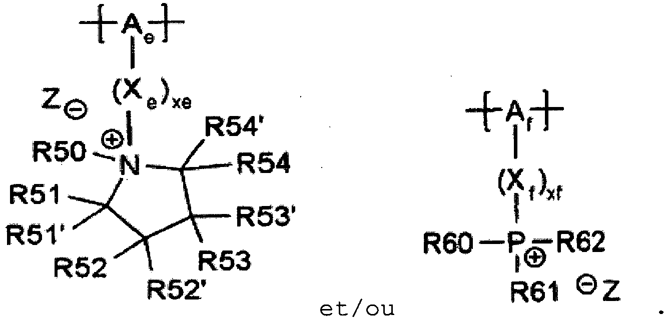

17. Matériau de cathode (10) selon la revendication 16, le motif répétitif : 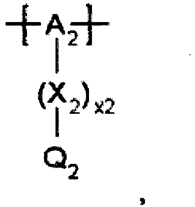 comprenant au moins un motif répétitif de formule chimique générale : 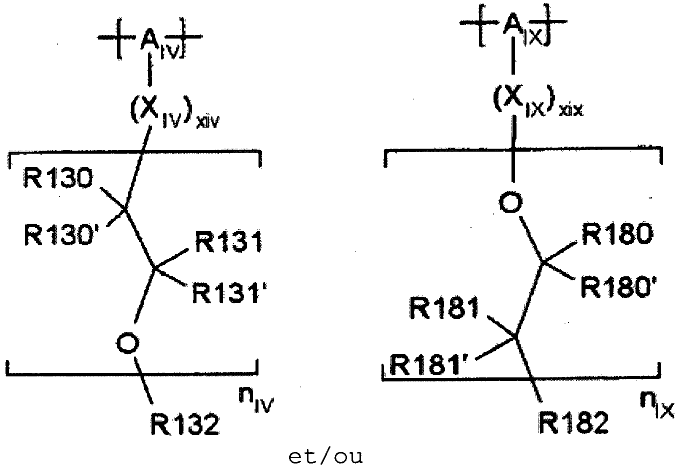 et/ou 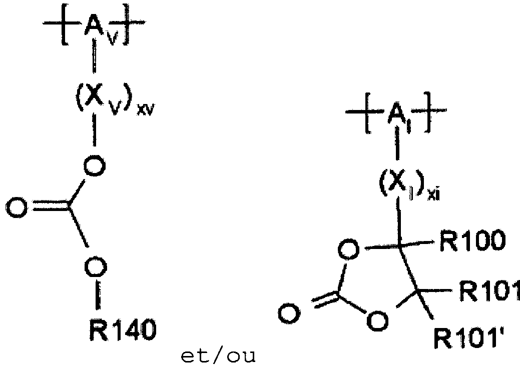 et/ou 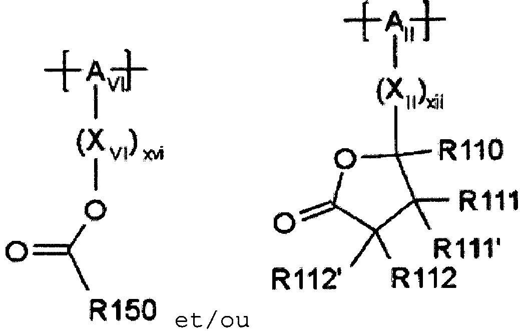 et/ou 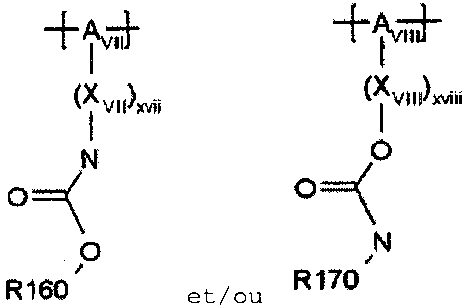 et/ou 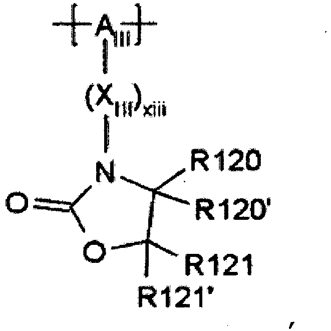
-[A_{I}]-, -[A_{II}]-, -[A_{III}]-, -[A_{IV}]-, -[A_{V}]-, -[A_{VI}]-, -[A_{VII}]-, -[A_{VIII}]- respectivement -[A_{IX}]-représentant un motif formant le squelette de polymère,
(X_{I}), (X_{II}), (X_{III}), (X_{IV}), (X_{V}), (X_{VI}), (X_{VII}), (X_{VIII}) respectivement (X_{IX}) représentant un espaceur, xi, xii, xiii, xiv, xv, xvi, xvii, xviii respectivement xix représentant le nombre de l'espaceur et étant 1 ou 0, et
n_{IV} représentant le nombre des motifs oxyde d'éthylène et étant 1 ≤ n_{IV} ≤ 15,
n_{IX} représentant le nombre des motifs oxyde d'éthylène et étant 1 ≤ n_{IX} ≤ 15,
le motif formant le squelette de polymère -[A_{I}]-, - [A_{II}]-, -[A_{III}]-, -[A_{IV}]-, -[A_{V}]-, -[A_{VI}]-, -[A_{VII}]-, - [A_{VIII}] - respectivement -[A_{IX}]- représentant un motif oxyde d'alkylène, en particulier un motif oxyde d'éthylène, et/ou un motif alkylène et/ou un motif comprenant un groupe carbonate et/ou un motif méthacrylate et/ou un motif méthacrylate de méthyle et/ou un motif siloxane et/ou un motif phosphazène et/ou un motif phénylène,
R100, R101 et R101' respectivement R110, R111, R111', R112 et R112', par exemple R110, R111 et R111', respectivement R120, R120', R121 et R121' respectivement R130, R130', R131 et R131' respectivement R150 respectivement R180, R180', R181, R181' et R182 à chaque fois indépendamment les uns des autres représentant hydrogène ou un atome d'halogène, en particulier fluor, ou un groupe alkyle et/ou un groupe oxyde d'alkylène, en particulier un groupe oligo-oxyde d'alkylène, et/ou un groupe alcoxy et/ou un groupe oxyde de phénylène et/ou un groupe phénoxy et/ou un groupe phénylène et/ou un groupe phényle et/ou un groupe benzylène et/ou un groupe benzyle et/ou un groupe carbonyle et/ou un groupe carbonate, en particulier cyclique ou acyclique, et/ou un groupe ester d'acide carboxylique, en particulier cyclique ou acyclique, en particulier un groupe lactone, et/ou un groupe carbamate, en particulier cyclique ou acyclique et/ou un groupe chargé, en particulier un groupe chargé positivement, en particulier à base d'un cation d'un liquide ionique, par exemple un groupe ammonium quaternaire et/ou un groupe phosphonium quaternaire, et/ou un groupe chargé négativement, en particulier à base d'un anion de sel conducteur de lithium et/ou d'un anion d'un liquide ionique, en particulier un groupe sulfonylimide, et/ou un groupe sulfonate,
R132 respectivement R140 respectivement R160 respectivement R170 à chaque fois indépendamment les uns des autres représentant un groupe alkyle et/ou un groupe oxyde d'alkylène, en particulier un groupe oligo-oxyde d'alkylène, et/ou un groupe alcoxy et/ou un groupe oxyde de phénylène et/ou un groupe phénoxy et/ou un groupe phénylène et/ou un groupe phényle et/ou un groupe benzylène et/ou un groupe benzyle et/ou un groupe carbonyle et/ou un groupe carbonate et/ou un groupe ester d'acide carboxylique et/ou un groupe carbamate.

18. Matériau de cathode (10) selon la revendication 16 ou 17, le motif répétitif : 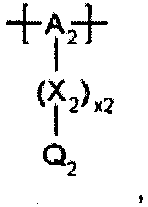 comprenant au moins un motif répétitif de formule chimique générale : 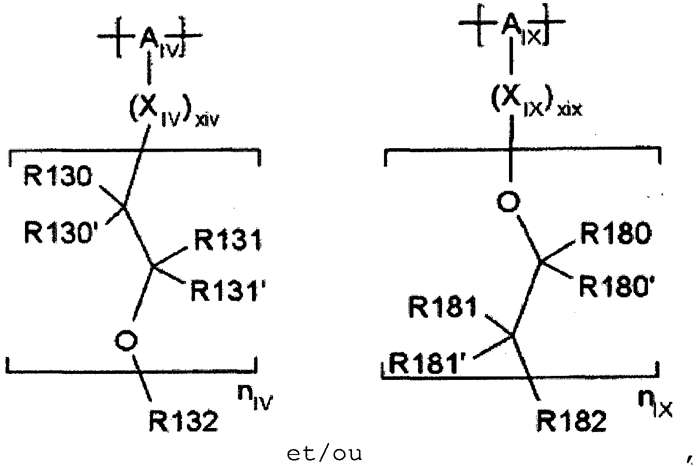 en particulier R130, R130', R131 et R131' respectivement R180, R180', R181, R181' et R182 représentant un atome de fluor.

19. Matériau de cathode (10) selon l'une quelconque des revendications 1 à 18, l'au moins un matériau actif de cathode (11) comprenant un composite soufre-polymère et/ou un composite de carbone.

20. Matériau de cathode (10) selon l'une quelconque des revendications 1 à 19, l'au moins un matériau actif de cathode (11) comprenant un composite soufre-polyacrylonitrile.

21. Matériau de cathode (10) selon l'une quelconque des revendications 1 à 20, le matériau de cathode (10) comprenant en outre au moins un sel conducteur de lithium, l'anion de l'au moins un sel conducteur de lithium et Q⁻, respectivement Z⁻ étant choisis parmi la même classe d'anions, en particulier parmi des sulfonylimides.

22. Cathode pour une cellule de métal alcalin, en particulier une cellule au lithium, comprenant au moins un matériau de cathode selon l'une quelconque des revendications 1 à 21.

23. Cellule de métal alcalin, en particulier cellule au lithium, comprenant un matériau de cathode selon l'une quelconque des revendications 1 à 21 et/ou une cathode selon la revendication 22.

24. Cellule de métal alcalin selon la revendication 23, la cellule, en particulier entre l'anode (20) et la cathode (10), présentant un séparateur et/ou une couche protectrice (30), le séparateur et/ou la couche protectrice (30) comprenant au moins un co-polymère à blocs polystyrène-poly(oxyde d'éthylène) et/ou au moins un co-polymère à blocs polyacrylate-poly(oxyde d'éthylène) et/ou au moins un polymère (P), en particulier des électrolytes polymères, présentant au moins un motif répétitif de formule chimique générale : 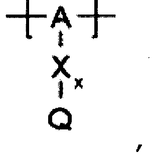 -[A]- représentant un motif formant le squelette de polymère, X représentant un espaceur, x représentant le nombre de l'espaceur X et étant 1 ou 0, et Q représentant un groupe chargé positivement Q⁺ et un contre-ion Z⁻, ou Q représentant un groupe chargé négativement Q⁻ et un contre-ion Z⁺, ou Q représentant un groupe non chargé.
